(19) Europäisches Patentamt
European Patent Office
Office européen des brevets

(11) EP 4 779 836 A1

(12) **EUROPEAN PATENT APPLICATION**
published in accordance with Art. 153(4) EPC

(43) Date of publication:
22.07.2026 Bulletin 2026/30

(51) International Patent Classification (IPC):
H02J 3/38 (2026.01)     G06F 30/18 (2020.01)
G06N 3/045 (2023.01)     G06F 18/213 (2023.01)

(21) Application number: 24948943.6

(22) Date of filing: 28.11.2024

(86) International application number:
PCT/CN2024/135146

(87) International publication number:
WO 2026/112864 (04.06.2026 Gazette 2026/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Huadian Trading International (Beijing)
Co., Ltd.
Beijing 100071 (CN)

(72) Inventor: CHEN, Wei
Beijing 100071 (CN)

(74) Representative: Piticco, Lorena
Isler & Pedrazzini AG
Giesshübelstrasse 45
Postfach 1772
8027 Zürich (CH)

(54) **METHOD AND DEVICE FOR CONSTRUCTING DIGITAL POWER SYSTEM BASED ON MULTIFUNCTIONAL INTELLIGENT AGENTS**

(57) A method and an apparatus for constructing a digital power system based on a multifunctional intelligent agent are provided according to the present disclosure. Feature production factor data is extracted from power data of a power plant side, and control production factor data is extracted from the power data of a power grid side. A target data vector is constructed based on an electrical function requirement, and key control production factor data associated with the electrical function requirement is determined. A mapping function representing mapping between the target data vector and the key control production factor data is acquired by using an artificial intelligence algorithm, a functional operator with the mapping function as a kernel is constructed, and an intelligent agent is constructed based on the functional operator. The digital power system is configured with respective intelligent agents corresponding to different electrical function requirements, and each of the intelligent agents serves as an electrical function executing unit. This system enables data-driven, diversified and digital electric functions, and associations among data can be accurately captured to form high-value data assets in a power system.

FIG.1D

## Description

### FIELD

The present disclosure relates to the technical field of power systems, and in particular to a method and an apparatus for constructing a digital power system based on a multifunctional intelligent agent.

### BACKGROUND

With the advancement of industrialization and the progress and development of science and technology, international cooperation with respect to power energy is gradually strengthened. A new global power market is emerging, in which new energy becomes a mainstay while fossil energy transitions to a supporting role. During this transition, new entities such as new energy storage systems, virtual power plants, and smart microgrids have emerged, bringing new vitality into a power system. In addition, the entire industry chain of the power system confronts many challenges.

The promotion and development of the global power trading market hinge on an accurate understanding and keen grasp of the power system. Thus, there is urgent need for an intelligent and digital power system. Currently, the construction of the power system faces challenges of complexity and variability. The complexity arises from the wide variety of power plants connected to the power grid, which brings a significant challenge to power grid dispatching. The variability is manifested in the uncertainty of some power generation methods (such as photovoltaic power, hydropower, or the like) for new energy, which greatly degrades the reliability and stability of power supply from the power system. Currently, an intelligent and digital power system is to be constructed in conjunction with emerging fields such as new-type power and intelligent hydropower business, to facilitate global power trading and the reform of the power market.

### SUMMARY

According to the present disclosure, a method and an apparatus for constructing a digital power system based on a multifunctional intelligent agent are provided. An objective of the present disclosure is to construct an intelligent agent with various functions by extracting production factor data from a power plant side and a power grid side. The intelligent agent with diversified functions is used to assist a power system in achieving data-driven, diversified and digitalized electrical functions.

According to a first aspect of the present disclosure, a method for constructing a digital power system based on a multifunctional intelligent agent is provided. The method includes:

extracting feature production factor data corresponding to a feature production factor set from power data of a power plant side, and extracting control production factor data corresponding to a control production factor set from the power data of a power grid side, where the feature production factor set includes feature production factors in multiple levels, and the control production factor set includes control production factors in multiple aspects;

constructing a target data vector based on an electrical function requirement for the digital power system by using the extracted feature production factor data, and determining key control production factor data associated with the electrical function requirement among the extracted control production factor data;

acquiring a mapping function representing mapping between the target data vector and the key control production factor data based on the target data vector and the key control production factor data by using an artificial intelligence algorithm, constructing a functional operator with the mapping function as a kernel, and constructing an intelligent agent based on the functional operator; and

configuring the digital power system with respective intelligent agents corresponding to different electrical function requirements, and determining each of the respective intelligent agents as an electrical function executing unit in the digital power system.

According to a second aspect of the present disclosure, an apparatus for constructing a digital power system based on a multifunctional intelligent agent is provided. The apparatus includes: a data extraction module, a vector construction module, a data determination module, an operator construction module, and an intelligent agent addition module.

The data extraction module is configured to extract feature production factor data corresponding to a feature production factor set from power data of a power plant side, and extract control production factor data corresponding to a control production factor set from the power data of a power grid side, where the feature production factor set includes feature production factors in multiple levels, and the control production factor set includes control production factors in multiple aspects.

The vector construction module is configured to construct a target data vector based on an electrical function requirement for the digital power system by using the extracted feature production factor data.

The data determination module is configured to determine key control production factor data associated with the electrical function requirement among the extracted control production factor data.

The operator construction module is configured to acquire a mapping function representing mapping between the target data vector and the key control production factor data based on the target data vector and the key control production factor data by using an artificial intelligence algorithm, construct a functional operator with the mapping function as a kernel, and construct an intelligent agent based on the functional operator.

The intelligent agent addition module is configured to configure the digital power system with respective intelligent agents corresponding to different electrical function requirements, and determine each of the respective intelligent agents as an electrical function executing unit in the digital power system.

In an embodiment of the first aspect and the second aspect, the feature production factor set includes a first-level feature production factor, a second-level feature production factor and a third-level feature production factor corresponding to each of multiple power generation types, where the first-level feature production factor is a natural feature production factor, the second-level feature production factor is a single-system feature production factor, the third-level feature production factor is a plant-system feature production factor, the natural feature production factor directly reflects natural features, the single-system feature production factor is a production factor related to a single system in the digital power system, and the plant-system feature production factor is a production factor related to an integrated system in the digital power system.

In an embodiment of the first aspect and the second aspect, the control production factors in multiple aspects include: an electricity price, an inertia and a frequency, an active power and a reactive power, an electricity carbon emission, security and stability, and grid synchronization and separation.

The extracting control production factor data corresponding to a control production factor set from the power data of a power grid side includes:

extracting electricity price data, inertia and frequency data, power data, electricity carbon emission data, safety and stability index data, and grid synchronization and separation impact data from the power data of the power grid side.

In an embodiment, the electrical function requirement is one of: an electrical function requirement for power trading between the power grid side and the power plant side, an electrical function requirement for enabling dispatching control of the power grid side over the power plant side, or an electrical function requirement for self-regulation of a power grid.

In a first embodiment of the first aspect and the second aspect, the electrical function requirement for power trading between the power grid side and the power plant side is to calculate the electricity price, the functional operator is an electricity price operator, and the electricity price operator is configured to calculate the electricity price. A process of utilizing the intelligent agent constructed based on the electricity price operator by the digital power system includes:

utilizing the intelligent agent to obtain an electricity price calculation result for the power plant side by using the electricity price operator;

verifying the electricity price calculation result by using a financial verification model for the power grid side, where the financial verification model includes: a first verification condition and a second verification condition, the first verification condition is: actual outputs of respective types of power plants $\geq$ an electricity volume of the power grid, and the second verification condition is: a sum of products of the actual outputs of respective types of power plants, electricity prices of the power grid at respective time instants for each type of power plant, and a power generation duration $\leq$ a product of an average electricity price and the electricity volume of the power grid;

in response to the electricity price calculation result meeting the first verification condition and the second verification condition, determining that the electricity price calculation result passes the verification; in response to the calculation result failing to meet the first verification condition or the second verification condition, determining the electricity price calculation result as an unsuccessfully-verified result;

in response to the electricity price calculation result passing the verification, further selecting a function for calculating the electricity price that is feasible and adaptive to the power grid side from a dispatching strategy library, and loading the function into the electricity price operator to update the electricity price operator; and

acquiring the electricity price calculation result for the power grid side by using the updated electricity price operator.

In a second embodiment of the first aspect and the second aspect, the electrical function requirement for power trading between the power grid side and the power plant side is power clearing, the functional operator is a clearing operator, the clearing operator is configured for power clearing, and a process of utilizing the intelligent agent constructed based on the clearing operator in the digital power system includes:

performing low-order data abstraction based on power generation factor features of all associated power plants for the power grid, to obtain first data vectors derived from the power generation factor features;

predicting long-term trading electricity prices based on a preset long-term electricity price function library and the first data vectors to establish a long-term trading stack;

establishing a spot trading stack based on spot trading electricity prices of the associated power plants, and determining a first clearing function based on the long-term trading stack and the spot trading stack;

determining a power supply-demand balance state of the power grid based on the first clearing function in response to the first clearing function being used for power clearing; and

adjusting the first clearing function based on the power supply-demand balance state to obtain a second clearing function, and performing power clearing based on the second clearing function.

In a third embodiment of the first aspect and the second aspect, the electrical function requirement for enabling dispatching control of the power grid side over the power plant side is peak-shaving under highly-frequent load variations in a thermal power scenario, the functional operator is a thermal power peak-shaving operator, the thermal power peak-shaving operator is configured to achieve peak-shaving under highly-frequent load variations in the thermal power scenario, and a process of utilizing the intelligent agent constructed based on the thermal power peak-shaving operator in the digital power system includes:

calculating a heat access margin of an energy storage device in a thermal power plant, where the heat access margin includes a heat storage margin characterization value and a heat release capacity characterization value;

transmitting correlation data among loads, performances, and costs of respective thermal power units and the heat access margins in respective thermal power plants to the power grid side, to enable the power grid side to determine a target generating unit expected to assist in peak-shaving based on a change in a thermal power load requirement, the correlation data and the heat access margins provided by respective thermal power plants, and to issue a peak-shaving instruction;

receiving the peak-shaving instruction issued by the power grid side, where the peak-shaving instruction carries a unit identification of the target generating unit and peak-shaving requirement information for the target generating unit, and the peak-shaving requirement information includes a peak-shaving load curve; and

performing a service of assisting in peak-shaving based on the peak-shaving requirement information.

In a fourth embodiment of the first aspect and the second aspect, the electrical function requirement for enabling dispatching control of the power grid side over the power plant side is to dispatch water resources of a cascade hydropower station system, the functional operator is a water resource dispatching operator, the water resource dispatching operator is configured to achieve dispatching of water resources of the cascade hydropower station system, and a process of utilizing the intelligent agent constructed based on the water resource dispatching operator in the digital power system includes:

acquiring water resource data of respective hydropower stations in the cascade hydropower station system at a current time instant;

for each of the hydropower stations, determining whether the hydropower station is in a safe operation state based on the water resource data of the hydropower station;

in response to all hydropower stations being determined to be in a safe operation state, determining whether to perform water resource dispatching based on the water resource data of the hydropower stations, a preset electricity price scheme, and target historical data, where the target historical data includes: an average water consumption for power generation and an average power plant revenue of a month corresponding to the current time instant; and

in response to determining to perform the water resource dispatching, determining a water resource dispatching scheme based on the water resource data of the hydropower stations and a water resource dispatching model, where the water resource dispatching model is trained in advance and is configured to output the water resource dispatching scheme, and the water resource dispatching scheme includes day-ahead dispatching and seasonal dispatching.

In a fifth embodiment of the first aspect and the second aspect, the electrical function requirement for enabling dispatching control of the power grid side over the power plant side is dispatching on the power plant by the power grid in a power system with large unit capacity relative to small grid capacity, the functional operator is a dispatching operator for large unit capacity relative to small grid capacity, the dispatching operator for large unit capacity relative to small grid capacity is configured to achieve dispatching on the power plant by the power grid in the power system with large unit capacity relative to small grid capacity, and a process of utilizing the intelligent agent constructed based on the dispatching operator for large unit capacity relative to small grid capacity in the digital power system includes:

determining emergency reserve capacities for multiple power generation types to be reserved in a power system and configuring the power system with the emergency reserve capacities through digital feature extraction of the power grid and source points of the multiple power generation types in the power system;

determining whether the power system currently exhibits characteristics of large unit capacity relative to small grid capacity based on current outputs of the source points of the multiple power generation types;

in response to determining that the power system currently exhibits characteristics of large unit capacity relative to small grid capacity, dispatching, by the power grid, the source points in the power system for performing voltage adjustment based on a multi-round voltage adjustment scheme, and/or dispatching, by the power grid, the source points in the power system for frequency adjustment based on a multi-round frequency adjustment scheme by using the configured emergency reserve capacities of the multiple power generation types, where the multi-round voltage adjustment scheme includes: a multi-round voltage adjustment manner for the multiple power generation types, a multi-round voltage adjustment range and multi-round voltage adjustment priority information, and the multi-round frequency adjustment scheme includes: a multi-round frequency adjustment manner for the multiple power generation types, a multi-round frequency adjustment range and multi-round frequency adjustment priority information;

generating, by the power grid, output curves of generating units of the respective source points in a future period based on a stability control requirement for a frequency dynamic characteristic index of an entire grid of the power system, a predicted load of the entire grid, and characteristics of generating units in the source points, where the frequency dynamic characteristic index is used to numerically represent a power change amount of the entire grid required to trigger a unit frequency change in the power system; and

issuing, by the power grid, a power generation dispatching instruction to each source point for performing power adjustment, where the power generation dispatching instruction for each source point includes the output curves of generating units of the source point.

In a sixth embodiment of the first aspect and the second aspect, the electrical function requirement for self-regulation of the power grid is to adjust a grid structure of the power grid, the functional operator is a grid structure adjusting operator, the grid structure adjusting operator is configured to adjust the grid structure of the power grid, and a process of utilizing the intelligent agent constructed based on the grid structure adjusting operator in the digital power system includes:

acquiring a current system inertia corresponding to a current grid structure;

calculating a frequency change rate based on the current system inertia and a difference between a power demand and an actual power supply;

in response to the frequency change rate being greater than a preset first threshold, determining a target grid structure and a target setting value corresponding to the target grid structure based on a pre-established deep learning model, where the frequency change rate of the target grid structure is less than or equal to the preset first threshold; and

modifying a current setting value applied in the current grid structure based on the target setting value, and adjusting the current grid structure of the power grid to the target grid structure.

It can be seen from the above technical solutions that the embodiments of the present disclosure possess the following advantages.

In the technical solutions of the present disclosure, feature production factor data corresponding to a feature production factor set is extracted from power data of a power plant side, and control production factor data corresponding to a control production factor set is extracted from the power data of a power grid side. Thus, coordination between feature production factors of the power plant side and control production factors of the power grid side is achieved. Based on the extracted production factor data, the artificial intelligence technology is further utilized to construct an intelligent agent with certain electrical functions, and preparations are made for applying the technology. Based on an electrical function requirement for the digital power system, a target data vector is constructed by using the extracted feature production factor data, and key control production factor data associated with the electrical function requirement is determined among the extracted control production factor data. Based on the target data vector and the key control production factor data, a mapping function representing mapping between the target data vector and the key control production factor data is acquired by using an artificial intelligence algorithm, a functional operator with the mapping function as a kernel is constructed, and an intelligent agent is constructed based on the functional operator. The digital power system is configured with respective intelligent agents corresponding to different electrical function requirements, and each of the intelligent agents serves as an electrical function executing unit in the digital power system. Thus, the digital power system is configured with intelligent agents with diversified functions, and the system enables data-driven, diversified and digital electrical functions.

In the technical solutions of the present disclosure, the intelligent agents are constructed depending on the production factor data from the power plant side and the power grid side, the feature production factor set includes feature production factors in multiple levels, and the control production factor set includes control production factors in multiple aspects. Thus, the coordination between the feature production factors in multiple levels and the control production factors in multiple aspects is achieved. The intelligent agent constructed based on the above effectively utilizes diverse information of the power data, and implements an electric function of collaborating with multiple production factors. For example, the electric function is one of an electric function for power trading between the power grid side and the power plant side, an electric function for enabling dispatching control of the power grid side over the power plant side, and an electric function for self-regulation of a power grid. With the intelligent agent, associations among data can be captured accurately, to obtain accurate and transferable data analysis results or data calculation results. It can also be understood that a high-value data asset in the power system is formed of the digital power system constructed according to this solution, enhancing analytical value of the power data. The constructed digital power system effectively facilitates global power trading and the reform of the domestic power market.

**BRIEF DESCRIPTION OF THE DRAWINGS**

FIG. 1A is an example flowchart of constructing an intelligent agent based on data according to the present disclosure;
FIG. 1B is a schematic diagram of constructing an operator through deep learning and reinforcement learning according to an embodiment of the present disclosure;
FIG. 1C is a structural diagram of data in the construction of a digital power system according to an embodiment of the present disclosure;
FIG. 1D is an implementation architecture diagram of digital power association according to an embodiment of the present disclosure;
FIG. 1E is a flowchart of a method for constructing a digital power system based on a multifunctional intelligent agent according to an embodiment of the present disclosure;
FIG. 1F is a schematic diagram of a power supply scenario according to an embodiment of the present disclosure;
FIG. 1G is a schematic architecture diagram showing division of production factors according to an embodiment of the present disclosure;
FIG. 1H is a schematic diagram of a relationship among an intelligent agent, an operator, a function, and production factor data according to an embodiment of the present disclosure;
FIG. 1I is an implementation flowchart of constructing a power analysis intelligent agent according to an embodiment of the present disclosure;
FIG. 1J is a schematic diagram of a relationship among an intelligent agent, an operator, a function, and production factor data according to another embodiment of the present disclosure;
FIG. 2A is a flowchart at a power grid side based on an electricity price operator;
FIG. 2B is a flowchart at a power plant side based on an electricity price operator;
FIG. 2C is a diagram illustrating signaling among a power plant side, a power grid side, and an intelligent agent;
FIG. 3A is a flowchart of a method for grid clearing according to an embodiment of the present disclosure;
FIG. 3B is a signaling interaction diagram of a method for grid clearing according to an embodiment of the present disclosure;
FIG. 3C is a flowchart of a method for grid clearing according to another embodiment of the present disclosure;
FIG. 3D is a schematic diagram of a long-term trading stack according to an embodiment of the present disclosure;
FIG. 3E is a flowchart of a method for grid clearing according to another embodiment of the present disclosure;
FIG. 3F is a schematic diagram of parameters representing thermal performance of a generating unit in a full-load condition according to an embodiment of the present disclosure;
FIG. 3G is a schematic diagram of comprehensive parameters in consideration of coal price and long-term trading electricity price according to an embodiment of the present disclosure;
FIG. 3H is a structural schematic diagram of a stack including a spot trading stack and a long-term trading stack according to an embodiment of the present disclosure;
FIG. 3I is a flowchart of a method for establishing a spot trading stack according to an embodiment of the present disclosure;
FIG. 4A is a schematic diagram of predicting power generation of a wind power plant according to an embodiment of the present disclosure;
FIG. 4B is a schematic diagram of a spot trading stack according to an embodiment of the present disclosure;
FIG. 4C is a schematic diagram of a grid clearing function according to an embodiment of the present disclosure;
FIG. 4D is a flowchart of a method for grid clearing according to another embodiment of the present disclosure;
FIG. 4E is a flowchart of a method for adjusting a first clearing function when a target power grid operates in an over-generation state according to an embodiment of the present disclosure;
FIG. 4F is a schematic diagram of calculating a second data vector by using a deep learning model according to an embodiment of the present disclosure;
FIG. 4G is a flowchart of a method for adjusting a first clearing function when a target power grid operates in an under-generation state according to an embodiment of the present disclosure;

FIG. 4H is a schematic diagram of a fitted power generation curve of a target power grid according to an embodiment of the present disclosure;

FIG. 5A is a schematic diagram of a power supply scenario according to an embodiment of the present disclosure;

FIG. 5B is a flowchart of a method for peak-shaving under highly-frequent load variations in a thermal power scenario according to an embodiment of the present disclosure;

FIG. 5C is a signaling interaction diagram of a method for peak-shaving under highly-frequent load variations in a thermal power scenario according to an embodiment of the present disclosure;

FIG. 5D is a flowchart of a process of determining a target generating unit expected to assist in peak-shaving according to an embodiment of the present disclosure;

FIG. 5E is a flowchart of fault determination and operating condition determination according to an embodiment of the present disclosure;

FIG. 5F is a flowchart of a peak-shaving method under highly-frequent load variations in a thermal power scenario according to another embodiment of the present disclosure;

FIG. 6A is a flowchart of a method for dispatching water resources according to an embodiment of the present disclosure;

FIG. 6B is a schematic diagram of historical water consumptions for power generation corresponding to respective months at an upstream hydropower station according to an embodiment of the present disclosure;

FIG. 6C is a schematic diagram of historical water consumptions for power generation corresponding to respective months at a downstream hydropower station according to an embodiment of the present disclosure;

FIG. 6D is a schematic diagram of historical power plant revenues corresponding to respective months at an upstream hydropower station according to an embodiment of the present disclosure;

FIG. 6E is a schematic diagram of historical power plant revenues corresponding to respective months at a downstream hydropower station according to an embodiment of the present disclosure;

FIG. 6F is a schematic diagram of water assets corresponding to respective months at an upstream hydropower station according to an embodiment of the present disclosure;

FIG. 6G is a schematic diagram of water assets corresponding to respective months at a downstream hydropower station according to an embodiment of the present disclosure;

FIG. 6H is a schematic diagram of a solution for dispatching water resources of a cascade hydropower station system according to an embodiment of the present disclosure;

FIG. 6I is a schematic diagram of an interaction between a power plant and a power grid according to an embodiment of the present disclosure;

FIG. 6J is a flowchart of a method for dispatching water resources according to another embodiment of the present disclosure;

FIG. 7A is a schematic diagram of an application scenario of a power grid dispatching method in a power system with large unit capacity relative to small grid capacity according to an embodiment of the present disclosure;

FIG. 7B is an example flowchart of a power dispatching method in a power system with large unit capacity relative to small grid capacity according to an embodiment of the present disclosure;

FIG. 7C is a schematic diagram of multiple rounds of voltage adjustment according to an embodiment of the present disclosure;

FIG. 7D is a schematic diagram of multiple rounds of frequency adjustment according to an embodiment of the present disclosure;

FIG. 7E is an example flowchart of a power dispatching method in a power system with large unit capacity relative to small grid capacity according to another embodiment of the present disclosure;

FIG. 7F is a diagram illustrating power dispatching signaling in a power system with large unit capacity relative to small grid capacity according to an embodiment of the present disclosure;

FIG. 8A is a flowchart of a method for adjusting a grid structure of a power grid according to an embodiment of the present disclosure;

FIG. 8B is a flowchart of a method for adjusting a grid structure of a power grid according to another embodiment of the present disclosure;

FIG. 8C is a flowchart of a method for determining a target grid structure in a case of a sudden change in power generation output according to an embodiment of the present disclosure;

FIG. 8D is a schematic diagram of a binary tree structure according to an embodiment of the present disclosure;

FIG. 9 is an interactive flowchart of a power generation dispatching process for a power system according to an embodiment of the present disclosure; and

FIG. 10 is a schematic diagram of a relationship between a function and an operator according to an embodiment of the present disclosure.

## DETAILED DESCRIPTION

Currently, with increasingly extensive international cooperation in power energy, key requirements for the power industry include: constructing the digital artificial intelligence technology that uses digitally-driven power intelligent agents, promoting unified construction of the global power trading market, and formulating a top-level design rule to guide a marketization process. Based on practical experiences in domestic and foreign power industries, the inventor proposes a solution for constructing a digital power system based on multiple intelligent agents. Based on a demand for cost-effectiveness of an entire industry chain in a new global power market and digitalization characteristics of the production factor data contained in a power system, complex factors (such as coal consumption, illumination, wind speed, tariff mechanism, investment cost) are converted into data or advanced data vectors, to promote cross-industry information circulation and efficient utilization and revitalizes data by using AI technology.

In the present disclosure, the inventor integrates forward-thinking methods, faces technical and industrial challenges of the entire industry chain, and emphasizes integration of technology and economy, digitalization of a value chain, marketization and intelligence, to provide an intelligent and automated solution to power-related issues in the energy industry. Combined with emerging fields such as new power systems and intelligent hydropower business, the method and the apparatus for constructing a digital power system based on a multifunctional intelligent agent according to the technical solution of the present disclosure can be used for serving the global energy Internet and forming digital assets. To convert data into digital assets, both the data itself and a profound and fundamental understanding of an operating pattern of the power industry are required in terms of the essence of artificial intelligence. With promotion of the reform of the power market, innovations in various technologies and mechanisms become important in advancing the reform. A foundational design framework that integrates digitalization and artificial intelligence is constructed based on data-driven digital power, a digital power algorithm, and an intelligent agent for a power system. In critical stages such as dispatching, settlement, and pricing, low-level, mid-level, and high-level features are abstracted from data from different dimensions, to improve the efficiency while achieving intelligence. The technical concept of the technical solution of the present disclosure facilitates the transformation and application of related technologies, thereby accelerating the reform process of the power market.

Hereinafter, some inventive concepts involved in the technical solution of the present disclosure are introduced.

Symbiosis: At data level, one type of analogous entities, once being digitized, exhibits certain properties of correlation and connectivity under specific abstractions. Symbiosis converts natural production factors or information that produces and controls production factors into data, enabling associations and transmission among the data. Symbiosis also allows for the existence of data features to be abstracted in different operators or intelligent agents, with different operators and intelligent agents existing simultaneously while sharing features among them. In essence, different types of entities may appear divergent in form yet share similar essences. Common properties can be identified by uncovering the essence and connotation of symbiosis. In the technical solution of the present disclosure, under the idea of symbiosis, the inventor applies concepts of neural network to the power system based on knowledge of the power system, and thus the application of artificial intelligence technology in the power field is achieved.

Migration refers to a process of transferring the features of one type of entities to those of another related type of entities, such that associations are generated and the two types of entities are interchangeable at a data asset level. Migration can be achieved by nesting and utilizing intelligent agents. Thus, the multi-functional intelligent agent uses operators to implement specific functions without extensive iterations. Migration allows most functions in the power system to be transferred from one intelligent agent to another intelligent agent.

Emergence refers to a phenomenon that data and logics mutually regenerate and iterate when the amount of data is sufficiently large and the quantity of logics in the intelligent agent is sufficiently large. It represents a dividing line between intelligence and wisdom. In an emergence stage, artificial intelligence begins to exhibit wisdom. Human beings use tools to transform productivity, and the tool serves as the means of production. Starting from ancient times, the amount of input data is continuously enlarged, to promote the development of productivity. Production tools are invented, and laws are summarized and abstracted through disciplines such as mathematics, physics, and chemistry, ultimately yielding logics, formulas, and theorems. In modern society, the development of informatics transformed the carrier of the third industrial revolution, and electricity, computers, and other tools that iteratively processed information are invented. In the fourth industrial revolution, artificial intelligence fundamentally upgrades computing and related technologies from simple to complex, and uses neural networks and statistical principles to approximate a production function again, simply and directly achieving a data-driven production function. In the next decade, the development of intelligent agents and their internal logic may parallel the evolution of the production tool in previous societies. Human understanding progresses step by step, and previously inexplicable phenomena can be explained by delving internal connections and underlying theorems. While high-level abstractions of data exist and are increasingly accessible, the key lies in naturally analyzing the relevant logic within the intelligent agents, and a certain opportunity is required in this process.

Intelligent agent refers to a unit with one or more functions, which integrates the power system and artificial intelligence closely. It serves as a protective mechanism for the power system against external influences, which is analogous to a cell, but containing smaller operational units such as operators. The intelligent agent exhibits unique data features in different scenarios, which is of profound significance for generating an emergence function and studying a digital essence of the power system. The intelligent agent is a core component of artificial intelligence in the power industry, which is equivalent to a thermal control logic diagram or logic-based relay protection systems in the power industry during the third industrial revolution, such as the symbolic representation of the internal logic within the "five preventions" for a switching station. The logic within the intelligent agent can also be represented symbolically, which is used to accurately and deterministically represent key logic and control in the power system based on big data and large models. The general logic of the intelligent agent aligns with the key theorems and common sense in the power system, and adheres to energy conversion principles and relevant regulations. Its research objects include production feature factors and control production factors, such as illuminance, wind speed, water level, heat consumption, load rate, and an inertia and a frequency of a system. An interface of the intelligent agent is directly connected to an input layer or an output layer (output function) of deep learning and reinforcement learning models, and may also be connected to a middle layer as required. In the technical solution of the present disclosure, a front half portion of a neural network includes data which is to be transferred after calibration and is abstracted from natural production factors, enhancing parallel computing capabilities for fast processing. An operator function and the intelligent agent in the latter half (output) of the neural network reflect mathematical abstraction capabilities and physical laws in the industry, and can be combined and reconfigured, enabling the intelligent agent to possess versatile capabilities and functionalities across various industries.

In the technical solution of the present disclosure, an algorithm is constructed based on the flow of data and information. After extracting features from the data, the data is to be calibrated, which means assigning a reasonable data structure to the data. In addition, the internal logic of operators controls the flow of information. Different data structures and information flows corresponding to the digitization of power plants and power grids are also illustrated through various embodiments. It is preferable to employ different neural networks for the algorithm. For the operators involved, differences in data structures and information flow manners exist. For example, binary trees are suitable for grid separation and synchronization in power grids, and stacks are suitable for electricity price clearing, while power plants are suited to gradually establish information flow manners and internal security logic based on first-level indicators in nature. In conjunction with the applicable objects, a condition and a direction of information flow are determined, which also determines that a convolutional neural network, a recurrent neural network, a graph neural network, or an attention network is to be employed. Hereinafter, related issues are described in detail, which include: I. Digital feature extraction, II. Mathematical tool, III. Binary tree and stack in data structure, IV Logic core, and V. Reasoning capability and information classification under underlying logic.

I. Digital Feature Extraction

Digital features are categorized into those of a power plant and of a power grid. For the power grid, feature variables such as the real and imaginary parts of voltage at each node, an inflow active power at each node, an inflow reactive power at each node, a system inertia, a system frequency, and a ratio of system power change rate to system frequency change rate are established. For the power plant, feature variables such as a generator power angle, voltages of individual generators, electromagnetic powers of individual generators, and reactive powers of individual generators are established. These digital features of production factors are derived from first-level natural feature production factors, such as illuminance, coal type, coal quality, and water level. Firstly, digital features of various levels are extracted. For example, the digital features of low-level production factors are extracted from the power plant side, such as seasonal fluctuations in water level and the efficiency stability of illuminance. The digital features of high-level control production factors are extracted from the power grid side, such as the feature of system inertia with respect to a frequency change rate and the feature of the frequency change rate with respect to a power change rate. Different methods are employed for extraction. For the digital features of low-level production factors, such as water level and photovoltaic illuminance, the digital features can be extracted by clustering or Euclidean distance method. The digital features of high-level control production factors are extracted by modeling or using advanced mathematical tools.

II. Mathematical tool

Mathematical tool may be one of a convolutional neural network, a recurrent neural network, a graph neural network, or an attention network, depending on the characteristics of data and information flow of an object. The characteristics of the above neural networks are as follows. First, the convolutional neural network involves regular network data and cases where information flows to local domains. Second, in the recurrent neural network, data is input sequentially, and information flows in sequences. Third, in the graph neural network, data is in a fixed graph structure, and information flows along fixed edges. Fourth, in the attention network, data is in an unordered set, and information flow is dynamically controlled by the neural network. These neural networks are targeted at the logic core: operator(s), and intelligent agent(s). In the process of constructing a digital power system based on a multifunctional intelligent agent (operator), typical cases include: grid synchronization and separation operators (in a sixth Embodiment below), seasonal hydropower dispatching operators (in a fourth Embodiment below), control operators for power supplies and power grids in a system with large unit capacity relative to small grid capacity (in a fifth Embodiment below), and a clearing function operator (in a second Embodiment below), and the like. The characteristics of data research and information flow in these operators profoundly reflect the characteristics of the above neural networks. By analyzing data characteristics and information characteristics based on rules (physical and equipment mechanism) from data feature extraction to information sequence flow, suitable neural networks are selected, such that artificial intelligence algorithms are highly adaptive to the power system.

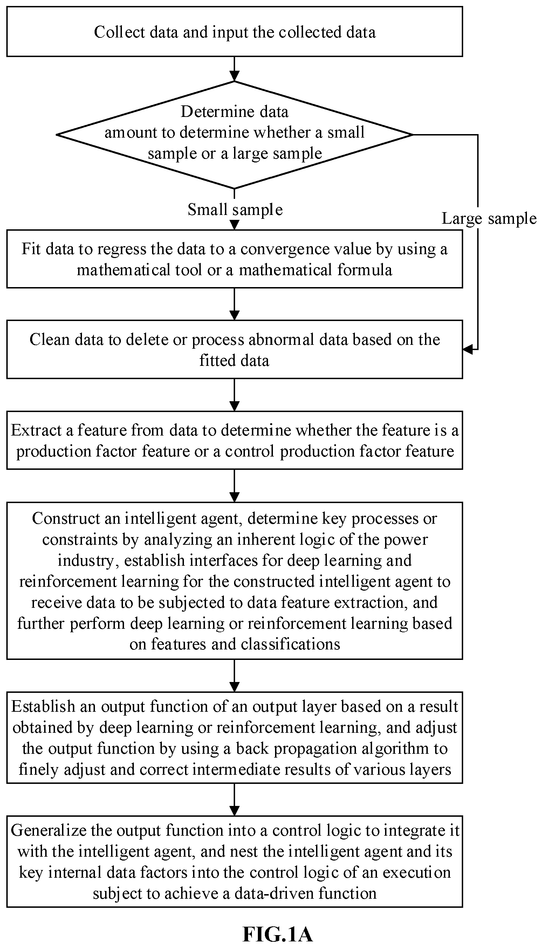

When using a mathematical tool, the mathematical tool can be determined based on data amount and sample size. Hereinafter, an example process of constructing an intelligent agent based on data in the present disclosure is described with reference to FIG. 1A. As shown in FIG. 1A, the process includes: steps (1) to (8).

In step (1), data is acquired and inputted.

In step (2), data amount is determined, to determine whether a small sample or a large sample is involved. In response to a large sample, step (3) is omitted. In response to a small sample, step (3) is executed.

In step (3), data fitting is performed, to regress the data to a convergence value by using a mathematical tool or a mathematical formula.

In step (4), data cleaning is performed, to delete or process abnormal data based on the fitted data.

In step (5), a feature is extracted from data, to determine the feature being a production factor feature or a control production factor feature.

In step (6), an intelligent agent is constructed. By analyzing the inherent logic of the power industry, key processes or constraints are defined. For the constructed intelligent agent, interfaces for deep learning and reinforcement learning are deployed, to receive data to be subjected to data feature extraction. Further, deep learning or reinforcement learning is performed based on its features and classifications.

In step (7), an output function of an output layer is created based on a result from deep learning or reinforcement learning, the output function is subjected to a back propagation algorithm, to finely adjust and correct intermediate results of various layers.

In step (8), the output function is generalized into a control logic, to integrate it into the intelligent agent, and the intelligent agent and its key internal data elements are nested into the control logic of an actuator to achieve data-driven operation.

Deep learning and reinforcement learning enable the feature transmission of compressed information to exhibit enhanced representation and error-correction mechanisms. Deep learning employs specific algorithms or logic in extracting data features, rendering data features regular in subsequent extraction, and facilitating the establishment of ultra-advanced mechanisms or data structures based on data cleaning by utilizing data characteristics. It ensures low information loss of data while maintaining high computational and transmission speeds in the process of data transmission. In reinforcement learning, the correctness of the learned logic is constantly validated through reward and other mechanisms, and a priority is determined, to generate the logic through iterative comparison and calibration.

In combination with the process described above, digitization does not rely on a single digitization method or a single mathematical tool in the technical solution of the present disclosure, but varies between large and small sample scenarios. To digitize data in a large sample scenario, a deep learning method (such as using a convolutional neural network, and the like) is used to compare measured data with samples, to form an operational workflow. Through repeatedly deducing and feedback based on the logic flow in the intelligent agent, human reasoning is simulated. A convolutional algorithm enables features to be obtained through deep learning, and the features are fed to an operator function. The convolutional neural network, employing an "end-to-end" manner, automatically identifies data features and possesses functions of weight sharing and hierarchical abstraction of data features at low, middle, and high levels. In a small sample scenario, data features are directly extracted from the data.

The concept of intelligent agent is well-suited for research objects with a small sample. In the power system, when to use a large model (corresponding to a large sample) and when to use a small sample are determined based on the characteristics of the data. Currently, weather forecasting involves a large amount of data, and is suited to use a large model. The large model is also suitable for dispatching, grid synchronization and separation due to a large amount of data. Thus, research on intelligent agents, particularly innovations in operator logic design for deep learning and reinforcement learning in the power system, is crucial. Computational power involves an advanced manufacturing process, GPU, and HBM, and is constrained by a data transmission rate and network throughput. Thus, the logic in uncertain intelligent agents should rapidly adapt to high-speed GPU computations. Consequently, the selected type of the neural network for an algorithm should align with the characteristics of data and logic information flow, to capture certainty in logic and numbers among the uncertain variations of natural production factors. As artificial intelligence progresses towards the stages of Artificial General Intelligence (AGI) and Artificial Super Intelligence (ASI), the application of intelligent agents makes small-sample data more advantageous than large-sample data in certain contexts.

For small-sample data, a binary tree and a stack can be used as data structure, to encapsulate data features.

III. Binary tree and stack in data structure

Data features are encapsulated by using a binary tree or a stack, such that the data features are appropriately represented or easily shared.

In embodiments described below, a second embodiment illustrates an example of using a stack as a data structure. Abstracted production factors are inputted to the above data structure, to obtain an implementation of parallel computing and intelligent agent logic. The second embodiment demonstrates a stack method with priorities decreasing progressively from bottom to top. The structural and sequential characteristics of "first in, last out" of the stack align with the clearing logic of the power grid, and also enable dynamic ordering of data. For operations such as electricity price clearing for high-level production factors, multiple stacks or hierarchical processing are required if parallel computing of high-speed calibration data is required. It increases the pressure on parallel computing but reduces the time for logic determinations, which is a typical data-driven example.

The sixth embodiment illustrates an example of using a binary tree as a data structure. By means of data structures with inherent characteristics, such as a binary tree, grid separation and synchronization can be achieved. Practical data tools are not limited to functions, but also include graph theory, and the like.

IV. Logic core

Associations among three major sets, two types of production factors, and four data structures are constructed. By correlating the above contents with a logic core, the logic core associates production factors, operators, intelligent agents, and the like. After data is subjected to cleaning and calibration, data features representing the production factors are fed into the operators, to achieve functions such as controlling related to tariff, clearing, and frequency. The intelligent agents including the operators also exhibit multiple functions as described above, to achieve symbiosis and migration. Moreover, a data-driven function, the underlying logic of the operators, and a subsequent reasoning process of intelligent agents are achieved, to achieve emergence.

Structured and systematic logic

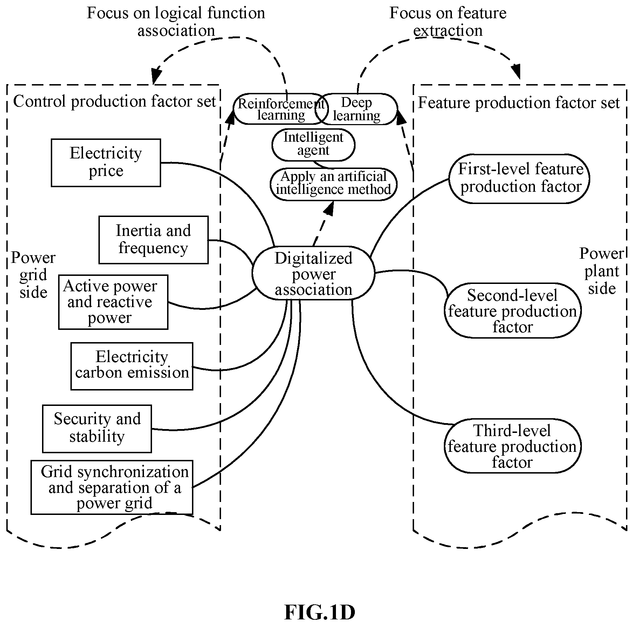

1. A feature production factor set is constructed based on a power plant side, which includes a first-level index (natural index), a second-level index (single-system index), and a third-level index (plant-system index). Internal computation employs parallel computing of data vectors, as this method offers sufficiently-high computational speed, feature extraction is only performed for the first-level index, the second-level index, and the third-level index, enabling the data to reflect features of various components. These features can be transmitted, and simple analytical statistics is performed. Reference can be made to a right portion of the implementation architecture diagram of a digitized power association shown in FIG. 1D.

2. A control production factor set is constructed based on a power grid, which includes important indices of the power grid, such as an electricity price, an inertia and a frequency, an active power and a reactive power, electricity carbon, security and stability, grid synchronization and separation. Reference can be made to a left portion of the implementation architecture diagram of the digital power association shown in FIG. 1D. The underlying data logic is functions. Data vectors are determined based on system laws within intelligent agents. Functions that represent mapping of the data vectors are derived through reinforce learning. Important rules within the power grid are expressed through function calculation. For example, a frequency change rate is calculated by calculating a system inertia. Thus, an intelligent agent interface is utilized for the control production factors of the power grid. The intelligent agent is processed under reinforce learning, to maintain the power grid balanced and stable. Similarly, for other factors like electricity price, the principle of digital power association is applied. Various types of data vectors are mapped as functions on the power grid side, and the functions are continuously iterated through reinforcement learning to obtain an optimal solution for the control production factors on the power grid side.

3. A multifunctional intelligent agent is constructed as shown in the first embodiment to the sixth embodiment. An intelligent agent serves as a key logic that combines artificial intelligence and a power system, to implement specific functions.

Datafication and functionalization

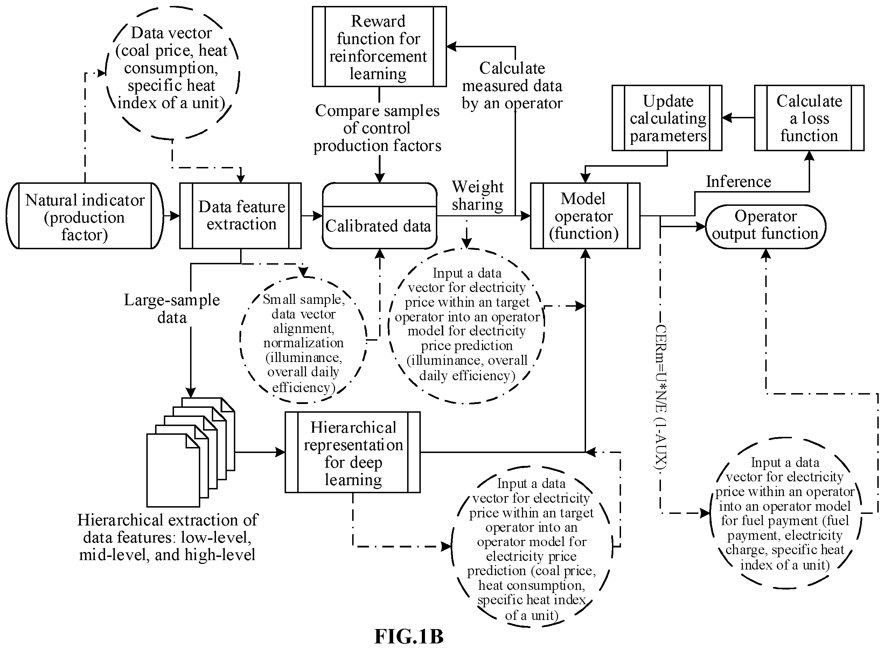

4. Abstract features of data reflect the first-level index and indices in nature. These indices are to be abstracted with a mathematical tool, and are numericalized, normalized and abstracted under an allowable condition of signal loss. The data is iterated in a transfer layer by using characteristics of parallel computing, and is functionalized in an output layer finally. The relevant regulations of nature or industry such as rules and constraints are embodied by using an intelligent agent, and an operator is used as a function to implement characteristic functions. The operator is nested in the intelligent agent, and exhibits certain functions. These functions are symbiotic by the intelligent agent. The combination and division of the intelligent agents are analogous to the combination and division of cells. In this process, the operator functions like protein. Different combinations and reconstructions of operators enable protein to exhibit certain functions. Transmission of protein information or nutrients is like data in the transfer layer. The data is converted to the operator through function generalization, and is derived from feature abstraction of production factors. Reference is made to FIG. 1B, which is a schematic diagram of constructing an operator through deep learning and reinforcement learning according to an embodiment of the present disclosure.

The above-mentioned association is established based on neural networks and data annotation in nature and the second machine revolution. Under the self-attention mechanism, this structure and interface enhance the hit rate of artificial intelligence using probabilistic methods. Combined with the advent of GPU parallel computing power, mathematical abstraction, that is, the design of operators, and the development of intelligent agents are to be promoted in the power industry or other industries. Feature production factors serve as feature carriers that abstract various types of indices. Indices in relevant power plants and power grids are digitized to form data vectors to represent their features. After feature extraction, the data is fed into operators.

5. In the data structure, a data vector is the key to reflect the power index quantity on the power plant side. For example, assessing the impact of haze on production involves analyzing data vectors of various power plants (e.g., haze days, power affected by haze). Then, through an intelligent agent interface and deep learning, automatic feature extraction and correlation analysis are performed. Similarly, queue sorting is preferentially used for dispatching of thermal power participating in variable-load peak-shaving, and data structure applications such as stack-pointer-electricity price, which is manifested in methods for real-time dispatching of priority and electricity price.

6. Function concept of operators: The function in the data structure reflects an electricity price, an active power and a reactive power, an inertia and a frequency, electricity carbon, safety and stability, and grid synchronization and separation. The functions in the intelligent agent are embodied through operators, which serve as parallel computing function units to implement specific functions in the power system, such as calculating an electricity price, a system inertia, and a system frequency. Functions all exist in the form of operators. For example, a fitted curve function is a function association obtained by mapping and summarizing a function based on data vectors and then establishing the logic through reinforcement learning via an intelligent agent interface.

After data features are extracted, the data is encapsulated using the aforementioned tools to form a new logic core as an operator. An intelligent agent involves multiple operators, and a digital power system is constructed with multiple intelligent agents. In such an operator, logic relationships driven by data features are applied to the physical and equipment mechanisms within the power system (such as plant-grid control and device). This application generates rules governing information flow, and the details of the rules can be referred to flowcharts, signaling diagrams, and other illustrations provided in the subsequent embodiments.

Associations are established based on three types of operators which are a power generation control operator, a clearing operator, and an internal control logic operator. Inspired by feature extraction, data of the power grid side is compared with data of the power plant side by comparing high-dimensional data vectors, to obtain an optimal feature with the highest correlation weight. It reflects that the associations in operators and "source-grid" matching degree serve as the underlying logic and algorithms for security considerations.

The three types of operators, which are a power generation control operator, a clearing operator, and an internal control logic operator, are functionally described from aspects of the power generation mechanism on a power source side, the principles and logic of power grid clearing, and security considerations, respectively. The disclosure describes their respective technical solutions, and conforms to inventive and creative characteristics. In addition, the disclosure creatively proposes the associations among these three operators, leading to a deeper exploration of numerous topics regarding the construction of a digital power system based on multiple intelligent agents, such as studying their symbiosis, migration, and emergence as multiple intelligent agents emerge.

The method for constructing a digital power system based on multiple intelligent agents essentially involves a range of operations on data and information flows. The method includes extracting data features, comparing, and determining a matching degree. In the information flow, information is controlled in its direction based on mechanisms, and intelligent agents are constructed to achieve various functions of the digital power system. The key lies in constructing appropriate operators in the intelligent agents, such that indicators such as "matching degree" can be constructed to measure various physical mechanisms of the power grid and the power plant.

The operator reflects the production factors of the power grid and belongs to the power grid. For example, among functional operators, the electricity price operator includes an electricity price function, an electricity price equilibrium point for the power grid, the internal control operator, and the operator corresponding to the electricity price in a final function. Based on a digital power plant composed of different types of generating units (including an electricity price equilibrium point for the power plant), and in conjunction with an actual clearing function of the power grid, an electricity price operator for the power grid is constructed. In addition, the electricity price equilibrium point for the power grid is established. The equilibrium point represents an operational condition where the balance between the cost of the power plant and the electricity price for clearing trading in the power grid is achieved. Its significance lies in serving as a crucial reference for the power grid in formulating the electricity price.

Digitalization and functionalization

Representation of digitalization and data drive are described. Multiple embodiments of the present disclosure involve digitalization. For example, in the fourth embodiment, digitalization is not a constant digitalization method, but varies between large and small sample scenarios. For digitalization of a large sample, a deep learning method is employed, which includes: comparing measured data with samples to form an operational flow, and iteratively deducing and feeding back based on the logic flow in the intelligent agent to simulate human reasoning.

The data collected in the fourth embodiment pertains to a small sample. By studying the distribution of water levels, seasonal cycles and patterns of upstream water levels are identified. After the patterns are digitized, quarterly regulatory dispatching can be implemented in dispatching strategies, enabling the maximization of higher-order metrics such as data power generation revenue, unit water consumption for power generation, and water asset. Correlations among the data are uncovered, primary factors within these correlations are identified, and the internal logic in markets and the environments is analyzed. This enables the most critical data in a data-driven framework to be identified, to ensure the relevance and significance of each component within the selected data vectors of the data-driven framework. Furthermore, similar low-order to medium-order data like water levels can be identified, and a data-driven method can be developed by abstracting such data features.

For another example, in the second embodiment, for generating units with multiple types of power sources, a power and a frequency of the power grid are affected, and a preliminary power dispatching curve is generated using a high-order ratio K of power difference to frequency difference. The curve is derived from initial bids and quantities provided by power source points, as well as physical features of respective power types. The power curve requires further fitting with power sources such as photovoltaic power, which involves a large amount of real-time data. Based on the degree of fitting, the next step in the process is selected under data-driven guidance. If the fitting is unsatisfactory, adjustments are made to an output power of other generating units, and in extreme cases for grid safety, K value of the overall power grid may be adjusted. This ensures that K value or the output powers of various power sources can be dynamically adjusted under frequency stability regulation, and an equilibrium point can be determined. These interactions occur within intelligent agents, with a bottom layer including data associations and abstracted data drive. Parallel computing methods enable rapid and responsive coordination, achieving a level of flexibility that surpasses human determination. By abstracting data patterns, an iterative process of abstracting using mathematical formulas and then approximating to derive a function result is replaced, thereby simplifying the discovery of underlying patterns. Digitalization directly transmits these patterns and information to subsequent calculations, ensuring the accuracy and speed of information processing.

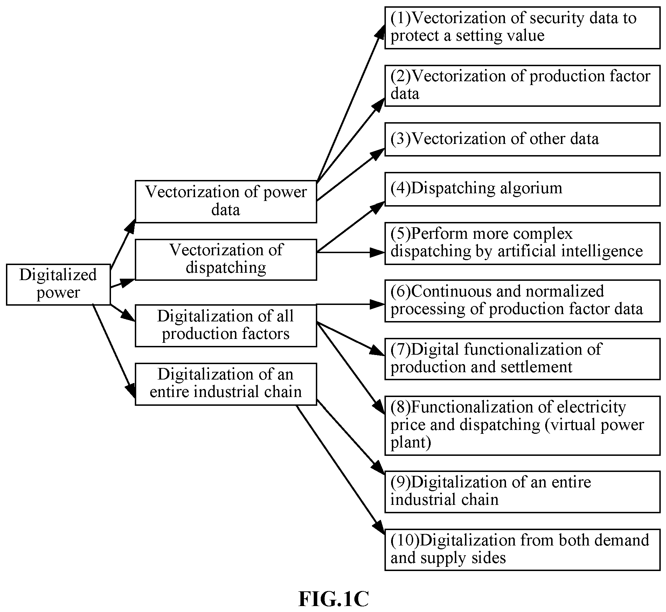

FIG. 1C is a structural diagram of data in the construction of a digital power system according to an embodiment of the present disclosure, which focuses on data. As illustrated in FIG. 1C, data elements, data vectors, data functionalization, an electricity price, and a dispatching algorithm directly drive the digitalization of an entire industry chain. The essence of a digital power system revolves around data. The data vectors obtained from digitizing production factors, normalization of the production factors, and electricity pricing and dispatching strategies involved in the computing all reflect the underlying logic of the data.

The vectorization of security data is discussed in the context of cascaded hydropower dispatching in the fourth embodiment. The digitization of protection settings is elaborated in a scenario involving grid structure modifications in the sixth embodiment. The digitization of production factors is described below, and includes the digitalization and coordination of multiple production factors. The vectorization of other types of data is addressed in the third embodiment. A dispatching algorithm is described in various contexts including the clearing function in the second embodiment, hydropower dispatching in the fourth embodiment, and another aspect in the fifth embodiment. The application of artificial intelligence in processing complex dispatching tasks is discussed in the sixth embodiment, the fourth embodiment, and the fifth embodiment. The normalization of production factors is described in the second embodiment. The digitalization and functionalization of production and settlement are described in the third embodiment, the second embodiment, and the fourth embodiment. The functionalization of an electricity price and dispatching is described in the second embodiment and the third embodiment. The digitalization of the entire industry chain is described in the first embodiment.

V. Reasoning capability and information classification under underlying logic

Production factors of the power grid side emphasize inherent collaborative associations. The production factors of the power plant side are controlled by incorporating the digital logic for advanced control production factors such as hydropower (inertial control) and photovoltaic (active and reactive power control).

In the first embodiment, the production factors of both the power plant side and the power grid side emphasize inherent collaborative associations. The essence lies in establishing the control of computing power across various functions, such as a computing power cluster for active and reactive power functions, an operator cluster for grid inertial functions, a computing power cluster for grid load and electricity price functions, a computing power cluster for grid security and stability, and a computing power cluster for grid carbon footprint. The computing power clusters are interconnected via high-speed data links, and can be mutually nested or invoked, enabling decentralized, blockchain-based control. These computing power clusters are all driven by data derived from preceding production factors or control production factors. Consequently, this forms the digitization of operator functions within intelligent agents, which constitutes the core of the digital power system.

Taking computing power clusters as a handler for the digital power system, digital power is considered and grasped from a profound dimension. By calculating and evaluating the computing power of the power and digital industries professionally, the cognitive capacity similar to that of OpenAI O1 model is established. Intelligent agents establish a synergistic relationship of functional mappings between the power grid side and the power plant side. By establishing associations among data vectors, vectors can be associated with functions, and sets (production factors and their features) can be associated with intelligent agents (electricity price, active and reactive power, inertia, security, and electricity carbon footprint).

FIG. 1D is an implementation architecture diagram of digital power association according to an embodiment of the present disclosure. In this solution, the digital power system based on a multifunctional intelligent agent is established according to the implementation architecture diagram.

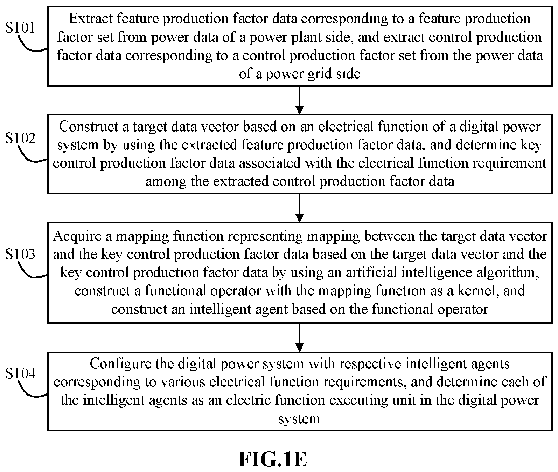

Hereinafter, the implementation of a method and an apparatus for constructing a digital power system based on a multifunctional intelligent agent in the technical solution of the present disclosure is described in detail with reference to the drawings and embodiments. FIG. 1E is a flowchart of a method for constructing a digital power system based on a multifunctional intelligent agent according to an embodiment of the present disclosure. As shown in FIG. 1E, the method includes: steps S101 to S104.

In step S101, feature production factor data corresponding to a feature production factor set is extracted from power data of a power plant side, and control production factor data corresponding to a control production factor set is extracted from the power data of a power grid side.

Currently, the power data in a power system is typically analyzed independently. For example, when analyzing a specific index, a limited amount of data directly related to the index is taken into account, while ignoring the influence of some other factors. This results in insufficient accuracy of power analysis results, or overly simplistic content, leading to a low value of analysis results. In this case, power resources are prone to be wasted ineffectively. To construct a digital power system based on multiple intelligent agents, the solution of the present disclosure is to coordinate data features of the power plant side and the power grid side. Specifically, the feature production factor data of the power plant side is coordinated with the control production factor data of the power grid side. Based on this, a functional operator including a mapping function representing a relationship between the two is constructed, and an intelligent agent is established based on the functional operator, as detailed in steps S102 and S103. This concept addresses existing issues of incomplete analysis and overly simplistic data, and enables accurate and sensitive capture of associations among data in the power system, to form data assets to meet diverse electrical function requirements. Thus, it can assist relevant personnel in conducting efficient dispatching and control in the power system, maximizing the effectiveness of the digital power system.

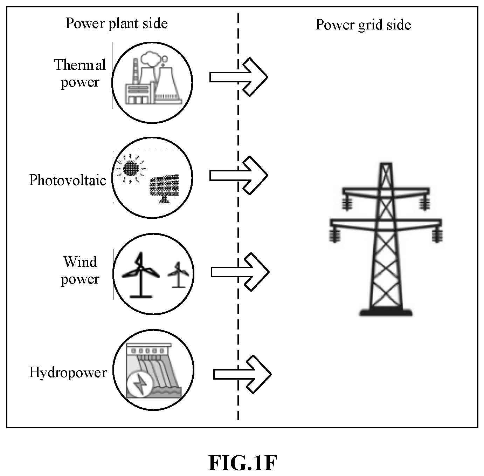

FIG. 1F is a schematic diagram of a power supply scenario according to an embodiment of the present disclosure. As shown in FIG. 1F, in practice, various types of power plants may communicate with and transmit power to the power grid side. These different types of power plants can collectively be referred to as the power plant side. In an embodiment of the present disclosure, the power plant side reports its data to the power grid side to provide timely feedback, and the power grid side conducts real-time dispatching on the power plant side, such as peak-shaving and frequency regulation dispatching. Based on the influence of various factors such as power generation cost, performance of generator sets, uncertainty of power generation of different types of power plants, and changes in load demand, the power plant side reaches an "agreement" with the power grid side, and then executes corresponding operations based on instructions from the power grid side. Taking a thermal power plant as an example, the thermal power plant may further increase or release the heat stored in the thermal power plant based on the instructions of the power grid side. Alternatively, the thermal power plant may adjust a following manner of a power-generator-boiler system based on load requirements. Taking a wind power plant as an example, a wind turbine may increase or decrease the load based on the instructions from the power grid side, and adjust a chamfer edge of the wind turbine. Taking a photovoltaic power plant as an example, an angle of a thyristor can be controlled based on a load dispatching instruction from the power grid side, to alter power generation. Taking a hydropower plant as an example, water volume and water cost can be calculated based on a dispatching curve for the power grid side, to control the power generation of hydropower turbines. As illustrated in FIG. 1F, in actual power production processes, collaborative dispatching is conducted on the power grid side and the power plant side, to achieve optimized and stable power supply and maintain cost demands for both sides. In combination with the above practical requirements, a digital power system is constructed based on a multifunctional intelligent agent by coordinating multiple production factors in the present disclosure. This system exhibits a broad application prospect and the potential for long-term application in power systems. By coordinating and digitally analyzing multiple production factors, the accuracy and reliability of power analysis in current power systems are improved. Through the coordination of multiple production factors, this system breaks down data barriers between the power plant side and the power grid side, captures associations among data of multiple production factors by using artificial intelligence technology, to achieve digital power analysis in the power system field in an improved intelligent and automated manner.

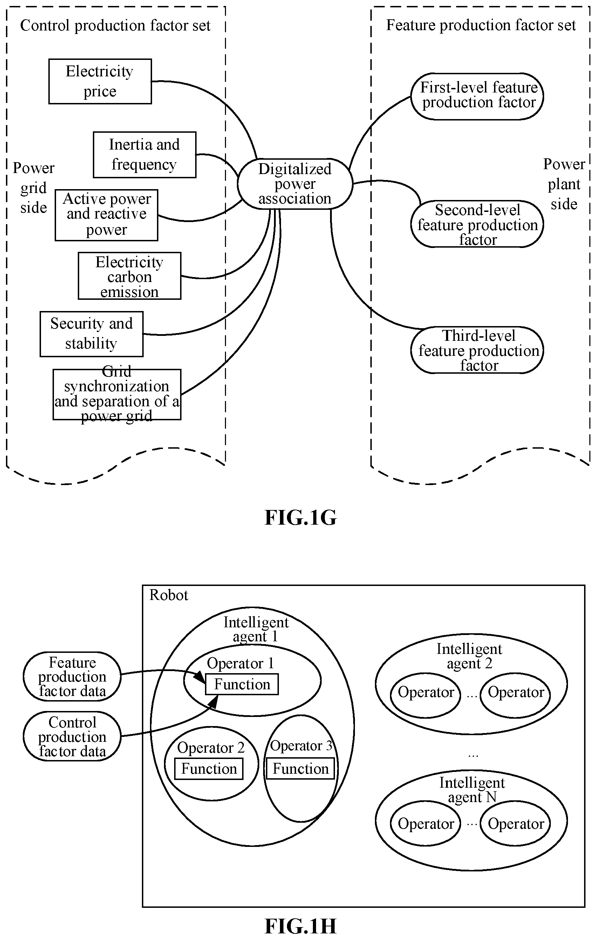

To facilitate understanding, architecture for dividing the production factors in the technical solution of the present disclosure is described below with reference to FIG. 1G. FIG. 1G is a schematic architecture diagram showing division of production factors according to an embodiment of the present disclosure. In an embodiment of the present disclosure, production factors of the power plant side and the power grid side are divided respectively. The basis for dividing production factors of the power plant side is called a feature production factor set. The basis for dividing production factors of the power grid side is called a control production factor set.

In an embodiment of the present disclosure, the feature production factor set includes feature production factors in multiple levels. Specifically, the feature production factors can be subdivided into: first-level feature production factors, second-level feature production factors, and third-level feature production factors. The first-level feature production factor is a natural feature production factor (or referred to as a natural index), which directly reflects a natural index. The second-level feature production factor is a single-system feature production factor (or referred to as a single-system index), which is a production factor related to a single system in the digital power system. The third-level feature production factor is a plant-system feature production factor (or referred to as a plant-system index), which is a production factor related to an overall system in the digital power system.

As illustrated in FIG. 1F, various types of power plants, such as a thermal power plant, a photovoltaic power plant, a wind power plant, a hydropower plant, employ different power generation methods, different natural resources, and varying internal system structures. To achieve accurate digital power analysis, in the technical solution of the present disclosure, the first-level feature production factors, the second-level feature production factors, and the third-level feature production factors can be subdivided for each type of power generation. Thus, for the power plant employing each type of power generation, data corresponding to respective levels of feature production factors can be extracted subsequently.

Several first-level feature production factors are illustratively introduced below in combination with different types of power generation. Taking photovoltaic power generation as an example, the first-level feature production factors may include: photovoltaic illuminance. Taking hydropower generation as an example, the first-level feature production factors may include: precipitation (incoming water), and the like. Taking thermal power generation as an example, the first-level feature production factors may include: a lower heating value of coal, coal consumption, heat consumption, and the like. Taking wind power generation as an example, the first-level feature production factors may include: a wind speed, and the like.

For a thermal power plant, the single system may be a boiler system, an electrical system, and the like. For a hydropower plant, the single system may be a turbine system, a speed regulation system, a butterfly valve layer system, and the like. For a photovoltaic power plant, the single system may be a photovoltaic panel region, a substation region, and the like. In addition, these different types of power plants share a common power transmission and transformation system. Accordingly, the second-level feature production factors may be production factors reflecting a single system, such as boiler efficiency and turbine efficiency. The third-level feature production factors may be production factors that reflect the overall situation of multiple systems, such as photovoltaic efficiency, hydropower efficiency, thermal power unit efficiency, power plant thermal efficiency (specific heat index). As can be seen from FIG. 1G, a delving level of data features increases step by step from the first-level feature production factors to the second-level feature production factors and then to the third-level feature production factors, to exhibit a progressive hierarchy. It can be seen that in an embodiment of the present disclosure, based on the division architecture of the feature production factors in the feature production factor set, data of natural features, features of a single system, and features of a plant system can be collaboratively extracted, and digital power analysis can be achieved based on features in multiple levels.

In an embodiment of the present disclosure, the control production factor set includes control production factors in multiple aspects. Control production factors are production factors that reflect the performance of the power grid, which include some key physical quantities in a power system. Control production factors contribute to provide effective theoretical basis for power system control. In an embodiment of the present disclosure, for example, the control production factors include but are not limited to following six aspects of control production factors: (1) electricity price; (2) inertia and frequency; (3) active power and reactive power; (4) electricity carbon emission; (5) security and stability; (6) grid synchronization and separation. It should be noted that the six aspects of control production factors in the above example are only defined from a macro perspective. In specific implementations, the control production factors in each aspect can be further subdivided or more specific factors can be derived. The quantity and content of the control production factors are not limited herein. In an embodiment of the present disclosure, based on the division architecture of control production factors in the control production factor set, data on multiple aspects such as an electricity price, an inertia and a frequency, an active power and a reactive power, an electricity carbon emission, security and stability, and grid synchronization and separation can be collaboratively extracted, and digital power analysis can be achieved in multiple aspects concerned by the power grid.

As described above, a feature production factor set and a control production factor set are determined in advance in the technical solution of the present disclosure. The feature production factor set includes feature production factors in multiple levels, such as first-level feature production factors, second-level feature production factors, and third-level feature production factors corresponding to different types of power generation. The control production factor set includes control production factors in multiple aspects, such as an electricity price, an inertia and a frequency, an active power and a reactive power, an electricity carbon emission, security and stability, and grid synchronization and separation. Based on the feature production factor set and the control production factor set, the production factor data is extracted from both the power data of the power plant side and the power data of the power grid side in this step.

In an embodiment, the extracting feature production factor data corresponding to the feature production factor set from power data of the power plant side includes: extracting first-level feature production factor data, second-level feature production factor data, and third-level feature production factor data corresponding to thermal power generation from the power data of a thermal power plant; extracting first-level feature production factor data, second-level feature production factor data, and third-level feature production factor data corresponding to photovoltaic power generation from the power data of a photovoltaic power plant; extracting first-level feature production factor data, second-level feature production factor data, and third-level feature production factor data corresponding to hydropower generation from the power data of a hydropower plant; and extracting first-level feature production factor data, second-level feature production factor data, and third-level feature production factor data corresponding to wind power generation from the power data of a wind power plant.

In an embodiment, the extracting feature production factor data corresponding to a feature production factor set related to control from the power data of a power plant side, to form a data vector for expressing a specific type of function such as stability of a power system includes: extracting electricity price data, inertia and frequency data, power data, electricity carbon emission data, security and stability index data, and grid synchronization and separation impact data from the power data of the power grid side.

As an example, the electricity price data may include electricity prices at different time instants and at different load requirements.

The inertia and frequency data may include system inertia, and system frequency. The relationship between system inertia and system frequency is an important aspect in stability analysis of the power system. System inertia typically refers to a moment of inertia of generating units in the power system, which reflects the resistance of the system to frequency changes. Hereinafter, some key concepts that outline the connection between system inertia and system frequency are described. Inertia support effect: When large load variations occur in the power system or the generating units are abruptly connected to or disconnected from the power system, system inertia can slow down the change speed of system frequency. This inertia support effect helps maintain the frequency stability of the power system. Frequency change rate: The magnitude of system inertia directly influences the frequency change rate. A greater inertia indicates a smaller change rate of system frequency for given power imbalance. A smaller frequency change rate helps avoid under frequency load shedding or other stability control measures triggered by rapid frequency changes.

The voltage, active and reactive power data may include powers at different voltages, for example in the form of (voltage, active power, reactive power). In the power system, voltage and frequency are not directly related, but they are both related to power (active power and reactive power, respectively) and therefore there is an indirect relationship. The voltage drops when the reactive power is insufficient and rises when the reactive power is excessive. The frequency decreases when the active power is insufficient and increases when the active power is excessive.

The electricity carbon emission data may include a carbon footprint, such as carbon dioxide emissions per kilowatt hour of electricity generated.

The security and stability index data may include mean time between failures (MTBF) of the power grid. MTBF is an important index to measure the reliability of products (especially electronic products). It represents the average operating time of products between two adjacent failures under specified conditions and within a specified time period.

The grid synchronization and separation impact data may include the influence degree of each network on other networks.

In a specific implementation, after the control production factor data is extracted, the control production factor data is further converted to digital vector representation, to facilitate network identification, computation and processing. The converted digital vector representation includes the control production factor data from one aspect, or the control production factor data in multiple aspects. The dimension and data source of the digital vector representation may be set according to requirements, and are not limited herein.

In step S102, based on an electrical function requirement for the digital power system, a target data vector is constructed by using the extracted feature production factor data, and key control production factor data associated with the electrical function requirement is determined among the extracted control production factor data.

In an embodiment of the present disclosure, an intelligent agent is constructed based on the electrical function

requirement and in conjunction with the feature production factor data and the control production factor data extracted in the previous step. It can be understood that the production factor data from multiple levels and multi aspects are extracted in the previous step, and a subset of the data may be highly relevant to the electrical function requirement. The subset of the data contributes to construct an intelligent agent capable of meeting a specific electrical function requirement. However, a portion of the extracted data may exhibit minimal relevance to the electrical function requirement. For example, when the electrical function requirement is related to an electricity price, the electricity carbon emission data in the data is currently of little significance for calculation and analysis of electricity price. To avoid negative and adverse impacts of redundant and massive data on the construction of intelligent agents, in the present disclosure, the obtained massive data is extracted and refined to facilitate the associations among data to be captured accurately. As the correlation of data features in reinforcement learning strengthens in the future and with the increasing data-driven nature of carbon emission data, convolutional neural network algorithms can automatically extract the data features and incorporate them into an electricity price operator. This also reflects the mechanism of future inference and emergence capabilities.

In an embodiment of the present disclosure, based on the extracted feature production factor data, one or more types of feature production factor data (as a target feature production factor) with a high correlation with a specific requirement is further extracted from the extracted feature production factor data based on the specific requirement reflected in the electrical function requirement and the association between the specific requirement and the feature production factors, and then a data vector is constructed. For convenience of distinguishing, the data vector is referred to as the target data vector. The target data vector can be constructed based on certain construction rules. For example, dimensions of the vector and the levels or names of the feature production factors corresponding to each dimension can be set in the construction rule.

Table 1 shows a subset of the feature production factor data extracted from the power data of a thermal power plant. In Table 1, SHRW represents a weighted specific heat index with a unit of kJ/ (kW • h). Ea represents an electricity volume supplied (or: generated) with a unit of kW • h. EP represents an electricity cost with a unit of USD. SHRcc represents the specific heat index with a unit of kJ/ (kW • h). U represents the coal price with a unit of USD/t. As an example, U = 69 USD/ton. E represents the heat consumption rate for power generation of a generating unit, that is, the heat consumption per kilowatt hour of electricity generation of the generating unit, with a unit of kcal/kWh. N represents the specific heat index, specifically the amount of heat required per kilowatt-hour of electricity generation, with a unit of kcal/kWh. AUX represents the power consumption rate of a plant. ECRm represents the electricity cost per kilowatt hour with a unit of USD/ (kW • h). ECRm represents an electricity charge ratio, that is, the coal cost per kilowatt hour of electricity generation with a unit of USD/ (kW • h).

Table 1

| Condition | SHRW | ECRm | Ea | Power grid compensation coefficient for 1 kilowatt-hour electricity payment CERm=U*N/E (1-AUX) | EP | actual coal consumption of 1 kilowatt-hour electricity | actual coal cost of 1 kilowatt-hour electricity | overall coal cost |
|---|---|---|---|---|---|---|---|---|
| 100% | 2138.4 | 0.0293 | 9261053600 | 0.0311 | 287772056.8 | 450.0942 | 0.0311 | 281802236 |
| 95% | 2152.69 | 0.0295 | 8803700920 | 0.0311 | 213383454 | 453.5357 | 0.0313 | 215502693 |
| 90% | 2167.01 | 0.0297 | 8340348240 | 0.0315 | 262460621.9 | 456.9896 | 0.0315 | 262990196 |
| 85% | 2181.36 | 0.0299 | 7876995560 | 0.0311 | 249520190.1 | 460.4558 | 0.0318 | 250263589 |
| 80% | 2195.74 | 0.0301 | 7413642880 | 0.0319 | 236390822.9 | 463.9345 | 0.0320 | 231321110 |
| 75% | 2210.14 | 0.0303 | 6950290200 | 0.0321 | 223010113 | 467.4258 | 0.0323 | 224163389 |
| 70% | 2245.71 | 0.0308 | 6486937520 | 0.0326 | 211549934 | 415.9231 | 0.0328 | 213022543 |

When the specific requirement reflected in the electrical function requirement is to calculate an electricity price, multiple target data vectors can be extracted according to the feature production factor data shown in items of Table 1. For example, each row of data in Table 1 is extracted to construct a target data vector with a structure of (operating condition, SHRW, ECRm, Ea, CERm, EP, actual coal consumption of 1 kWh, actual coal cost of 1 kWh, overall coal cost). For example, using the second row of data in Table 1, the target data vector 1 is constructed as (100%, 2138.4, 0.0293, 9267053600, 0.0311, 287772056.8, 450.0942, 0.0311, 287802236), and using the third row of data in Table 1, the target data vector 2 is constructed as (95%, 2152.69, 0.0295, 8803700920, 0.0311, 273383454, 453.5357, 0.0313, 275502693). The same method can be used to construct subsequent target data vectors.

In addition, in a specific implementation, the correspondence between the control production factors and the electrical function requirement is constructed in advance. Further, the control production factors corresponding to the specific electrical function requirement are timely and efficiently determined as the key control production factors. Based on this, the key control production factor data associated with the electrical function requirement is determined among the extracted massive control production factor data. Similarly, the extracted key control production factor data can be converted into a digital vector representation.

In step S103, a mapping function representing mapping between the target data vector and the key control production factor data is acquired based on the target data vector and the key control production factor data by using an artificial intelligence algorithm, a functional operator is constructed with the mapping function as a kernel, and an intelligent agent is constructed based on the functional operator.

FIG. 1H is a schematic diagram of a relationship among an intelligent agent, an operator, a function, and production factor data according to an embodiment of the present disclosure. The implementation of this step is illustrated with reference to FIG. 1H. As shown in FIG. 1H, in an embodiment of the present disclosure, the target data vector is obtained based on the feature production factor data, and the key control production factor data is determined based on the control production factor data. Next, by using the artificial intelligence algorithm, learning is performed based on the target data vector and the key control production factor data, to infer and analyze potential data association between the feature production factor data reflecting the target data vector and the key control production factor data. Through the application of the artificial intelligence algorithm, the association between the two can be expressed by the mapping function.

In an embodiment of the present disclosure, the functional operator is constructed with the mapping function as a kernel. Among examples in FIG. 1H, an intelligent agent 1 is taken as an example, which includes multiple functional operators, namely: operator 1, operator 2, and operator 3. Each functional operator is loaded with a mapping function. It can be understood that the mapping functions loaded in different functional operators are distinct. This is because the electrical function requirements for driving the construction of respective functional operators focus on different aspects, and the feature production factor data and the control production factor data used vary accordingly. By executing this step, the constructed intelligent agent corresponds to the aforementioned electrical function requirement. For example, the intelligent agent 1 is finally constructed according to a first electrical function requirement, and an intelligent agent 2 is finally constructed according to a second electrical function requirement.

In an embodiment of the present disclosure, the artificial intelligence algorithm used may be diversified. For example, all of open source artificial intelligence algorithms that are accessible currently can be used to infer and analyze the internal association between the target data vector and the key control production factor data based on the above technical concepts, to obtain an accurate mapping function. The specific type of the artificial intelligence algorithm used is not limited herein.

Referring to FIG. 1H, it can be seen that in an embodiment of the present disclosure, one intelligent agent may include one or more functional operators. Taking the intelligent agent 1 as an example, the intelligent agent 1 includes three functional operators. The functional operators in the same intelligent agent can be independent of each other. Alternatively, the functional operators in the same intelligent agent can be technically or logically related.

Intelligent agents other than the intelligent agent 1 are shown in FIG. 1H, such as the intelligent agent 2, an intelligent agent N shown in FIG. 1H. After these intelligent agents are constructed, an automated device that integrates the intelligence of multiple intelligent agents is formed. Thus, the device can also be regarded as a "robot". It knows knowledge related to a power system, and is able to address various analysis issues of the power system by using functional operators in the intelligent agents. As international cooperation in the power industry becomes increasingly extensive, the method for constructing an intelligent agent and the architecture of the "robot" according to the technical solution of the present disclosure are breakthrough technologies for coping with international power cooperation.

In step S104, the digital power system is configured with respective intelligent agents corresponding to different electrical function requirements, and each of the intelligent agents serves as an electrical function executing unit in the digital power system.

In practice, the electrical function requirement can be expressed by a power analysis request. The power analysis request may be initiated by the power plant side or the power grid side, or may be initiated by a third party other than the power plant side and the power grid side. As long as a subject or a device that initiates the power analysis request possesses the authority or qualification to activate a power analysis intelligent agent for data analysis, an execution device (for example, a server or a terminal) of the method for constructing a digital power system based on a multi-functional intelligent agent provided herein can respond to the power analysis request, and analyze a matching degree between the electrical function requirement carried in the request and the constructed one or more intelligent agents. If no matching intelligent agent is found, the steps in the above method are to be performed to establish an intelligent agent or a corresponding operator according to the electrical function requirement.

It can be understood that if it is determined that the electrical function requirement carried in the power analysis request matches a certain constructed intelligent agent, the intelligent agent is invoked. The intelligent agent is used as an electrical function executing unit, to respond to the power analysis request through the functional operator within the intelligent agent. For example, if requirement information carried in the power analysis request indicates the need to calculate an electricity price, the electricity price operator (whose function is to calculate the electricity price) in the power analysis intelligent agent is invoked, to calculate the electricity price based on data necessary for the calculation currently provided to the operator.

In the technical solutions of the present disclosure, the intelligent agents are constructed depending on the production factor data from the power plant side and the power grid side, the feature production factor set includes feature production factors in multiple levels, and the control production factor set includes control production factors in multiple aspects. Thus, the coordination between the feature production factors in multiple levels and the control production factors in multiple aspects is achieved. The intelligent agent constructed based on the above effectively utilizes diverse information of the power data, and implements an electric function that collaborates with multiple production factors. For example, the electric function is one of an electric function for power trading between the power grid side and the power plant side, an electric function for enabling dispatching and control of the power grid side over the power plant side, and an electric function for self-regulation of a power grid. With the intelligent agent, associations among data can be captured accurately, to obtain accurate and transferable data analysis results or data calculation results. It can also be understood that with the digital power system constructed according to this solution, a high-value data asset is formed in the power system, which enhances analytical value of the power data. The constructed digital power system effectively facilitates global power trading and the reform of the domestic power market.

In practice, it may occur that a relatively complex analysis objective cannot be achieved by using a single operator. In this case, one analysis objective can be achieved by using multiple operators. A solution for such cases is introduced below.

To address the above issues, the power analysis requirement information is analyzed in the initial stage of constructing the intelligent agent, to obtain multiple requirement sub-information items and a logical dependency relationship or a digital conversion relationship among them. By analyzing and dissembling the power analysis requirement information, functional operators are constructed based on the requirement sub-information items. It is assumed that the multiple requirement sub-information items including include a first requirement sub-information item and a second requirement sub-information item are obtained by analyzing the power analysis requirement information.

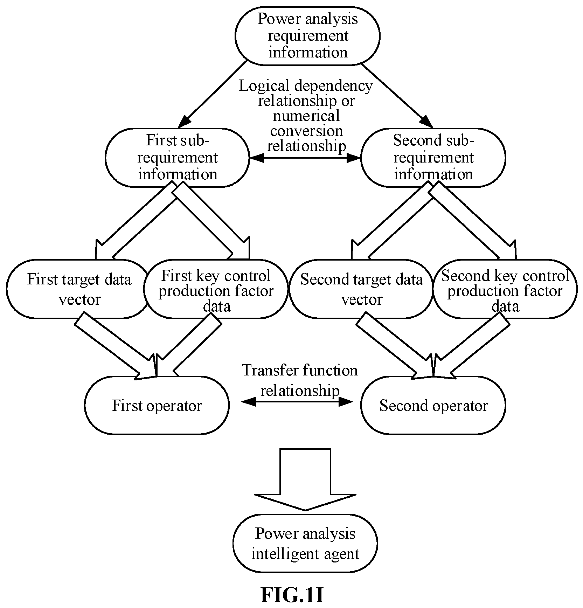

FIG. 1I is an implementation flowchart of constructing a power analysis intelligent agent according to an embodiment of the present disclosure. As shown in FIG. 1I, in a specific implementation, the method for constructing a digital power system based on a multifunctional intelligent agent according to an embodiment of the present disclosure further includes:

constructing a first target data vector based on a first requirement sub-information item, and determining first key control production factor data associated with the first requirement sub-information item; and constructing a second target data vector based on a second requirement sub-information item, and determining second key control production factor data associated with the second requirement sub-information item.

In an example shown in FIG. 1I, the acquiring a mapping function representing mapping between the target data vector and the key control production factor data based on the target data vector and the key control production factor data by using an artificial intelligence algorithm, constructing a functional operator with the mapping function as a kernel, and constructing a power analysis intelligent agent based on multiple functional operators includes:

acquiring a first operator by using the artificial intelligence algorithm based on the first target data vector and the first key control production factor data; acquiring a second operator by using the artificial intelligence algorithm based on the second target data vector and the second key control production factor data; constructing a transfer function relationship between the first operator and the second operator based on a logical dependency relationship or a numerical conversion relationship; and constructing a power analysis intelligent agent based on the transfer function relationship, the first operator, and the second operator.

Thus, a power analysis intelligent agent with multiple operators including the first operator and the second operator is constructed. Based on this, when the power analysis request is received and the requirement information carried therein matches the first requirement sub-information and the second requirement sub-information, the power analysis intelligent agent is invoked to trigger the first operator and the second operator to operate based on the transfer function relationship, to generate a final analysis response result to the power analysis request. In this way, multiple functional operators in the power analysis intelligent agent operate collaboratively. By constructing multiple functional operators with a logical dependency relationship or a numerical conversion relationship and constructing a power analysis intelligent agent accordingly, the power analysis intelligent agent can be used to perform complex and diversified power data analysis operations.

As mentioned above, a transfer function relationship between the first operator and the second operator is constructed based on a logical dependency relationship or a numerical conversion relationship. Thus, a logical dependency relationship or a numerical conversion relationship among different operators in the intelligent agent also exists. Hereinafter, several dependency relationships that exist in the power system are provided, including the dependency relationships between a reactive power and a voltage, between heat consumption and coal consumption, between system inertia and system frequency, between an electricity price and a coal price, and the like.

For example, the numerical conversion relationship between different operators may indicate that while functions of different operators are essentially the same, a difference exists in trading level or pricing level. To meet a requirement for interoperability in trading or pricing, operators are to be used to perform numerical conversions at a trading level or a pricing level. As an example, an operator A is used to calculate the tariff for the power grid of a country A, and an operator B is used to calculate the tariff for the power grid of a country B. When the tariffs between the country A and the country B are to be converted, the conversion is performed based on the numerical conversion relationship.

In an embodiment of the present disclosure, each intelligent agent is configured with multiple types of interfaces, to complete communication or data exchange with other entities. As an example, the intelligent agent is configured with a power plant side interface, a power grid side interface, and an intelligent agent interface. The power plant side interface is used for the intelligent agent to interface with a power plant. The power grid side interface is used for the intelligent agent to interface with a power grid. The intelligent agent interface is used for the intelligent agent to interface with other intelligent agents.

In an embodiment, the intelligent agent may be configured with multiple power plant side interfaces, and the power plant side interfaces are respectively used to interface with various types of power plants or one type of multiple power plants. A quantity of the power plant side interfaces provided in one intelligent agent is not limited in the present disclosure.

In an embodiment, the intelligent agent may be configured with multiple intelligent agent interfaces, and the intelligent agent interfaces are respectively used to interface with other intelligent agents that are different from each other. A quantity of the intelligent agent interfaces provided in one intelligent agent is not limited in the present disclosure.

By utilizing the intelligent agent, an analysis response result to the power analysis request is generated. Based on the above description of the interfaces configured in the intelligent agent, in the technical solution of the present disclosure, the intelligent agent may send the analysis response result to the power plant via the power plant side interface, the intelligent agent may send the analysis response result to the power grid via the power grid side interface, and the intelligent agent may send the analysis response result to other intelligent agents via the intelligent agent interface. It can be seen that with the configuration of the above various types of interfaces, the intelligent agent can communicate with various external objects and transmit analysis results via the interfaces.

In addition, in an embodiment of the present disclosure, after obtaining the analysis response result, the intelligent agent is to send a control instruction to the external environment. With the configuration of multiple types of interfaces, the intelligent agent can transmit the control instruction. In an embodiment, based on the analysis response result, the intelligent agent generates a first control instruction for the power plant, a second control instruction for the power grid, or a third control instruction for other intelligent agents. It should be noted that the first control instruction, the second control instruction, and the third control instruction are generated according to specific control requirements. The intelligent agent can send the first control instruction to the power plant via the power plant side interface, or send the second control instruction to the power grid via the power grid side interface, or send the third control instruction to other intelligent agents via the intelligent agent interface.

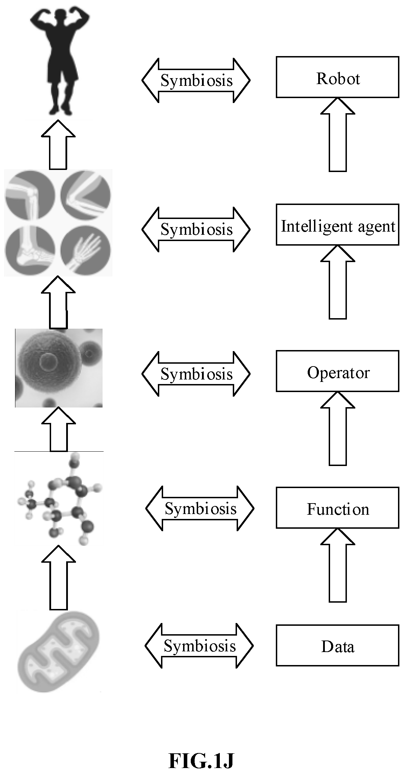

FIG. 1J is a schematic diagram of a relationship among an intelligent agent, an operator, a function, and production factor data according to another embodiment of the present disclosure. In a left portion of FIG. 1J, objects at the same conceptual level such as data, functions, operators, and intelligent agents in the technical solution of the present disclosure are shown from a biological perspective. In a right portion of FIG. 1J, concepts of data, functions, operators, and intelligent agents mentioned in the digital power analysis method provided herein that coordinates multiple production factors are shown. The left and right portions of FIG. 1J are related by arrows labeled with a word "symbiosis", and the symbiosis arrows reflect the similarity in roles or functions of the concepts or objects on the left and right.

As shown in the left portion of Figure 1J, the construction of proteins relies on mitochondria, the construction of cells relies on proteins, and the operation of physiological functions such as human joints (or organs) relies on cells. A complete human body is inseparable from diverse and multifunctional joints and organs. It can be understood that mitochondria provide critical biological features, such as deoxyribonucleic acid (DNA), the genetic material in mitochondria. DNA carries the genetic information required for the synthesis of RNA and proteins. DNA is an indispensable biological macromolecule for the development and normal operation of organisms. The performance of human joints (or organs) is also inseparable from the genetic information carried by DNA. The data, function, operator, intelligent agent, and robot shown in the right portion of Figure 1J are similarly progressive. The formation of a mapping function is closely related to the extraction of feature production factor data and control production factor data. The mapping function is formed based on the data. The operator is configured with the function as a kernel. The intelligent agent includes one or more operators to achieve a function of analyzing data of the power system. The robot formed finally can be used to process complex and diverse power analysis requirements due to its diversified intelligent agents. All of this is fundamentally dependent on the division architecture of production factors shown in Figure 1G.

A process of constructing a digital power system based on a multifunctional intelligent agent based on the method provided herein is described in detail above. In the technical solution of the present disclosure, the constructed digital power system is configured with the intelligent agents corresponding to different electrical function requirements. To facilitate understanding of the ability of the constructed digital power system to respond to diversified electrical function requirements, six embodiments are provided in the present disclosure to illustrate how to achieve electrical functions by using operators.

In the technical solution of the present disclosure, the electrical function requirement may be one of: an electrical function requirement for power trading between the power grid side and the power plant side, an electrical function requirement for enabling dispatching control of the power grid side over the power plant side, or an electrical function requirement for self-regulation of a power grid. Hereinafter, the six embodiments in the technical solution of the present disclosure are described.

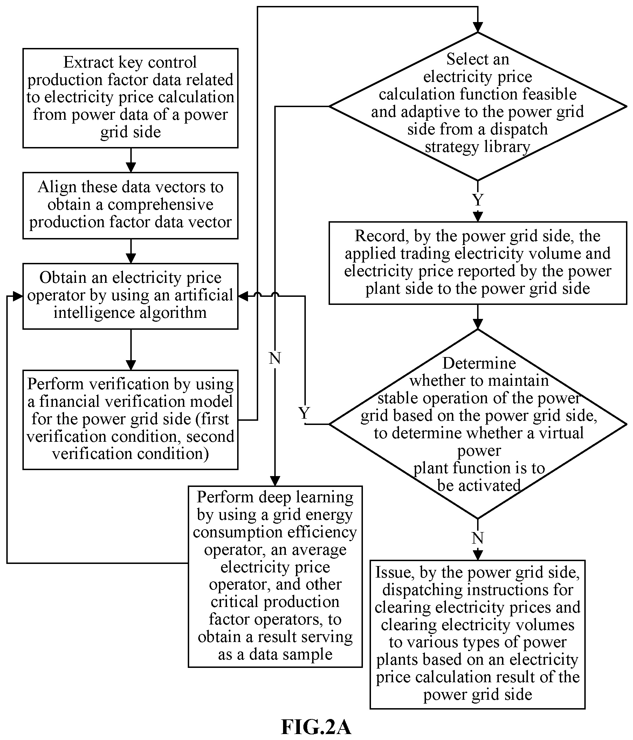

In the first embodiment, the electrical function requirement for power trading between the power grid side and the power plant side is to calculate an electricity price, the functional operator is an electricity price operator, and the electricity price operator is configured to calculate the electricity price. In the first embodiment, a process of constructing an intelligent agent based on the electricity price operator in a digital power system is introduced. A method for calculating the electricity price is performed by using an intelligent agent constructed based on the electricity price operator, which is illustrated in the first embodiment with reference to FIGS. 2A to 2C.

In the second embodiment, the electrical function requirement for power trading between the power grid side and the power plant side is power clearing, the functional operator is a clearing operator, and the clearing operator is configured for power clearing. In the second embodiment, a process of constructing an intelligent agent based on the power clearing operator in the digital power system is introduced. The electricity price operator differs from the clearing operator in that the clearing operator can be used to calculate the electricity price, and after the electricity price is calculated, a function of a clearing curve is implemented based on a priority or the priority of a stack. Thus, the clearing operator exhibits more functions than the electricity price operator. A method for power clearing is performed by using an intelligent agent constructed based on the clearing operator, which is illustrated in the second embodiment with reference to FIGS. 2A to 3I and FIGS. 4A to 4H.

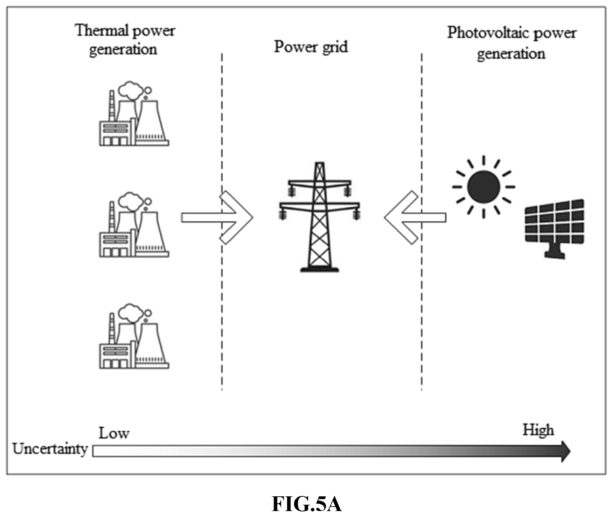

In the third embodiment, the electrical function requirement for enabling dispatching control of the power grid side over the power plant side is peak-shaving under highly-frequent load variations in the thermal power scenario, the functional operator is a thermal power peak-shaving operator, and the thermal power peak-shaving operator is configured to achieve peak-shaving under highly-frequent load variations in the thermal power scenario. In the third embodiment, a process of constructing an intelligent agent based on the thermal power peak-shaving operator in the digital power system is introduced. A peak-shaving method under highly-frequent load variations in a thermal power scenario is performed by using an intelligent agent constructed based on the thermal power peak-shaving operator, which is illustrated in the third embodiment with reference to FIGS. 5A to 5F.

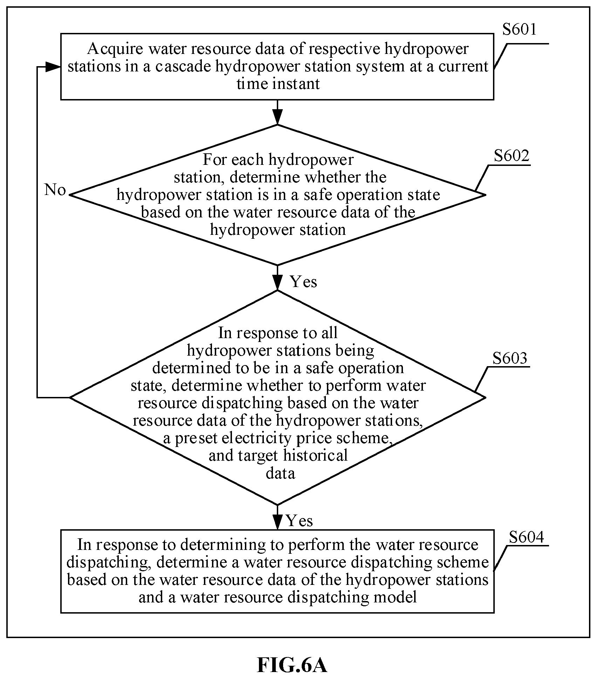

In the fourth embodiment, the electrical function requirement for enabling dispatching control of the power grid side over the power plant side is to dispatch water resources of a cascade hydropower station system, the functional operator is a water resource dispatching operator, and the water resource dispatching operator is configured to achieve dispatching of water resources of the cascade hydropower station system. In the fourth embodiment, a process of constructing an intelligent agent based on the water resource dispatching operator in the digital power system is introduced. A method for dispatching water resources is performed by using an intelligent agent constructed based on the water resource dispatching operator, which is illustrated in the fourth embodiment with reference to FIGS. 6A to 6J.

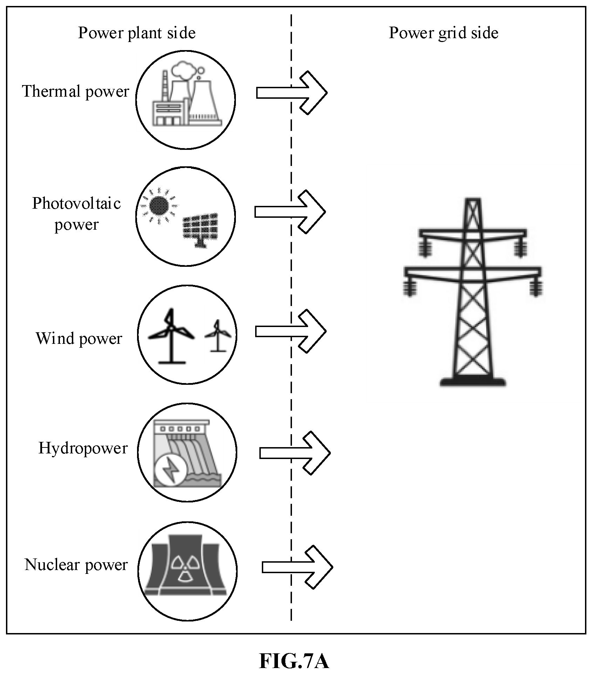

In the fifth embodiment, the electrical function requirement for enabling dispatching control of the power grid side over the power plant side is dispatching on the power plant by the power grid in a power system with large unit capacity relative to small grid capacity, the functional operator is a dispatching operator for large unit capacity relative to small grid capacity, and the dispatching operator for large unit capacity relative to small grid capacity is configured to achieve dispatching on the power plant by the power grid in the power system with large unit capacity relative to small grid capacity. In the fifth embodiment, a process of constructing an intelligent agent based on the dispatching operator for large unit capacity relative to small grid capacity in the digital power system is introduced. A method for power grid dispatching is performed by using an intelligent agent constructed based on the dispatching operator for large unit capacity relative to small grid capacity, which is illustrated in the fifth embodiment with reference to FIGS. 7A to 7F.

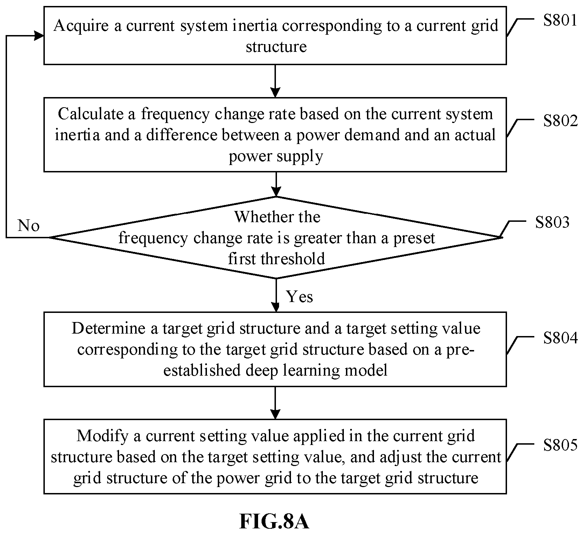

In the sixth embodiment, the electrical function requirement for self-regulation of a power grid is to adjust a grid structure of the power grid, the functional operator is a grid structure adjusting operator, and the grid structure adjusting operator is configured to adjust the grid structure of the power grid. In the sixth embodiment, a process of constructing an intelligent agent based on the grid structure adjusting operator in the digital power system is introduced. A method for adjusting a grid structure of a power grid is performed by using an intelligent agent constructed based on the grid structure adjusting operator, which is illustrated in the sixth embodiment with reference to FIGS. 8A to 8D.

First embodiment

In the first embodiment, the electrical function requirement for power trading between the power grid side and the power plant side is to calculate an electricity price, the functional operator is an electricity price operator, and the electricity price operator is configured to calculate the electricity price. In the first embodiment, a process of constructing an intelligent agent based on the electricity price operator in the digital power system is introduced.

In practice, the tariff is to be calculated at the power plant side, and then the tariff is provided to the power plant side. Subsequently, if the power plant side and the power grid side reach an agreement on the tariff, power trading can be carried out.

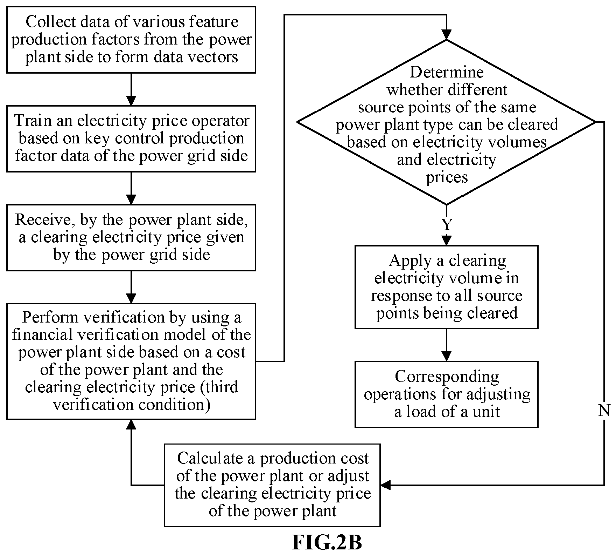

Hereinafter, processes of the power grid side and the power plant side based on the electricity price operator are introduced from perspectives of the power grid side and the power plant side, respectively with reference to FIG. 2A and FIG. 2B.

In FIG. 2A, the process of the power grid side based on the electricity price operator is shown. First, key control production factor data related to the electricity price is extracted from power data of the power grid side. In an embodiment, the key control production factor data is represented by a digitized vector. Then, at the power grid side, a target data vector is to be obtained through feature extraction based on the power data of the power plant side. It can be understood that this type of data vector is also related to the calculation of electricity price. In an example, a data vector A related to the performance efficiency of a generating unit A is represented as (coal consumption 1, heat consumption rate 1, generating unit efficiency 1), and a data vector B related to the performance efficiency of a generating unit B is represented as (coal consumption 2, heat consumption rate 2, generating unit efficiency 2). By aligning these data vectors and conducting statistical analysis, a comprehensive production factor data vector is obtained, which is (coal consumption 1 + coal consumption 2, heat consumption rate 1 + heat consumption rate 2, generating unit efficiency 1 + generating unit efficiency 2). Next, based on the data vectors of the power plant side and the power grid side extracted above, an operator function computing power cluster is obtained by using the artificial intelligence algorithm. The operator function computing power cluster includes multiple functional operators with functions as their kernels. Possessing such an operator function computing power cluster can also be interpreted as the construction of a power analysis intelligent agent.

Taking electricity price calculation as an example, the constructed operator function computing power cluster can be referred to as a grid load and electricity price function computing power cluster. In addition, considering other possible power analysis requirements, a grid inertial frequency computing power cluster, an active and reactive power function computing power cluster, a grid carbon footprint computing power cluster, a grid voltage and current function computing power cluster, and a grid security and stability computing power cluster, and a grid synchronization and separation computing power cluster can be further established. The active and reactive power function computing power cluster includes a function for reflecting the performance of an active power and a reactive power in the power grid. The grid inertia function computing power cluster includes a function for reflecting the performance of stabilizing frequency variation in the grid. The grid load and electricity price function computing power cluster includes a function for calculating the correlation between the electricity price of the power grid and a power generation load of the power plant. The grid security and stability computing power cluster includes a function for calculating grid steps and power flows. The grid carbon footprint computing power cluster includes a function for calculating carbon consumption in the operations of devices such as a hydropower device, a thermal power device, a photovoltaic device, a wind power device in the power grid.

Taking the grid load and electricity price function computing power cluster as an example, the mapping function which serves as the kernel of the electricity price operator can be expressed by: CERm = U * N/E (1-AUX). CERm represents a grid compensation coefficient for 1 kilowatt-hour of electricity payment. U represents a coal price, which is also a fuel cost subsidy, with a unit of USD/t. E represents a heat consumption rate for power generation of a generating unit, that is, the heat consumption per kilowatt hour of electricity of the generating unit, with a unit of kcal/kWh. N represents a specific heat index with a unit of kcal/kWh. AUX represents a power consumption rate of a plant. This equation reflects a relationship among feature production factors such as the grid compensation coefficient for 1 kilowatt-hour of electricity payment, the coal price, the heat consumption for power generation of a generating unit, the specific heat index, and the power consumption rate of a plant.

After the electricity price operator is obtained by using an artificial intelligence algorithm, an electricity price calculation result of the power plant side is obtained by performing calculations with the electricity price operator when the intelligent agent including the operator is utilized. It should be noted that since the operator is constructed based on the power data of the power plant side, the electricity price calculation result actually reflects the cost considerations and profit requirements of the power plant side. Subsequently, at the power grid side, the electricity price calculation result is to be further evaluated.

As shown in FIG. 2A, after the electricity price calculation result for the power plant side is obtained by using the electricity price operator, the electricity price calculation result is verified through a financial verification model of the power grid side. The main purpose of verifying the electricity price calculation result through the financial verification model of the power grid side is to ensure the balance and stability of the power plant and the power grid. In an embodiment, the financial verification model of the power grid side includes: a first verification condition and a second verification condition. The first verification condition is: actual outputs of various types of power plants ≥ an electricity volume of the power grid. The second verification condition is: a sum of products of the actual outputs of various types of power plants, electricity prices of the power grid at respective time instants for each type of power plant, and a power generation duration ≤ a product of an average electricity price and the electricity volume of the power grid. When the electricity price calculation result meets the first verification condition and the second verification condition, the electricity price calculation result is determined as a successfully-verified result. When the electricity price calculation result fails to meet the first verification condition or the second verification condition, the electricity price calculation result is determined as an unsuccessfully-verified result.

The first verification condition is expressed by:

$$Q_{thermal\ power} + M_{wind\ power} + Q_{hydropower} + M_{photovotaic\ power} \geq N_{electricity\ volume}$$

The second verification condition is expressed by:

$\Sigma\,(H * Q_{thermal\ power} * N_{electricity\ price\ of\ the\ power\ grid\ at\ respective\ time\ instants}) + \Sigma M_{wind\ power} * N_{electricity\ price\ of\ the\ power\ grid\ at\ respective\ time\ instants} + \Sigma\,(H* Q_{hydropower} * N_{electricity\ price\ of\ the\ power\ grid\ at\ respective\ time\ instants}) + \Sigma M_{photovoltaic\ power} * N_{electricity\ price\ of\ the\ power\ grid\ at\ respective\ time\ instants} \leq P_{average\ electricity\ price\ of\ the\ power\ grid} * N_{electricity\ volume}$

In the above expression, $Q_{thermal\ power}$ represents the actual output of a thermal power plant, $M_{wind\ power}$ represents the actual output of a wind power plant, $Q_{hydropower}$ represents the actual output of a hydropower plant, and $M_{photovoltaic\ power}$ represents the actual output of a photovoltaic power plant. $N_{electricity\ volume}$ represents the electricity volume of the power grid. H represents the power generation duration. $N_{electricity\ price\ of\ the\ power\ grid\ at\ respective\ time\ instants}$ represents the electricity price of the power grid at each time instant. $P_{average\ electricity\ price\ of\ the\ power\ grid}$ represents the average electricity price of the power grid.

In terms of calculation, both thermal power and hydropower involve controllable physical power generation based on resources, which are deterministic. In contrast, photovoltaic and wind power cannot control wind and solar, resulting in strong uncertainty in their natural elements. Given different expressions here, they are distinguished from each other by Q and M, to represent the difference in data abstraction between the two types of production factors. The production factors of thermal and hydropower generation exhibit strong certainty and weak data abstraction, which is represented by Q. The production factors of wind and photovoltaic power generation exhibit strong uncertainty and strong data abstraction, which is represented by a high-order data operator function M.

When the electricity price calculation result is verified successfully, a function for calculating the electricity price that is feasible and adaptive to the power grid side is further selected from a dispatching strategy library. The dispatching strategy library is managed by a dedicated operator, which provides a variety of calculation functions. As mentioned above, since the constructed operators are constructed based on the power data of the power plant side, the electricity price calculation result actually reflects the cost considerations and profit requirements of the power plant side. Subsequently, at the power grid side, the electricity price calculation result is to be further evaluated. A specific method for evaluation is to utilize the dispatching strategy library. The function for calculating the electricity price which is technically feasible and adaptive to the power grid side is selected from the dispatching strategy library to apply to the power grid side, and then the function is loaded into the electricity price operator to update the electricity price operator in terms of the function. The electricity price calculation result for the power grid side is acquired by using the updated electricity price operator. In this way, the power grid side not only refers to the electricity price calculation result for the power plant side, but also updates the electricity price operator based on the cost and profit requirements for the power grid side. In this process, collaborative calculation of the electricity price between the power plant side and the power grid side is achieved.

If the function for calculating the electricity price that is technically feasible and adaptive to the power grid side does not exist in the dispatching strategy library, deep learning is to be performed by using a grid energy consumption average efficiency operator, an average electricity price operator and other important production factor operators to obtain a learning result, the learning result is returned as a sample, and the electricity price operator is learned by using an artificial intelligence algorithm.

In an embodiment, after the loading the function for calculating the electricity price into the electricity price operator to update the electricity price operator in terms of function, the digital power analysis method that coordinates multiple production factors further includes: collecting, by the power grid side, an applied trading electricity volume and an applied trading electricity price submitted by the power plant side to the power grid side. The trading between the power plant side and the power grid side is prepared to conduct. At this point, the calculation of the electricity price of the power plant side is completed by the power grid side. Next, whether to maintain stable operation of the power grid is determined based on the power grid side, to determine whether a virtual power plant function is to be activated. The virtual power plant function is activated to utilize the storage electricity capacity, allocate a clearing electricity volume for each power generation method according to the principle of cost optimization, and finally issue an instruction in advance based on artificial intelligence calculations. The power grid utilizes the storage electricity capacity of the virtual power plant. When a power shortage exists and the electricity price is high, the virtual power plant (battery) is controlled to discharge. When a surplus of electricity exists and the electricity price is low, the virtual power plant (battery) is charged.

In the technical solution of the present disclosure, the power grid side records clearing curves and dispatching curves under different loads or emergency situations as input data for deep learning, continuously verifies, and learns and imitates patterns and features of the power grid as the reference basis for issuing instructions next time.

When the virtual power plant function is determined to be not required, the power grid side sends a dispatching instruction about clearing electricity prices and clearing electricity volumes to all types of power plants based on the electricity price calculation result of the power grid side. When the virtual power plant function is determined to be activated, the virtual power plant function is activated to utilize the storage power capacity. By using an operator of the virtual power plant function, the step of obtaining the electricity price operator with an artificial intelligence algorithm is performed again.

In FIG. 2B, a process of the power plant side based on the electricity price operator is shown. First, various feature production factor data of the power plant side is collected to form a data vector. Then, the electricity price operator is trained in conjunction with the key control production factor data of the power grid side. The power plant side receives the clearing electricity price given by the power grid side. Verification is performed by using the financial verification model of the power plant side based on a cost of the power plant and the clearing electricity price. In an embodiment, the financial verification model of the power plant side includes: a third verification condition. The third verification condition is: a sum of products of the actual output of the power plant, the electricity prices of the power grid at respective time instants, and the power generation duration > a product of the cost and the actual output of the power plant. Taking the thermal power plant as an example, the third verification condition is expressed by:

$$\Sigma \ (H^* \ Q_{thermal \ power} \ ^*N_{electricity \ price \ of \ the \ power \ grid \ at \ respective \ time \ instants}) > \Sigma \ (H^*Q_{thermal \ power} \ ^*P_{cost \ of \ the \ power \ plant})$$

In the above expression of the third verification condition, $Q_{thermal \ power}$ represents the actual output of the thermal power plant. H represents the power generation duration. $N_{electricity}$ price of the power grid at respective time instants represents the electricity price of the power grid at each time instant. By applying artificial intelligence, the electricity prices of the power grid at respective time instants, $N_{electricity \ prices \ of \ the \ power \ grid \ at \ respective \ time}$ instants, are inputted as data. The cost of the power plant under different loads, $P_{cost \ of \ the \ power \ plant}$, calculated by this power plant system, is substituted in the above expression. The expression of this verification condition reflects that the cumulative calculation of the actual outputs of production factors for thermal power generation is used to settle an electricity cost of the power grid, which fluctuates with conditions of the power grid. However, cost production factors of a single power plant vary with a load rate, ultimately mapping to the cost production factors of the power plant.

For the same type of power plants, multiple distinct source points may exist. As shown in FIG. 2B, when a verification result indicates that the verification is passed, meaning that the third verification condition is met, whether different source points of the same type of power plant can be cleared is to be further determined based on the electricity volume and the electricity price. If all source points can be cleared, the clearing electricity volume is applied. Subsequently, a generating unit of the thermal power plant adjusts actions corresponding to the load. If a source point cannot be cleared, the production cost of the power plant is to be calculated or the clearing electricity price of the power plant is to be adjusted, and whether all source points can be cleared is determined again after verification.

The first verification condition, the second verification condition and the third verification condition described above are mathematical logic, and all express some physical constraints in the power system. The power system operates stably through these verification conditions.

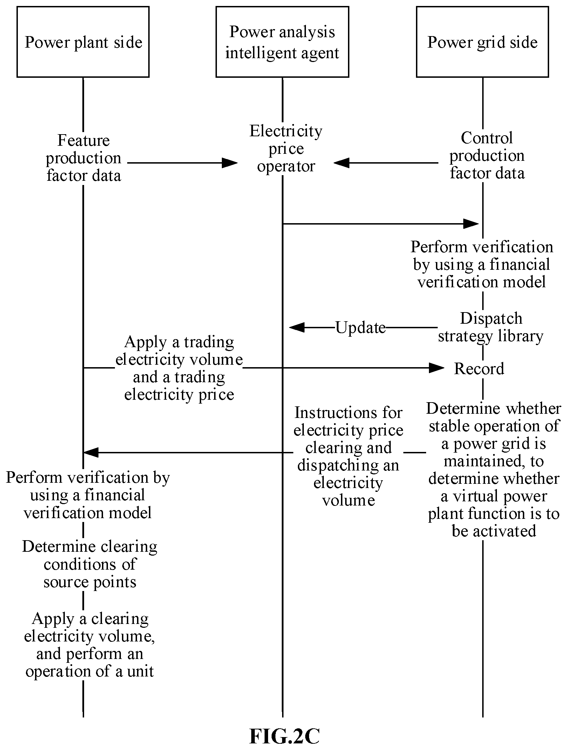

FIG. 2C is a diagram illustrating signaling among a power plant side, a power grid side, and an intelligent agent. The significance of peak-shaving in the power system in FIG. 2C is described below. Within an electricity price range specified by the power grid, a power plant suitable for peak-shaving electricity price is determined, to maintain a balanced revenue and expenditure of the power grid. The clearing electricity volume and the clearing electricity price of respective types of power plants can be estimated simultaneously within a budget range. Two main methods or algorithms are used for clearing. That is, technical clearing points of the electricity volume and a clearing curve can be provided by each power plant based on a basic electricity price. After a total electricity price of the power grid is allocated to respective types of power plants, minimum values of the electricity price and the electricity volume that meet the aforementioned inequalities are determined as clearing points of the electricity price and the electricity volume for the power plant.

When conducting digital power analysis, measured data is digitized firstly. Subsequently, (based on the power data of the power plant side to be analyzed and/or the power data of the power grid side to be analyzed), data cleaning is performed, and the data is organized into a data vector to facilitate subsequent parallel calculation. An output result of the calculation is generalized into an operator (function) based on a data model. The operator (function) is used to complete a specific functionality. An entire logic process of an intelligent agent is completed after the analysis is completed on the intelligent agent by using the operator. A power analysis result is generated by using the established mapping function, or an output of the operator is fed into a new intelligent agent for nesting iteration. The operator is the most important part of the intelligent agent, and is used to implement specific functions of the power system, such as a frequency operator, an active and reactive power operator, and an electricity price operator. The operator is implemented by a function. The intelligent agent refers to a process or logic that includes many operators and implements many functions.

After the production factor data is digitized, the parallel calculation is performed on the data. Based on the characteristics of GPU, the parallel calculation can be performed quickly on the data after data vectors of the same type are aligned. In addition, using a neural network algorithm may result in the loss of certain characteristics of symbolic artificial intelligence algorithms. A data tool of a graph neural network enables data features in an input layer and a transmission layer to be retained and computed employing a self-attention mechanism and a probabilistic method, which reflects data-driven features. To compensate for the loss of symbolic artificial intelligence features and to enhance the functional computation and control capabilities of intelligent agents, a concept of operators is introduced at an output stage. Multiple operators are integrated into the logic of an intelligent agent, to configure the intelligent agent with corresponding functionalities. The capabilities of digital power analysis are based on specific capabilities of these operators, and thus the intelligent agent functions as a fundamental unit for power data analysis in the power system.

Second embodiment

In the second embodiment, the electrical function requirement for power trading between the power grid side and the power plant side is power clearing, the functional operator is a clearing operator, and the clearing operator is configured for power clearing. In the second embodiment, a process of constructing an intelligent agent based on the clearing operator in the digital power system is introduced.

In a current process of grid clearing, electricity prices of different power plants are to be predicted, and a power allocation process is also involved. However, in actual application scenarios, the prediction of the electricity prices of power plants and the power allocation process are affected by multiple factors, reducing the accuracy of grid clearing. To address the above issues, power clearing or grid clearing is achieved by using the clearing operator in the present disclosure. Firstly, low-order data abstraction is performed based on power generation factor features of all the associated power plants, and multiple factors affecting grid clearing are quantified into respective first data vectors for the associated power plants, thereby reducing the data complexity of the power generation factor features. Then, long-term trading electricity prices are predicted based on the first data vectors and a preset long-term electricity price function library. The long-term trading electricity prices of the associated power plants are predicted based on actual power generation factor features of the associated power plants, and a long-term trading stack is established. Thus, the accuracy of the long-term trading electricity price is ensured to improve the accuracy of grid clearing. Further, a spot trading stack is established based on spot trading electricity prices of the associated power plants, and a first clearing function is determined based on the long-term trading stack and the spot trading stack. Accordingly, a power supply-demand balance state of a target power grid when the first clearing function is used by the target power grid in clearing is determined based on the first clearing function, and the first clearing function is adjusted in real-time based on an actual power supply-demand balance state of the target power grid to obtain a second clearing function. In this way, the clearing function of the target power grid can be adjusted dynamically based on a supply-demand state of the target power grid. The trading stacks are constructed in real time based on the long-term trading electricity prices and the spot trading electricity prices, to establish the specific clearing function. This enables grid clearing to effectively consider the influence of generation factor features on the power generation of the associated power plants, and differences in spot trading electricity prices among these power plants. Thus, an accurate clearing function is determined, thereby improving the accuracy of grid clearing.

Hereinafter, a method for grid clearing according to an embodiment of the present disclosure is described with reference to the drawings of specific embodiments.

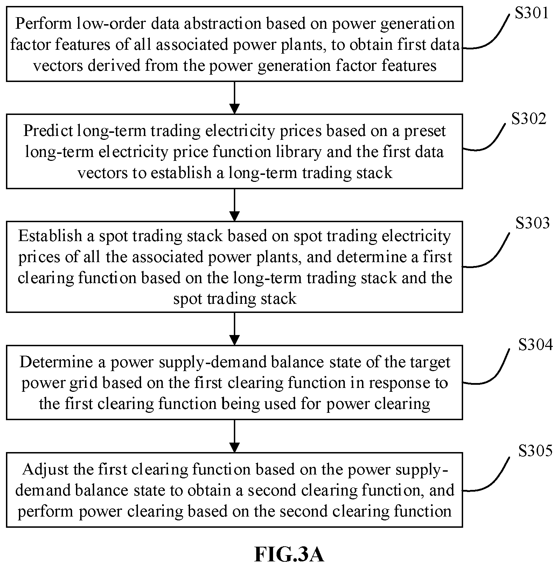

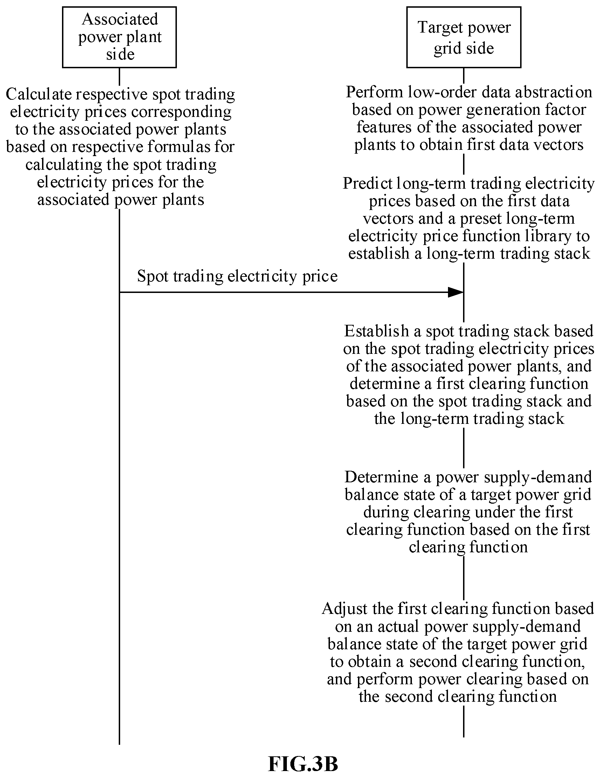

Referring to FIGS. 3A and 3B, FIG. 3A is a flowchart of a method for grid clearing according to an embodiment of the present disclosure, and FIG. 3B is a signaling interaction diagram of a method for grid clearing according to an embodiment of the present disclosure. In FIG. 3A, the method for grid clearing is implemented at a target power grid side. In FIG. 3B, the overall implementation of the solution is introduced through interactive signaling between an associated power plant side and the target power grid side.

As shown in FIG. 3A, the method for grid clearing includes: steps S301 to S305.

In step S301, low-order data abstraction is performed based on power generation factor features of all associated power plants, to obtain first data vectors derived from the power generation factor features.

The power generation factor features of the associated power plants refer to data of various natural factors and production factors that affect the power generation performance of the power plants, such as weather conditions (illuminance, temperature, wind speed, and the like), hydrological inflow, coal type, and coal consumption. In actual power generation scenarios, the power generation performance of the associated power plants is affected by multiple factors such as weather conditions, unit equipment, and coal type and consumption.

Thus, to determine the power generation performance of the associated power plants as accurately as possible, in the grid clearing method provided herein, low-order data abstraction is to be performed on the power generation factor features of each associated power plant firstly, to extract the power generation factor features that have a large impact on the power generation performance of the power plant from complex power generation factor features and integrate these power generation factor features into a first data vector. In addition, the vectorization of the power generation factor features into the first data vector provides a data foundation for subsequent adjustments to a preset long-term electricity price function library. By using the preset long-term electricity price function library along with the first data vector, long-term trading electricity prices of the associated power plants can be predicted accurately in subsequent processes, thereby improving the accuracy of grid clearing.

In an embodiment, taking a thermal power plant as an example of the associated power plants, after low-order data abstraction is performed, the first data vector of the thermal power plant includes data features related to its thermal performance, such as (a heat consumption rate of a generating unit, coal consumption, a power consumption rate of a plant). Accordingly, when the associated power plant is a photovoltaic power plant, the first data vector of the photovoltaic power plant includes photoelectric conversion efficiency features, such as (illuminance, power generation output, and photoelectric conversion efficiency).

Hereinafter, the process of performing low-order data abstraction on the power generation factor features in this step is described with reference to the drawings of specific embodiments.

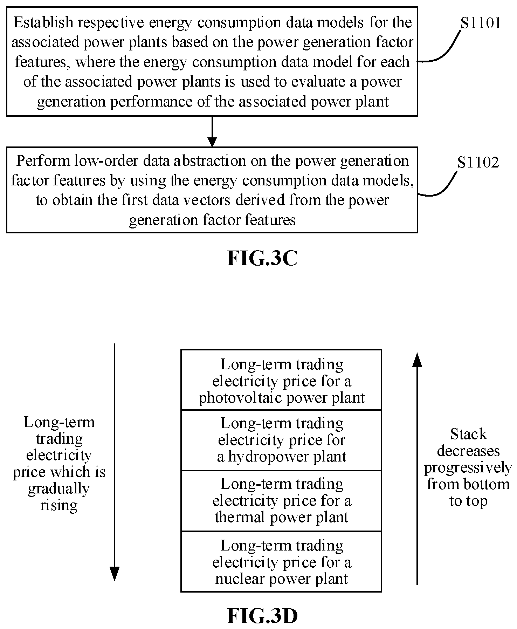

Reference is made to FIG. 3C, which is a flowchart of a method for grid clearing according to another embodiment of the present disclosure. The method includes: steps S1101 and S1102.

In step S1101, respective energy consumption data models are established for the associated power plants based on the power generation factor features, where the energy consumption data model for each of the associated power plants is used to evaluate a power generation performance of the associated power plant.

In an embodiment, in the process of performing low-level data abstraction based on the power generation factor features of each associated power plant, the collected power generation factor features are to be converted into first-level indices (natural indices), and the energy consumption data model for second-level and third-level indices related to the associated power plant is established based on the first-level indices. The second-level and third-level indices include parameter indices such as energy consumption and power generation efficiency. The energy consumption data model of each associated power plant is constructed to reflect the power generation performance of the associated power plant under different conditions. Based on this, the influence of various power generation factor features on the power generation performance of the associated power plants can be evaluated comprehensively.

In addition, by constructing the energy consumption data model based on the power generation factor features of each associated power plant, the mapping between data of the power generation factor features and specific functions in the preset long-term electricity price function library can be established, to construct the correlation between the data and the functions preliminarily.

In step S1102, low-order data abstraction is performed on the power generation factor features by using the energy consumption data models, to obtain the first data vectors derived from the power generation factor features.

After the energy consumption data model of each associated power plant is constructed, the low-order data abstraction is performed on the power generation factor features by using the energy consumption data model, to extract the power generation factor features capable of accurately characterizing the power generation performance of the associated power plant from the complex power generation factor features and integrate these power generation factor features into a first data vector corresponding to the associated power plant.

The generated first data vector accurately describes key features of the associated power plant in a power generation process. In addition, the first data vector is also be used to adjust the preset long-term electricity price function library, and is applied in prediction of a long-term electricity price, thereby achieving dynamic and fast prediction of the long-term electricity price to facilitate rapid adjustment of the clearing function of the target power grid.

In an embodiment, after the energy consumption data model of each associated power plant is constructed, a respective weight for each index is set in the energy consumption data model to highlight the importance of different power generation factors in power output, thereby effectively improving the accuracy of adjustments to the preset electricity price function library subsequently.

The specific process of performing low-order data abstraction on the power generation factor features in step S301 is described above, and the introduction of the method for grid clearing as shown in FIG. 3A is continued.

In step S302, long-term trading electricity prices are predicted based on a preset long-term electricity price function library and the first data vectors to establish a long-term trading stack.

Multiple operator functions for calculating long-term trading electricity prices of the associated power plants are stored in the preset long-term electricity price function library. By using preset electricity price operator functions for different power plants in the long-term electricity price function library and the first data vectors determined from the power generation factor features, index parameters characterized by the first data vector can be loaded into a corresponding operator function, to calculate the long-term trading electricity price of each associated power plant. Thus, the long-term trading electricity prices of the associated power plants can be predicted.

For example, taking the associated power plant being a hydropower plant as an example, the long-term electricity price operator function is expressed by:

PTOPE (long-term trading electricity price) = A + B + C +D + E = Am + Bm + Cm +Dm+Em=(TOPEm-PCm)*CCRm +(TOPEm-PCm)*FOMRm+(TOPEm-PCm)*HFCm+NEO      m*VOMRm+(TOPEm-PCm)*CCRTm=(TOPEm-PCm)* (CCRm+FOMRm+HFCm+CCRTm) +NEOm*VOMRm

Where, A represents a capital cost recovery factor, B represents a fixed operation and maintenance cost factor, C represents a hydropower facility factor, D represents a variable operation and maintenance cost factor, E represents a special facility factor, and Am, Bm, Cm, Dm, Em represents factors for an annual billing period (in rupees).

TOPEm represents a take-or-pay electricity quantity (in kWh) during a billing period, which is derived from annual TOPE. TOPE is to be confirmed by the target power grid and the associated power plant.

CCRm represents a capital cost recovery charge rate (in Rp/kWh) applicable to the billing period.

PCm = payment credit (in kWh) for the billing period. The payment credit PCm exists only at the end of each billing period and only when the net output of the billing period is less than TOPEm.

Here, PCm=TOPEm-NEOm-DCm-WLCm.

Where, NEOm represents the net output of the billing period, and NEOm of the billing period shall not exceed TOPEm.

DCm represents the delivery credit for the billing period, which shall be equal to the electricity volume (in kWh) produced by a non-power station according to dispatching instructions from the target power grid plus the deemed delivered or generated electricity volume. If a power supply system of the target grid is unable to accommodate all electricity produced by the associated power plant, the target power grid shall issue an appropriate dispatching instruction to the power plant.

FOMRm = a recovery charge rate (in Rp/kWh) of the fixed operation and maintenance cost (represented in rupees) applicable for the billing period. HFCm represents the subsidy (represented in Rp/kWh) for: (i) a portion of the operation and maintenance cost for hydropower facilities, (ii) the contribution for basin river coordination, and (iii) water charges.

VOMRm represents a recovery charge rate (in Rp/kWh) of the variable operation and maintenance cost for the billing period. That is, VOMRm=VOMRFm+VOMRLm.

Where, VOMRFm represents a recovery charge rate (in Rp/kWh) of the variable operation and maintenance cost (expressed in non-rupees) applicable to the billing period, and VOMRLm represents a recovery charge rate (in Rp/kWh) of the variable operation and maintenance cost (expressed in rupees) applicable to the billing period.

CCRTm represents the capital cost recovery charge rate (in Rp/kWh) for special facilities applicable to the billing period.

It can be seen from the above equations that by importing the first data vector including the power generation factor features of the hydropower plant into the long-term electricity price operator function, the long-term trading electricity price of the hydropower plant over a certain period of time in the future can be predicted. For each of the associated power plants, the long-term trading electricity price operator function corresponding to the associated power plant is set in advance in the long-term electricity price function library, and the first data vector of the power plant is imported into the long-term trading electricity price operator function, to predict the long-term trading electricity price of the power plant.

It can be understood that in an actual scenario of predicting the long-term trading electricity prices, the power generation factor features of the associated power plants vary across different regions and countries, and their corresponding formulas for calculating electricity prices also differ, which is not repeated in this embodiment.

Further, by sorting the long-term trading electricity prices of the power plants, the stack priority in the long-term trading stack is determined to establish the long-term trading stack. As an example, the long-term trading stack can be referred to a schematic diagram of a long-term trading stack shown in FIG. 3D. As shown in FIG. 3D, the long-term trading stack is sorted based on the predicted long-term trading electricity prices of the associated power plants.

It can be understood that in an actual application scenario, the long-term trading power volume between the power grid and its associated power plants is determined by a long-term trading contract signed in advance between them. During the process of constructing the long-term trading stack, the long-term trading electricity volume specified in the long-term trading contract can be used as a weight for the stack. A greater trading electricity volume indicates a lower long-term trading electricity price, leading to a higher stack priority. In a case that the long-term trading electricity prices are the same, to ensure the stability of grid clearing, the long-term trading electricity volume should be given greater weight than the long-term trading electricity prices, with the trading volume serving as the key factor in constructing the long-term trading stack, which is not repeated in this embodiment.

In this way, by using the respective first data vectors corresponding to the associated power plants and the preset long-term electricity price function library, respective specific long-term trading prices of the associated power plants under the influence of the current power generation factor features can be predicted, to establish the long-term trading stack based on the long-term trading prices of the associated power plants.

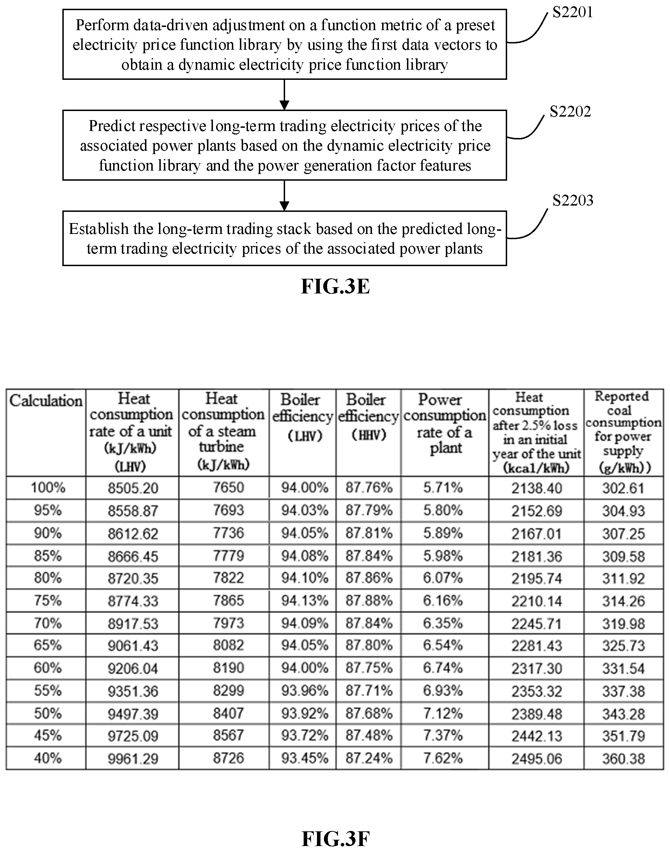

The process of establishing a long-term trading stack in step S302 is described below with reference to the drawings of specific embodiments. Reference is made to FIG. 3E, which is a flowchart of a method for grid clearing according to another embodiment of the present disclosure. The method includes: steps S2201 to S2203.

In step S2201, data-driven adjustment is performed on a function metric of a preset long-term electricity price function library by using the first data vectors to obtain a dynamic electricity price function library.

As described above, the operator functions for calculating long-term trading electricity prices of the associated power plants are stored in the preset long-term electricity price function library in advance. In an actual application scenario, the long-term trading electricity price of an associated power plant is determined by its power generation cost, which varies in different regions, different time periods, and even different seasons. Therefore, to accurately predict the long-term trading electricity price of the associated power plant, data-driven adjustment is to be performed on function metrics within the preset electricity price function library by using the first data vector generated from the power generation factor features. The function metric in each operator function is adjusted to improve the accuracy of the prediction of the long-term trading electricity price.

Here, a thermal power plant is taken as an example of the associated power plant. Taking the first data vector (a heat consumption rate of a generating unit, coal consumption, a power consumption rate of a plant, electricity price) of the thermal power plant as an example, the first data vector is: (Pm, SHRW, GCVs, AUX, CERm), and the corresponding long-term trading electricity price operator function is expressed by:

$$CERm=Pm*SHRW/GCVs(1-AUX)=0.031053242 \quad USD/KWh \quad (1)$$

Where, Pm represents a coal price in USD, SHRW represents a specific heat index of a generating unit in Kcal/KWh, GCVs represents a gross calorific value of coal in Kcal/Kg, AUX represents the plant power consumption rate in %, and CERm represents an electricity price in USD/KWh. In equation* (1), it is set that SHRW = 2138.4 Kcal/KWh.

The electricity price operator function is adjusted by using the first data vector, and the adjusted electricity price operator function is expressed by:

$$CERm=Pm*SHRW（1+AGE)/GCVs(1-AUX)=0.031947846 \quad USD/KWh \quad (2)$$

Where, AGE represents a loss of a generating unit in %, while the other variables remain the same as above. When the AGE is set to 5.4%, SHRW = 2210.14 Kcal/KWh.

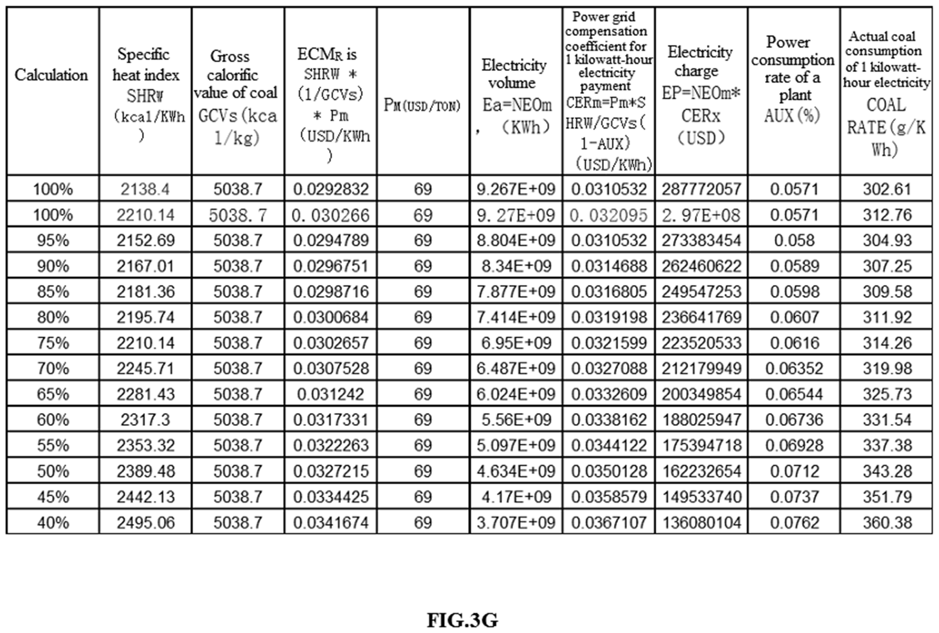

Reference can be made to FIGS. 3F and 3G. FIG. 3F shows parameters representing thermal performance of a generating unit in a full-load condition according to an embodiment of the present disclosure. FIG. 3G is a schematic diagram of comprehensive parameters in consideration of coal price and long-term trading electricity price based on the data shown in FIG. 3F. It can be seen that after the performance degradation of the generating unit alters the specific heat index, the loss is to be taken into account in the equation for adjusting the electricity price of the generating unit. Thus, the equation (2) replaces the equation (1), and the electricity price changes from 0.031USD/KWh to 0.032USD/KWh.

It can be seen that by using the first data vectors determined in real time for the associated power plants, the long-term electricity price operator functions for the associated power plants in the preset long-term electricity price function library can be adaptively adjusted, thereby ensuring the accuracy of the prediction of the long-term trading electricity prices.

In step S2202, respective long-term trading electricity prices of the associated power plants are predicted based on the dynamic electricity price function library and the power generation factor features.

Accordingly, after the preset long-term electricity price function library is dynamically adjusted, the long-term trading electricity prices of the associated power plants can be calculated by using the power generation factor features as input data in the adjusted dynamic electricity price function library.

In step S2203, the long-term trading stack is established based on the predicted long-term trading electricity prices of the associated power plants.

It can be seen that by using the first data vectors generated from actual power generation factor features of the associated power plants, the function operators in the preset electricity price function library can be effectively adjusted. By using the adjusted dynamic electricity price function library, an actual long-term trading electricity price of each of the associated power plants can be predicted to ensure the accuracy of the prediction of the long-term trading electricity prices, to obtain the long-term trading stack.

In step S303, a spot trading stack is established based on spot trading electricity prices of the associated power plants, and a first clearing function is determined based on the long-term trading stack and the spot trading stack.

In a process of establishing the long-term trading stack, the spot trading electricity prices sent by the associated power plants are received by the target power grid at the same time. The target power grid establishes a spot trading stack based on the spot trading electricity prices of the associated power plants. In this way, the first clearing function of the target power grid can be determined through the spot trading stack and the long-term trading stack.

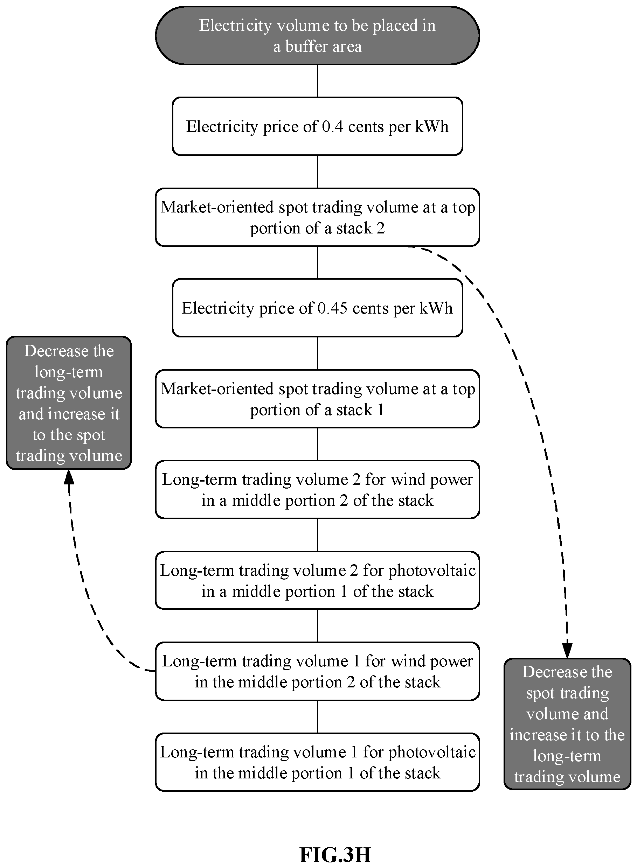

For the spot trading stack and the long-term trading stack, reference can be made to FIG. 3H. FIG. 3H is a structural schematic diagram of a stack including a spot trading stack and a long-term trading stack according to an embodiment of the present disclosure. As shown in FIG. 3H, the stack is divided into three levels based on the electricity price, and is divided into a top level, a middle level and a bottom level based on progressively increasing electricity price. The levels involve different energy types (such as photovoltaic power and wind power) and different market types (such as spot trading and long-term trading). A side portion of the stack shows an adjustment mechanism for the stack, which is to reduce or increase the trading volume to maintain the balance between spot trading and long-term trading, thereby optimizing the overall distribution of electricity prices and volumes.

In actual application scenarios, the spot trading electricity prices of the associated power plants include multiple types, such as quotations, block quotations. The spot trading electricity price is calculated using an equation for calculating the spot trading electricity price set in the power plant. Taking the hourly quotation calculation for a hydropower plant as an example, the equation for calculating its hourly quotation is:

For the hydropower plant:

$$Q_{m2} = PR_{average} \times \sum_{i=1}^{D}(G_{iRated} \times H_{im} - F_{iJm} \times H_{iZm} - P_{im} \quad (1.1)$$

$$Q_{m3} = PR_{actual} \times P_m \quad (1.2)$$

Where, m represents the m-th hydropower station in a cascade hydropower station system, i represents the i-th generating unit in the m-th hydropower station, and m and i are both integers not less than 1. $Q_{m2}$ in equation (1.1) represents an actual revenue corresponding to the potential electric energy of the hydropower station at the current moment. $Q_{m3}$ in a target equation (1.2) represents an actual power generation revenue corresponding to the actual electric energy generated by the hydropower station at the current time instant. $G_{iRated}$ represents a rated power of the i-th generating unit. $H_{im}$ represents a water level duration of the i-th generating unit. $F_{iJm}$ represents a derated power of the i-th generating unit. $H_{iZm}$ represents an interruption duration of the i-th generating unit during a water level period. $P_{im}$ represents an electricity volume generated by the i-th generating unit during its water level period. $PR_{actual}$ represents an actual trading electricity price for all generating units. $P_m$ represents the electricity volume generated by all generating units during the water level period.

As described above, the operator functions for calculating spot trading electricity prices of the associated power plants are stored in the preset long-term electricity price function library in advance. In an actual application scenario, the spot trading electricity price of an associated power plant is determined by its power generation cost, which varies in different regions, different time periods (generating unit performance degrades with a service life), and even different seasons. Therefore, to accurately predict the long-term trading electricity price of the associated power plant, data-driven adjustment is to be performed on function metrics within the preset electricity price function library by using the first data vector generated from the power generation factor features. The function metric in each operator function is adjusted to improve the accuracy of the prediction of the long-term trading electricity price.

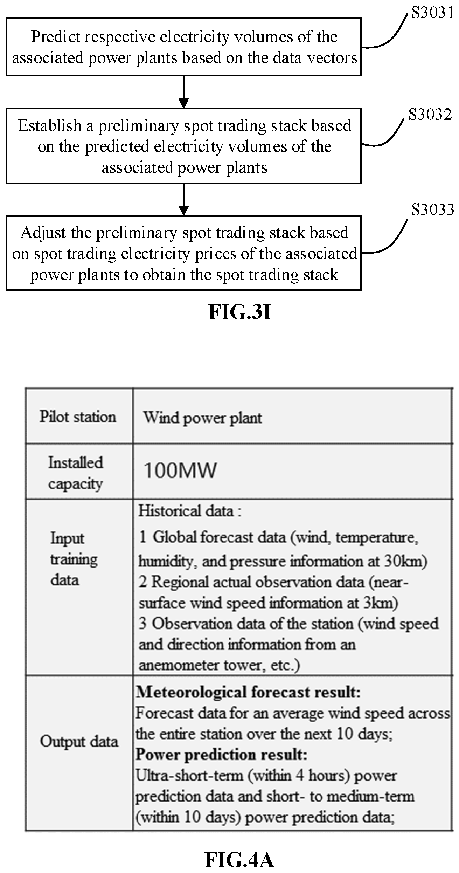

In addition, in a process of establishing the spot trading stack, the spot trading stack is constructed from two dimensions of the spot trading electricity price and power generation of the associated power plant. Next, the process of establishing the spot trading stack is described with reference to the drawings of specific embodiments. Reference is made to FIG. 3I, which is a flowchart of a method for establishing a spot trading stack according to an embodiment of the present disclosure. The method includes: steps S3031 to S3033.

In step S3031, respective electricity volumes of the associated power plants are predicted based on the first data vectors of the associated power plants.

As described above, multiple power generation factor features that affect the power generation efficiency of an associated power plant are included in the first data vector corresponding to the associated power plant. The power generation of the associated power plant in a certain period of time can be predicted based on the first data vector.

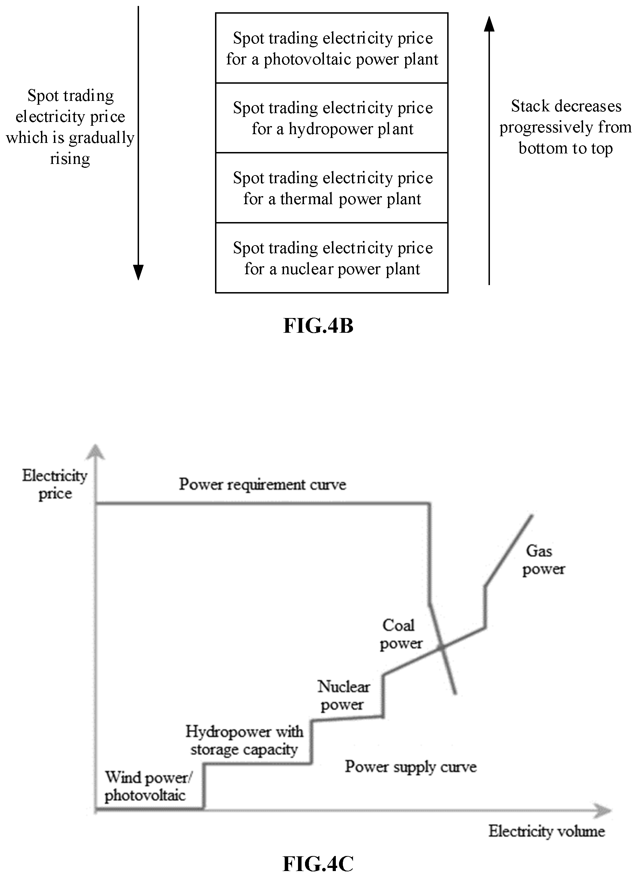

In an embodiment, in a process of predicting the electricity volume based on the first data vector, the power generation of the associated power plant within a certain period of time is predicted by using a neural network model. Here, taking a wind power plant as an example, reference is made to FIG. 4A for details. FIG. 4A is a schematic diagram of predicting power generation of a wind power plant according to an embodiment of the present disclosure.

As shown in FIG. 4A, the global forecast data, regional live data and station observation data of the wind power plant during historical time periods are used as training data for the model, to predict the power generation of the wind power plant by using the trained neural network model. Accordingly, the model outputs a meteorological forecast result and a corresponding power prediction result for the wind power plant. Based on meteorological data and power prediction data over a certain time period, the power generation of the wind power plant can be effectively predicted based on primary features that affect its power generation performance.

In addition, a time series prediction model (such as ARIMA) or a machine learning method (such as random forest, XGBoost) can be employed for predicting the power generation of the associated power plant. For the first data vector with a complex data structure in the present disclosure, a deep learning model such as LSTM (Long Short-Term Memory) can be employed to capture temporal relationships among sequential data.

LSTM (Long Short-Term Memory Network) is a special type of recurrent neural network (RNN) architecture, which is designed to address issues of vanishing and exploding gradients that conventional RNNs encounter when processing data with a long sequence. By introducing a memory unit and a gating mechanism, LSTM is capable of effectively capturing long-term dependencies among the sequential data.

In step S3032, a preliminary spot trading stack is established based on the predicted electricity volumes of the associated power plants.

After the predicted electricity volumes for the associated power plants are obtained, the invoke priority of each associated power plant during power dispatching is determined based on the magnitude of the predicted electricity volume of the associated power plant, to establish the preliminary spot trading stack. For example, taking it as an example that the associated power plants include a wind power plant, a photovoltaic power plant, a hydropower plant, a thermal power plant, and a nuclear power plant, the predicted electricity volumes for the above power plants are set as (100, 50, 30, 60, 20), based on the predicted electricity volumes for the associated power plants, the preliminary spot trading stack is established based on magnitudes of the predicted electricity volumes, which is (wind power, thermal power, photovoltaic power, hydropower, nuclear power).

In step S3033, the preliminary spot trading stack is adjusted based on the spot trading electricity prices of the associated power plants to obtain the spot trading stack.

The preliminary spot trading stack is established based on the predicted electricity volumes of the associated power plants. Based on this, the preliminary spot trading stack is further adjusted based on the spot trading electricity prices calculated by using respective formulas for calculating a spot electricity price within the associated power plants. Thus, the two-dimensional preliminary spot trading stack is adjusted to a three-dimensional spot trading stack including the spot trading electricity prices. In this way, when an associated power plant experiences insufficient or excessive power generation, a method of removing upper stack of the stack to reconstruct the stack is performed to dynamically adjust the spot trading stack based on the power generation and the actual spot trading volume of the associated power plant, thereby improving the accuracy of grid clearing.

As an example, the spot trading track can be referred to a schematic diagram of a spot trading track as shown in FIG. 11.

It should be noted that in a scenario of establishing a spot trading stack, a weight assigned to the predicted electricity volume is greater than the weight assigned to the spot trading electricity price in the establishing of the stack. That is, when the spot trading electricity prices of two associated power plants are the same, the associated power plant with a larger predicted electricity volume is placed at a relatively high priority position in the spot trading stack to ensure the stability of power supply for the target power grid.

In step S104, a power supply-demand balance state of the target power grid is determined based on the first clearing function in response to the first clearing function being used for power clearing.

The target power grid is controlled to perform power clearing based on the determined first clearing function, and the power supply-demand balance state of the target power grid is determined based on the total power generation and the total load of the target power grid when clearing is performed based on the first clearing function. When the total power generation of the target power grid is greater than its total load, the target power grid is in an over-generation state, meaning that the current power generation exceeds an actual power demand, resulting in a surplus of power. When the total power generation of the target power grid is less than its total load, the target power grid is in an under-generation state, meaning that the current power generation cannot meet the actual power demand. In this case, power supply is to be replenished in time.

Reference can be made to FIG. 12, which is a schematic diagram of a grid clearing function. In FIG. 4C, an abscissa axis represents the variation of power supply, and a coordinate axis represents the variation of electricity price. The power dispatching priority shown in FIG. 4C is: wind power/photovoltaic power> hydropower with storage capacity > nuclear power > coal power > gas power.

When the power supply curve is positioned above the power demand curve, it indicates that the electricity volume supplied by the power grid exceeds the demand, which may lead to a decrease in the electricity price. When the power supply curve falls below the power demand curve, it indicates that the electricity demand surpasses the power supply, which may lead to an increase in the electricity price.

By determining the power supply-demand balance state of the target power grid under the first clearing function, an under-generation state or an over-generation state of the target power grid under the current first clearing function is determined, to control the long-term trading stack and the spot trading stack based on the actual power supply-demand balance state of the target power grid subsequently, thereby adjusting clearing for the power grid without reducing the accuracy of grid clearing.

In step S305, the first clearing function is adjusted based on the power supply-demand balance state to obtain a second clearing function, and power clearing is performed based on the second clearing function.

Finally, the first clearing function is adjusted based on the over-generation state or under-generation state of the target power grid under the first clearing function. In this way, the clearing function of the target power grid can be adjusted according to an actual power generation situation of the target power grid, thereby improving the accuracy of grid clearing.

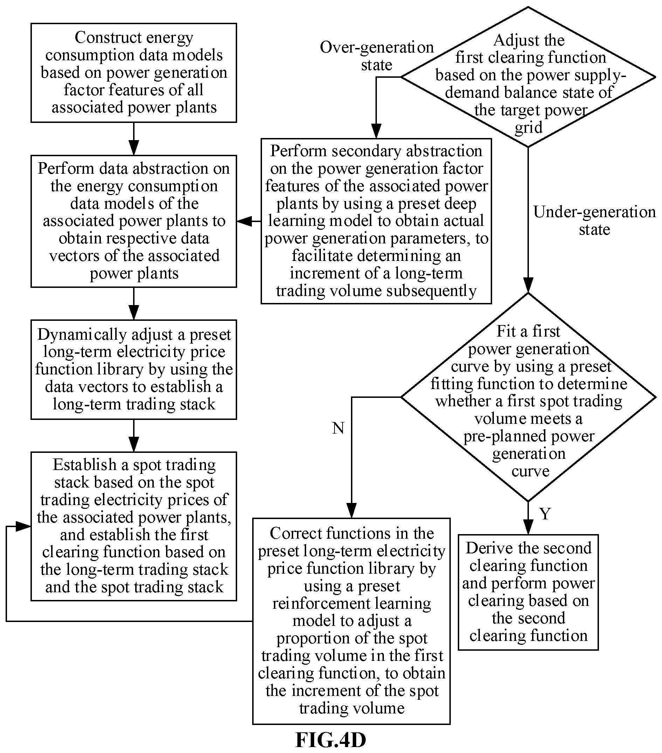

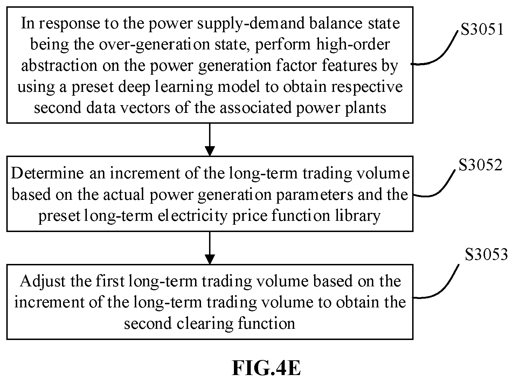

Hereinafter, a method for adjusting the first clearing function in a varying power supply-demand balance state is described with reference to the drawings of specific embodiments. Referring to FIGS. 4D and 4E, FIG. 4D is a flowchart of a method for grid clearing according to another embodiment of the present disclosure, and FIG. 4E is a flowchart of a method for adjusting a first clearing function when a target power grid operates in an over-generation state according to an embodiment of the present disclosure. The method in FIG. 4E includes: steps S3051 to S3053.

In step S3051, in response to the power supply-demand balance state being the over-generation state, high-order abstraction is performed on the power generation factor features by using a preset deep learning model to obtain respective second data vectors of the associated power plants.

In an actual application scenario, the long-term trading electricity price is often determined by a long-term contract between the target power grid and the associated power plants, while the spot trading electricity price is often affected by an immediate supply-demand condition. Therefore, the long-term trading electricity price is often lower than the spot trading electricity price. When the power supply-demand balance state of the target power grid is an over-generation state, the total power generation of the target power grid is greater than the total load demand of the target power grid.

To improve the accuracy of grid clearing while reducing the cost of power dispatching as much as possible, when the target power grid is in the over-generation state where the total power generation of the target power grid is greater than the total load, the proportion of the long-term trading volume in the clearing function can be increased by increasing the first long-term trading volume in the first clearing function, thereby effectively reducing the cost of power clearing and improving the accuracy of power clearing.

Thus, to ensure the accuracy of adjustments to the long-term trading volume, high-order data abstraction is to be performed on the power generation factor features of the associated power plants by using a preset deep learning model to obtain the second data vector that affects the power generation efficiency of each associated power plant.

The low-order data abstraction is performed on the power generation factor features by using an energy consumption data model. The low-order data abstraction only involves the screening and combination of the power generation factor features, while the high-order data abstraction involves the combination calculation among the power generation factor features to calculate the data vector that plays a core role in influencing the power generation performance of the associated power plant.

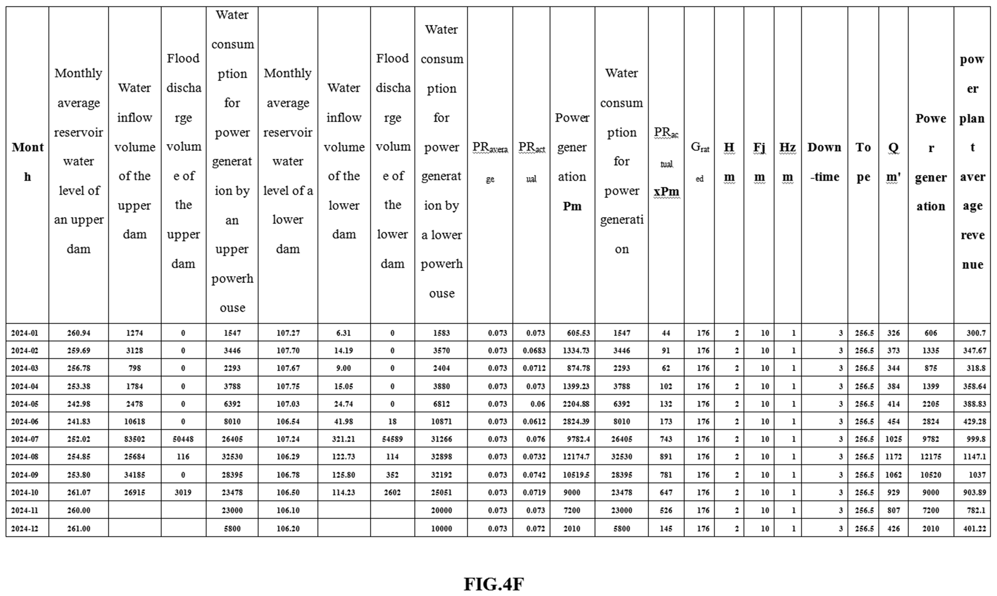

Reference can be made to FIG. 4F, which is a schematic diagram of calculating a second data vector by using a deep learning model. In FIG. 4F, a hydropower plant is taken as an example of the associated power plant. In FIG. 4F, parameters such as power generation and water consumption for power generation are the power generation factor features of the hydropower plant, and Top, Qm', and an average avenue of a power plant of the hydropower plant are parameters calculated by using the power generation and the water consumption for power generation. The process of calculating relevant parameters by using the power generation factor features is the process of performing high-order abstraction on the power generation factor features based on the preset reinforcement learning model to obtain the second data vector. In the preset reinforcement learning model provided herein, various types of parameter calculation formulas are predefined. When performing high-order data abstraction on the power generation factor features by using the preset reinforcement learning model, parameter calculations is performed by using the predefined formulas and the power generation factor features, and results of the calculations are integrated to obtain the second data vector.

Compared with a linear model, a deep learning model possesses stronger nonlinear modeling capabilities, which can simulate complex nonlinear relationships among various power generation factor features in the associated power plant. Therefore, by performing high-order data abstraction on the power generation factor features using the preset deep learning model, complex features are to be further extracted from raw data, to obtain the second data vector that accurately characterizes the power generation performance of the associated power plant.

In step S3052, an increment of the long-term trading volume is determined based on the second data vectors and the preset long-term electricity price function library.

In step S3053, the first long-term trading volume is adjusted based on the increment of the long-term trading volume to obtain the second clearing function.

Further, after the second data vectors of the associated power plants are determined, function metrics in the preset long-term electricity price function library are adjusted based on the second data vectors. The specific values of metrics in the long-term electricity price function can be changed to determine a new long-term trading volume of the target power grid. By comparing the new long-term trading volume with the long-term trading volume in the first clearing function, the increment of the long-term trading volume can be determined, to obtain the corresponding second clearing function.

As shown in FIG. 4D, when the target power grid is in an over-generation state, high-order data abstraction is performed on the power generation factor features of the associated power plants by using a preset deep learning model to determine the increment of the long-term trading volume. Thus, the long-term trading stack is adjusted subsequently, and the first clearing function is adjusted to obtain the second clearing function.

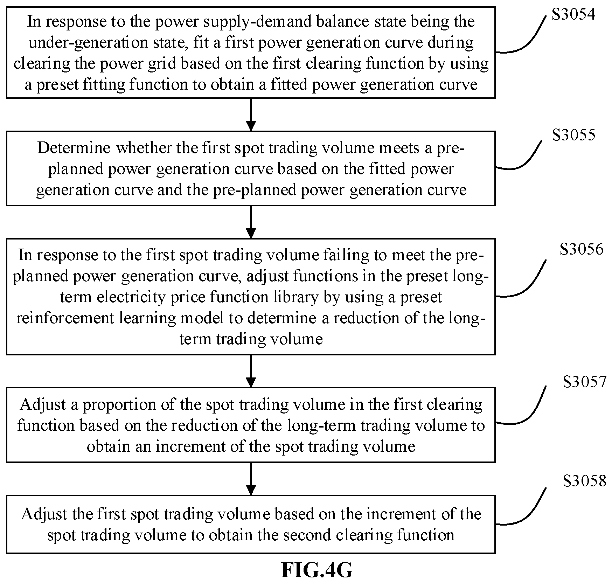

Hereinafter, a process of adjusting the first clearing function when the target power grid is in an under-generation state is described with reference to the drawings of specific embodiments. Reference is made to FIG. 4G, which is a flowchart of a method for adjusting a first clearing function when a target power grid operates in an under-generation state according to an embodiment of the present disclosure. The method includes: steps S3054 to S3058.

In step S3054, in response to the power supply-demand balance state being the under-generation state, fitting on a first power generation curve during clearing based on the first clearing function by the power grid is performed by using a preset fitting function, to obtain a fitted power generation curve.

When the target power grid is in an under-generated state, it indicates that the total power generation of the target power grid is lower than its total load. It can be understood that in a duel trading stack composed of the long-term trading stack and the spot trading stack, the long-term trading power in the long-term trading stack is preferentially dispatched since the long-term trading electricity price in the long-term trading stack is often slightly lower than the spot trading electricity price in the spot trading stack. In this case, if the target power grid is still in an under-generation state, it indicates that the target power grid is unable to meet the load demand even if the long-term trading power in the long-term trading stack is fully utilized.

Thus, in this case, the spot trading volume is to be increased to meet the demand of power load. To ensure the accuracy of the increment of the spot trading volume, the first power generation curve when the target power grid conducts clearing based on the first clearing function is fitted based on the preset fitting function before calculating the increment of the spot trading volume, to convert complex and discrete power generation data into a continuous function model, thereby simplifying the data storage and analysis process and improving the efficiency of data processing. In addition, through the fitted power generation curve obtained from fitting, the trend and pattern in the power generation data can be clearly identified, to facilitate the subsequent optimization of the clearing function.

In an embodiment, the preset fitting function is expressed by:

$$PR*S=P;$$

$$PR=A+BH_T-CH_T^2;$$

Where, PR represents a power generation conversion efficiency of a power plant, $H_T$ represents an adjustment factor of a power generation efficiency, S represents a first-level index affecting the power generation efficiency of an associated power plant, P represents a fitting coefficient, and A, B and C represent feature constants calculated by using the deep learning model, which are used to characterize performance features corresponding to different power plants.

In the above equations, a power of $H_T$ represents an influence degree of this feature on the power generation performance of the associated power plant, and a positive or negative in front of $H_T$ in the equation represents a positive or negative influence of the feature on the power generation efficiency of the power plant. In this way, by using the above equations, the accuracy in fitting of the first power generation curve can be effectively improved, thereby ensuring the accuracy of grid clearing.

It can be understood that the data type corresponding to S varies for different associated power plants. For example, when PR represents the power generation conversion efficiency of a photovoltaic power plant, S is related to the illuminance of the photovoltaic power plant. Similarly, when PR represents the power generation conversion efficiency of a thermal power plant, S is related to the coal quality of the thermal power plant.

By calculating the fitting coefficients P for all associated power plants corresponding to the target power grid, the first power generation curve of the target power grid can be effectively fitted, and thus the accuracy of the first power generation curve can be improved.

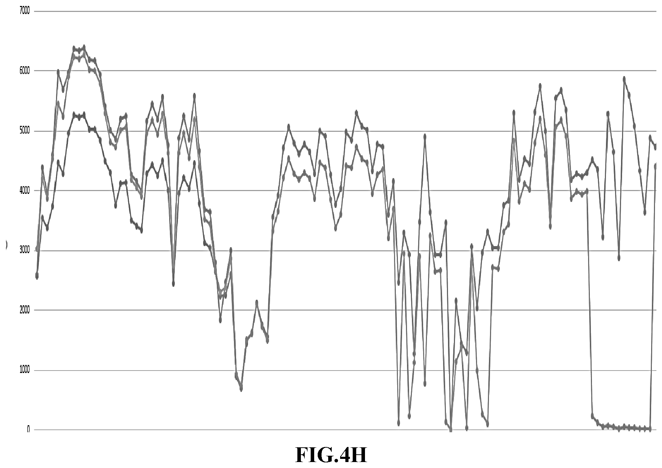

Reference can be made to FIG. 4H for details. FIG. 4H is a schematic diagram of a fitted power generation curve of a target power grid according to an embodiment of the present disclosure. As shown in FIG. 4H, the top-most power generation curve in FIG. 4H represents a preset power generation curve, and the curve closely aligned with the preset power generation curve is the fitted power generation curve obtained from fitting when the target power grid conducts clearing based on the first clearing function. It can thus be seen that after the first power generation curve is fitted by using a preset fitting function, the fitted power generation curve is closer to the preset power generation curve. By comparing the preset power generation curve and the fitted power generation curve, the spot trading volume to be supplemented can be accurately determined to ensure the stability of grid clearing.

In step S3055, whether the first spot trading volume meets a pre-planned power generation curve is determined based on the fitted power generation curve and the pre-planned power generation curve.

The fitted power generation curve is compared with the pre-planned power generation curve, to determine whether the first spot trading volume in the first clearing function meets the pre-planned power generation curve. The pre-planned power generation curve is used to represent an expected power generation curve of the target power grid for the current power load. By comparing the pre-planned power generation curve with the expected power generation curve, whether the first spot trading volume of the target power grid in the first clearing function is sufficient is determined.

Referring to FIG. 4H, as shown in FIG. 4H, the fitted power generation curve in FIG. 4H is lower than the preset power generation curve. That is, the power generation of the fitted power generation curve is lower than the power generation of the preset power generation curve. In this case, a certain gap exists between the fitted power generation curve and the preset power generation curve, and it is determined that the power generation curve of the target power grid under the first clearing function cannot meet a requirement of the preset power generation curve. Thus, it can be determined that the first spot trading volume in the first clearing function cannot meet the pre-planned power generation curve, and additional spot trading volume is to be supplemented.

In step S3056, in response to the first spot trading volume failing to meet the pre-planned power generation curve, functions in the preset long-term electricity price function library are adjusted by using a preset reinforcement learning model to determine a reduction of the long-term trading volume.

When the first spot trading volume does not meet the pre-planned power generation curve, it indicates that the first spot trading volume of the target power grid cannot meet the current power load. Thus, to meet the current power load by increasing the spot trading volume, the preset long-term electricity price function is to be corrected based on the preset reinforcement learning model to determine the reduction of the long-term trading volume. In this way, the increment of the spot trading volume can be determined by reducing the proportion of the long-term trading volume, to ensure the smooth clearing of the power grid.

The preset reinforcement learning model may be a multi-intelligent agent reinforcement learning model (MARL). MARL is a method for addressing reinforcement learning issues in a multi-intelligent agent environment. Each participant (such as different associated power plants) can be regarded as an intelligent agent, and these intelligent agents adjust their bidding strategies based on real-time market data and the behaviors of other intelligent agents. MARL enables these intelligent agents to learn and adapt under complex, dynamically varying market conditions, thereby improving the accuracy of grid clearing.

In an embodiment, in the process of correcting functions in the preset long-term electricity price function library, the first long-term trading electricity price function that has the greatest impact on the overall long-term trading electricity price can be selected from the preset long-term electricity price function library by using a screening mechanism of the reinforcement learning model.

Subsequently, a function metric in the first long-term trading electricity price function is adjusted. The function metric therein is increased to increase the long-term trading electricity price. Thus, the long-term trading volume is reduced, and the reduction of the long-term trading volume is determined.

Taking a thermal power plant as an example, it can be seen from the above that the long-term trading electricity price calculation function of the thermal power plant is:

By adjusting the function metric in the long-term trading electricity price calculation function to increase the long-term trading electricity price, the long-term trading volume can be reduced, and the reduction of the long-term trading volume can be determined.

In step S3057, a proportion of the spot trading volume in the first clearing function is adjusted based on the reduction of the long-term trading volume to determine an increment of the spot trading volume.

In step S3058, the first spot trading volume is adjusted based on the increment of the spot trading volume to obtain the second clearing function.

After the reduction of the long-term trading volume is determined, the proportion of the spot trading volume in the first clearing function is increased to determine the spot trading volume. In this way, the first spot trading volume in the first clearing function can be adjusted by the increment of the spot trading volume to obtain the second clearing function.

A method for grid clearing is provided according to an embodiment of the present disclosure. In the method, firstly, low-order data abstraction is performed based on power generation factor features of associated power plants, and multiple factors affecting grid clearing are quantified into respective first data vectors for the associated power plants, thereby reducing the data complexity of the power generation factor features. Then, long-term trading electricity prices are predicted based on the first data vectors and a preset long-term electricity price function library. The long-term trading electricity prices of the associated power plants are predicted based on actual power generation factor features of the associated power plants, and a long-term trading stack is established. Thus, the accuracy of the long-term trading electricity price is ensured to improve the accuracy of grid clearing. Further, a spot trading stack is established based on spot trading electricity prices of the associated power plants, and a first clearing function is determined based on the long-term trading stack and the spot trading stack. Accordingly, a power supply-demand balance state of a target power grid when using the first clearing function for power clearing is determined based on the first clearing function, and the first clearing function is adjusted in real time based on an actual power supply-demand balance state of the target power grid to obtain a second clearing function. In this way, the clearing function of the target power grid can be adjusted dynamically based on a supply-demand state of the target power grid. The trading stacks are constructed in real time based on the long-term trading electricity prices and the spot trading electricity prices, to establish the specific clearing function. This enables grid clearing to effectively consider the influence of generation factor features on the power generation of the associated power plants, and differences in spot trading electricity prices among these power plants. Thus, an accurate clearing function is determined, thereby improving the accuracy of grid clearing. In this solution, to illustrate a data drive, measured data is used to fit a dispatched power prediction curve. The clearing operator quantifies electricity prices and electricity volumes, and quantifies long-term and short-term electricity prices, to clarify an algorithm in data and information flow. The intelligent agent is to be constructed to determine the electricity price and achieve clearing. The algorithm is determined based on characteristics of the data and information flow, which is a neural network.

Third embodiment

In the third embodiment, the electrical function requirement for enabling dispatching control of the power grid side over the power plant side is peak-shaving under highly-frequent load variations in a thermal power scenario, the functional operator is a thermal power peak-shaving operator, and the thermal power peak-shaving operator is configured to achieve peak-shaving under highly-frequent load variations in the thermal power scenario. In the third embodiment, a process of constructing an intelligent agent based on the thermal power peak-shaving operator in the digital power system is introduced.

In a scenario where both thermal power generation and new energy power generation are employed, a load for thermal power generation varies frequently due to the instability of new energy power generation. Under a frequently-varying load condition in a thermal power scenario, a lack of supporting peak-shaving solutions for digitally calculating a cost exists currently, making it difficult to implement peak-shaving safely and stably, and prone to affecting the service life of a power system. How to guarantee the service life of the power system is a key issue. In view of this, in this solution, in the digital power system based on a multifunctional intelligent agent, the thermal power peak-shaving operator is used to achieve a method for peak-shaving under highly-frequent load variations in a thermal power scenario. Based on data fed back by a thermal power plant, the load capacity, performance and cost of a thermal power unit and a change in a thermal power load requirement can be taken into account. A relationship between the power plant cost and the change in thermal power load can be analyzed by using digital technology to ensure the safety and stability of peak-shaving.

FIG. 5A illustrates a power supply scenario. As shown in FIG. 5A, the power supply scenario involves multiple power generation methods, including thermal power generation and photovoltaic power generation. Photovoltaic power generation, which is a new energy power generation method, gradually accounts for an increasing proportion in an energy consumption structure due to its characteristics of zero emission, zero pollution, and sustainability. However, photovoltaic power generation is less stable as compared to thermal power generation. Thus, in the power supply scenario shown in FIG. 5A, a thermal power plant that employs thermal power generation is required to vary its load frequently. In specific implementation, the thermal power plant is required to coordinate in the peak-shaving from the power grid side. For example, in FIG. 5A, three thermal power plants are shown in a left portion of FIG. 5A, and each thermal power plant is capable of storing and releasing electric energy. The thermal power plant is electrically connected to the power grid, to transmit the electric energy released by the thermal power plant, and the released electric energy ultimately serves thousands of households that purchase electricity from the power grid.

Each thermal power plant typically includes multiple thermal power units. Variations exist among thermal power plants in terms of the equipment performance, supporting completeness, maintenance cost, and the like. Further, variations also exist among the thermal power units in aspects such as durability, safety attributes, ramping capability for peak-shaving, and power generation cost. For a thermal power plant, whether the thermal power units may incur operating losses as a result of cooperating in peak-shaving is to be considered. In addition, whether the thermal power plant can be compatible with a peak-shaving operating condition is also to be determined. For the power grid side, in addition to the quotation of each generating unit in the thermal power plant and the capabilities and performance of the unit itself, many aspects of dispatching are to be considered, to ensure the safe and stable implementation of peak-shaving.

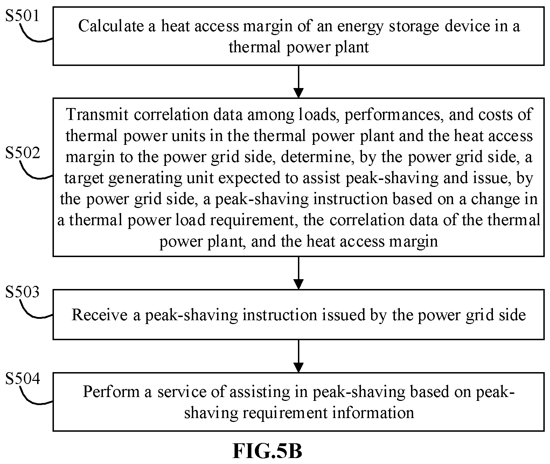

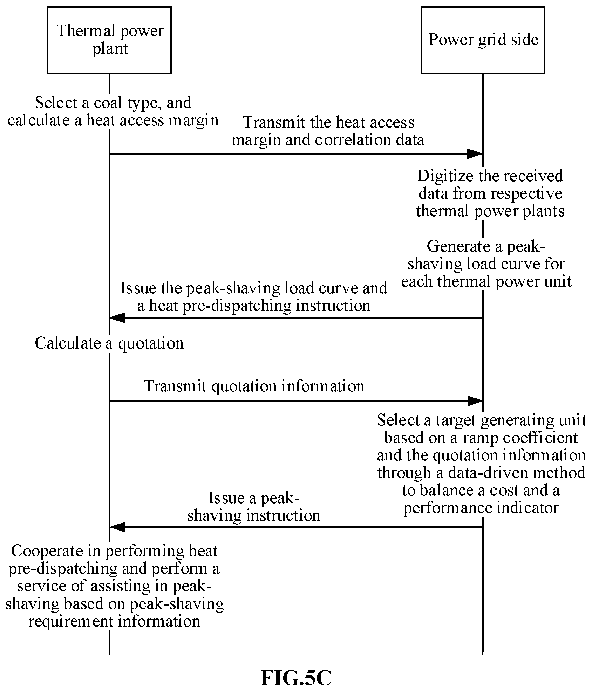

FIG. 5B is a flowchart of a method for peak-shaving under highly-frequent load variations in a thermal power scenario according to an embodiment of the present disclosure. FIG. 5C is a signaling interaction diagram of a method for peak-shaving under highly-frequent load variations in a thermal power scenario. In FIG. 5B, the implementation of the solution is mainly introduced from the perspective of the thermal power plant side. In FIG. 5C, the implementation of the solution is introduced by interaction between both sides (the power plant side and the power grid side).

As shown in FIG. 5B, the method for peak-shaving under highly-frequent load variations in a thermal power scenario according to an embodiment of the present disclosure includes: steps S501 to S504.

In step S501, a heat access margin of an energy storage device in a thermal power plant is calculated.

Each thermal power plant is configured with an energy storage device. The energy storage device stores the heat generated from coal combustion in the thermal power units and releases it when needed. The heat is converted into electric energy for transmission to the power grid. In an embodiment, the energy storage device in a thermal power plant includes, but is not limited to, a boiler, a steam turbine system, a heater, a deaerator, and the like.

The heat access margin of each energy storage device includes two different types, one is a heat storage margin characterization value, and the other is a heat release capacity characterization value. The heat storage margin characterization value indicates the ability of the energy storage device to further store heat. The heat release capacity characterization value indicates the ability of the energy storage device to further release heat. The heat storage margin characterization value can be expressed by a specific heat value, or a percentage relative to the rated storage heat. Similarly, the heat release capacity characterization value can be expressed by a specific heat value, or a percentage relative to the pre-rated storage heat. The heat storage margin and the heat release capacity are both related to the size and performance of the generating unit.

The heat access margin of the energy storage device in the thermal power plant reflects the current output capacity of the thermal power plant from two aspects: "storage" and "release". In a specific implementation, the heat access margin is statistically analyzed from two different dimensions according to an actual requirement of the power grid side. For example, statistics are performed from the dimensions of "day-ahead" and "intra-day". The thermal power plant provides a day-ahead heat access margin of the energy storage device, enabling the power grid side to prepare in advance and perform orderly peak-shaving based on the day-ahead heat access margin. The thermal power plant provides an intra-day heat access margin of the energy storage device, facilitating the power grid side in achieving accurate, flexible and reliable peak-shaving with high real-time data based on the intra-day heat access margin.

In an embodiment, the heat access margin transmitted by the thermal power plant to the power grid side includes respective heat access margins corresponding to the thermal power units of the thermal power plant. It should be noted that the heat access margin is calculated by the thermal power plant based on coal type parameters of the selected target coal type and a thermal system design. The selection of coal type affects heat consumption and coal consumption. Table 2 is a data table of a digital selection model of coal type. Test items for various coal types such as GEB 5200, GEB 4800, GEB4700 are shown in Table 2. Here, the test items can be regarded as the coal type parameters mentioned above. These coal type parameters include, but are not limited to, Total moisture (TM), Moisture on air-dried basis (MAD), Ash content on as-received basis (AAR), Volatile matter on dry ash-free basis (VDA), Carbon content on as-received basis (CAR), Hydrogen content on as-received basis (HAR), total sulfur (TS), lower heating value (LHV), and the like. In Table 2, LHV represents a lower heating value of the coal type, and HHV represents a higher heating value.

Table 2

| Test item | Symbol | Unit | Design coal type | Verifying coal type | GEB 5200 | GEB 4800 | GEB 4700 | GEB 4100 | GEB 4000 | Baitong | Princess Port | Banjarsan |
|---|---|---|---|---|---|---|---|---|---|---|---|---|
| TM | Mt | % | 23.00 | 28.80 | 13.41 | 26.00 | 27.00 | 32.00 | 32.00 | 30.00 | 30.70 | 28.61 |
| MAD | Mad | % | 17.00 | 21.39 | 622 | 12.00 | 12.00 | 12.00 | 12.00 | 20.00 | 15.62 | 16.04 |
| AAR | A2r | % | 5.00 | 6.00 | 1430 | 8.00 | 8.00 | 6.00 | 6.00 | 5.00 | 3.83 | 5.59 |
| VDA | Vdaf | % | 46.00 | 50.34 | 3738 | 38.00 | 40.00 | 42.00 | 42.00 | 35.00 | 50.76 | 33.45 |
| CAR | Car | % | 49.20 | 54.86 | 40.48 | | | | | 30.00 | 49.17 | 48.05 |
| HAR | Har | % | 3.70 | 4.21 | 421 | 421 | 4.21 | 4.21 | 4.21 | 4.80 | 2.68 | 2.79 |
| TS | St.ar | % | 0.50 | 0.80 | 0.77 | 1.00 | 1.00 | 0.50 | 0.80 | 033 | 0.23 | 0.67 |
| LHV | Qnet,ar | MU kg | 18.68 | 19.56 | 23.50 | 20.56 | 19.80 | 19.33 | 1825 | 19.15 | 19.20 | 19.26 |
| Qnet,ar | | Kcal kg | 4461.00 | 4200.00 | 5200.00 | 4800.00 | 4700.00 | 4100.00 | 4000.00 | 4200.00 | 4200.00 | 4271.00 |
| diff. of HHV and LHV | | MU kg | 1407.50 | 1667.25 | 128250 | 159725 | 1622.25 | 1747.25 | 174725 | 1830.00 | 1370.50 | 1343.00 |
| diff. of HHV and LHV | | Kcal kg | 336.59 | 398.71 | 306.70 | 38197 | 387.95 | 417.84 | 417.84 | 437.63 | 327.75 | 321.17 |
| % Diff. of HHV and LHV | | % | 7.55 | 9.49 | 5.90 | 7.96 | 8.25 | 10.19 | 10.45 | 10.42 | 7.80 | 7.52 |

The digital selection model of coal type can be used to select the coal type by extracting features from the data shown in Table 2. The hydrogen (H) part of carbon is combined with oxygen to produce water in physical combustion of a boiler, a process where the water absorbs a large amount of heat is called "latent heat of vaporization", and thus it is an important factor when selecting the coal type. The hydrogen content is measured by a difference in percentage between HHV and LHV, as illustrated by the data in the last row of Table 2. A smaller value of the hydrogen content indicates less heat loss due to latent heat of vaporization and more heat generated from each unit of coal for power generation, leading to better economic benefits. In practice, by using the digital selection model of coal type, a difference in percentage (this value can be understood as a low-order abstraction feature) between higher and lower heating values of each coal type to be selected is obtained based on respective higher heating values and respective lower heating values corresponding to multiple coal types to be selected. The coal type with the smallest difference in percentage between higher and lower heating values among the multiple coal types to be selected is determined as a target coal type. For example, in Table 2, the difference in percentage between higher and lower heating values of the coal type GEB 5200 is the smallest, and the specific value is 5.90%. Thus, the coal type GEB 5200 can be selected as the target coal type. By selecting the coal type with the smallest difference in percentage between higher and lower heating values as the target coal type, the amount of heat generated per unit of coal for power generation can be maximized.

An equation for calculating the higher heating value (HHV) and the lower heating value (LHV) of a coal type is:

$$HHV=LHV+25*M+25*9*H$$

M represents the total moisture content in coal, and H represents the basic hydrogen content in coal. In the above equation, both HHV and LHV are measured in units of kcal/kg. In an example, M=23, and H=4.21. It should be noted that when conversion is to be performed between heat units of kcal and kJ in the above equation, values of M and H are to be converted based on conversion coefficients for different heat units.

In step S502, correlation data among loads, performances, and costs of thermal power units and the heat access margins in respective thermal power plants are transmitted to the power grid side, a target generating unit expected to assist in peak-shaving is determined by the power grid side based on a change in a thermal power load requirement, the correlation data and the heat access margins provided by respective thermal power plants, and a peak-shaving instruction is issued by the power grid side.

To facilitate data acquisition, data analysis and peak-shaving of various thermal power plants and various thermal power units by the power grid side, each thermal power plant is to provide its data to the power grid side in the present disclosure. In a specific implementation, a thermal power plant transmits the correlation data among the loads, performances, and costs of the thermal power units and the heat access margin calculated in Step S501 to the power grid side. It should be noted that in the embodiment of the present disclosure, the correlation data transmitted by thermal power plants to the power grid side is also calculated based on the coal parameters of the selected target coal type.

Table 3 is a correlation parameter table for heat consumption, coal consumption and electricity price under different loads. As shown in the first column of Table 3, multiple power plant loads are illustrated (e.g., 100% load, 95% load, 65% load, 45% load, and the like). As shown in the second column to the 24th column of Table 3, various values of heat consumption, coal consumption, and system parameters under different loads are illustrated. As shown in Table 3, in dispatching under a frequently-varying load, an actual power consumption rate of the thermal power plant (the seventh column of Table 3) continuously changes. For example, under a 100% power plant load, the actual power consumption rate is 5.71%, while under a 45% power plant load, the actual power consumption rate is 7.37%.

By reporting the data shown in Table 3 to the power grid side, the power grid gains access to load conditions and thermal energy conditions of the thermal power plants, to classify and aggregate the data. Thus, different weights and priority levels are assigned to the generating units based on their operating conditions and heat access margins. Since calculations in this process are influenced by multiple variables, features extracted from the data in Table 3 can be referred to as mid-level data abstraction features (or simply mid-level features). By transmitting the mid-level data abstraction features based on a chain rule, an energy consumption level and a thermal energy reserve level of a power plant are reflected, to assist in achieving peak-shaving under highly-frequent load variations in a thermal power scenario.

Table 3

| 1 Power plant load (MCR) design calculation | 2 Minimum heat consumption of turbine (kJ/kWh) | 3 Heat consumption of turbine (kJ/kWh) | 4 Boiler Efficiency (LHV) | 5 Boiler Efficiency (HHV) | 6 Rough estimate by foreign party | 7 Plant power consumption rate (actual) | 8 Plant power consumption rate (PPA) | 9 Lower reference heat consumption (kJ/kWh) (LHV) | 10 Higher reference heat consumption (kJ/kWh) (HHV) | 11 Rough estimate 87.5% by foreign party (HHV) | 12 Actual heat consumption for power generation (HHV) | 13 Heat consumption for power generation considering variable plant power consumption (HHV) | 14 Unit loss: 2.5% loss (reported) | 15 Actual coal consumption for power generation | 16 Actual coal consumption for power supply | 17 Equilibrium point (comparing whether domestic level can cover) coal consumption for power generation | 18 Heat consumption for power generation (HHV)(KCal/kWh) | 19 Heat consumption for power generation (HHV) considering attenuation (KCal/kWh) | 20 Before modification to boiler efficiency in power grid negotiation | 21 Heat consumption rate considering attenuation (KCal/kWh) | 22 Reported coal consumption for power generation (g) | 23 Reported coal consumption for power supply (g) | 24 Percentage of stored heat |
|---|---|---|---|---|---|---|---|---|---|---|---|---|---|---|---|---|---|---|---|---|---|---|---|
| 100% | 7463 | 7522 | 94.00% | 87.76% | 87.50% | 5.71% | 5.70% | 8505.20 | 9109.95 | 8657.19 | 2051.65 | 2051.85 | 2056.98 | 274.47 | 291.09 | 291.09 | 2067.73 | 2067.95 | 2132.06 | 2138.40 | 285.33 | 302.61 | 80% |
| 95% | 7505 | 7565 | 94.03% | 87.79% | 87.50% | 5.80% | 5.70% | 8558.87 | 9167.26 | 8704.16 | 2062.57 | 2064.76 | 2069.92 | 276.19 | 293.20 | 293.20 | 2078.95 | 2081.16 | 2145.68 | 2152.69 | 287.24 | 304.93 | 70% |
| 90% | 7547 | 7608 | 94.05% | 87.81% | 87.50% | 5.89% | 5.70% | 8612.62 | 9224.64 | 8751.10 | 2073.50 | 2077.68 | 2082.88 | 277.92 | 295.32 | 295.32 | 2090.17 | 2094.39 | 2159.31 | 2167.01 | 289.15 | 307.25 | 90% |
| 85% | 7589 | 7651 | 94.08% | 87.84% | 87.50% | 5.98% | 5.70% | 8666.45 | 9282.11 | 8798.02 | 2084.42 | 2090.63 | 2095.85 | 279.66 | 297.44 | 297.44 | 2101.37 | 2107.63 | 2172.97 | 2181.36 | 291.06 | 309.58 | 60% |
| 80% | 7631 | 7694 | 94.10% | 87.86% | 87.50% | 6.07% | 5.70% | 8720.35 | 9339.66 | 8844.91 | 2095.33 | 2103.59 | 2108.85 | 281.39 | 299.57 | 299.57 | 2112.57 | 2120.89 | 2186.64 | 2195.74 | 292.98 | 311.92 | 80% |
| 75% | 7673 | 7737 | 94.13% | 87.88% | 87.50% | 6.16% | 5.70% | 8774.33 | 9398.36 | 8892.78 | 2106.48 | 2116.81 | 2122.10 | 283.16 | 301.75 | 301.75 | 2124.00 | 2134.42 | 2200.58 | 2210.14 | 294.91 | 314.26 | 70% |
| 70% | 7779 | 7845 | 94.09% | 87.84% | 87.50% | 6.35% | 5.70% | 8917.53 | 9552.05 | 9021.74 | 2136.55 | 2151.42 | 2156.80 | 287.79 | 307.31 | 307.31 | 2154.81 | 2169.81 | 2237.07 | 2245.71 | 299.65 | 319.98 | 90% |
| 65% | 7885 | 7954 | 94.05% | 87.80% | 87.50% | 6.54% | 5.70% | 9061.43 | 9706.50 | 9150.82 | 2166.64 | 2186.21 | 2191.68 | 292.44 | 312.92 | 312.92 | 2185.64 | 2205.37 | 2273.74 | 2281.43 | 304.42 | 325.73 | 60% |
| 60% | 7990 | 8062 | 94.00% | 87.75% | 87.50% | 6.74% | 5.70% | 9206.04 | 9861.71 | 9280.03 | 2196.77 | 2221.17 | 2226.72 | 297.12 | 318.58 | 318.58 | 2216.50 | 2241.12 | 2310.59 | 2317.30 | 309.20 | 331.54 | |
| 55% | 8096 | 8171 | 93.96% | 87.71% | 87.50% | 6.93% | 5.70% | 9351.36 | 10017.70 | 9409.36 | 2226.92 | 2256.30 | 2261.94 | 301.82 | 324.28 | 324.28 | 2247.39 | 2277.04 | 2347.63 | 2353.32 | 314.01 | 337.38 | |
| 50% | 8202 | 8279 | 93.92% | 87.68% | 87.50% | 7.12% | 5.70% | 9497.39 | 10173.30 | 9537.72 | 2256.85 | 2291.35 | 2297.08 | 306.51 | 330.00 | 330.00 | 2278.05 | 2312.87 | 2384.57 | 2389.48 | 318.83 | 343.28 | |
| 45% | 8358 | 8439 | 93.72% | 87.48% | 87.50% | 7.37% | 5.70% | 9725.09 | 10418.82 | 9744.42 | 2305.09 | 2346.65 | 2352.52 | 313.90 | 338.88 | 338.88 | 2327.42 | 2369.38 | 2442.83 | 2442.13 | 325.86 | 351.79 | |
| 40% | 8514 | 8598 | 93.45% | 87.24% | 87.50% | 7.62% | 5.70% | 9961.29 | 10670.37 | 9955.51 | 2354.37 | 2403.30 | 2409.31 | 321.48 | 348.00 | 348.00 | 2377.83 | 2427.25 | 2502.50 | 2495.06 | 332.92 | 360.38 | |

Table 4 is a table showing electricity price and cost data of a selected target coal type under different operating conditions (power plant loads). The power grid compensation coefficient for 1 kilowatt-hour electricity payment is an electricity price of an electricity volume supplied by the power grid (excluding limestone fees), which is a fuel part of a capacity electricity price and generally accounts for more than 50% of a total electricity price.

For example, the power grid compensation coefficient for 1 kilowatt-hour electricity payment is calculated by:

$$CERm = U*N/E\ (1-AUX)$$

U represents a coal price, which is also a fuel cost subsidy, with a unit of USD/t. As an example, U = 69 USD/t. E represents a heat consumption rate for power generation of a generating unit, that is, the heat consumption per kilowatt-hour electricity of the generating unit, with a unit of kcal/kWh. N represents a specific heat index, specifically the amount of heat required per kilowatt-hour electricity, with a unit of kcal/kWh. AUX represents a power consumption rate of a plant with a unit of %.

In Table 4, SHRW represents a weighted specific heat index with a unit of kJ/ (kW • h). Ea represents an electricity volume supplied (or: generated) with a unit of kW • h. EP represents an electricity cost with a unit of USD.

SHRcc represents a specific heat index with a unit of kJ/ (kW • h). U represents a coal price with a unit of USD/t. ECRm is the electricity cost per kilowatt-hour electricity with a unit of USD/ (kW • h). ECRm represents an electricity charge ratio, that is, a coal cost per kilowatt-hour electricity generated, with a unit of USD/ (kW • h). It should be noted that if a daily load is evenly distributed in a month, the weighted specific heat index is equal to a weighted index, i.e., SHRW = SHRcc.

ECRm is calculated by:

$$ECRm = SHRcc \times (1/HHV) \times U\ /1000.$$

Ep is calculated by:

$$Ep = NEOm*CERx.$$

In the above equation, NEOm represents the net power generation with a unit of kW • h, and CERx represents an electricity price with a unit of USD/ (kW • h).

As shown in Table 4, through the correlation between different electricity prices and loads, the power grid gains access to the costs reflected by the fuel of the thermal power plants. This enables the power grid to extract data on generating unit performances, environmental conditions and fuel costs of the power plant under different load conditions. Features extracted, which are influenced by multiple variables (including a cost price of coal), are referred to as high-level abstraction features. On the basis of mid-level features, linear high-level features are generated by integrating factors such as coal price costs, which capture the correlations among fuel, electricity volume, and electricity price.

That is, in the technical solution of the present disclosure, the determining, by the power grid side, a target generating unit expected to assist in peak-shaving based on a change in a thermal power load requirement, the correlation data and the heat access margins of respective thermal power plants, and issuing the peak-shaving instruction, includes:

extracting, by the power grid side, a mid-level feature based on the correlation data and the heat access margins provided by respective thermal power plants, where the mid-level feature includes a feature reflecting an energy consumption level and a thermal energy reserve level of the power plant; integrating, by the power grid side, a coal price cost in the correlation data and the mid-level feature to obtain a high-level feature, where the high-level feature includes a relationship among fuel, electricity volume and electricity price; and
determining, by the power grid side, the target generating unit expected to assist in peak-shaving based on the change of the thermal power load requirement, the mid-level feature, and the high-level feature, and issuing, by the power grid side, the peak-shaving instruction.

As seen from Table 4, as the load increases, the number of power grid compensation coefficient for 1 kilowatt-hour electricity payment decreases, which indicates that the fuel cost decreases. Under the same operating condition, a lower fuel cost suggest better generating unit performance and reduced coal consumption. Thus, the power grid side gains the performance differences among various thermal power units by comparing their fuel costs (for example, the power grid compensation coefficient for 1 kilowatt-hour electricity payment shown in Table 4) under an identical operating condition. For example, under 100% load of a thermal power unit A, the power grid compensation coefficient for 1 kilowatt-hour electricity payment is 0.0311 USD/ (Kw • h); under 100% load of a thermal power unit B, the power grid compensation coefficient for 1 kilowatt-hour electricity payment is 0.0319 USD/(Kw • h), and the coal types selected by the two generating units are the same. By comparing the coefficients, it can be known that the performance of the thermal power unit A is better than that of the thermal power unit B.

Table 4

| Condition | Day | SHRW | ECRm | Ea | Power grid compensation coefficient for 1 kilowatt-hour electricity payment CERm=U*N/E (1-AUX) | EP | actual coal consumption of 1 kilowatt-hour electricity | actual standard coal consumption of 1 kilowatt-hour electricity | actual coal cost of 1 kilowatt-hour electricity | coal cost | fuel balance | Reported Surplus / Actual Surplus (in grams of coal) |
|---|---|---|---|---|---|---|---|---|---|---|---|---|
| 100% | Design Calculation | 2138.4 | 0293 | 9267053600 | 0.0311 | 287772056.8 | 450.0942 | 302.61 | 0.0311 | 287802236 | -30178.95205 | -0.0336 |
| 100% | Equilibrium point | 2138.4 | 0.0293 | 9267053600 | 0.0311 | 287772056.8 | 432.9574 | 291.09 | 0.0299 | 276844644 | 10927512.7 | 12.1565 |
| 95% | Design Calculation | 2152.69 | 0.0295 | 8803700920 | 0.0311 | 273383454 | 453.5357 | 304.93 | 0.0313 | 275502693 | -2119238.723 | -2.4817 |
| 95% | point | 2152.69 | 0.0295 | 8803700920 | 0.0313 | 275210863.2 | 436.0972 | 293.2 | 0.0301 | 264909571 | 10301292.29 | 12.0630 |
| 90% | Design Calculation | 2167.01 | 0.0297 | 8340348240 | 0.0316 | 262460621.9 | 456.9896 | 307.25 | 0.0315 | 262990196 | -529573.8873 | -0.6546 |
| 90% | Equilibrum point | 2167.01 | 0.0297 | 8340348240 | 0.0315 | 262460621.9 | 439.2468 | 295.32 | 0.0303 | 252779504 | 9681117.849 | 11.9666 |
| 85% | Design Calculation | 2181.36 | 0.0299 | 7876995560 | 0.0317 | 249520790.1 | 460.4558 | 309.58 | 0.0318 | 250263589 | -742798.842 | -0.9722 |
| 85% | Equilibrium point | 2161.36 | 0.0299 | 7876995560 | 0.0317 | 249520790.1 | 442.4063 | 297.44 | 0.0305 | 240453421 | 9067369.437 | 11.8672 |
| 80% | Design Calculation | 2195.74 | 0.0301 | 7413642880 | 0.0319 | 236390822.9 | 463.9345 | 311.92 | 0.0320 | 237321710 | -930886.7998 | -1.2945 |
| 80% | Equilibrium point | 2195.74 | 0.0301 | 7413642880 | 0.0319 | 236390822.9 | 445.5767 | 299.57 | 0.0307 | 227930393 | 8460430.106 | 11.7649 |
| 75% | Design Calculation | 2210.14 | 0.0303 | 6950290200 | 0.0321 | 223070173 | 467.4258 | 314.26 | 0.0323 | 224163389 | -1093215.69 | -1.6216 |
| 75% | Equilibrium point | 2210.14 | 0.0303 | 6950290200 | 0.0321 | 223070173 | 448.8062 | 301.75 | 0.0310 | 215233976 | 7836196.922 | 11.6233 |
| 70% | Design Calculation | 2245.71 | 0.0308 | 6486937520 | 0.0326 | 211549934 | 475.9231 | 319.98 | 0.0328 | 213022543 | -1472609.395 | -2.3403 |

(continued)

| Condition | Day | SHRW | ECRm | Ea | Power grid compensation coefficient for 1 kilowatt-hour electricity payment CERm=U*N/E (1-AUX) | EP | actual coal consumption of 1 kilowatt-hour electricity | actual standard coal consumption of 1 kilowatt-hour electricity | actual coal cost of 1 kilowatt-hour electricity | coal cost | fuel balance | Reported Surplus / Actual Surplus (in grams of coal) |
|---|---|---|---|---|---|---|---|---|---|---|---|---|
| 70% | Equilibrium point | 2245. 71 | 0308 | 6486937520 | 0.0326 | 211549934 | 457.0806 | 307.31 | 0.0315 | 204588683 | 6961250.922 | 11.0631 |
| 65% | Design Calculation | 2281.43 | 0.0312 | 6023584840 | 0.0331 | 199563751.4 | 484. 4863 | 325.73 | 0.0334 | 201365771 | -1802019.269 | -30841 |
| 65% | Equilibrium point | 2261.43 | 0. 0.0312 | 6023584840 | 0.0331 | 199563751.4 | 465.4255 | 312.92 | 0.0321 0. | 193443583 | 6120168. 121 | 104746 |
| 60% | Design Calculation | 2317.3 | 0.0317 | 5560232160 | 0.0337 | 187108747. 4 | 493. 1161 | 331.54 | 0.0340 | 189186974 | -2078226.972 | -3.8533 |
| 60% | Equilibrium point | 2317.3 | 0.0311 | 5560232160 | 0.0337 | 187108747. 4 | 473.8416 | 318.58 | 0.0327 | 181792176 | 5316571. 855 | 9.8575 |
| 55% | Design Calculation | 2353.32 | 0.0322 | 5096879480 | 0.0342 | 174182020.8 | 501.8131 | 337.38 | 0346 | 176479984 | -2297963.55 | -4.6480 |
| 55% | Equilibrium point | 2353.32 | 0.0322 | 5096879480 | 0.0342 | 174182020.8 | 482. 3294 | 324.28 | 0.0333 | 169627876 | 4554144.126 | 9.2115 |
| 50% | Design Calculation | 2369.46 | 0.0327 | 4633526800 | 0.0347 | 160780646 | 510.5779 | 343.28 | 0.0352 | 163238555 | -2457908.661 | -5.4687 |
| 50% | Equilibrium point | 2389.48 | 0.0327 | 4633526800 | 0.0347 | 160780646 | 490.8338 | 330 | 0.0339 | 156926117 | 3854529.161 | 8.6761 |
| 45% | Design Calculation | 2442.13 | 0.0334 | 4170174120 | 0.0355 | 147890930. 7 | 523.2362 | 351.79 | 0.0361 | 150557036 | -2666105.293 | -6.5910 |
| 45% | Equilibrium point | 2442.13 | 0.0334 | 4170174120 | 0.0355 | 147890930. 7 | 504. 0362 | 338.88 | 0. 0348 | 145032397 | 2858533.88 | 7.0667 |
| 40% | Design Calculation | 2495.06 | 0.0342 | 3706821440 | 0.0362 | 134308032.7 | 636.0243 | 360. 38 | 0.0370 | 137099291 | -2191258.055 | -7.7629 |
| 40% | point | 2495.06 | 0.0342 | 3706821440 | 0.0362 | 134306032.7 | 517.6023 | 348 | 0.0357 | 132387497 | 1920535. 262 | 5.3413 |

Based on the data reported by each thermal power plant (including the correlation data among the loads, performances and costs of thermal power units together with the heat access margin in the thermal power plant, where the correlation data can be referred to examples in Tables 3 and 4), the power grid side gains a comprehensive understanding of the thermal power units of each thermal power plant. Based on this, the power grid side can exercise its peak-shaving function. In a specific implementation, the target generating unit expected to assist in peak-shaving is determined by the power grid side based on the change in the thermal power load requirement together with the correlation data and the heat access margins provided by respective thermal power plants. Then, the peak-shaving instruction is issued by the power grid side to the target generating unit.

Before the power grid side determines the target generating unit expected to assist in peak-shaving, the power grid side may issue respective peak-shaving load curves for the thermal power units to respective thermal power plants. In an example implementation, the peak-shaving load curve is two-dimensional, with a horizontal axis representing time and a vertical axis representing power. The peak-shaving load curves of different thermal power units may be different. The peak-shaving load curve essentially reflects load requirements for the thermal power units.

Based on the peak-shaving load curves of the thermal power units, a thermal power plant determines thermal power units that meet requirements of the corresponding peak-shaving load curves, and calculates quotation information for such thermal power units to provide the service of assisting in peak-shaving. Since cooperating in peak-shaving is an additional auxiliary operation provided by the thermal power units, a certain fee is to be charged to the power grid side. The charge amount is presented in a form of quotation. The thermal power plants calculate the quotation information for providing the service of assisting in peak-shaving by considering the performance of the thermal power units, the requirements of peak-shaving load curves, fuel information such as the type of coal burned, coal consumption, and heat consumption, fuel costs, and equipment costs. The quotation information is transmitted to the power grid side, enabling the power grid side to determine the thermal power unit expected to assist in peak-shaving based on the quotation information. Such thermal power unit is referred to as a target generating unit. A quantity of the target generating unit in a thermal power plant varies. For example, the thermal power plant A may include three thermal power units determined as target generating units, the thermal power plant B may include one thermal power unit determined as target generating unit, and the thermal power plant C may include none. Combining data from Table 3 and Table 4, the power grid side can use data-driven and deep learning functions to determine the target generating unit(s) expected to assist in peak-shaving by data driving and weighing between cost and metrics based on changes in the thermal power load requirement, the correlation data and the heat access margins of respective thermal power plants, and the quotation information reported by the thermal power plants.

Examples are taken as follows.

Each thermal power plant provides its Table 3 data to the power grid, and the power grid makes comparison and selection based on the Table 3 uploaded by each thermal power plant. For example, the power grid identifies that a plant A with 95% load corresponds to a heat release capacity characterization value of 70%, and a plant B with 60% load correspond to a heat release capacity characterization value of 80%. In this operating condition, whether to prioritize the heat release capacity characterization value or a load margin is to be determined through deep learning, to issue a dispatching instruction and select a generating unit for grid synchronization and power generation. This selection strategy is data-driven and informed by deep learning of historical data, to prevent system security risks.

In an embodiment, the power grid side establishes a typical load curve set after analysis and research based on data of load variations (both increases and decreases) of thermal power units under various operating conditions, and the correlation data among the load, performance and cost of each thermal power unit. The peak-shaving load curves for the thermal power units on the power grid side are selected from a pre-established typical load curve set. The thermal power plant calculates quotation information for the thermal power unit that meets the requirement of a corresponding peak-shaving load curve to provide the service of assisting in peak-shaving based on peak-shaving load curves for various thermal power units. More specifically, based on the peak-shaving load curve and the power supply quality of each thermal power unit, quotation information for the thermal power unit that meets the requirement of a corresponding peak-shaving load curve to provide the service of assisting in peak-shaving is generated. Considering the power supply quality in addition to the peak-shaving load curves enables the alignment of quotation with the power supply quality, avoiding issues that the quotation is inflated while the power supply quality is poor.

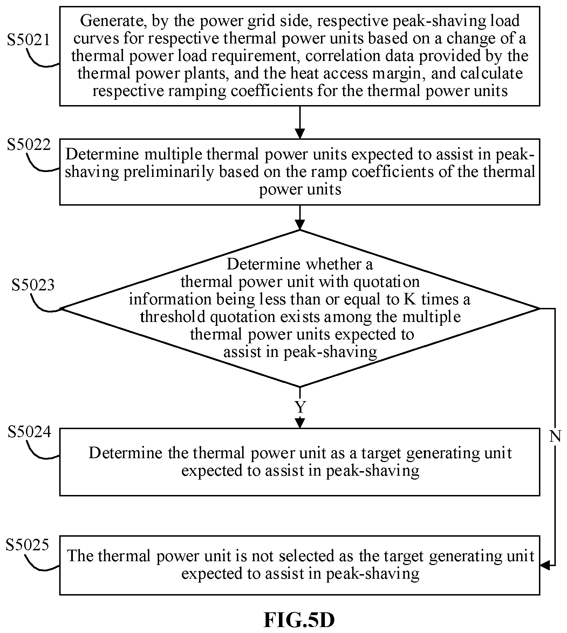

FIG. 5D is a flowchart of a process of determining a target generating unit expected to assist in peak-shaving according to an embodiment of the present disclosure. Referring to FIG. 5D, in the technical solution of the present disclosure, to determine the target generating unit expected to assist in peak-shaving, a thermal power unit with an appropriate quotation is determined as the target generating unit among multiple thermal power units expected to assist in peak-shaving by data driving and weighing between cost and metrics based on a ramp coefficient and the quotation information of each thermal power unit. As shown in FIG. 5D, the process includes: steps S5021 to S5025.

In step S5021, the power grid side generates a peak-shaving load curve for each thermal power unit based on a change of a thermal power load requirement, together with correlation data and the heat access margin provided by each thermal power plant, and calculates a ramp coefficient of each thermal power unit.

It can be understood that during thermal power generation, a thermal power load requirement may vary since thermal power generation and new energy power generation are employed in parallel. For example, the thermal power load requirement is low at noon of the day, and is high at night of the day; the thermal power load requirement is high during rainy periods, and is low during sunny periods. Based on the correlation data among loads, performances and costs provided by various thermal power plants, the peak-shaving load curves of the thermal power units are analyzed and generated by using an artificial intelligence algorithm through feature extraction. These peak-shaving load curves rely on extraction and analysis of multi-layered, multi-tiered data, enabling a data-driven peak-shaving solution, which specifically includes the generated peak load curves.

Further, in the technical solution of the present disclosure, to select the target generating unit, the power grid side firstly calculates the ramp coefficient of each thermal power unit.

In the technical solution of the present disclosure, the ramp coefficient is a parameter for measuring the performance of the thermal power unit. A higher ramp coefficient indicates better performance (ramp ability) of the thermal power unit, to assist in peak-shaving better. A method for calculating the ramp coefficient of a thermal power unit is provided below as an example.

To calculate a ramp coefficient of a certain thermal power unit, the power grid side extracts a ramp speed, a steam pressure and a rated power generation capacity from the correlation data among the load, performance and cost of the thermal power unit. Then, the ramp coefficient of the thermal power unit is calculated based on the ramp speed, the steam pressure and the rated power generation capacity of the thermal power unit, the heat access margin and the ramp duration required by the power plant side for the thermal power unit. An equation for calculating the ramp coefficient of the thermal power unit is shown below as an example.

$$P=S*T*Q*C/R$$

Where, P represents the ramp coefficient, S represents the ramp speed, T represents the ramp duration required by the power grid, Q represents the steam pressure, C represents the heat access margin, and R represents the rated power generation capacity. Table 5 exemplarily shows operating conditions, ramp speeds, ramp duration required by the power grid, steam pressures, heat access margins and calculated ramp coefficients of three different thermal power units (W1, W2 and W3). The steam pressure Q is represented by a percentage of a rated air pressure. Based on the above equation, the method for calculating the ramp coefficient of the thermal power unit includes: calculating a product of a ramp speed, ramp duration, a steam pressure and a heat access margin of the thermal power unit; calculating a ratio of the product to a rated power generation capacity of the thermal power unit, and determining the ratio as the ramp coefficient of the thermal power unit. The calculation of the ramp coefficient enables capability levels of various thermal power units to be quantitatively measured and horizontally compared with each other. This data-driven method for quantitatively comparing thermal power units enriches theoretical foundations for peak-shaving from a data perspective, aiding in achieving reliable and orderly frequent peak-shaving.

For example, in Table 5, the heat access margin is represented by C. As one of parameters for calculating the ramp coefficient of the thermal power unit, C value can be used to represent the heat release capacity characterization value in the heat storage margin. As shown in Table 5, for example, the C values of a generating unit W1, a generating unit W2 and a generating unit W3 are 90%, 50% and 20%, respectively. This means that the heat release capacity characterization value of the generating unit W1 is 90%, and the heat storage margin characterization value of the generating unit W1 is 10%; the heat release capacity characterization value of the generating unit W2 is 50%, the heat storage margin characterization value of the generating unit W2 is 50%; and the heat release capacity characterization value of the generating unit W3 is 20%, and the heat storage margin characterization value of the generating unit W3 is 80%. That is, a sum of the heat release capacity characterization value and the heat storage margin characterization value of the same unit is 100%.

Table 5

| Unit | Operating condition of unit | Ramp speed S (unit : MW/s ) | Ramp time T required by power grid (unit: s) | Steam pressure Q | heat access margin C | Ramp coefficient | Classification level |
|---|---|---|---|---|---|---|---|
| W1 | Rated power generation capacity R=600M W | S=50 | T=10 | Q=100% | C=90% | P=S*T*Q*C/R=0.7 5 | B Level |

(continued)

| Unit | Operating condition of unit | Ramp speed S (unit : MW/s ) | Ramp time T required by power grid (unit: s) | Steam pressure Q | heat access margin C | Ramp coefficient | Classification level |
|---|---|---|---|---|---|---|---|
| W2 | Rated power generation capacity R=300M W | S=20 | T=12 | Q=100% | C=50% | P=S*T*Q *C/R=0.4 | C Level |
| W3 | Rated power generation capacity R=200M W | S=10 | T=15 | Q=100% | C=20% | P=S*T*Q *C/R=0.1 5 | C Level |

In step S5022, multiple thermal power units expected to assist in peak-shaving are determined preliminarily based on ramp coefficients of respective thermal power units.

In an embodiment of the present disclosure, the power grid side preliminarily determines multiple generating units based on relative magnitudes of the ramp coefficients of the thermal power units, and these determined generating units are expected to assist in peak-shaving. As shown in the last column of Table 5, thermal power units with different ramp coefficients are classified into levels (peak-shaving levels) based on magnitudes of the ramp coefficients. For example, thermal power units with a ramp coefficient greater than or equal to 0.8 are classified as Level A, those with a ramp coefficient less than 0.8 but greater than or equal to 0.5 are classified as Level B, and those with a ramp coefficient less than 0.5 are classified as Level C. In this way, a correspondence between thermal power units with different ramp coefficients and their peak-shaving levels is established.

In a specific implementation, multiple thermal power units expected to assist in peak-shaving are preliminarily determined based on the peak-shaving levels corresponding to the thermal power units. For example, the power grid side prioritizes to select A-Level thermal power unit(s). If the A-level thermal power units are not sufficient, B-level thermal power unit(s) can be further selected to be the thermal power unit(s) expected to assist in peak-shaving.

In step S5023, whether any of the multiple thermal power units expected to assist in peak-shaving has quotation information being less than or equal to K times a threshold quotation is determined. If yes, the process proceeds to step S5024; if no, the process proceeds to step S5025.

In step S5024, the thermal power unit is determined as the target generating unit expected to assist in peak-shaving.

In step S5025, the thermal power unit is temporarily not selected as the target generating unit expected to assist in peak-shaving.

It can be understood that when each thermal power unit is required to cooperate in peak-shaving service, heat consumption and energy consumption beyond an expected power generation task may be generated, thereby leading to certain cost expenditures. Thus, the thermal power unit calculates a quotation and transmits it to the power grid side. The power grid side compares quotation information transmitted by each thermal power unit with K times the threshold quotation. If the quotation is less than or equal to K times the threshold quotation, the power grid side considers the quotation to be reasonable and affordable. As shown in step S5024, such unit is determined as the target generating unit for assisting in peak-shaving. On the contrary, if the quotation is higher than K times the threshold quotation, the power grid side considers the quotation to be excessively high and no longer prioritizes such unit to be the target generating unit.

The threshold quotation is a quotation reference value obtained by the power grid side through deep learning of historical quotation information. In practical applications, the power grid side comprehensively analyzes the historical quotation data under highly-frequent load variations in a thermal power scenario, and analyzes a reasonable quotation reference value by data driving and weighing between cost and metrics based on the historical quotation information and the performance and cost of the thermal power unit. A value of K is greater than 1. In an example, the value of K ranges from 1.1 to 1.3. For example, the value of K is 1.3. In this case, if the quotation information of a thermal power unit exceeds the threshold quotation by more than 30%, the thermal power unit is considered ineligible as the target generating unit. On the contrary, if the quotation information of the thermal power unit is less than 1.3 times of the threshold quotation, the thermal power unit is considered eligible as the target generating unit.

For the target generating unit, the power grid side can send a peak-shaving instruction to the thermal power unit to which the target generating unit belongs.

In step S503, a peak-shaving instruction issued by the power grid side is received.

The peak-shaving instruction carries a unit identification of the target generating unit and peak-shaving requirement information for the target generating unit. For example, the peak-shaving instruction carries the unit identification W1. In this case, upon receiving the peak-shaving instruction, the thermal power plant knows that the instruction is issued for the thermal power unit with the unit identification W1. If the thermal power plant includes multiple target generating units, the power grid side sends respective peak-shaving instructions to respective thermal power units in parallel. This group-dispatching manner improves the efficiency of peak-shaving. The peak-shaving instruction carries the unit identification, enabling the thermal power plant to accurately forward the peak-shaving requirement information.

In step S504, a service of assisting in peak-shaving is performed based on the peak-shaving requirement information.

As mentioned above, the peak-shaving instruction carries the peak-shaving requirement information for the target generating unit. Specifically, the peak-shaving requirement information includes a peak-shaving load curve. In an embodiment, the peak-shaving requirement information further includes ramp speed requirement information. The peak-shaving load curve puts forward a requirement for the target generating unit from a perspective of load, while the ramp speed requirement information puts forward a requirement for the target generating unit from a perspective of ramp speed. Upon receiving the peak-shaving requirement information, the target generating unit analyzes its actual conditions to determine whether it can meet the above requirements.

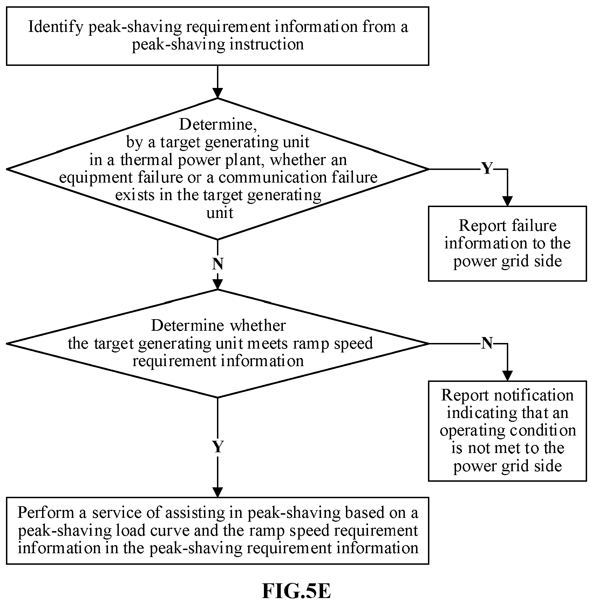

FIG. 5E is a flowchart of determining a failure and an operating condition according to an embodiment of the present disclosure. Referring to FIG. 5E, an implementation of this step is illustratively described below.

As shown in FIG. 5E, after the peak-shaving requirement information in the peak-shaving instruction is identified, the target generating unit of the thermal power plant firstly determines whether an equipment failure or a communication failure exists in the target generating unit, and determines whether the target generating unit meets the ramp speed requirement information. A specific process is shown in FIG. 5E, which includes: determining whether an equipment failure or a communication failure exists firstly, and further determining whether the ramp speed requirement information is met in response to determining that no equipment failure and no communication failure exist. When no equipment failure and no communication failure exist in the target generating unit (i.e., neither equipment failure nor communication failure exists) and the target generating unit meets the ramp speed requirement information, the service of assisting in peak-shaving is performed based on the peak-shaving load curve and the ramp speed requirement information in the peak-shaving requirement information. When an equipment failure or a communication failure exists in the target generating unit, the target generating unit fails to cooperate in peak-shaving due to hardware or communication constraints. In this case, the thermal power plant is required to report a failure of the thermal power unit to the power grid side, so that the power grid side can know a failure condition of the target generating unit in time. In response to the target generating unit failing to meet the ramp speed requirement information, notification indicating that an operating condition is not met is reported to the power grid side.

It should be noted that in an embodiment of the present disclosure, the power grid side adjusts the peak-shaving instruction in response to the notification fed back from the thermal power plant indicating that the operating condition is not met. For example, the peak-shaving load curve in the peak-shaving load requirement information is adjusted, and/or a numerical value in the ramp speed requirement information is adjusted based on the notification indicating that the operating condition is not met. By adjusting the peak-shaving load curve (for example, reducing an ordinate value of the load curve) or lowering the numerical value in the ramp speed requirement information, a threshold of the requirement for the target generating unit can be reduced, enabling more generating units to qualify as the target generating units for peak-shaving.

In addition, in an embodiment of the present disclosure, the power grid side relearns to increase the threshold quotation based on the notification fed back from the thermal power plants indicating that the operating condition is not met, to determine more generating units as the target generating units expected to assist in peak-shaving. More generating units are included in candidates of the target generating unit expected to assist in peak-shaving, and a selection range of generating units is enlarged, to address an issue of insufficient capacity to provide the service of assisting in peak-shaving among generating units with suitable quotations. Since more generating units are included in candidates of the target generating unit, more generating units may participate in peak-shaving, additionally addressing an issue of limited contributions of thermal power units with good performance to peak-shaving due to trading price constraints. Through continuous deep learning of the threshold quotation, the threshold quotation can be updated timely based on the condition and quotation of the thermal power units, enabling dynamic and flexible peak-shaving.

As mentioned above in the present disclosure, the thermal power units, particularly those selected as target generating units, should cooperate with dispatching of the power grid side to assist in achieving peak-shaving. According to the method of peak-shaving for frequently-varying load in a thermal power scenario provided herein, after the multiple thermal power units expected to assist in peak-shaving are preliminarily determined by the power grid side, the method further includes:

transmitting, by the power grid side, a heat pre-dispatching instruction to the multiple thermal power units expected to assist in peak-shaving. The heat pre-dispatching instruction is issued to enable each thermal power unit expected to assist in peak-shaving to make heat preparations for upcoming load adjustment tasks. In an embodiment, the heat pre-dispatching refers to requiring the energy storage device to store additional heat or to release some stored heat. The heat pre-dispatching instruction may be issued to the thermal power unit by the power grid side after obtaining information about the heat access margin of the thermal power unit. When the power grid side performs dispatching for peak-shaving and issues the heat pre-dispatching instruction, the content of the issued heat pre-dispatching instruction and heat adjustments are closely aligned with the performance and capabilities of the thermal power unit under the premise that the heat access margin is known.

As mentioned above, the power grid side determines the target generating unit expected to assist in peak-shaving based on the quotation information. For the target generating unit, it is assumed that an agreement is reached between the thermal power plant and the power grid side in terms of the quotation. Upon receiving the heat pre-dispatching instruction, the target generating unit selected by the power grid side cooperates to perform heat pre-dispatching through the heat storage device in the thermal power plant to which the target generating unit belongs. For example, the heat pre-dispatching instruction requires the target generating unit to further store 12% of the heat, and the target generating unit further stores 12% of the heat according to the heat pre-dispatching instruction. Thus, when the service of assisting in peak-shaving is to be performed, the load is adjusted through pre-stored heat.

FIG. 5C shows a process of the method for peak-shaving under highly-frequent load variations in a thermal power scenario, and shows the interaction content and interaction timing from both the thermal power plant and the power grid side. As shown in FIG. 5C, the thermal power plant selects the coal type and calculates the heat access margin. The calculated heat access margin and the correlation data (specifically, the correlation data among the loads, performance and costs of respective thermal power units in the thermal power plant) are transmitted to the power grid side. Specific types of the correlation data can refer to Table 3, Table 4, and the like. The power grid side digitally processes the received data from respective thermal power plants, performs multi-order abstract extraction and analysis on the data, and uses artificial intelligence technology to capture correlations among the data. Then, based on the above extraction and analysis, the power grid side generates a peak-shaving load curve for each thermal power unit, and issues the curve to the corresponding thermal power plant. In addition, a heat pre-dispatching instruction is issued. Based on an actual condition of each thermal power unit, the thermal power plant calculates the quotation information that meets the requirement of the peak-shaving load curve to assist in peak-shaving, and reports the quotation information to the power grid side. Therefore, the power grid side can obtain the quotation information corresponding to respective thermal power units of each thermal power plant, conduct horizontal comparison based on the quotation information and the calculated ramp coefficients of the thermal power units, and select the target generating unit by data driving and weighing between cost and metrics. The power grid side issues a peak-shaving instruction to the thermal power plant, and the target generating unit cooperates to perform heat pre-dispatching and performs the service of assisting in peak-shaving based on the peak-shaving requirement information in the peak-shaving instruction.

The technical solution of the present disclosure has the following advantages.

With the increasing proportion of new energy power generation in the power system, thermal power plants are required to ensure that stored heat meets the requirement for assisting in peak-shaving of the power grid from design to operation. The quotation of the service of assisting in peak-shaving is required to be market-oriented and collaborative. Therefore, the technical solution of the present disclosure employs the above-described method to meet the requirement of market-oriented collaboration.

In addition, in the technical solution of the present disclosure, data analysis is introduced into market-oriented dispatching under highly-frequent load variations in a thermal power scenario. Through quantitative Tables 2 to 4, the power grid side (combined with Tables 3 to 4) can achieve digital dispatching, and the power plant side (combined with Table 2) can digitally select coal types. The key lies in feature extraction based on data. A data-driven dispatching process renders peak-shaving standardized and digitalized, enhancing collaboration and providing clear cost visibility. The power grid sorts and sets priorities based on the performance reflected by costs and metrics, to select generating units suitable for peak-shaving coordination based on data, leading to stable, secure, and ideal peak-shaving performance.

In addition, the technical solution of the present disclosure simultaneously considers the security of the power grid such as a ramp coefficient and a peak-shaving load curve. Such key data can guide the pricing of power quality and is economical. The pricing of frequently peak-shaving and the service of assisting in peak-shaving considers costs of the power grid and the power plants under marketization.

In this embodiment, natural production factors of thermal power are collected and processed through a digital tool, to extract data features. Then, a thermal power measurement model for the heat consumption, coal consumption and an electricity charge under a full-load condition is obtained based on a thermal power electricity price formula. A digital research on the model involves data-driven digital logic, which, when applied to the power industry, enables thermal power dispatching and digitization operation. In addition, by studying the control production factors of the power grid side such as an electricity price, correlations are established between the thermal power production factors and the electricity price or other complex production factors. By setting low-order, mid-level, and high-order data-abstracted production factors, intermediate results or production factors may not possess physical significance in reality, such as sub-frequency or low-voltage over-excitation. These data-abstracted production factors serve as the key to unlocking artificial intelligence (digitization) power.

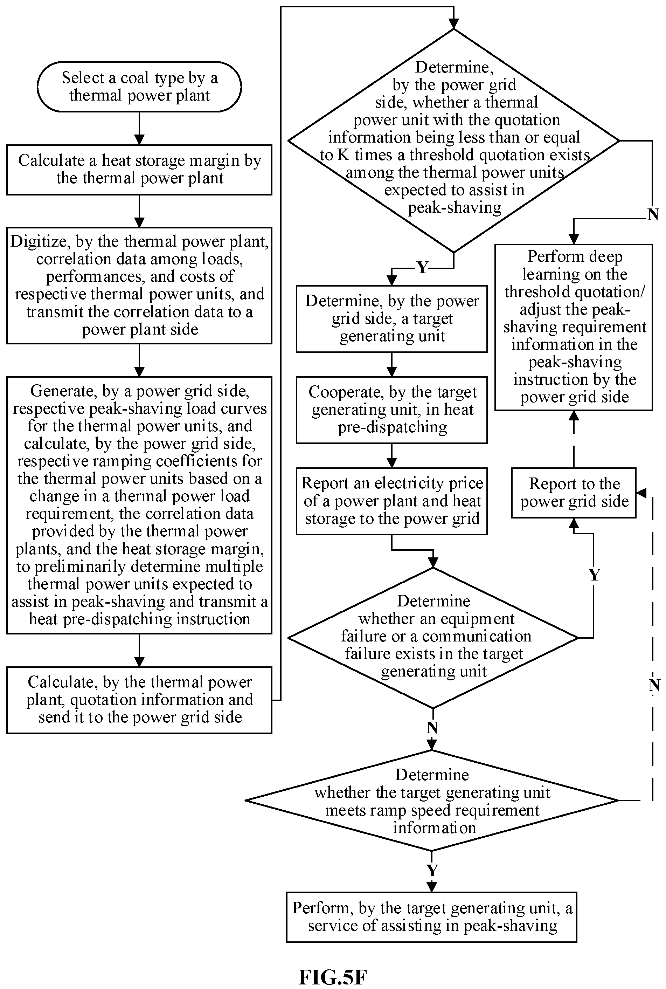

FIG. 5F is a flowchart of a method for peak-shaving under highly-frequent load variations in a thermal power scenario according to another embodiment of the present disclosure. FIG. 5F is illustrated briefly below.

In the process shown in FIG. 5F, the thermal power plant first selects a coal type based on the hydrogen content of each coal type, then calculates the heat storage margin of the thermal power plant, and digitizes the correlation data among the load, performance and cost of each thermal power unit in the thermal power plant. The thermal power plant transmits the data to the power grid side, and the power grid weighs costs and metrics through data driving, to determine the target generating unit(s) expected to assist in peak-shaving.

In a specific implementation, the power grid side generates a peak-shaving load curve for each thermal power unit based on the change of a thermal power load requirement and data provided by the thermal power plant, and transmits it to the thermal power unit. Ramp coefficients of respective thermal power units are calculated, and multiple thermal power units that are expected to assist in peak-shaving are preliminarily determined, and heat pre-dispatching instructions are sent to them. The thermal power plant calculates the quotation of the service of assisting in peak-shaving based on the peak-shaving load curve and transmits the quotation to the power grid side. The power grid side compares quotation information and K times the threshold quotation based on a cost factor and performance data of the thermal power plant, to select a target generating unit. When the quotations all exceed K times the threshold quotation, it means that the threshold quotation is too low. In this case, deep learning is to be performed on the threshold quotation again to increase a pass rate of thermal power units meeting the quotation threshold.

The target generating unit cooperates in heat pre-dispatching, and after the pre-dispatching is completed, the heat storage is reported to the power grid again. The power grid side determines whether an equipment failure or a communication failure exists in the target generating unit, and determines whether the target generating unit meets ramp speed requirement information. If an equipment failure or a communication failure exists, the failures are to be reported to the power grid. If the target generating unit does not meet the ramp speed requirement information, this condition is also to be reported to the power grid. As shown by the dotted lines in FIG. 5F, in a case that an operating condition is not met, the threshold quotation is re-determined, or the peak-shaving requirement information in the peak-shaving instruction issued to the target generating unit is adjusted.

Fourth embodiment

In the fourth embodiment, the electrical function requirement for enabling dispatching control of the power grid side over the power plant side is water resource dispatching of a cascade hydropower station system, the functional operator is a water resource dispatching operator, and the water resource dispatching operator is used to achieve water resource dispatching of the cascade hydropower station system. In the fourth embodiment, a process of constructing an intelligent agent based on the water resource dispatching operator in the digital power system is introduced.

A series of issues are to be considered in the water resource dispatching of the cascade hydropower station system. The cascade hydropower station system typically includes multiple single-stage hydropower stations connected in series, and upstream and downstream hydropower stations are connected through reservoir backwater. A control scope extends from the confluence to the entire basin. Risks of certain operational failures in the upstream hydropower station propagate through water flow fluctuations, amplifying and accumulating at the downstream hydropower station, potentially leading to severe risk events. In addition, during the operation of each hydropower station in the cascade hydropower station system, the safety of reservoirs (ensuring appropriate water level) and generating units of each hydropower station is to be considered. Moreover, during the operation of each hydropower station in the cascade hydropower station system, the operational safety of generating units in response to sudden emergencies of the power grid (such as the inability to receive power from interconnection points or sudden load rejection) is to be considered. Furthermore, under the premise of ensuring the safety of the reservoir and a hydropower generation device, how to improve power supply quality, promote the safe operation of the power grid, enhance power supply revenue, and achieve the full utilization of water resources is to be addressed.

Based on the above issues, a method for dispatching water resources of a cascade hydropower station system is provided according to the present disclosure, which utilizes the water resource dispatching operator in a digital power system based on a multifunctional intelligent agent. The method includes: acquiring water resource data of respective hydropower stations in a cascade hydropower station system at a current time instant; for each hydropower station, determining whether the hydropower station is in a safe operation state based on the water resource data of the hydropower station; in response to all hydropower stations being determined to be in a safe operation state, determining whether to perform water resource dispatching based on the water resource data of respective hydropower stations, a preset electricity price scheme, and target historical data; and in response to determining to perform the water resource dispatching, determining a water resource dispatching scheme based on the water resource data of respective hydropower stations and a water resource dispatching model. According to the solution in the present disclosure, when it is determined that each hydropower station is in a safe operation state, a water resource dispatching scheme that maximizes a power generation revenue can be directly generated based on the water resource dispatching model obtained by training on historical data and the water resource data of respective hydropower stations at the current time instant, to achieve reasonable dispatching of water resources.

FIG. 6A is a flowchart of a method for dispatching water resources according to an embodiment of the present disclosure. As shown in FIG. 6A, the method for dispatching water resources according to the present disclosure includes: steps S601 to S604.

In step S601, water resource data of respective hydropower stations in a cascade hydropower station system at a current time instant is acquired.

In the present disclosure, the water resource data of a hydropower station includes, but is not limited to: a measured water level of a reservoir where the hydropower station is located (referred to as "measured water level"), a measured increase rate of a water flow velocity in the reservoir where the hydropower station is located (referred to as "measured velocity increase rate"), a measured hydrostatic pressure of a turbine (also referred to as "measured turbine hydrostatic pressure"), a rated rotational speed of a hydropower generator, an operating power of the hydropower generator, an installed capacity of a power station, the maximum/rated/minimum head, the maximum runaway speed, a rated output of the turbine, a diameter of a turbine flow pipe, and the like.

Table 6 is a table of an inflow water volume of an upstream hydropower station according to the present disclosure. Table 6 shows the inflow water volumes of the upstream hydropower station from January to December in different years, and the water volumes measured in a unit of 10,000 $m^3$.

For example, the following data can be read from Table 6. In January 2016, the inflow water volume of the upstream hydropower station is 7.75 million $m^3$. In February 2023, the inflow water volume of the upstream hydropower station is 12.57 million $m^3$.

It should be noted that the upstream hydropower station refers to the hydropower station located upstream in the cascade hydropower station system.

Table 6

| Month | 2016 | 2017 | 2018 | 2019 | 2020 | 2023 | 2024 |
|---|---|---|---|---|---|---|---|
| January | 775 | 3227 | 3263 | 3136 | 1750 | 2894 | 1274 |
| February | 210 | 1114 | 2476 | 2305 | 746 | 1257 | 3128 |
| March | 106 | 1650 | 3324 | 736 | 1939 | 2478 | 798 |
| April | 2047 | 13740 | 6802 | 3011 | 1410 | 3692 | 1784 |
| May | 8280 | 23682 | 35177 | 3642 | 5481 | 5304 | 2478 |
| June | 11174 | 22343 | 52766 | 14295 | 8700 | 16633 | 10618 |
| July | 35240 | 19435 | 90578 | 25659 | 16089 | 43929 | 83502 |
| August | 30913 | 22702 | 115595 | 73712 | 33239 | 49479 | 25684 |
| September | 23290 | 18653 | 38499 | 84177 | 46228 | 56418 | 34185 |
| October | 40846 | 26580 | 35633 | 21007 | 54775 | 37106 | 26915 |
| November | 16734 | 11114 | 10911 | 7187 | 12512 | 18177 | None |
| December | 6348 | 5774 | 4833 | 2386 | 2870 | 4250 | None |

Table 7

| Date | Current water storage | Current energy storage of a reservoir | Current water level 8:00 | Average inflow rate yesterday | Average outflow rate yesterday | Water consumption rate for power generation yesterday |
|---|---|---|---|---|---|---|
| January 23 | 3.8261 | 1.06 | 261.44 | 4.21 | 10.41 | 2.53 |
| January 24 | 3.7990 | 1.05 | 261.22 | 11.01 | 22.16 | 2.54 |
| January 25 | 3.7572 | 1.03 | 260.88 | 7.03 | 29.94 | 2.55 |
| January 26 | 3.7301 | 1.01 | 260.66 | 13.56 | 26.57 | 2.56 |
| January 27 | 3.7018 | 1.00 | 260.43 | 12.60 | 26.84 | 2.56 |
| January 28 | 3.6821 | 0.99 | 260.27 | 11.40 | 20.07 | 2.56 |

(continued)

| Date | Current water storage | Current energy storage of a reservoir | Current water level 8:00 | Average inflow rate yesterday | Average outflow rate yesterday | Water consumption rate for power generation yesterday |
|---|---|---|---|---|---|---|
| January 29 | 3.6784 | 0.98 | 260.24 | 4.84 | 10.41 | 2.56 |
| January 30 | 3.6710 | 0.98 | 260.18 | 14.31 | 14.93 | 2.57 |

Table 7 is a table of variations in the water volume of an upstream hydropower station according to the present disclosure. Table 7 shows variations in a daily water volume of the upstream hydropower station from January 23 to January 30, which includes: a current water storage ($m^3$), a current energy storage of a reservoir (100 million kWh), a current water level (m), an average inflow rate yesterday ($m^3/s$), an average outflow rate yesterday ($m^3/s$), and a water consumption rate for power generation yesterday ($m^3/kWh$).

In step S602, for each hydropower station, whether the hydropower station is in a safe operation state is determined based on the water resource data of the hydropower station.

In the present disclosure, the safe operation state mainly refers to a water conservation safe state and a vibration safe state.

In the present disclosure, whether the hydropower station is in a water conservation safe state is determined based on two primary indicators which are the measured turbine hydrostatic pressure and the measured velocity increase rate.

The measured turbine hydrostatic pressure, also known as a spiral case pressure, refers to an actual net water pressure at an inlet of a spiral case of the turbine. It is typically influenced by factors such as a water flow velocity, a water flow direction, a turbine structure, and a reservoir water level. The measured turbine hydrostatic pressure is of great significance for evaluating the operating efficiency of the turbine, predicting the wear and tear of the turbine, and formulating a maintenance plan for the turbine.

The measured velocity increase rate refers to an actual increase rate of the reservoir water level within a certain period of time, which is represented by the change of water level per unit time. It is typically influenced by an inflow water volume, an outflow water volume, a rainfall condition and regulation capacity of the reservoir. The measured velocity increase rate is of great significance for evaluating the water storage capacity of the reservoir, predicting future changes of the water level, and formulating a dispatching plan for the reservoir.

Typically, both the measured velocity increase rate and the measured turbine hydrostatic pressure can be obtained through sensors. A theoretical velocity increase rate and a theoretical turbine hydrostatic pressure can be obtained from the technical documentation of the hydropower station.

It should be emphasized that the theoretical velocity increase rate in the present disclosure is the maximum actual increase rate of the reservoir water level allowed during the safe operation of the hydropower station within a certain period of time. The theoretical turbine hydrostatic pressure in the present disclosure is the maximum actual net water pressure at the inlet of the turbine spiral case allowed during the safe operation of the hydropower station.

Table 8

| Date | Time | Unit | Unit output | Upstream water level | Downstream water level | Spiral case pressure | Guide vane opening |
|---|---|---|---|---|---|---|---|
| 18 August 2018 | 09:04 | #1 unit | 61 | 262.66 | 112.89 | 1.44 | 51.09 |
| | | #2 unit | 71 | | | 1.44 | 61.21 |
| | 15:00 | #1 unit | 61.5 | 262.49 | 113.42 | 1.44 | 51.94 |
| | | #2 unit | 86 | | | 1.44 | 66.56 |
| | 18:25 | #1 unit | 82 | 262.19 | 114.23 | 1.44 | 62.37 |
| | | #2 unit | 77 | | | 1.44 | 61.29 |

(continued)

| Date | Time | Unit | Unit output | Upstream water level | Downstream water level | Spiral case pressure | Guide vane opening |
|------|------|------|-------------|----------------------|------------------------|----------------------|--------------------|
| 19 August 2018 | 09:25 | #1 unit | Shutdown | 261.72 | 113.42 | 1.45 | Shutdown |
| | | #2 unit | 78 | | | 1.44 | 63.81 |
| | 13.50 | #1 unit | Shutdown | 261.96 | 113.36 | 1.49 | Shutdown |
| | | #2 unit | 61 | | | 1.47 | 52.54 |

Table 8 is a table of spiral case pressures measured on different dates provided herein. Table 8 shows values of a unit output (MW) of each generating unit, an upstream water level (m), a downstream water level (m), and a spiral case pressure (Mpa) and a guide vane opening of each generating unit detected at 09:04 am, 15:00 pm, and 18:25 pm on August 18, 2018, and at 09:25 am, 13:50 pm on August 19, 2018.

In an embodiment, whether each hydropower station in the cascade hydropower station system is in a water conservation safe state is determined by using a method which includes:

for each hydropower station, acquiring the measured velocity increase rate and the measured turbine hydrostatic pressure from the water resource data of the hydropower station; and, comparing the measured velocity increase rate of the hydropower station with the theoretical velocity increase rate, and comparing the measured turbine hydrostatic pressure of the hydropower station with the theoretical turbine hydrostatic pressure.

If the measured velocity increase rate is less than the theoretical velocity increase rate, and the measured turbine hydrostatic pressure is less than the theoretical turbine hydrostatic pressure, it is determined that the hydropower station is in a water conservation safe state. If the measured velocity increase rate is greater than or equal to the theoretical velocity increase rate, or the measured turbine hydrostatic pressure is greater than or equal to the theoretical turbine hydrostatic pressure, it is determined that the hydropower station is not in a water conservation safe state.

It can be understood that devices in a hydropower plant, such as a hydropower generator, generate vibrations during operation. The amplitude and frequency of the vibrations are important indicators for evaluating the operating condition of the device. Excessive vibration may indicate wear, looseness, imbalance, or other potential issues with the device. In the present disclosure, whether the hydropower station is in a vibration safe state is determined mainly based on the actual operating power of the hydropower generator and the vibrations of components of the hydropower generator.

In an embodiment, whether each hydropower station in the cascade hydropower station system is in a vibration safe state is determined by using a method which includes the following four steps.

In a first step, for each hydropower station, a power (an actual operating power) of a hydropower generator is acquired from the water resource data of the hydropower station, and the power is denoted as a first power.

It should be noted that during the process that the power of the hydropower generator increases from zero to the maximum power (full-load power), large vibrations in various components of the hydropower generator may occur within certain power ranges (referred to as preset power ranges in the present disclosure) due to various reasons such as frequency resonance. To prevent damage to the hydropower generator caused by excessive vibrations or to avoid protection trips triggered by vibrations, the actual operating power of the hydropower generator at the current time instant (referred to as the first power in the present disclosure) is considered in the present disclosure.

In a second step, whether the first power falls within a preset power range is determined.

It should be noted that the preset power range can be obtained from a variable-power vibration measurements.

In a third step, in response to the first power falling within the preset power range, the first power is rapidly adjusted to a second power, where the second power falls outside the preset power range.

If it is determined that the first power falls within the preset power range, it indicates that vibration amplitudes in various components of the current hydropower generator is relatively large, which may easily cause damage to the hydropower generator. In this case, the operating power of the hydropower generator should be rapidly adjusted. For example, the first power can be rapidly adjusted to the second power that falls outside the preset power range, to prevent excessive vibration of the hydropower generator due to reasons such as frequency resonance.

In a fourth step, whether the hydropower station is in the vibration safe state is determined in response to the first power falling outside the preset power range.

If it is determined that the first power falls outside the preset power range, it may be determined that the hydropower generator does not experience excessive vibration due to frequency resonance or the like when operating at the first power. In this case, whether the hydropower station is in a vibration safe state is further determined.

In an embodiment, a process of determining whether the hydropower station is in a vibration safe state is described as follows.

First, for each hydropower station, a rotational speed of the hydropower generator and actual vibration values of different components of the hydropower generator are acquired from the water resource data of the hydropower station.

Then, after an actual rotational speed of the hydropower generator is determined, the actual vibration values of different components of the hydropower generator measured at this rotational speed are compared with corresponding allowable vibration values of these components.

For each hydropower station, if all the actual vibration values of different components of the hydropower generator are less than the corresponding allowable vibration values at the rotational speed of the hydropower generator at the current time instant, it is determined that the hydropower station is in the vibration safe state; and if the actual vibration value of a certain component of the hydropower generator is greater than or equal to the corresponding allowable vibration value of the component, it is determined that the hydropower station is not in a vibration safe state, and a vibration risk exists.

Table 9

| No. | Item | | Rated rotational speed (r/min) | | | |
|---|---|---|---|---|---|---|
| | | | < 100 | 100-250 | 250-375 | 371-750 |
| | | | Allowable vibration value (double amplitude) (mm) | | | |
| 1 | Vertical unit | Vertical vibration of thrust bearing bracket | 0.10 | 0.08 | 0.07 | 0.06 |
| 2 | | Horizontal vibration of guided bearing bracket | 0.14 | 0.12 | 0.10 | 0.07 |
| 3 | | Horizontal vibration of stator frame at core | 0.04 | 0.03 | 0.02 | 0.02 |
| 4 | Vertical vibration at various bearing locations of a horizontal unit | | 0.14 | 0.12 | 0.10 | 0.07 |

Table 9 is a table of allowable vibration values of various components of a hydropower generator according to the present disclosure. As shown in Table 9, the hydropower generator features different allowable vibration values at different rotational speeds. For example, when the rotational speed is less than 100 r/min, the vibration allowable value for a vertical vibration of a thrust bearing bracket in a vertical generating unit of the hydropower generator is 0.1mm. When the rotational speed is less than 100 r/min and the measured actual vibration value of the vertical vibration of the thrust bearing bracket is greater than 0.1 mm, it is considered that a vibration risk exists in the vertical generating unit of the hydropower generator.

When it is determined that the hydropower stations in the cascade hydropower station system are all in a water conservation safe state and a vibration safe state, that is, when it is determined that the hydropower stations are all in a safe operation state, steps of the subsequent embodiments of the present disclosure can be performed.

It can be understood that if it is determined that any hydropower station in the cascade hydropower station system is not in a safe operation state, the hydropower station in which water conservation safety issues or vibration safety risks exist is to be shut down for maintenance until the issues are resolved, and then power generation facilities in the hydropower station are reactivated. Then, the steps in the subsequent embodiments of the present disclosure are performed after it is verified that each hydropower station is in a safe operation state.

In step S603, in response to all hydropower stations being determined to be in a safe operation state, whether to perform water resource dispatching is determined based on the water resource data of the hydropower stations, a preset electricity price scheme, and target historical data.

It can be understood that for hydropower generation manufacturers, when the power generation equipment of the power plant can be safely operated, the water level of the reservoir corresponding to the power station is to be accurately adjusted. In this way, higher power generation revenues can be obtained to meet the electricity requirement of the power grid.

In an embodiment, firstly, based on the water resource data of respective hydropower stations and the preset electricity price scheme, the actual water consumption for power generation and actual power plant revenue of each hydropower station are determined as the current actual data of the hydropower station. Then, based on the difference between the current actual data and the target historical data, whether water resource dispatching is required is determined. The target historical data includes the average water consumption for power generation and the average power plant revenue of the month corresponding to the current time instant.

If the difference between the current actual data and the target historical data is too large and exceeds a preset difference threshold, it is determined that water resource dispatching is required. Otherwise, it is determined that water resource dispatching is not required. The specific value of the preset difference threshold is not limited in the present disclosure, and those skilled in the art can set the preset difference threshold according to actual needs.

In the subsequent embodiments of the present disclosure, a process of acquiring the current actual data are a process of acquiring the target historical data are described in detail.

In an embodiment, based on the water resource data of respective hydropower stations and the preset electricity price scheme, the actual water consumption for power generation and actual power plant revenue of each hydropower station are determined as the current actual data of the hydropower station. The above method includes the following steps.

In the first step, for each hydropower station, the actual power generation and actual water consumption for a target time period are acquired from the water resource data of the hydropower station. The target time period is a past period of time ending at the current time instant.

For example, the actual power generation and the actual water consumption in the past hour are acquired from the water resource data of the hydropower station A acquired at the current time instant. The past hour is the target time period.

The actual power generation and the actual water consumption can be obtained through a corresponding detection device. For example, the actual water consumption for the target time period can be measured by an ultrasonic flow tester.

In the second step, for each hydropower station, the actual water consumption for power generation for the target time period is acquired based on the actual power generation and the actual water consumption for the target time period.

For example, after the actual water consumption and the actual power generation of the hydropower station A in the last one hour are acquired, the actual water consumption is divided by the actual power generation and then is divided by the target time period to obtain the actual water consumption for power generation.

In the present disclosure, the actual water consumption for power generation reflects the capacity characteristics of a hydropower station in terms of the water resources required per unit of time and per unit of power generation. The actual water consumption for power generation is high-order abstract data, which can be compared in high-order with the specific heat index of thermal power stations and the wind resource utilization coefficient of wind power stations to determine the extent and performance of resource utilization at power supply nodes and reflect the specific function of the power station on resource energy consumption.

In the third step, for each hydropower station, the actual power plant revenue for the target time period is determined based on a segmented electricity price scheme corresponding to the target time period and an actual water level of the hydropower station.

In the present disclosure, the segmented electricity price scheme (referred to as electricity price scheme for short) is an electricity price scheme related to the month and reservoir water volume.

To facilitate understanding, taking the segmented electricity price scheme corresponding to the cascade hydropower station system including an upstream power station (also known as an upstream reservoir power station) and a downstream power station (also known as a downstream reservoir power station) as an example, the specific form of the segmented electricity price scheme is introduced.

(a) Upstream reservoir power station:

The upstream reservoir power station implements quarterly regulation, with electricity pricing based on different water levels across seasons.

From January to March, the water level ranges from 250m to 260m above sea level. If the water level of the upstream reservoir is above 255m, the on-grid electricity price is J-0.001/m. If the water level of the upstream reservoir is below 255m, the on-grid electricity price is J+0.001/m. The electricity pricing method for other water levels within the range is as follows. If the water level is higher than an upper limit, the price is calculated based on the upper limit, and if the water level is lower than the lower limit, the price is calculated based on the lower limit. In the present disclosure, J is a basic value of a preset on-grid electricity price.

From April to June, the water level ranges from 210m to 250m above sea level. If the water level of the upstream reservoir is above 230m, the on-grid electricity price is J-0.001/m. If the water level of the upstream reservoir is below 230m, the on-grid electricity price is J+0.001/m. The electricity pricing method for other water levels within the range is as follows. If the water level is higher than an upper limit, the price is calculated based on the upper limit, and if the water level is lower than a lower limit, the price is calculated based on the lower limit.

From July to September, the water level ranges from 250m to 260m above sea level. If the water level of the upstream reservoir is above 255m, the on-grid electricity price is J-0.001/m. If the water level of the upstream reservoir is below 255m, the on-grid electricity price is J+0.001/m. The electricity pricing method for other water levels within the range is as follows. If the water level is higher than an upper limit, the price is calculated based on the upper limit, and if the water level is lower than the lower limit, the price is calculated based on the lower limit.

From October to December, the water level ranges from 258m to 262m above sea level. If the water level of the upstream reservoir is above 260m, the on-grid electricity price is J-0.001/m. If the water level of the upstream reservoir is below 260m, the on-grid electricity price is J+0.001/m. The electricity pricing method for other water levels within the range is as follows. If the water level is higher than an upper limit, the price is calculated based on the upper limit, and if the water level is lower than the lower limit, the price is calculated based on the lower limit.

When the water level of the upstream reservoir is within a range of 262m to 265m and the water level of the downstream reservoir is within a range of 115m to 120m, the electricity price is 0.073 USD per kilowatt hour at full electricity price. When the water level of the upstream reservoir falls below a safe water level of 235m and the water level of the downstream reservoir falls below a safe water level of 100m, the power stations are shut down and are unable to generate electricity.

Table 10

| Month | Water | Median water | PR$_{actual}$ |
|---|---|---|---|
| | level | level | |
| January-March | 250-260 | 255 | 0.073∓0.001 |
| April-June | 210-250 | 230 | 0.073∓0.001 |
| July-September | 250-260 | 255 | 0.073∓0.001 |
| October-December | 258-262 | 260 | 0.073∓0.001 |
| | 262-265 | | 0.073 |

Table 10 is a table illustrating a relationship between the reservoir water level and the electricity price of an upstream hydropower station according to the present disclosure. Based on the content shown in Table 10, the upstream reservoir power station can directly determine price adjustments according to the water level of each quarter, to obtain the actual electricity price PR$_{actual}$ of the month corresponding to the current time instant.

In Table 10, the water level is represented by the letter L, both water level and median water level are measured in meters, and the unit of the actual electricity price PR$_{actual}$ is (USD/kWh). For the months of January to March, the water level falls within the range of 250m to 260m, and the median water level is 255m. Within this monthly range, if the water level L is less than the median water level of 255 meters, the value of PR$_{actual}$ is generated based on the full electricity price of 0.073 (USD/kWh) and a floating tariff of 0.001. In Table 10, for each month, when the water level L is greater than the median water level, PR$_{actual}$ is (0.073+0.001) USD/kWh, and when the water level L is less than the median water level, PR$_{actual}$ is (0.073-0.001) USD/kWh.

In the present disclosure, by analyzing the water resource data, it is found that the data of each quarter exhibits clustering characteristics. That is, the quarterly water level in Table 10 demonstrates segmented characteristics that reflect the hydrological and water level characteristics of hydropower stations. The benefits of water resource utilization can be maximized and a market-oriented analysis of hydropower water costs can be conducted by making better use of natural production factors (referred to as first-level indices in the present disclosure). Therefore, the solution employed in the present disclosure includes: determining an actual inflow water volume and the inflow water volume of the reservoir by comparing the median water level with a median value of historical water levels (which serve as one of data samples for deep learning), to determine a reasonable tariff for power generation.

It can be understood that during the analysis of historical water resource data or other data, if additional regularities are identified, these findings may further guide the water level dispatching strategy employed in the present disclosure. Such insights contribute to refining the underlying data-driven logic that drives the dispatching intelligent agent emphasized in the present disclosure, thereby minimizing errors that may arise from manually abstracting data or prescribing water resource dispatching schemes.

(b) Downstream reservoir power station:

The downstream reservoir implements day-ahead dispatching, regardless of season.

The water level ranges from 105m to 110m above sea level. If the water level of the downstream reservoir is above 107m, the on-grid tariff is J-0.001/m. If the water level of the downstream reservoir is below 107m; The electricity pricing method for other water levels within the range is as follows. If the water level is higher than an upper limit, the price is calculated based on the upper limit, and if the water level is lower than a lower limit, the price is calculated based on the lower limit.

Table 10 is a table illustrating a relationship between the reservoir water level and the tariff of a downstream hydropower station according to the present disclosure. Based on the content shown in Table 11, the downstream reservoir power station can directly determine price adjustments according to the water level of each quarter, to obtain the actual tariff $PR_{actual}$ of the month corresponding to the current time instant. In Table 11, the water level is represented by the letter L, both water level and median water level are measured in meters, and the unit of the actual tariff $PR_{actual}$ is (USD/kWh). In Table 11, when the water level L is greater than the median water level, $PR_{actual}$ is (0.073+0.001) USD/kWh, and when the water level L is less than the median water level, $PR_{actual}$ is (0.073-0.001) USD/kWh.

Table 11

| Water level | Median water level | $PR_{actual}$ |
|---|---|---|
| 105-110 | 107 | 0.073∓0.001 |

For each hydropower station in the cascade hydropower station system, after the segmented tariff scheme corresponding to the target time period and the actual water level of the hydropower station are obtained, the actual power plant revenue for the target time period is determined based on the following equations. Target equations are:

$$Q_1 = \left(0.073 \times \frac{\frac{900(\text{GWh})}{365(\text{day})}}{D(\text{quantity})} \times 95\%\right) \quad (2.1)$$

$$Q_2 = PR_{average} \times \sum_{i=1}^{D}(G_{iRated} \times H_i - F_{iJ} \times H_{iZ} - P_{actual}) \quad (2.2)$$

$$Q_3 = PR_{actual} \times P_{actual} \quad (2.3)$$

The meanings of letters in Equations (2.1), (2.2) and (2.3) are as follows.

Q1 represents the payment that the power grid should make to the hydropower station in the event of a grid failure that prevents the hydropower station from generating electricity normally (take-or-pay). Q2 represents an actual revenue corresponding to the potential electrical energy at the current time instant. Q3 represents an actual power generation revenue corresponding to the actual power generated at the current time instant. The sum of equation (2.1) and equation (2.3) represents an actual power plant revenue of the hydropower station. The sum of Equations (2.1), (2.2), and (2.3) represents the water asset of the hydropower plant.

D represents the quantity of hydropower generators included in the hydropower plant, and D is a positive integer greater than 1. $PR_{actual}$ represents an actual electricity price of the month corresponding to the current time instant. $PR_{average}$ represents an average electricity price within the target time period (that is, within a target pricing time period). i represents one of the hydropower generators in the hydropower station, i = 1, 2 ... D. $P_{actual}$ represents the power generation (actual electrical energy) within the target time period. $G_{iRated}$ represents a rated power of the i-th hydropower generator in the hydropower station. Hi represents the duration of continuous power generation at the rated power by the i-th hydropower generator in the hydropower station within the target pricing time period. $F_{iJ}$ represents a derated power of the i-th hydropower generator in the hydropower station. $H_{iz}$ represents the interruption duration of the i-th hydropower generator in the hydropower station during the high water level period.

The high water level refers to the water level at which hydropower stations can generate electricity. If it is stipulated in the contract that the hydropower station is allowed to generate electricity when the water level of the hydropower station is within the range of 240m to 265m, then the range of 240m to 265m is the high water level in the present disclosure.

Through deep learning of water level data, the changing patterns of seasonal water levels can be uncovered, enabling extended research. By analyzing the data characteristics of water level (or other quantities), general rules are derived. Through the target equations or the generalized electricity price scheme in the foregoing embodiments, correlation data such as power generation revenue of the power plant is obtained based on basic data such as electricity charge and water consumption for power generation. Then, the features and correlations of data such as a water level, an electricity charge, a power generation revenue of a power plant, a power generation cost of the power plant, water consumption for power generation are extracted, to establish a median model of the water level and the electricity price. Through deep learning and correlation analysis, a reasonable dispatching strategy for hydropower station revenue and a water resource asset is developed. The dispatching strategy is not limited to upstream quarterly power generation.

Table 12 is a data calculation table of a cascade hydropower station system according to the present disclosure. The cascade hydropower station system in Table 12 includes two hydropower stations which are an upstream hydropower station and a downstream hydropower station. Data in Table 12 is calculated based on water resource data of respective hydropower stations in the cascade hydropower station system at a current time instant, equation (2.1), equation (2.2) and equation (2.3).

Those skilled in the art can refer to the electricity charges for different quarters and water levels provided in the aforementioned embodiments, equation (2.1), equation (2.2) and equation (2.3), to calculate the power generation revenue for other months in 2023.

It should be noted that in Table 12, an upper dam refers to an upstream reservoir, a lower dam refers to a downstream reservoir, an upper powerhouse refers to a powerhouse of the hydropower station corresponding to the upstream reservoir, and a lower powerhouse refers to the powerhouse of the hydropower station corresponding to the downstream reservoir.

In Table 12, the unit for water volume is 10000 m$^3$, the unit for water level is m, the unit for flow rate is m$^3$/s, the unit for rainfall is mm, and the unit for electricity volume is 10000 kw.h. The meanings of the letters in Table 6 can be referred to the introduction of the aforementioned embodiments, and are not repeated herein.

Table 12

| | Parameter Name | January 2023 | April 2023 | July 2023 | October 2023 |
|---|---|---|---|---|---|
| Basic data of a cascade hydro-power station system | Monthly average reservoir water level of an upper dam | 254.76 | 245.62 | 252.69 | 261.83 |
| | Water inflow volume of the upper dam | 2894 | 3692 | 43929 | 37106 |
| | Flood discharge volume of the upper dam | 0 | 0 | 19236 | 5184 |
| | Water consumption for power generation by an upper powerhouse | 956 | 10574 | 16059 | 32606 |
| | Monthly average reservoir water level of a lower dam | 107.37 | 107.20 | 107.24 | 107.58 |
| | Water inflow volume of the lower dam | 1053 | 10748 | 40748 | 38504 |
| | Flood discharge volume of the lower dam | 0 | 0 | 21679 | 4731 |
| | Water consumption for power generation by a lower powerhouse | 1088 | 10823 | 19012 | 33831 |
| Upstream hydropower station | PR$_{average}$ | 0.073 | 0.073 | 0.073 | 0.073 |
| | PR$_{actual}$ | 0.073 | 0.057 | 0.075 | 0.071 |
| | Power generation | 349.91 | 3654.64 | 6033.26 | 12509.4 |
| | Water consumption for power generation | 956 | 10574 | 16059 | 32606 |
| | Q3 | 26 | 210 | 454 | 890 |
| | G$_{iRated}$ /Hi/ FiJ/ Hiz | 176/2/10/1 | 176/2/10/1 | 176/2/10/1 | 176/2/10/1 |
| | Downtime | 3 | 3 | 3 | 3 |
| | Average power generation revenue of a power plant | 282.12 | 466.21 | 710.89 | 1146.76 |
| | Average water consumption for power generation | 0.026 | 0.019 | 0.028 | 0.027 |

(continued)

| | Parameter Name | January 2023 | April 2023 | July 2023 | October 2023 |
|---|---|---|---|---|---|
| Downstream hydropower station | $PR_{average}$ | 0.073 | 0.073 | 0.073 | 0.073 |
| | $PR_{actual}$ | 0.0726 | 0.0728 | 0.0728 | 0.0724 |
| | Power generation | 254.01 | 2518.75 | 4298.18 | 7768.18 |
| | Water consumption for power generation | 956 | 10574 | 16059 | 32606 |
| | Q3 | 18 | 183 | 313 | 563 |
| | $G_{iRated}$/Hi/ FiJ/ Hiz | 176/2/10/1 | 176/2/10/1 | 176/2/10/1 | 176/2/10/1 |
| | Downtime | 2 | 2 | 2 | 2 |
| | Average power generation revenue of a power plant | 189.44 | 354.35 | 483.74 | 733.55 |
| | Average water consumption for power generation | 0.019 | 0.017 | 0.019 | 0.017 |

In an embodiment, the target historical data of each hydropower station is obtained as follows.

First, historical water consumptions for power generation and historical power plant revenues for respective months over past N years are acquired, where N is an integer greater than or equal to 1.

For example, the water inflow volume of a hydropower station A in a specific month, such as January 2024, is obtained, and the storage capacity of the hydropower station A in January 2024 is obtained. The water consumption of the hydropower station A in January 2024 is obtained by subtracting the storage capacity from the water inflow volume. The power generation and power generation duration of the hydropower station A in January 2024 are obtained. Then, the water consumption of the hydropower station A in January 2024 is divided by the power generation of the hydropower station A in January 2024, and then divided by the power generation duration of the hydropower station A in January 2024 to obtain the historical water consumption for power generation of the hydropower station A in January 2024.

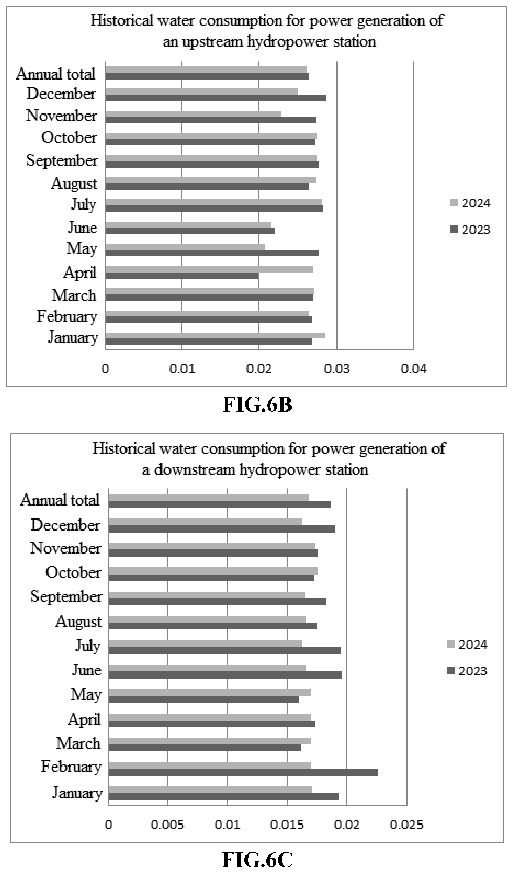

FIG. 6B is a schematic diagram of historical water consumptions for power generation corresponding to respective months at an upstream hydropower station according to an embodiment of the present disclosure. In FIG. 6B, the unit of the horizontal axis is cubic meters per kilowatt hour, and the unit of the vertical axis is month. FIG. 6B shows the historical water consumptions for power generation of an upstream hydropower station in months from January 2023 to December 2023 and from January 2024 to December 2024. The data for November 2024 and December 2024 includes historical water consumptions for power generation calculated based on historical data.

FIG. 6C is a schematic diagram of historical water consumptions for power generation corresponding to respective months at a downstream hydropower station according to an embodiment of the present disclosure. In FIG. 6C, the unit of the horizontal axis is cubic meters per kilowatt hour, and the unit of the vertical axis is month. FIG. 6C shows the historical water consumptions for power generation of a downstream hydropower station in months from January 2023 to December 2023 and from January 2024 to December 2024. The data for November 2024 and December 2024 includes historical water consumptions for power generation calculated based on historical data.

Based on the comparison of the water consumption for power generation in FIG. 6B and FIG. 6C, it can be clear that quarterly regulation is suitable for upstream, and day-ahead regulation (also called day-ahead dispatch) is suitable for downstream.

As described in the foregoing examples, the sum of equations (2.1) and (2.3) represents the actual power plant revenue of the hydropower station. Therefore, the historical power plant revenue can be obtained by substituting historical related data into equations (2.1) and (2.3).

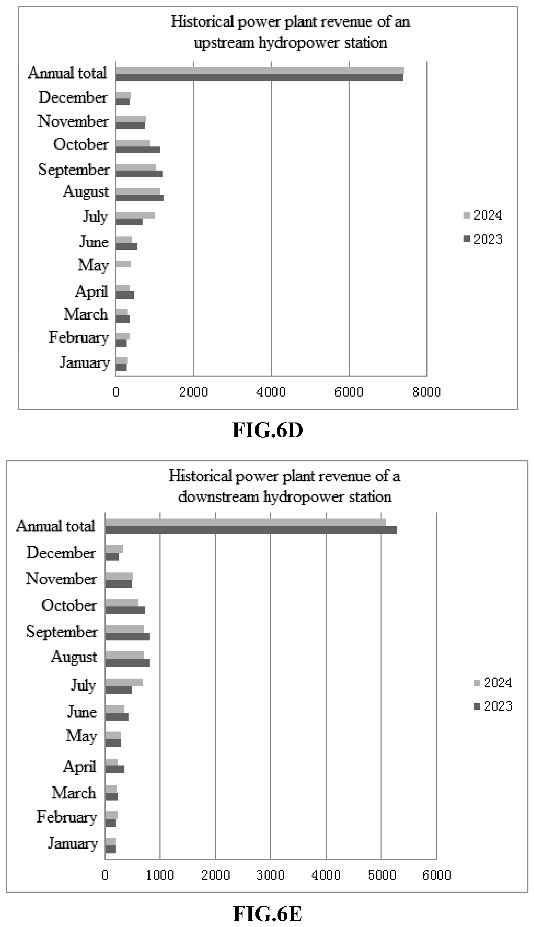

FIG. 6D is a schematic diagram of historical power plant revenues corresponding to respective months at an upstream hydropower station according to an embodiment of the present disclosure. In FIG. 6D, the unit of the horizontal axis is dollar, and the unit of the vertical axis is month. FIG. 6D shows the historical power plant revenues of the upstream hydropower station in months from January 2023 to December 2023 and from January 2024 to December 2024. The data for November 2024 and December 2024 includes historical power plant revenues calculated based on historical data.

FIG. 6E is a schematic diagram of historical power plant revenues corresponding to respective months at a downstream hydropower station according to an embodiment of the present disclosure. In FIG. 6E, the unit of the horizontal axis is dollar, and the unit of the vertical axis is month. FIG. 6E shows the historical power plant revenues of the downstream hydropower station in months from January 2023 to December 2023 and from January 2024 to December 2024. The data for November 2024 and December 2024 includes historical power plant revenues calculated based on historical data.

Further, water asset data of each power station for months is calculated. In the present disclosure, the water asset of each power plant refers to the sum of equation (2.1), equation (2.2), and equation (2.3).

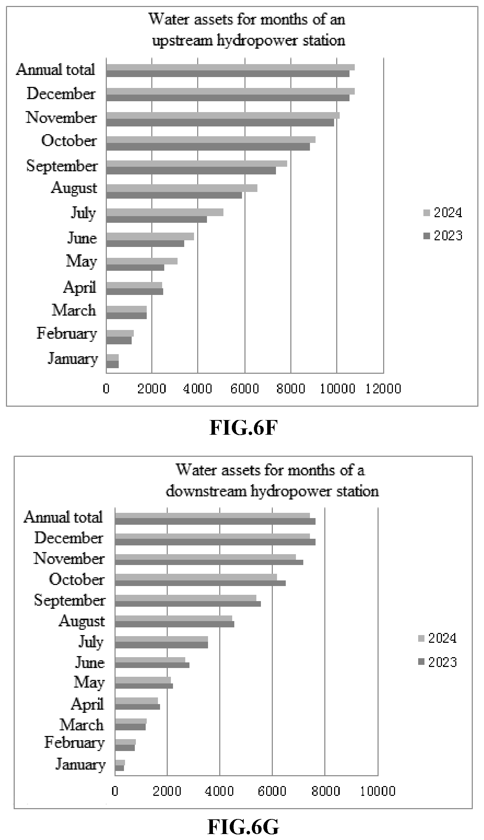

FIG. 6F is a schematic diagram of water assets corresponding to respective months at an upstream hydropower station according to an embodiment of the present disclosure. In FIG. 6F, the horizontal axis represents a quantity of the water assets with a unit of dollar, and the unit of the vertical axis is month. FIG. 6F shows historical water assets of the upstream hydropower station in months from January 2023 to December 2023 and from January 2024 to December 2024. The data for November 2024 and December 2024 are historical water assets calculated based on historical data.

FIG. 6G is a schematic diagram of water assets corresponding to respective months at a downstream hydropower station according to an embodiment of the present disclosure. In FIG. 6G, the horizontal axis represents a quantity of the water assets with a unit of dollar, and the unit of the vertical axis is month. FIG. 6G shows historical water assets of the downstream hydropower station in months from January 2023 to December 2023 and from January 2024 to December 2024. The data for November 2024 and December 2024 includes historical water assets calculated based on historical data.

To facilitate understanding, FIGs. 6B, 6C, 6D, 6E, 6F, and 6G in the present disclosure show historical water consumptions for power generation, historical power plant revenues, and historical water assets (revenues) for months of each hydropower station in the cascade hydropower station system including two hydropower stations (an upstream hydropower station and a downstream hydropower station) in total. Those skilled in the art can obtain historical water consumptions for power generation, historical power plant revenues, and historical water assets (revenues) of each hydropower station in other cascade hydropower station systems in respective months with reference to the method described in the foregoing embodiments.

Then, for each month, the historical power generation water consumption map corresponding to the month is obtained based on the N historical water consumptions for power generation corresponding to the month.

For example, for January, historical water consumptions for power generation in January 2010, January 2011, January 2012, and January 2024 can be obtained, to generate a diagram with the abscissa of the year and the ordinate of the historical water consumption for power generation as a historical power generation water consumption map corresponding to January.

Similarly, for February, the historical water consumptions for power generation in February 2010, February 2011, February 2012, and February 2024 can be obtained, to generate a diagram with the abscissa of the year and the ordinate of the historical water consumption for power generation as the historical power generation water consumption map corresponding to February.

For each month, based on the N historical power plant revenues corresponding to the month, the historical power plant revenue map corresponding to the month is obtained.

For example, for January, the historical power plant revenues in January 2010, January 2011, January 2012, and January 2024 can be obtained, to generate a diagram with the abscissa of the year and the ordinate of the historical power plant revenue as a historical power plant revenue map for January.

The historical power generation water consumption map represents the relationship between historical water consumption for power generation and time. The historical power plant revenue map represents the relationship between historical power plant revenue and time.

Finally, an average water consumption for power generation derived from the historical power generation water consumption map of the month corresponding to the current time instant and an average power plant revenue derived from the historical power plant revenue map of the month corresponding to the current time instant are determined as the target historical data.

The average water consumption for power generation refers to an average value of the historical water consumptions for power generation included in the historical power generation water consumption map. The average power plant revenue refers to an average of the historical power plant revenues included in the historical power plant revenue map.

After the current actual data and the target historical data are obtained, whether to perform water resource dispatching is determined based on the difference between the current actual data and the target historical data.

In an embodiment, whether the difference between the actual water consumption for power generation and the average water consumption for power generation is within a preset allowable difference value of the water consumption for power generation (first determination condition) is determined, and whether the difference between the actual power plant revenue and the average power plant revenue is within a preset allowable difference value of the power plant revenue (second determination condition) is determined.

If the first determination condition and the second determination condition are both satisfied, water resource dispatching is not required, and the process returns directly to step S601. If the above two determination conditions are not both satisfied, it is considered that water resource dispatching is required, and the process proceeds to step S604.

Further, the actual water asset of the hydropower station for the month corresponding to the current time instant (the sum of equation (2.1), equation (2.2), and equation (2.3)) is calculated, and the average water asset of the hydropower station for the month corresponding to the current time instant is obtained. Whether the difference between the actual water asset and the average water asset for the month corresponding to the current time instant is within a preset allowable difference value of water asset (third determination condition) is determined, to determine whether water resource dispatching is required to be performed.

That is, when the first determination condition, the second determination condition, and the third determination condition are all satisfied, it is determined that water resource dispatching is not required, and the process returns directly to step S601. Otherwise, it is considered that water resource dispatching is required, and the process proceeds to step S604.

It should be noted that in the present disclosure, the numerical values of the preset allowable difference value of the water consumption for power generation, the preset allowable difference value of power plant revenue, and the preset allowable difference value of the water asset are not limited, and those skilled in the art can limit the above numerical values according to requirements.

In step S604, in response to determining to perform the water resource dispatching, a water resource dispatching scheme is determined based on the water resource data of respective hydropower stations and a water resource dispatching model.

The water resource dispatching model is a model trained in advance and used to output the water resource dispatching scheme.

In an embodiment, the water resource dispatching model is trained by the following steps.

In the first step, training data is acquired.

The training data in the present disclosure includes sample water resource data obtained by each hydropower station in the cascade hydropower station system at a sample time instant, an electricity price scheme at the sample time instant, and a sample water resource dispatching scheme at the sample time instant.

It should be noted that the sample time instant in the present disclosure refers to any one of multiple time instants during the operation of the hydropower station under full operating conditions. In other words, the sample time instant may be a time instant of the hydropower station under normal operation conditions, and the data corresponding to the sample time instant may be the data corresponding to the time instant of the hydropower station under normal operation conditions. The sample time instant may alternatively be a time instant when the hydropower station performs a load rejection test, a water conservation test or a vibration test, and the data corresponding to the sample time instant is the data corresponding to the hydropower station under the above test conditions.

The sample water resource data includes a historical water consumption for power generation, a historical power plant revenue, and a historical average water asset. The sample water resource dispatching scheme includes day-ahead dispatching and seasonal dispatching.

It can be understood that the water resource dispatching for each hydropower station in the cascade hydropower station system is a complex process. At different time instants, the water resource dispatching scheme varies when the water level of the reservoir where each hydropower station is located, actual operation parameters of power generation facilities and the precipitation vary.

It can be understood that in the cascade hydropower station system, the storage capacity of the upstream hydropower station is greater than that of the downstream hydropower station, and the water volume regulation capacity of the upstream hydropower station is greater than that of the downstream hydropower station. Based on the above reasons, in the water resource dispatching scheme based on the training data provided herein, the upstream hydropower station employs a quarterly regulation manner (also called quarterly dispatching and quarterly adjustment), and the downstream hydropower station employs a day-ahead regulation manner (also called day-ahead dispatching and day-ahead adjustment).

Quarterly regulation refers to the practice of adjusting the storage capacity of a hydropower station to store a portion of the runoff during the wet season of a year for use during the dry season. This regulation manner enables the hydropower station to achieve effective redistribution of water resources within a year, especially in seasons when water resources are unevenly distributed. Quarterly regulation is used to store excess water in seasons when water is abundant, and release stored water in seasons when water is scarce to ensure stable operation and continuous power generation of the hydropower station.

Day-ahead dispatching refers to the redistribution of runoff within a 24-hour period. This regulation manner is mainly used to address short-term (such as within a day) variations in water resources and fluctuations in a power requirement. Through day-ahead dispatching, the hydropower station flexibly adjusts its power generation plans and water resource allocation based on real-time water resource conditions and power requirement, to ensure the stability and reliability of power supply.

Quarterly dispatching mainly focuses on the balanced distribution of water resources among seasons to achieve long-term stable operation and power generation benefits. Day-ahead regulation focuses on the dynamic balance of water resources and the power requirement in a short term to ensure the stability and reliability of power supply. Based on its storage capacity condition, water resource condition and power market requirement, the hydropower station comprehensively employs these two regulation manners to achieve the efficient utilization of water resources and the optimization of power supply.

The calculation of water assets is meaningful due to the day-ahead dispatching for downstream and the seasonal dispatching for upstream. The pursuit of the two is the balance between cost and economy. Downstream hydropower stations mainly focus on power generation, and upstream ones mainly focus on controlling the water level and water volume of the whole basin. As shown in FIGS. 6B and 6C, in the comparison of downstream day-ahead dispatching and upstream quarterly dispatching, the water consumption per kilowatt hour is 0.018 m3/kWh for day-ahead dispatching and 0.026 m3/kWh for quarterly dispatching. Day-ahead dispatching places emphasis on monthly profitability. It indicates that downstream power generation is efficient. Upstream quarterly dispatching emphasizes on the entire basin with consideration for power generation. The comparison of the cumulative monthly water assets between upstream and downstream hydropower stations reveals that upstream water assets are more detailed and extensive, further underscoring the importance of employing quarterly dispatching in upstream hydropower stations.

By virtue of abstraction and analysis of high-level features of data, particularly the research of water consumption for power generation and water assets, different dispatching strategies are implemented for upstream and downstream hydropower stations through data-driven intelligent agents using the two dispatching functions under the premise of ensuring the safety of intelligent hydropower stations through. This means ensuring that all operating conditions comply with requirements for load rejection, variable power vibration test and water conservation safety.

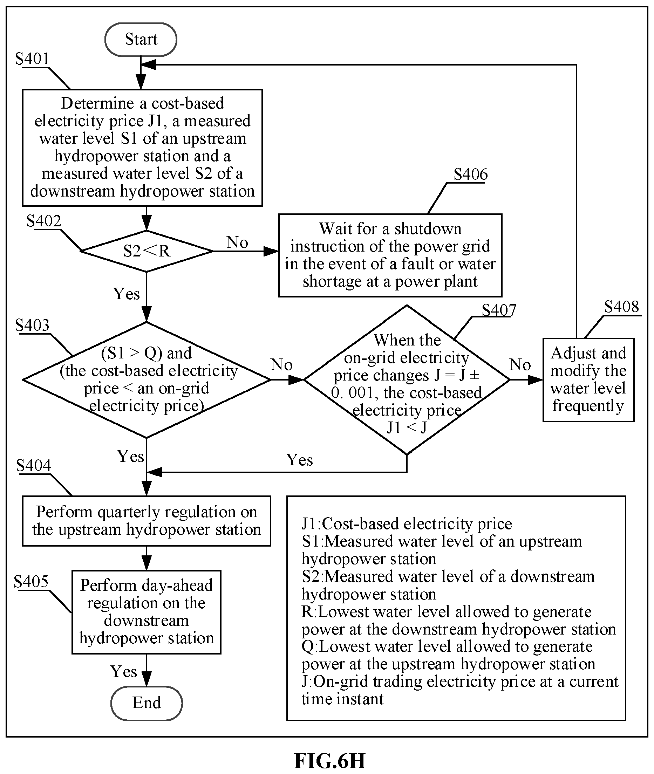

FIG. 6H is a schematic diagram of a solution for dispatching water resources of a cascade hydropower station system according to an embodiment of the present disclosure. The cascade hydropower station system includes an upstream hydropower station and a downstream hydropower station. The meanings of letters in FIG. 6H are as follows. J1 represents a cost-based electricity price. S1 represents the measured water level of the upstream hydropower station. S2 represents the measured water level of the downstream hydropower station. R represents the lowest water level allowed to generate electricity at the downstream hydropower station. Q represents the lowest water level allowed to generate electricity at the upstream hydropower station. J represents an on-grid trading electricity price at the current time instant, and is also the basic value of the preset on-grid electricity price mentioned in the foregoing embodiment.

Referring to FIG. 6H, the water resource dispatching scheme of the cascade hydropower station system includes: steps S401 to S408.

In step S401, the cost-based electricity price J1, the measured water level S1 of an upstream hydropower station and the measured water level S2 of a downstream hydropower station are determined.

In step S402, it is determined whether $S2 < R$.

Whether the measured water level of the downstream hydropower station is less than the lowest water level allowed to generate electricity at the downstream hydropower station is determined. If S2 is less than R, the process proceeds to step S403; otherwise, the process proceeds to step S406.

In step S403, it is determined whether $S1 > Q$ and the cost-based electricity price < the on-grid electricity price.

That is, whether the measured water level of the upstream hydropower station is greater than the lowest water level allowed to generate electricity by the upstream hydropower station is determined, and whether the cost-based electricity price is less than the on-grid electricity price (the on-grid trading electricity price at the current time instant) is determined. If yes, the process proceeds to step S404; Otherwise, the process proceeds to step S407.

In step S404, quarterly regulation is performed on the upstream hydropower station.

In step S405, day-ahead regulation is performed on the downstream hydropower station.

In step S406, wait for a shutdown instruction of the power grid in the event of a fault or water shortage at the power plant.

In step S407, when the on-grid electricity price changes $J = J \pm 0.001$, whether the cost-based electricity price J1 < J is determined.

If yes, the process proceeds to step S404; Otherwise, the process proceeds to step S408.

In step S408, the water level is adjusted and modified at high frequency.

It should be emphasized that the water resource dispatching scheme shown in FIG. 6H is merely presented for ease of understanding and represents one possible water resource dispatching scheme that might be employed during actual operations. For different cascade hydropower station systems, different time instants, and different water resource data across the hydropower stations, different targeted water resource dispatching schemes are employed.

In the second step, the training data is inputted into a deep learning model to obtain a predicted water resource dispatching scheme corresponding to the training data.

For example, a convolutional neural network, a long short-term memory network, a gated loop unit, and the like may be used as the deep learning model in the present disclosure.

The sample water resource data obtained by respective hydropower stations in the cascade hydropower station system at the sample time instant and the electricity price scheme at the sample time instant in the training data are inputted to the deep learning model, to output the predicted water resource dispatching scheme.

In the third step, the sample water resource dispatching scheme is determined as a ground truth, a back propagation error between a sample water resource deep dispatching scheme and the predicted water resource dispatching scheme is determined by using a loss function, and network parameters of the deep learning model are updated based on the back propagation error until the back propagation error reaches a set value, to obtain the trained water resource dispatching model.

In the present disclosure, the sample water resource dispatching scheme at the sample time instant in the training data is determined as the ground truth, and a difference between the sample water resource deep dispatching scheme and the predicted water resource dispatching scheme, that is, the back propagation error, is calculated by using the loss function. The back propagation error is determined as a loss value, and the network parameters such as weight and bias in the deep learning model are updated by using the loss value to reduce a future back propagation error. The training process stops until the latest back propagation error reaches the set value, to obtain the trained water resource dispatching model.

The loss function is the basis to guide a model to learn effectively. Different loss functions can be selected or designed based on different tasks, so that the model can gain valuable information from data. Several common loss functions are introduced below. Common loss functions include: a square loss function, a cross-entropy loss, a mean square error, and a mean absolute error. The specific form of the loss function is not limited in the present disclosure. The loss function and an optimization algorithm are two important components of machine learning. Based on the loss function, the optimization algorithm can be selected according to actual requirements, such as a gradient descent algorithm, which uses gradient information to find a suitable solution by constantly iteratively adjusting parameters.

In summary, a method for dispatching water resources of a cascade hydropower station system is provided according to the present disclosure. The method includes: acquiring water resource data of respective hydropower stations in the cascade hydropower station system at a current time instant; for each hydropower station, determining whether the hydropower station is in a safe operation state based on the water resource data of the hydropower station; in response to all hydropower stations being determined to be in a safe operation state, determining whether to perform water resource dispatching based on the water resource data of the hydropower stations, a preset electricity price scheme, and target historical data; and in response to determining to perform the water resource dispatching, determining a water resource dispatching scheme based on the water resource data of respective hydropower stations and a water resource dispatching model. In this way, by replacing manual experience with the water resource dispatching model, the optimal water resource dispatching scheme can be determined based on the water resource data of respective hydropower stations at different time instants while ensuring the safe operation of the hydropower stations, to maximize power generation revenue.

It should be noted that, in addition to the method for determining whether each hydropower station in the cascade hydropower station system is in a safe operation state mentioned in the foregoing embodiment of the present disclosure, load rejection test verification is to be performed on each reservoir in the cascade hydropower station system before the cascade hydropower station system is officially put into operation. In an emergency situation, whether operating parameters of each hydropower station in the cascade hydropower station system meet a preset index requirement for the load rejection test is determined. That is, whether the power generation equipment of each hydropower station in the cascade hydropower station system is capable of operating normally in an emergency situation is determined, to verify the dynamic performance of the equipment in extreme situations.

Load rejection occurs when the electricity load of the end user decreases (such as a failure of large electrical equipment or a large-area line failure and power failure). When the power generation of a hydropower generator of the power plant exceeds the amount delivered to the user, the power plant is required to reduce the power generation to a value suitable for the actual load. Alternatively, load rejection can also be caused by internal factors within the power plant, such as a sudden trip of a circuit breaker at a grid outlet, causing the load on the hydropower generator to suddenly drop to nearly zero. These actions taken by the power plant are referred to as load rejection.

After the load rejection occurs in a hydropower generating unit, the enormous residual energy causes the rotational speed of the generating unit to rise rapidly. A governor quickly closes the guide vanes, and after a period of adjustment, the generating unit operates under no-load conditions stably again. During the load rejection process, in addition to monitoring the maximum rotational speed rise and the maximum water hammer pressure rise, it is also essential to evaluate the performance indexes of the dynamic load rejection process.

The load rejection test indexes in the present disclosure include, but are not limited to: a rotational speed rise rate, rotational speed regulation time, a rotational speed overshoot, a water pressure rise rate of a spiral case, guide angle closing time, a vacuum level of a draft tube, and the like.

It can be understood that when the cascade hydropower station system conducts the load rejection test, the cascade hydropower station system is determined to pass the load rejection test only when every operating parameter during the test, such as the rotational speed rise rate, the rotational speed regulation time, the rotational speed overshoot, the water pressure rise rate of the spiral case, the guide angle closing time, and the vacuum level of the draft tube, meets the respective requirements for the load rejection test. Otherwise, the cascade hydropower station system is to be overhauled until the cascade hydropower station system meets the requirements of the load rejection indexes, and then steps S601 to S604 in the present disclosure are performed.

It should be emphasized that through the water conservation test, the vibration test and the load rejection test mentioned in the foregoing embodiments, a large amount of test data can be obtained, and the test data can be digitally processed to serve as a data resource. After a large amount of test data is obtained, that is, substantial data resources are obtained, various required deep learning models can be trained based on deep learning. After the water resource data at the current time instant is obtained, various prediction index data indicating the safety situation of the hydropower station can be obtained based on the trained deep learning model. The prediction index data includes but not limited to: rotational speed regulation time, guide angle closing time, and the like. By comparing the prediction index data with the actual index data specified in the contract, whether potential safety hazards exist in the hydropower station can be efficiently determined, and the safety situation of the hydropower station indicated by the water resource data at the current time instant can be estimated accurately. In this way, various risks that may occur in the power generation process of the hydropower station can be effectively avoided, enabling the hydropower generators of each hydropower station of the cascade hydropower station system to operate under safe operating conditions.

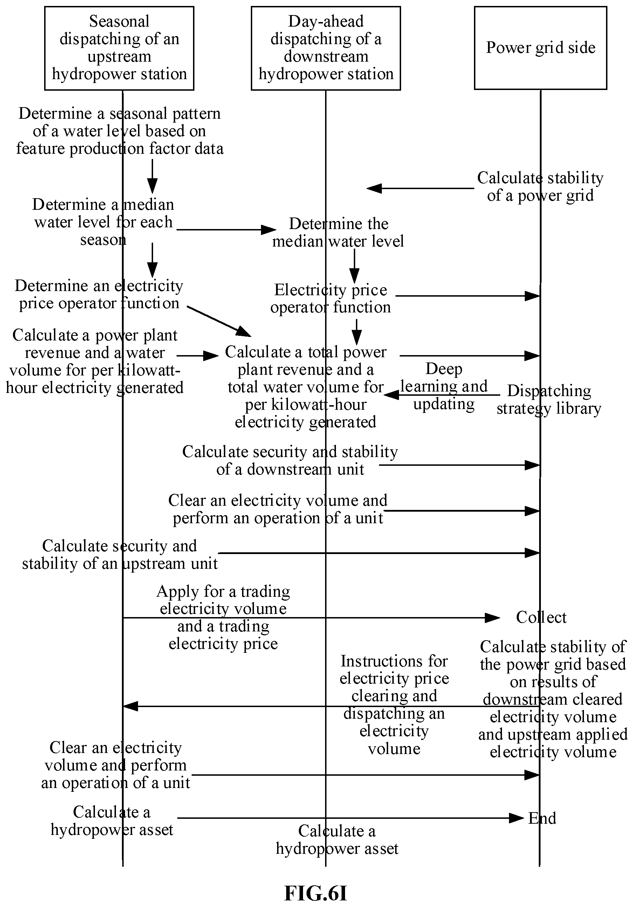

FIG. 6I is a schematic diagram of an interaction between a power plant and a power grid according to an embodiment of the present disclosure. FIG. 6I shows a schematic diagram of the interaction between the cascade hydropower station system and the power grid, where the cascade hydropower station system includes two hydropower stations in total which are an upstream hydropower station and a downstream hydropower station. In FIG. 6I, the power plant side includes the upstream hydropower station and the downstream hydropower station. The upstream hydropower station performs seasonal dispatching, and the downstream hydropower station performs day-ahead dispatching.

As shown in FIG. 6I, the upstream hydropower station analyzes feature production factor data to identify the seasonal variation patterns in the water level of the upstream hydropower station, and determines the median water level for each season. The upstream hydropower station calculates the electricity price operator function (i.e. $PR_{actual}$) based on the determined median water level, and informs the downstream hydropower station to determine the median water level of the downstream hydropower station. The upstream hydropower station calculates the power plant revenue (power generation revenue of the power plant) and water consumption per kilowatt-hour (water consumption for every kilowatt-hour) based on the water level and the electricity price operator function, and sends the calculated power plant revenue and water consumption per kilowatt-hour to the downstream hydropower station.

While determining the median water level and the electricity price operator function (i.e. $PR_{actual}$), the downstream hydropower station receives the power plant revenue and water consumption per kilowatt-hour sent by the upstream hydropower station, calculates a total power plant revenue and a total water consumption per kilowatt-hour of the cascade hydropower station system, and sends the calculated data to the power grid side.

It should be noted that the power grid side is required to calculate the grid stability in real time. Subsequent operations can be performed only when the power grid is stable, where the subsequent operations include: after receiving the total power plant revenue and the total water consumption per kilowatt-hour sent by the downstream hydropower station, performing deep learning and updating based on a dispatching strategy library, and feeding a dispatching strategy back to the downstream hydropower station.

Next, the downstream hydropower station sequentially conducts safety operation calculations for its generating units (i.e., calculating the safety and stability of downstream generating units), performs the clearing of electricity and unit actions, and transmits relevant information to the power grid side. The upstream hydropower station sequentially conducts safety and stability calculations for upstream generating units (that is, calculates the safety and stability of the upstream generating units), sends calculation results to the power grid side, and applies for a trading electricity volume and a trading electricity price from the power grid side. After receiving the above data, the power grid side records it. Based on the results of downstream cleared electricity volume and upstream applied electricity volume, the stability calculation for the power grid is performed again. Since the safety of the entire water area is affected by the upstream hydropower station, the value of the upstream applied electricity volume holds greater significance than the downstream cleared electricity volume during the process of performing the stability calculation for the power grid based on these results.

After determining that the power grid is stable, the power grid side sends a clearing electricity price instruction and an electricity volume dispatching instruction to the upstream hydropower station. The upstream hydropower station clears the electricity volume and performs unit generating actions. The upstream and downstream hydropower stations calculate hydropower assets separately.

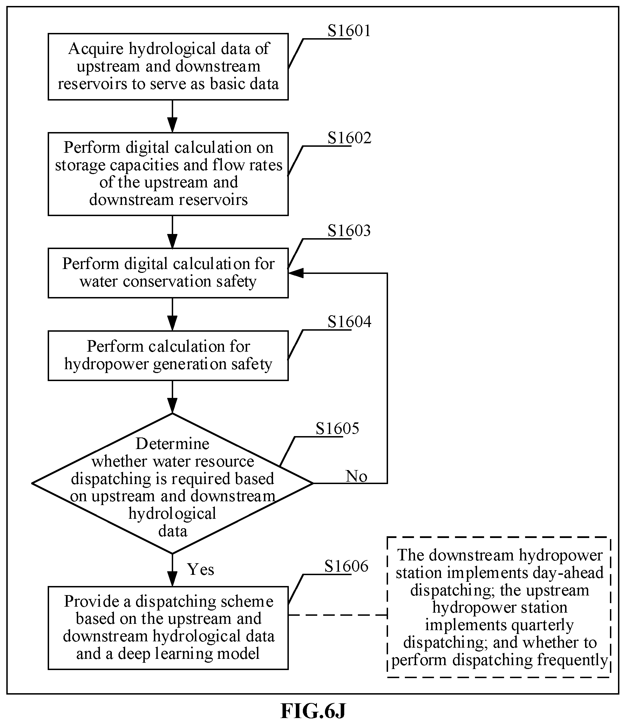

FIG. 6J is a flowchart of a method for dispatching water resources according to another embodiment of the present disclosure. As shown in FIG. 6J, another method for dispatching water resources according to the present disclosure includes: steps S1601 to S1606.

In step S1601, hydrological data of upstream and downstream reservoirs is acquired to serve as basic data.

In step S1602, digital calculation is performed on storage capacities and flow rates of the upstream and downstream reservoirs.

In step S1603, digital calculation for water conservation safety is performed.

In step S1604, calculation for hydropower generation safety is performed.

In step S1605, whether water resource dispatching is required is determined based on upstream and downstream hydrological data.

If water resource dispatching is required, the process proceeds to step S1606. If no water resource dispatching is performed, the process returns to step S1602.

In step S1606, a dispatching scheme is generated based on the upstream and downstream hydrological data and a deep learning model.

The dispatching scheme is the water resource dispatching scheme. In this scheme, the downstream hydropower station implements day-ahead dispatching, and the upstream hydropower station implements quarterly dispatching (also referred to as seasonal dispatching), and whether to perform dispatching of the water level in high frequency in the hydropower station is determined.

The contents of steps S1601 to S1606 can be referred to the introduction of relevant contents in steps S601 to S604 and steps S401 to S408, and are not repeated herein.

The fourth embodiment in the present disclosure well illustrates the application of the concepts of symbiosis, migration, and emergence in the digital power system constructed according to the technical solution of the present disclosure. When quarterly dispatching is selected, a large amount of data is first acquired, including water levels. Then, the patterns within the data are studied, and finally, these patterns are generalized into processes based on the median water level or the electricity price operator function. The function is integrated into an intelligent agent, enabling the specific function of market-oriented quarterly dispatching for a multi-functional intelligent agent in the hydropower sector. Similarly, other data features can be discovered and abstracted, so that the operators in the intelligent agent each possess their respective specific functions.

In this embodiment, based on the relationship between the water level and the electricity price, the relationship between natural production factors and power grid production control factors is established, enabling the electricity price to vary with changes in water level. In addition, the dispatching control of water level, such as seasonal dispatching, is data-driven, ensuring that the safety and economy of the reservoir are considered. The water level control and power generation are directly related to data. The seasonal features abstracted from water level features, namely the median water levels, are stabilized through electricity prices, allowing market-oriented power generation to vary with changes in natural production factors, in line with natural and economic laws.

In this embodiment, all operating conditions are demonstrated through testing and operation, and then stored as data samples for continuous comparison. This represents a method for training data based on data assets, with water resources serving as the data assets. The electricity generation costs are determined by historical data, by comparing hydropower electricity charges corresponding to different water levels. Safety is determined based on historical operation and testing. Power data from tests are used as samples to depict all operating conditions, ensuring that the safety of conditions falling within the sample range is guaranteed. With regular equipment inspections, the safety of the equipment is ensured. Additionally, system safety is guaranteed through tests such as water conservation measurements, variable-power vibration measurements, and load rejection tests.

Fifth embodiment

In the fifth embodiment, the electrical function requirement for enabling dispatching control of the power grid side over the power plant side is dispatching on the power plant by the power grid in a power system with large unit capacity relative to small grid capacity, the functional operator is a dispatching operator for large unit capacity relative to small grid capacity, and the dispatching operator for large unit capacity relative to small grid capacity is configured to achieve dispatching on the power plant by the power grid in the power system with large unit capacity relative to small grid capacity. In the fifth embodiment, a process of constructing an intelligent agent based on the dispatching operator for large unit capacity relative to small grid capacity in the digital power system is introduced.

Currently, the structure of the power system with large unit capacity relative to small grid capacity may lead to instability, particularly frequency instability, when the power grid faces large disturbances. The ability of the power grid to resist large disturbances is weak. Once events such as tripping of a large generating unit or sudden changes in a large load, regional load fluctuations, unit failures, or unit voltage collapses occur, substantial fluctuations in the frequency and voltage of the power grid may be incurred, potentially even leading to grid collapse. In some cases, these issues may result in regional voltage collapses, endangering system security, causing system oscillations, and jeopardizing the safety of the large generating unit. Currently, for the power system with large unit capacity relative to small grid capacity, a lack of dispatching solutions ensuring the security and stability of the power system exists.

To address the above issues, the inventor proposes that a digital power system based on a multifunctional intelligent agent utilizes the dispatching operator for large unit capacity relative to small grid capacity to implement a power grid dispatching method in a power system with large unit capacity relative to small grid capacity. In case of large unit capacity relative to small grid capacity, the impact of power generation source points on the power grid cannot be ignored.

Different types of source points exhibit different features, and thus a multi-round voltage adjustment scheme and a multi-round frequency adjustment scheme are designed. For the power system with large unit capacity relative to small grid capacity, when dispatching of the power grid is performed, multi-round voltage regulation, multi-round frequency regulation and power regulation are used as three regulation "grippers". The pre-configured emergency reserve capacity provides capacity support for voltage adjustment and frequency adjustment under large unit capacity - small grid capacity operating conditions. In addition, a frequency dynamic characteristic index of an entire grid is used as a stability target, and an output curve of a generating unit is generated based on a predicted load of the entire grid and generating unit features of respective source points, to dispatch future output power of the generating unit. Through multi-round adjustments involving voltage, frequency, and power, the safety and stability of the power system under large unit capacity - small grid capacity conditions are effectively ensured. By implementing the technical solution of the present disclosure, the stability and reliability of power supply in countries having power systems with large unit capacity relative to small grid capacity can be improved, reducing the incidence of grid collapses caused by events such as tripping of large generating units or sudden changes in large loads.

FIG. 7A is a schematic diagram of an application scenario of a power grid dispatching method in a power system with large unit capacity relative to small grid capacity according to an embodiment of the present disclosure. As shown in FIG. 7A, in practical applications, source points of various power generation types (such as photovoltaic power, thermal power, wind power, nuclear power, hydropower) may all communicate with and transmit power to the power grid side. These different types of source points can be collectively referred to as the power plant side. In an embodiment of the present disclosure, the power plant side reports its data to the power grid side to provide timely feedback, and the power grid side conducts real-time dispatching on the power plant side, such as dispatching in terms of voltage, frequency, power, and the like. As illustrated in FIG. 7A, in actual power production processes, collaborative dispatching is conducted on the power grid side and the power plant side, to achieve optimized and stable power supply and maintain cost demands for both sides.

In an actual scenario, the configuration of the power plant side is not limited to the several types of source points shown in FIG. 7A, that is, FIG. 7A is not used as a limitation on the type of source points in the scenario of the power grid dispatching method in the power system with large unit capacity relative to small grid capacity in this solution. In addition, based on differences in power development level, basic power infrastructure, and abundance of natural resources across various countries, the power supply structure of power systems in some countries may include only some of the types of source points shown in FIG. 7A. For example, some countries possess only two types of power supply structures which are nuclear power and thermal power, while some countries rely on photovoltaic power and hydropower. The power grid dispatching method in the power system with large unit capacity relative to small grid capacity described in the technical solution of the present disclosure is introduced by taking a power system with source points of the types of nuclear power, photovoltaic power, hydropower and thermal power as an example. In scenarios of other power supply structures, dispatching of large unit capacity - small grid capacity operating conditions can also be achieved according to the technical concept introduced in the technical solution of the present disclosure, to ensure the safety and stability of operation of the power system.

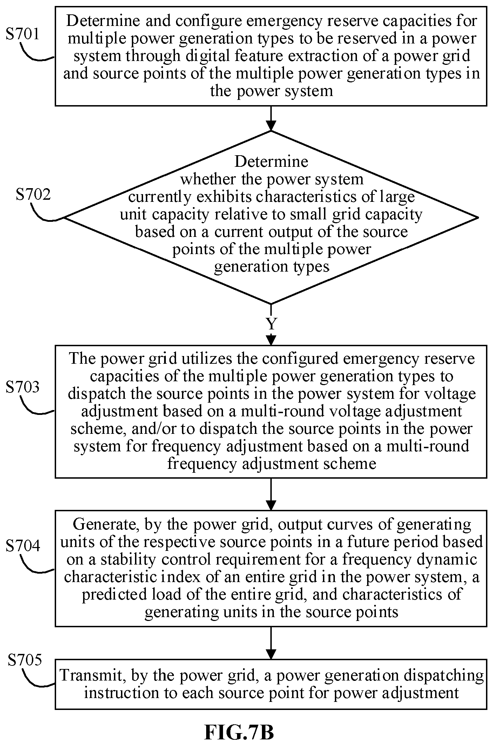

Reference is made to FIG. 7B, which is an example flowchart of a power dispatching method in a power system with large unit capacity relative to small grid capacity according to an embodiment of the present disclosure. Hereinafter, the method is described in detail. Referring to FIG. 7B, the power grid dispatching method in a power system with large unit capacity relative to small grid capacity according to the present disclosure includes: steps S701 to S705.

In step S701, emergency reserve capacities for multiple power generation types to be reserved in a power system are determined and configured based on digital feature extraction of a power grid and source points of the multiple power generation types in the power system.

In an embodiment of the present disclosure, to implement dispatching for a power system with large unit capacity relative to small grid capacity, reserve capacity is prepared for adjusting the dispatching in advance. In the present disclosure, the prepared reserve capacity is referred to as an emergency reserve capacity. In a specific implementation, production factor data of the power grid and the source points of the multiple power generation types is collected or received firstly, and digital feature extraction is performed. The production factor data provided by the source points is feature production factor data, and the production factor data of the power grid is control production factor data.

A feature production factor set and a control production factor set are determined in advance in the technical solution of the present disclosure. The feature production factor set includes feature production factors in multiple levels, such as a first-level feature production factor, a second-level feature production factor, and a third-level feature production factor corresponding to each of different power generation types. Several first-level feature production factors are illustratively introduced below in combination with different power generation types. Taking photovoltaic power generation as an example, the first-level feature production factors may include: photovoltaic illuminance. Taking hydropower generation as an example, the first-level feature production factors may include: precipitation (incoming water), and the like. Taking thermal power generation as an example, the first-level feature production factors may include: lower heating value of coal, coal consumption, heat consumption, and the like. Taking wind power generation as an example, the first-level feature production factors may include: wind speed, and the like.

For a thermal power plant, a single system may be a boiler system, an electrical system, and the like. For a hydropower plant, the single system may be a turbine system, a regulation system, a butterfly valve layer system, and the like. For a photovoltaic power plant, the single system may be a photovoltaic panel area, a substation area, and the like. In addition, these different types of power plants share a common power transmission and transformation system. Accordingly, the second-level feature production factors may be production factors reflecting a single system, such as boiler efficiency and turbine efficiency. The third-level feature production factors may be production factors that reflect the overall situation of multiple systems, such as photovoltaic efficiency, hydropower efficiency, thermal power unit efficiency, power plant thermal efficiency (specific heat index). As can be seen from FIG. 7B, a delving level of data features increases step by step from the first-level feature production factors to the second-level feature production factors and then to the third-level feature production factors, to exhibit a progressive hierarchy. It can be seen that in the embodiment of the present disclosure, based on a division architecture of the feature production factors in the feature production factor set, data of natural features, features of a single system, and features of a plant system can be collaboratively extracted, and digital power analysis can be achieved based on features in multiple levels.

The control production factor set includes control production factors in multiple aspects. In an embodiment of the present disclosure, for example, the control production factors include, but are not limited to, the following six aspects of control production factors: (1) electricity price; (2) inertia and frequency; (3) active power and reactive power; (4) electricity carbon emission; (5) security and stability; (6) grid synchronization and separation.

In the embodiment of the present disclosure, the emergency reserve capacities for multiple power generation types to be reserved in a power system are determined and configured based on digital feature extraction of the power grid and the source points of the multiple power generation types in the power system. As an example, through digital feature extraction of the power grid and the source points of various power generation types, capability levels of various types of source points in adjusting the voltage stability and the frequency stability of the power system, and frequency dynamic characteristics of the source points during different load periods (such as different load ramp-up and ramp-down periods) can be acquired. Based on this, the power system can calculate which type of source point should be configured with a larger emergency reserve capacity and which type of source point should be configured with a lower emergency reserve capacity.

As an example, for source points with large system inertia (e.g. thermal power plants), the emergency reserve capacity of 50% is configured for thermal power spinning reserve. In addition, an emergency reserve capacity for photovoltaic power is configured to increase or decrease a photovoltaic reactive power.

In step S702, whether the power system exhibits characteristics of large unit capacity relative to small grid capacity currently is determined based on current outputs of the source points of the multiple power generation types, and in response to determining that the power system exhibits characteristics of large unit capacity relative to small grid capacity currently, the process proceeds to step S703.

In an embodiment of the present disclosure, a method for determining whether a power system exhibits characteristics of large unit capacity relative to small grid capacity is provided. The method includes: determining that the power system exhibits characteristics of large unit capacity relative to small grid capacity in response to a sum of the outputs of two generating units in a source point of any power generation type exceeds the total capacity of the power system by 15%. In this method, based on the proportion of the capacity of multiple generating units relative to the total capacity of the entire power system, whether the power system exhibits characteristics of large unit capacity relative to small grid capacity is evaluated. Compared with evaluation based on the capacity of a single generating unit, this method offers higher dynamic recognition capability. It should be noted that the above threshold value of 15% is merely an example. In a specific implementation, other threshold values, such as 16%, 18%, may be set based on the strictness or sensitivity of requirements for large unit capacity - small grid capacity feature recognition, which is not limited herein.

In step S703, the power grid utilizes the configured emergency reserve capacities of the multiple power generation types to dispatch source points in the power system for performing voltage adjustments based on a multi-round voltage adjustment scheme, and/or to dispatch the source points in the power system for frequency adjustments based on a multi-round frequency adjustment scheme.

In this step, it is proposed that the configured emergency reserve capacities can be utilized for voltage adjustment and/or frequency adjustment. Generally, considering the difficulty of adjustment, the power grid prioritizes voltage adjustment. If an expected result is not achieved after voltage adjustment, the power grid can further proceed with frequency adjustment. If the expected result is achieved through voltage adjustment alone, frequency adjustment may not be necessary. In addition, in some possible implementation scenarios, voltage adjustment and frequency adjustment may be in a non-sequential manner. For example, the power grid synchronizes voltage adjustment and frequency adjustment to the source points. In the embodiment of the present disclosure, descriptions are made with an example that voltage adjustment is performed first and frequency adjustment is performed later.

To facilitate understanding, a multi-round voltage adjustment scheme and a multi-round frequency adjustment scheme involved in the present disclosure are introduced and described in detail below.

For the multi-round voltage adjustment scheme and the multi-round frequency adjustment scheme, a specific voltage adjustment manner and a frequency adjustment manner for a single source point can be uploaded by the source points to the power grid. The power grid then aggregates these manners and incorporates them into the multi-round voltage adjustment scheme and the multi-round frequency adjustment scheme.

The multi-round voltage adjustment scheme includes: multi-round voltage adjustment manners, a multi-round voltage adjustment range and multi-round voltage adjustment priority information for the multiple power generation types. In the present disclosure, multiple rounds of voltage adjustments specifically mean that the voltage is gradually adjusted for source points of different power generation types in rounds such as a first round, a second round, and a third round.

In an example, the multi-round voltage adjustment range includes: photovoltaic power, hydropower, nuclear power, thermal power, and energy storage, and the multi-round voltage adjustment priority information includes: photovoltaic power > hydropower > nuclear power > thermal power > energy storage. That is, photovoltaic power is assigned the highest priority in multiple rounds of voltage adjustment, which is due to the relatively low cost of photovoltaic adjustments. Photovoltaic power supports the reactive power control of the power grid to avoid voltage drops almost at no cost. This is a significant advantage of photovoltaic source points in voltage adjustment. Multiple rounds of adjustment for voltage include: four basic rounds of voltage adjustment corresponding to photovoltaic power, hydropower, nuclear power, and thermal power, and one emergency round of voltage adjustment corresponding to a fault condition. Based on the multi-round voltage adjustment priority information introduced above, among the multiple rounds of voltage adjustment, photovoltaic adjustment among the four basic rounds serves as the first basic round, the second basic round is hydropower adjustment, the third basic round is nuclear power adjustment, and the fourth basic round is thermal power adjustment. If the expected result is not achieved after the voltage adjustment for thermal power, it is determined that an emergency occurs and the emergency round requires to be activated, to cut off the load or activate an energy storage system.

The multi-round voltage adjustment manners include: the operating voltage and delay for the first basic round, the operating voltage step difference and delay of other basic rounds, and the operating voltage and delay of the emergency round. As an example, the operating voltage for the first basic round is 0.84pu, and the delay is 15s to 20s. The operating voltage step difference of other basic rounds (i.e. the second round, the third round and the fourth basic rounds) is 0.01pu, and the delay is 0.2s. The operating voltage of the emergency round is 0.8pu, and the delay is 0.1s. The delay of the first basic round is long, because in a power system with a large proportion of photovoltaic power, the input of reactive power takes a certain amount of time. Based on actual requirements and the proportion and configuration of the power supply structure, the delay can be adaptively set, and the operating voltage can also be set according to the requirements.

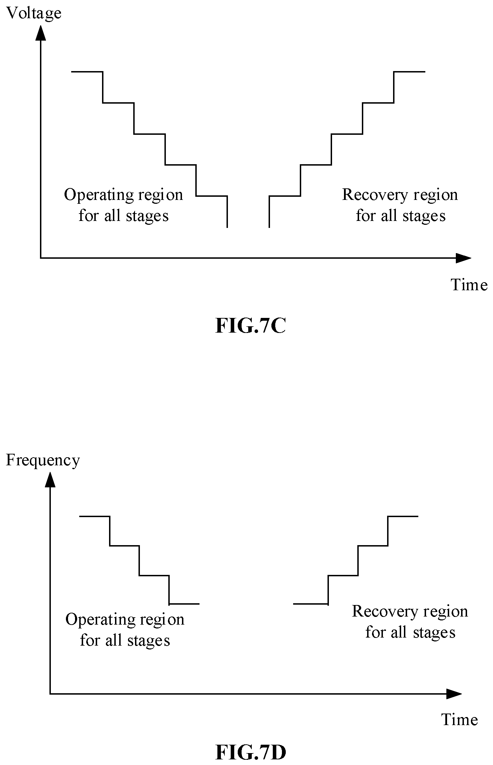

FIG. 7C is a schematic diagram of multi rounds of voltage adjustment according to an embodiment of the present disclosure. FIG. 7C shows operating regions and recovery regions for respective rounds among the multiple rounds of voltage adjustment. Based on the multi-round voltage adjustment manners introduced in the above example, in an embodiment of the present disclosure, the performing voltage adjustment by using the configured emergency reserve capacities of the multiple power generation types based on the multi-round voltage adjustment scheme includes the following processes.

(1) When the voltage of the power system drops to 0.84pu, the first basic round of voltage adjustment corresponding to photovoltaic power is initiated and lasts for 15s to 20s. During the first basic round of voltage adjustment, a portion of the emergency reserve capacity for photovoltaic power is inputted into the power grid. If the voltage recovers to above 0.84pu after the first basic round of voltage adjustment, it is considered that the expected result is achieved and this round ends.

(2) If a voltage adjustment result of the first basic round fails to meet expectations, when the voltage of the power system drops to 0.83pu, the second basic round of voltage adjustment corresponding to hydropower is initiated and lasts for 0.2s. During the second basic round of voltage adjustment, a portion of the emergency reserve capacity for hydropower is inputted into the power grid. If the voltage recovers to above 0.83pu after the second basic round of voltage adjustment, it is considered that the expected result of this round is achieved, and the previous round is returned to.

(3) If the voltage adjustment result of the second basic round fails to meet expectations, when the voltage of the power system drops to 0.82pu, the third basic round of voltage adjustment corresponding to nuclear power is initiated and lasts for 0.2s. During the third basic round of voltage adjustment, a portion of the emergency reserve capacity for nuclear power is inputted into the power grid. If the voltage recovers to above 0.82pu after the third basic round of voltage adjustment, it is considered that the expected result of this round is achieved, and the previous round is returned to.

(4) If the voltage adjustment result of the third basic round fails to meet expectations, when the voltage of the power system drops to 0.81pu, the fourth basic round of voltage adjustment corresponding to thermal power is initiated and lasts for 0.2s. During the fourth basic round of voltage adjustment, a portion of the emergency reserve capacity for thermal power is inputted into the power grid. If the voltage recovers to above 0.81pu after the fourth basic round of voltage adjustment, it is considered that the expected result of this round is achieved, and the previous round is returned to.

(5) If the voltage adjustment result of the fourth basic round fails to meet expectations, when it is detected that the voltage of the power system drops to 0.8pu, the emergency round of voltage adjustment is initiated, to cut off a load or activate an energy storage system. During the emergency round of voltage adjustment, all or part of the remaining emergency reserve capacities of various power generation types are inputted into the power grid. If the voltage recovers to above 0.8pu after the emergency round of voltage adjustment, it is considered that the expected result of this round is achieved, and the previous round is returned to.

When the emergency round is initiated, a proper portion of the load is cut off, to adjust the imbalance that the load exceeds the power generation of the source points in the power system to restore equilibrium. Two methods can be used. One is to gradually cut off the load based on the importance (prioritize cutting off the load with lower importance), and the other is to activate the energy storage system to increase power input from sources except the existing source points, thereby ensuring the stability and balance of the power system.

Based on the above introduction, the operating voltage that triggers the first basic round of voltage adjustment is 0.84pu, the operating voltage that triggers the second basic round of voltage adjustment is 0.83pu, the operating voltage that triggers the third basic round of voltage adjustment is 0.82pu, the operating voltage that triggers the fourth basic round of voltage adjustment is 0.81pu, and the operating voltage that triggers the emergency round of voltage adjustment is 0.8pu. As shown in FIG. 7C, when the adjusted voltage recovers to a corresponding value, a protection operation is deactivated and the multiple rounds of voltage adjustment are gradually deactivated.

The multi-round frequency adjustment scheme includes: multi-round frequency adjustment manners for the multiple power generation types, a multi-round frequency adjustment range and multi-round frequency adjustment priority information. In the present disclosure, multiple rounds of frequency adjustment specifically mean that the frequency is gradually adjusted for source points of different power generation types in rounds such as a first round, a second round, and a third round.

In an example, the multi-round frequency adjustment range includes: thermal power, hydropower, nuclear power, and energy storage. The multi-round frequency adjustment priority information includes: thermal power > hydropower > nuclear power > energy storage. That is, thermal power is assigned the highest priority among multiple rounds of frequency adjustment. Multiple rounds of frequency adjustment include: three basic rounds of frequency adjustment corresponding to thermal power, hydropower, and nuclear power, and one emergency round of frequency adjustment corresponding to a fault condition. Based on the multi-round frequency adjustment priority information introduced above, among the multiple rounds of frequency adjustment, thermal power adjustment among the three basic rounds serves as the first basic round, the second basic round is hydropower adjustment, and the third basic round is nuclear power adjustment. If the expected result is not achieved after the voltage adjustment for nuclear power, it is determined that an emergency occurs and the emergency round requires to be activated, to cut off a load or activate an energy storage system.

The multi-round frequency adjustment manners include: an operating frequency and a delay for the first basic round, an operating frequency step difference and a delay for other basic rounds, and the operating frequency and delay of the emergency round. As an example, in the first basic round, the operating frequency is 49.8Hz, and the delay is 0.2s. In other basic rounds (i.e. the second basic round and the third basic round), the operating frequency step difference is 0.2Hz, and the delay is 0.2s. In the emergency round, the operating frequency is 49.2Hz, and the delay is 0.1s. Based on actual requirements and the proportion and configuration of the power supply structure, the delay can be adaptively set, and the operating frequency can also be set according to the requirements.

FIG. 7D is a schematic diagram of multi rounds of frequency adjustment according to an embodiment of the present disclosure. FIG. 7D shows operating regions and recovery regions for respective rounds among the multiple rounds of frequency adjustment. Based on the multi-round frequency adjustment manners introduced in the above example, in an embodiment of the present disclosure, the performing frequency adjustment by using the configured emergency reserve capacities of the multiple power generation types based on the multi-round frequency adjustment scheme includes the following processes.

(1) When the frequency of the power system drops to 49.8Hz, the first basic round of frequency adjustment corresponding to thermal power is activated and lasts for 0.2s. During the first basic round of frequency adjustment, a portion of the emergency reserve capacity for thermal power is inputted into the power grid. If the frequency recovers to above 49.8Hz after the first basic round of frequency adjustment, it is considered that the expected result is achieved and this round ends.

(2) If a frequency adjustment result of the first basic round fails to meet expectations, when the frequency of the power system drops to 49.6Hz, the second basic round of frequency adjustment corresponding to hydropower is initiated and lasts for 0.2s. During the second basic round of frequency adjustment, a portion of the emergency reserve capacity for hydropower is inputted into the power grid. If the frequency recovers to above 49.6Hz after the second basic round of frequency adjustment, it is considered that the expected result of this round is achieved, and the previous round is returned to.

(3) If the frequency adjustment result of the second basic round fails to meet expectations, when the frequency of the power system drops to 49.4Hz, the third basic round of frequency adjustment corresponding to nuclear power is initiated and lasts for 0.2s. During the third basic round of frequency adjustment, a portion of the emergency reserve capacity for nuclear power is inputted into the power grid. If the frequency recovers to above 49.4Hz after the third basic round of frequency adjustment, it is considered that the expected result of this round is achieved, and the previous round is returned to.

(4) If the frequency adjustment result of the third basic round fails to meet expectations, when the frequency of the power system drops to 49.2Hz, the emergency round of frequency adjustment is initiated, to cut off a load or activate an energy storage system. During the emergency round of frequency adjustment, all or part of the remaining emergency reserve capacities of various power generation types are inputted into the power grid.

Based on the above introduction, the operating frequency that triggers the first basic round of frequency adjustment is 49.8Hz, the operating frequency that triggers the second basic round of frequency adjustment is 49.6Hz, the operating frequency that triggers the third basic round of frequency adjustment is 49.4Hz, and the operating frequency that triggers the emergency round of frequency adjustment is 49.2Hz. As shown in FIG. 7D, when the adjusted frequency recovers to a respective value, a protection operation is deactivated and the respective rounds of frequency adjustment are gradually deactivated. It should be noted that both the operating frequency and the operating voltage in the embodiments of the present disclosure can be determined by learning from historical data. In addition, based on the variations across different regions and networks, the operating frequency and operating voltage can be adaptively set according to regions, networks and requirements. The operating frequency and the operating voltage for each round in the above embodiments are illustrative, and are not considered to be limitations to the protection scope and specific implementation.

Through voltage adjustment and/or frequency adjustment, multi-round comprehensive dispatching is performed by the power grid on various types of source points in a power system with large unit capacity relative to small grid capacity, which is beneficial to improving the anti-disturbance ability of the power system with large unit capacity relative to small grid capacity. Effective solutions are provided to ensure the safety and stability of the power system with large unit capacity relative to small grid capacity. Further, in an embodiment of the present disclosure, the output curve of each generating unit is generated based on the stability control requirement for the frequency dynamic characteristic index of the entire grid, to dispatch the generating unit to generate power in a future period according to the output curve, which is described in detail in steps S704 to S705.

In step S704, output curves of generating units of the respective source points in a future period are generated by the power grid based on a stability control requirement for a frequency dynamic characteristic index of the entire power system, a predicted load of the entire power system, and characteristics of generating units in the source points.

In the power system, production and consumption of electrical energy occur simultaneously, and the power supply provided by the system should match the power consumption. When the active power balance in the power system is suddenly disrupted, the frequency of the system may transition from its normal stable value to another stable value. This frequency change process reflects frequency dynamic characteristics of the system. In the present disclosure, the frequency dynamic characteristic index is used to numerically represent a power change amount of the entire grid required to trigger a unit frequency change in the power system.

The frequency dynamic characteristics of the power system are influenced by factors such as an output and a speed regulation system of a generating unit, a magnitude and characteristics of a load. For the system with large unit capacity relative to small grid capacity, the active power difference induced by the loss of generating units with large capacities is large, the frequency regulation characteristics of the system are relatively weak, resulting in large frequency fluctuations. The frequency dynamic characteristic index (K value) is defined to reflect the influence of the capacity of the lost generating units in the power system on the frequency change of the power grid. The index is expressed by: $K = |\Sigma\Delta P/\Delta F|$, where, $\Delta P$ represents the power change amount of a generating unit of a certain power generation type, $\Sigma\Delta P$ represents a sum of the power change amounts across the entire grid, and $\Delta F$ represents the system frequency change amount.

In the power system, a requirement exists for stability control of the frequency dynamic characteristic index of the system. When the K value fluctuates greatly and frequently, the security and stability of the entire grid cannot be ensured, potentially leading to a collapse of the power system due to insufficient stability of the K value, and consequently failing to provide users with stable electrical energy. In the present disclosure, during dispatching in the power system with large unit capacity relative to small grid capacity, the K value is stabilized at a target value to avoid the aforementioned issues.

In an embodiment, the generating, by the power grid, output curves of generating units of the respective source points in a future period based on a stability control requirement for a frequency dynamic characteristic index of the entire grid, a predicted load of the entire grid, and characteristics of generating units in the source points includes: determining a target value of the frequency dynamic characteristic index; and generating the output curves of generating units of the respective source points in the future period based on the target value, a detected frequency disturbance amount of the power system, the predicted load of the entire grid, and the characteristics of generating units in the source points, to control powers of respective generating units through the output curves, and control a deviation between an actual value of the frequency dynamic characteristic index and the target value to be within a preset index fluctuation range. The characteristics of generating units of the source point includes a power change amount required from the generating units of the source point in response to a unit frequency change.

In the embodiment of the present disclosure, the target value is calculated based on the detected power and frequency variations before a large disturbance occurs in the power system. After that, when system disturbances (such as generating unit trip, load rejection, grid short circuit) occur again, future output curves are generated based on the target value. It is difficult to control the K value at the target value precisely. Thus in the present disclosure, to maintain the stability, when generating the output curves, the deviation between the actual value and the target value of the K value is controlled to be within a preset index fluctuation range. The index fluctuation range may be a specific numerical value (with the same unit as the K-value) or a percentage, such as ±3%.

In an embodiment, respective power change amounts required from the source points of the multiple power generation types to control the deviation between the actual value of the frequency dynamic characteristic index and the target value to be within the preset index fluctuation range are determined based on the target value, the detected frequency disturbance amount of the power system, and the characteristics of generating units in the source points, and the output curves of generating units of the respective source points in the future period are generated based on the predicted load of the entire grid in the future period and the determined power change amounts required from the source points of the multiple power generation types.

For example, when the system is subject to a frequency disturbance of 0.5Hz, based on the target value (assuming 20MW/Hz), a power adjustment amount of 10MW is required. In this case, if the 10MW adjustment is performed by thermal power, the frequency disturbance can be addressed. If a combination of thermal power and new energies is employed to meet the stability requirement for the K value, thermal power and new energies collaboratively and separately adjust their respective power change outputs due to different inertia (which can be understood as different characteristics of generating units) between hydropower and thermal power systems, to determine respective power change amounts to be provided by different source points.

In practice, the diverse power generation types in the power grid directly affect the denominator of a formula for calculating K value, leading to varying frequency changes. The power change amounts of the source points in the numerator of the formula for calculating K value may be assigned different weights to represent the contributions of the power change amounts of the source points of different power generation types to power adjustment. To keep the K-value stable, it is essential to manage changes in the total power sum in the numerator of the formula. Finally, the output curves of the generating units in the source points of respective power generation types in the next 24 hours are determined based on the K value of the power grid and the predicted load of the entire grid (such as the predicted load of the entire grid in the next 24 hours), to guide the generating units to generate power.

In step S705, a power generation dispatching instruction is sent by the power grid to each source point for performing power adjustment.

After step S704 is performed, the power grid sends a power generation dispatching instruction including the output curves of the generating units to each source point. Thus, the generating units can generate power according to the output curves based on the received power generation dispatching instruction.

According to the present disclosure, a power grid dispatching method in a power system with large unit capacity relative to small grid capacity is provided. In the method, through digital feature extraction of the power grid and source points of multiple power generation types in the power system, an emergency reserve capacity to be reserved is determined and configured. Whether the power system currently exhibits characteristics of large unit capacity relative to small grid capacity is determined based on outputs of the source points of the multiple power generation types. If yes, the power grid utilizes the configured emergency reserve capacities of the multiple power generation types to dispatch source points in the power system for performing voltage adjustment, and/or to dispatch the source points in the power system for frequency adjustment. An output curve is generated by the power grid based on a stability control requirement for a frequency dynamic characteristic index of the entire grid, a predicted load of the entire grid, and characteristics of generating units in the source points. A power generation dispatching instruction is sent to each source point. According to the present disclosure, capacity support is provided for voltage adjustment and frequency adjustment in large unit capacity - small grid capacity operating conditions based on the pre-configured emergency reserve capacities. Output curves are adjusted based on the stability control requirement for the frequency dynamic characteristic index to achieve power adjustment for each generating unit. Through multi-round adjustments involving voltage, frequency, and power, the safety and stability of the power system in large unit capacity - small grid capacity conditions are effectively ensured. By implementing the technical solution of the present disclosure, the stability and reliability of power supply in countries having power systems with large unit capacity relative to small grid capacity can be improved, reducing the incidence of grid collapses caused by events such as tripping of large generating units or sudden changes in large loads.

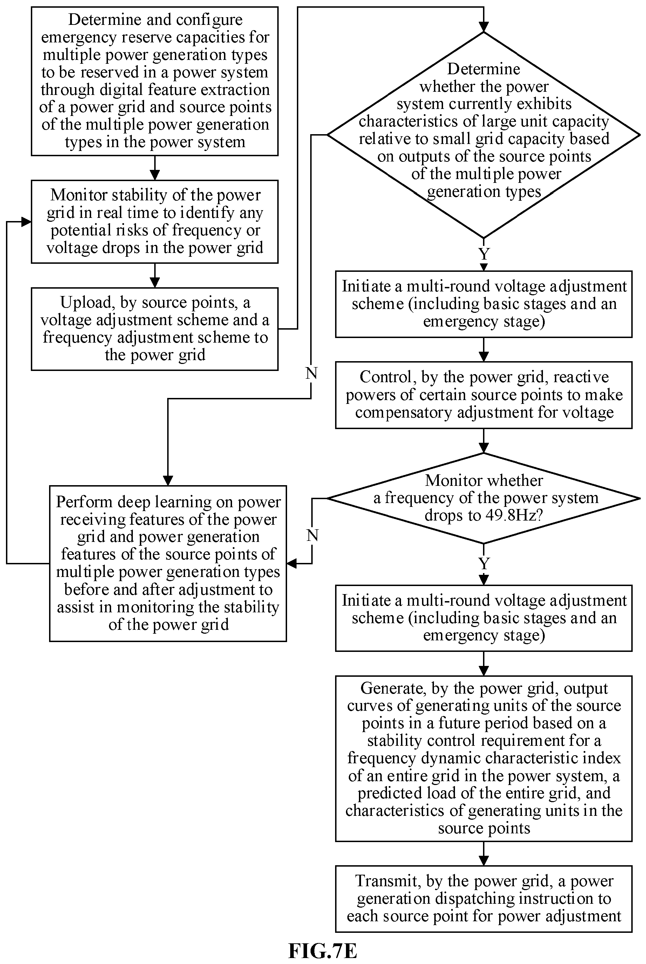

FIG. 7E is an example flowchart of a power dispatching method in a power system with large unit capacity relative to small grid capacity according to another embodiment of the present disclosure. Unlike FIG. 7B, FIG. 7E illustrates the process in a sequence of voltage adjustment followed by frequency adjustment. As shown in FIG. 7E, before determining whether the power system currently exhibits characteristics of large unit capacity relative to small grid capacity, the method further includes: monitoring the stability of the power grid in real time to identify any potential risks of frequency or voltage drops in the power grid. After the voltage adjustment based on a multi-round voltage adjustment scheme, the method further includes: controlling, by the power grid, reactive powers of certain source points to make compensatory adjustments for voltage. The frequency adjustment based on a multi-round frequency adjustment scheme is performed after frequency monitoring following the step of controlling reactive powers of certain source points for compensatory voltage adjustments. After the voltage adjustment based on the multi-round voltage adjustment scheme, the method further includes: conducting deep learning based on power receiving characteristics of the power grid and power generation characteristics of the source points of multiple power generation types before and after voltage adjustment to assist in monitoring the stability of the power grid. After the frequency adjustment based on the multi-round frequency adjustment scheme, the method further includes: conducting deep learning based on power receiving characteristics of the power grid and power generation characteristics of the source points of multiple power generation types before and after frequency adjustment to assist in monitoring the stability of the power grid.

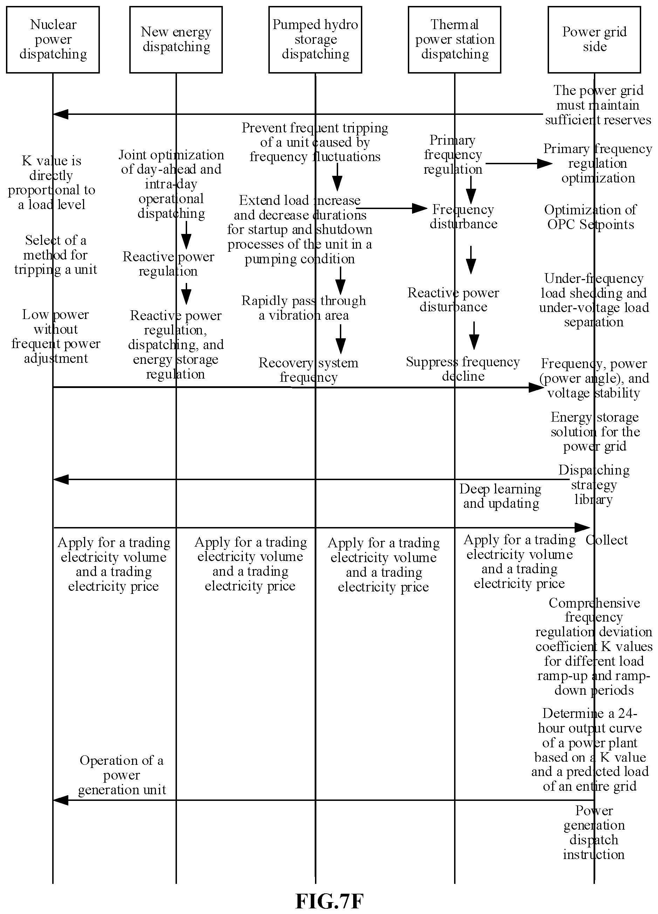

FIG. 7F is a diagram illustrating power dispatching signaling in a power system with large unit capacity relative to small grid capacity according to an embodiment of the present disclosure.

For large unit capacity - small grid capacity operating conditions, the source points of all types are configured with sufficient emergency reserve capacity to achieve dispatching of the power grid. The key to address the power grid dispatching issue lies in characteristics of frequency, power and voltage stability of various types of source points in a large unit capacity - small grid capacity operating condition. The functional characteristics of various types of power plants in this operating condition are summarized into a dispatching center of the power grid side. The characteristics are as follows. Nuclear power characteristics include a low power without frequent power adjustment. New energy dispatching characteristics include: seasonal dispatching and day-ahead dispatching, reactive power regulation. Pumped hydro storage characteristics include: recovering system frequency. Thermal power dispatching characteristics include: suppressing frequency decline.

The power grid employs three multi-round adjustment mechanisms including frequency, voltage, and power adjustments. The first three represent mid-level control production factors that reflect the primary characteristics of the power grid. Power adjustment is performed to further ensure the stability of K value. A frequency change rate varies depending on the various types of power supplies utilized.

Various types of power plants first feedback their characteristics related to power, frequency, and voltage to the power grid. The power grid conducts a first type of multi-round voltage adjustment and a second type of multi-round frequency adjustment based on conditions. The power grid performs energy storage dispatching, and simultaneously conducts deep learning based on a power grid dispatching strategy library, to obtain preliminarily-selected measured data corresponding to sample data. The performance of the power plant is reported to the power grid, and the power grid collects electricity price and electricity volume applied by the power plant, and then K value is adjusted. The power grid calculates the appropriate and stable K value after adjustment, and determines a 24-hour output curve of the power plant based on the K value together with a frequency and a predicted load of the entire grid. With multiple rounds of voltage and frequency adjustments, the power grid assigns a power curve to the power plant. The power grid provides various types of power plants with dispatching load curve instructions to perform the third type of power adjustment. The power plants track the curve and adjust power generation based on different loads. Finally, a generator is activated to generate power, concluding the process.

Through the analysis and research of the current power grid structure and current situation of a certain power grid, the safe and stable operation technology of "large unit capacity - small grid capacity" is discussed thoroughly. A technical route to be adopted to achieve the goal is proposed, and the simulation calculation of power grid frequency stability, power angle stability and voltage stability, as well as the primary and secondary frequency adjustment, peak-shaving strategies and energy storage solutions of the generating unit are carried out as follows.

1. Frequency stability issue: The most prominent and critical issue of "large unit capacity relative to small grid capacity" is power grid frequency stability. In a certain country, the total capacity of the power grid is approximately 3,977MW, with the construction of two 350MW supercritical coal-fired generating units accounting for a high proportion of the installed capacity of the power grid. In the event of trip of a generating unit, the frequency of the power grid decreases greatly. Without particular measures, the frequency of the power grid may drop below 48.9Hz in different periods. If a certain power grid is equipped with under-frequency load shedding, 1 to 3 rounds of actions are required, resulting in the removal of 370MW to 800MW of load, and causing severe power supply security risks to the power grid. If the power grid lacks properly configured under-frequency load shedding measures, the power grid faces the risk of frequency collapse.

2. Power angle stability and voltage stability issues: If a power grid strengthens the construction of the main grid and the improvement of related equipment in recent years, the power angle stability level of the entire power grid is relatively high. In normal operating conditions, the transient stability level depends on whether a fault can be quickly removed. As long as a fast protection system operates correctly, the transient stability level can meet the power grid stability requirement of no load loss in the event that a single fault of three-phase short circuit occurs in the power grid. If the fast protection system fails to operate or the switch fails to operate, transient stability issues may still arise in the power grid. After a certain project is connected to the power grid, no qualitative change occurs in the stability level of the power grid, as long as a certain generating unit becomes the most-probable generating unit to be swung out among most instability faults, and its out of synchronization may cause, in some faults, other generating units in the power grid out of synchronization, accompanied by voltage and frequency oscillations. The power angle stability of the power grid is limited. In normal operation manners, even with rapid fault clearance, the power angle stability issue still exists in the power grid. After quickly cutting off a certain out-of-synchronization unit, the voltage of the power grid may not be restored to more than 0.8pu, in turn causing the voltage stability issue and collapse risks to the power grid, which may cause large-scale power outages.

In addition, demagnetization of a generating unit with a large capacity is typically unbearable by the power grid with a small capacity. Generally, the loss of excitation of power plant units is accompanied by out of synchronization, and the generating units of a certain project are no exception. Once a generating unit experiences an open-circuit loss of excitation for approximately 1.08s, it is out of synchronization. If the loss of excitation of the generating unit is cleared within 1s, the stability of the power grid can be maintained. If the loss of excitation is not cleared within 1s, the power grid loses stability, leading to a series of adverse consequences. When a generating unit loses excitation, it absorbs a large amount of reactive power from the power grid, inevitably causing a substantial voltage drop, which is unbearable by the power grid.

To address this issue, the power grid is required to rapidly supply reactive power with coordinated increase and decrease of the reactive power. The reactive power adjustment is to be matched with the reactive power variations caused by the loss of excitation in large-capacity generating units. This requires a digitalized power coordination mechanism. A solution of utilizing new energy photovoltaic power plants for reactive power compensation offers the lowest cost. Thermal power plants can also provide reactive power quickly, but their safety and stability are to be closely monitored, particularly issues such as coil heating.

To this end, in the present disclosure, issues existing in grid-connected generating units and power grid dispatching are identified, a series of effective safety automatic control strategies and primary and secondary frequency adjustment and peak-shaving strategies for the power plants are established, and a range of effective measures to ensure the safe operation of the power plants are proposed. In addition, some suggestions for ensuring the safe and stable operation of a certain power grid, suggestions for strengthening the construction of a certain main grid framework, and an energy storage solution are provided, thereby improving the power generation utilization hours of the certain power plant and the safe operation capability of the power grid.

The response of pumped-storage units to the large unit capacity - small grid capacity dispatching is as follows. In power grids with small system capacities, the AGC regulation of power plants within the power grid is slow. If the power of the pumped-storage units changes rapidly during startup and shutdown, the maximum grid frequency fluctuation exceeds $\pm 0.10$ Hz. To avoid high-frequency tripping caused by frequency fluctuations, by adjusting parameters of a governor, the duration for startup load increase of the unit in a pumping condition is adjusted from 25s to 59s, and the duration for shutdown load decrease of the unit in a pumping condition (-205 MW → 0 MW) is adjusted from 11s to 44s. The test results show that after parameter optimization, the short-term frequency fluctuations in the power grid caused by the startup and shutdown processes of the pumped-storage unit in the pumping condition are less than $\pm 0.03$ Hz, meeting the frequency requirements of the power grid system. Appropriately extending durations for the startup load increase and shutdown load decrease of the unit in the pumping condition does not significantly increase the vibration swing values of various parts of the pumped-storage unit, and can avoid rapidly passing through vibration zones, meeting the safe operation requirements of the pumped-storage unit.

The separation of nuclear power units from the power grid can be achieved by selecting different methods based on various fault types, including tripping the turbine, tripping the generator circuit breaker and de-exciting the generator, or directly switching to island operation manner. In the method of tripping the turbine, a main valve is first closed, and then the generator circuit breaker is tripped and the generator is de-excited after the forward low-power protection is activated. Compared with directly tripping the generator circuit breaker and de-exciting the generator, this method causes less damage to the generator circuit breaker. In the island operation manner, the nuclear power unit is disconnected from the power grid by directly tripping the high-voltage side circuit breaker of the main transformer when operating at a full power, allowing the generator to operate with power of the unit. This method offers fast separation speed and enables the unit to continue operating without shutting down the reactor.

The collaborative photovoltaic dispatching logic for reactive power regulation in new energy photovoltaic systems primarily focuses on day-ahead optimized dispatching and photovoltaic reactive power control. To address the power imbalance issues in "large unit capacity relative to small grid capacity" systems with large-scale photovoltaic integration, the phenomenon of light abandonment is improved by considering the loss cost of unconsumed photovoltaic generation in the day-ahead dispatching stage, and the load curve is smoothed by introducing a requirement-side response mechanism, which improves the operating economy of the system with large unit capacity relative to small grid capacity. In the intra-day dispatching stage, multi-scenario predicting errors of photovoltaic predicting are considered, and storages are flexibly adjusted to ensure good tracking effects when photovoltaic fluctuations are violent.

Key points for power grid dispatching in large unit capacity relative to small grid capacity conditions are described as follows, which are recommended to be implemented.

(1) Within a certain period before the generating unit is put into operation, the power plant submits various parameters and data related to the system, such as setting values for high-frequency and low-frequency trip protection of the generating unit, transfer function block diagrams of an excitation system and PSS, P-Q curves, governor parameters. (2) The setting values for the excitation system and governor system are issued to the power plant, to determine whether the setting values for loss-of-excitation protection, out-of-synchronization protection, and high-frequency and low-frequency tripping protection of the generating unit meet system requirements. (3) A comprehensive survey of the setting values for high-frequency and low-frequency tripping protection at large thermal power plants across the entire system is conducted. (4) The correct activation and operation of various relay protection devices, under frequency load shedding devices, and under voltage load shedding devices are inspected randomly. (5) The step-by-step implementation of black start schemes, low-frequency protection measures for auxiliary power supply, and low-frequency self-starting devices at various hydropower and thermal power plants is organized.

Sixth embodiment

In the sixth embodiment, the electrical function requirement for self-regulation of a power grid is to adjust a grid structure of the power grid, the functional operator is a grid structure adjusting operator, and the grid structure adjusting operator is configured to adjust the grid structure of the power grid. In the sixth embodiment, a process of constructing an intelligent agent based on the grid structure adjusting operator in the digital power system is introduced.

With continuous expanding scale of a power system, the stability of the power grid faces increasingly severe challenges. Currently, during operation of the power system, the grid structure of the power grid is typically fixed once set. In cases of short-term fluctuations such as sudden load changes, variations in power generation, and unexpected faults, this fixed grid structure lacks flexibility and is unable to vary in response to these short-term fluctuations. This may lead to instability in the frequency and voltage of the power grid, resulting in economic losses such as power outages, damage to power generation devices, and damage to electrical equipment, thereby affecting the quality of public life and causing adverse social impacts. Therefore, how to improve the stability of the power grid is an issue to be addressed. In the technical solution of the present disclosure, the inventor proposes to implement a method for adjusting a grid structure of the power grid by utilizing the grid structure adjustment operator through the digital power system based on a multi-functional intelligent agent. This process is described below.

Referring to FIG. 8A, which is a flowchart of a method for adjusting a grid structure of a power grid according to an embodiment of the present disclosure. The method includes: steps S801 to S805.

**In** step S801, a current system inertia corresponding to a current grid structure is acquired.

In a power system, system inertia (also known as rotational inertia or moment of inertia) is a crucial parameter that measures the total kinetic energy of rotors of all synchronous generators within the system. In the embodiment of the present disclosure, the power grid refers to the portion of the power system responsible for the transmission and distribution of electrical energy, including but not limited to transmission lines, substations, and distribution networks. The current system inertia represents the total system inertia of all synchronous generators within the current grid structure. A larger current system inertia corresponds to a stronger resistance to frequency variations in the current grid structure, and smaller frequency fluctuations indicate greater stability during operation.

With the widespread use of renewable energy, the number of new energy units such as wind power generation and photovoltaic power generation in the power system is gradually increasing. However, since the new energy units are typically connected to the power grid through power electronic converters and exhibit decoupling characteristics, meaning that the output of the new energy units remains unaffected by frequency variations in the power system and an inertia coefficient is zero, the new energy units are unable to provide inertial support to the power grid. This leads to degradation in the frequency stability of the power grid in case of power fluctuations.

Therefore, in the embodiment of the present disclosure, for the new energy units, a grid-forming inverter can be introduced to simulate the behavior of the synchronous generator, provide inertia support similar to that of the synchronous generator, and improve the stability of the power grid.

In a grid structure including new energy units, its equivalent inertia coefficient Heq can be expressed by:

$$H_{eq} = \frac{\sum\limits_{i}^{M} H_G^i S_G^i + \sum\limits_{j}^{N} H_D^j S_D^j + H_L S_L}{S_G + S_D}$$

Where, $S_G$ represents the total rated capacity of conventional synchronous units in the grid structure; $S_D$ represents the total rated capacity of new energy units in the grid structure; $S_L$ represents the total load capacity in the grid structure; M represents the total number of the conventional synchronous units; N represents the total number of the new energy units; $H_G^i$ represents an inertia coefficient of the i-th conventional synchronous unit; $S_G^i$ represents a rated power of the i-th conventional synchronous unit; $H_D^j$ represents the inertia coefficient of the j-th new energy unit; $S_D^j$ represents the rated power of the j-th new energy unit; and $H_L$ represents an equivalent inertia coefficient of a load.

In step S802, a frequency change rate is calculated based on the current system inertia and a difference between a power demand and an actual power supply.

Frequency change rate (RoCoF) represents how many hertz the frequency of the power grid changes per second. As an example, the frequency change rate can be calculated by: Frequency change rate (Hz/s) = (50 Hz / 2) × (supply-demand imbalance amount (MW) / system inertia (MVA·s)), where the supply-demand imbalance amount represents the difference between the power demand and the actual power supply. For example, the supply-demand imbalance amount is an absolute value of the difference between the power demand and the actual power supply.

In step S803, whether the frequency change rate is greater than a preset first threshold is determined. If yes, step S804 is executed, and if not, step S801 is executed.

In the event of a supply-demand imbalance of power, as system inertia decreases, the frequency change rate gradually increases, potentially causing the frequency of the power system to drop to a frequency threshold set in the "under frequency load shedding (UFLS)" protection mechanism for the power system, leading to a large-scale power outrage.

As an example, when the frequency change rate is greater than the first threshold value, it is considered that the power system is experiencing large fluctuations, and a risk of the frequency of the power system dropping to the "under frequency load shedding" frequency threshold exits. In this case, steps S804 to S805 are to be executed to adjust the grid structure of the power grid, enabling the frequency change rate to be less than or equal to the first threshold, thereby maintaining the stability of the power grid. When the frequency change rate is less than or equal to the first threshold, it is considered that the power system is experiencing minor fluctuations, and adjustment of the grid structure is not required. In this case, steps S801 to S803 are executed repeatedly until a determination result of step S803 is yes.

In step S804, a target grid structure and a target setting value corresponding to the target grid structure are determined based on a pre-established deep learning model.

As an example, the pre-established deep learning model is used to simulate and generate all feasible grid structures in a power system serving as candidate grid structures. Alternatively, a grid structure library is established in advance in the deep learning model, the grid structure library stores all the candidate grid structures. Further, a grid structure library including numerous sub-grids is established in advance in the deep learning model, and these sub-grids are classified in advance according to various classification manners to facilitate rapid identification of the desired target grid structure.

For example, the sub-grids can be divided into load-type sub-grids and generator-type sub-grids in advance according to their functions. Based on the types of power plants, the sub-grids can be divided into photovoltaic sub-grids, thermal power sub-grids, hydroelectric power sub-grids, and wind power sub-grids. Based on the magnitude of the system inertia, the sub-grids can be divided into large inertia sub-grids with the system inertia within a first range, medium inertia sub-grids with the system inertia within a second range, small inertia sub-grids with the system inertia within a third range, and sub-grids with the system inertia of 0. Thus, when the current grid structure is to be adjusted, one or multiple sub-grids are selected and combined to form the target grid structure, or one or multiple sub-grids are combined with the current grid structure to form the target grid structure based on requirements, thereby enhancing computational efficiency.

The deep learning model is used to select a most stable option from all candidate grid structures as the target grid structure, and the frequency change rate of the target grid structure is less than or equal to the first threshold. For example, the deep learning model is used to calculate the simulated system inertia for all candidate grid structures in parallel and determine the grid structure with the highest simulated system inertia as the target grid structure.

For example, a typical value library is established in advance in the deep learning model, and the typical value library at least includes a correspondence between historical setting value data and the grid structure. The setting value includes, but is not limited to, one or more of a frequency deviation limit, a frequency change rate limit, an operating voltage range, a voltage fluctuation amplitude, a reactive power, a maximum transmission power, and a relay protection parameter.

Therefore, the historical setting value data serves as a reference sample for the target setting value corresponding to the target grid structure, and an applicable target setting value can be provided by using the deep learning model based on the target grid structure. For example, if the deep learning model determines that the target grid structure is the same as a typical grid structure in the typical value library, the deep learning model outputs the target setting value that has only a small difference from the setting value of the typical grid structure.

In an embodiment, the deep learning model is obtained by training using data in the typical value library, and after the target grid structure is obtained, the deep learning model directly outputs the target setting value corresponding to the target grid structure. The deep learning model may alternatively be trained by using a correspondence between other historical setting value data and the grid structure; after the target grid structure is obtained, the deep learning model refers to data in the typical value library and outputs the target setting value corresponding to the target grid structure.

The adjustment of the grid structure involves grid separation and grid synchronization, which essentially alter the power flow and characteristic parameters of the power grid. When calculating the grid structure, the chain rule is followed, and the specific impacts adhere to the back-propagation algorithm. Grid variations that are farther from a target power grid with lower correlation hold a smaller influence on the target power grid.

In the context of deep learning, concepts such as the chain rule of neural networks in artificial intelligence are introduced and symbiotically integrated to perform deep learning training on parameter variations caused by changes in the grid structure. Error correction is done through the back-propagation algorithm to ensure that the speed and accuracy of parallel computing of the deep learning model for real-time data meet requirements of grid variations. That is, during the process of grid separation and grid synchronization, the security of the target grid structure can be obtained by using the trained deep learning model. Thus, by defining data characteristics of control parameters and production factors in the grid, a data vector is formed, and data vector features are extracted, so that calculations are conducted by using the deep learning model based on the data vector. The stability and adjustment feasibility of various grid structures are calculated in parallel to speed up the calculations, quickly obtain the appropriate target grid structure and its corresponding target setting value, and reduce the security risks brought by the grid structure variations. The grid structure variations continuously iterate, and data assets are accumulated. Related functions generated based on these data assets serve as an output layer, enabling control over complex physical processes and devices within the power system. In solutions before the emergence of artificial intelligence, grid synchronization and separation of the power grid cannot be achieved without powerful computing power and neural network algorithms. In the embodiment of the present disclosure, convolutional neural networks are symbiotically integrated into the power system, allowing deep learning algorithms to coexist within the power system. This method ensures safety while adjusting the grid structure to enhance the stability of the power grid.

As an example, in a modeling stage, measured values of grid data corresponding to various grid structures are collected and classified. For example, features are classified based on characteristics such as frequency deviation limit, frequency change rate limit, and system inertia. Then, by using mathematical methods such as exponential smoothing, fitting on the classified data is performed to reflect actual conditions. Next, data cleaning is performed to extract key features (namely, key production factors) from original data that facilitate subsequent analysis. A difference between the fitted data and the original data is then determined to calculate an error value. Finally, relationships among production factors across different grid structures are identified to establish the model. In a model training stage, the model is trained with known data, so that the model can learn internal relationships among these factors. During the training process, a weight sharing mechanism is used to ensure consistent results in different parts of a neural network. Simultaneously, the back propagation algorithm is used for correction, and the model parameters are adjusted to reduce the error and the information loss caused by numerical calculation.

In addition, in the embodiment of the present disclosure, by using characteristics of hierarchical representation of the deep learning model, distinct attributes of the grid structure are reflected by using data from different levels. For example, low-level features reflect basic physical parameters, such as voltage, current; middle-level features reflect grid behavior features, such as frequency response; and high-level features reflect the stability and reliability of the grid. Thus, the deep learning model can learn multi-level features from data, achieving superior performance in complex tasks such as selecting the target grid structure and calculating the target setting value.

In addition, for specific functions and control logic in the power system, output functions, such as control strategies, can be defined for specific requirements, and specific operations or control logic can be implemented through these operators.

In step S805, the current setting value applied in the current grid structure is modified based on the target setting value, and the current grid structure of the power grid is adjusted to the target grid structure.

In an embodiment, the target setting value is transmitted to nodes such as power plants, substations, and dispatching control centers involved in the target power grid structure. After receiving the target setting value, these nodes verify the rationality of the target setting value on a regional basis. If the verification is passed, the current setting value is updated to the target setting value.

In an embodiment, for the power system with relays, the current grid structure is adjusted to the target grid structure, and specifically, the current grid structure may be adjusted to the target grid structure by controlling the relays to perform an opening or closing operation. In this case, target operations to be performed by multiple relays are determined based on the current grid structure and the target grid structure, and then the multiple relays are controlled to perform the target operations based on operation time information of respective relays, so that the current grid structure is adjusted to the target grid structure. The target operation includes an opening or closing operation, and the operation time information includes transmission duration S1 of the target setting value, duration S2 required to write the target setting value, a duration S3 of a protection operation, duration S4 required for closing the relay, duration S5 required for opening the relay, and duration S6 required for returning state information.

In an embodiment, the target setting value is transmitted to each node first, and the transmission duration of the target setting value is denoted as S1. Then, the target setting value is wrote to a protection apparatus, the duration required for writing the setting value is denoted as S2, and the protection apparatus is configured to modify the setting value. While transmitting the target setting value, a protection operation is performed, and the duration of the protection operation is denoted as S3. The durations of S1, S2 and S3 meet S1+S2 < S3. The duration required for closing the relay is denoted as S4, the duration required for opening the relay is denoted as S5, and the duration required for returning status information of the relay and status information of the setting value is denoted as S6. The durations of S1, S2, S3, S4, S5 and S6 should meet the following requirements: S4 is greater than the duration required to complete operations corresponding to S1, S2, S3 and S6, and S5 is less than the duration required to complete operations corresponding to S1, S2, S3 and S6.

In an embodiment, for the digital power system without a relay, in the process of adjusting the grid structure, the durations required for the opening and closing operations are the same. In this case, the influence of adjustment of the grid structure on the power grid is small, and the operations of modifying the setting value and adjusting the grid structure are performed simultaneously without performing the protection operation.

In an embodiment, before executing the step S105, the minimum stable grid is integrated into the current grid structure to improve the safety of the process of adjusting the grid structure.

Therefore, in the embodiment of the present disclosure, by calculating the frequency change rate of the power grid, phenomena of supply-demand imbalance and fluctuation in the power system can be found in time, and the target grid structure and corresponding target setting value used to alleviate the phenomena can be determined by using the deep learning model. The current grid structure and the current setting value can be adjusted in time, to cope with various fluctuations in the power system, improving the stability of the power grid, and preventing adverse phenomena such as local "large unit capacity relative to small grid capacity" conditions.

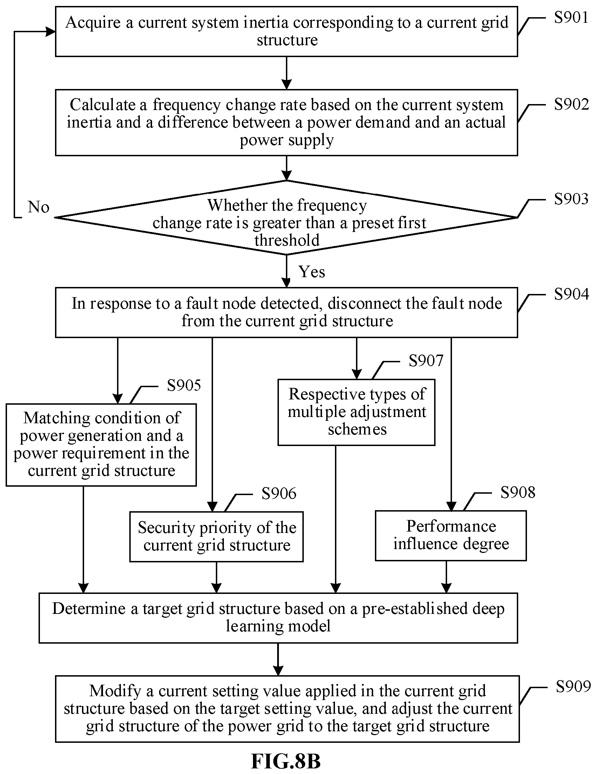

Referring to FIG. 8B, which is a flowchart of a method for adjusting a grid structure of a power grid according to another embodiment of the present disclosure. The method includes: steps S901 to S909.

In step S901, a current system inertia corresponding to a current grid structure is acquired.

In step S902, a frequency change rate is calculated based on the current system inertia and a difference between a power demand and an actual power supply.

In step S903, whether the frequency change rate is greater than a preset first threshold is determined. If yes, step S904 is executed, and if not, step S901 is executed.

S904: In response to a fault node detected, the fault node is disconnected from the current grid structure.

In an embodiment, faults may include, but is not limited to, a short circuit, a wire disconnection, a ground fault, and the like. Nodes include at least one of a power plant, a substation, and a dispatching control center.

As an example, a relay protection apparatus is used to monitor parameters such as current and voltage in the power grid to determine whether a fault node exists. Alternatively, an installed smart sensor is used to continuously monitor environmental conditions and health conditions of the device, and big data analysis and other measures are used to determine whether a fault node exists or to predict nodes that may fail within a set period of time.

After the fault node is detected, the fault node is disconnected from the current grid structure by controlling the opening and closing of the relay, to prevent the fault node from affecting the stability and reliability of the power grid.

In an embodiment, electrical parameters in the power grid are recorded by a fault recorder, to provide changes in the electrical parameters before and after a fault after the fault node is detected, which facilitates analyzing the cause of the fault, and provides data support for fault recovery.

In step S905, by using a pre-established deep learning model, a target grid structure that meets a balance condition between power generation and a power requirement is determined based on a matching state of the power generation and the power requirement in the current grid structure.

As an example, if the fault node is disconnected in step S904, the matching state (that is, a source-load matching state) of the power generation and the power requirement in the current grid structure after disconnecting the fault node is calculated. Then, the target grid structure that meets the balance condition of the power generation and the power requirement is obtained by using the deep learning model.

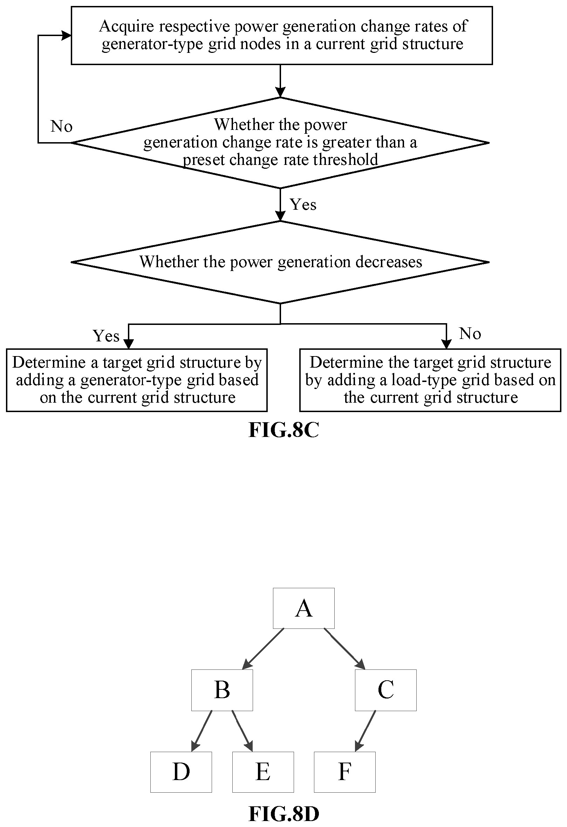

For example, as shown in FIG. 8C, respective power generation change rates of generator-type grid nodes in the current grid structure are acquired. When the power generation of the grid node of a new energy unit suddenly changes, for example, the power generation change rate exceeds a preset change rate threshold, whether the power generation suddenly increases or decreases is determined. If it suddenly decreases, the target grid structure of incorporating a

76

generator-type grid into the current grid structure is determined based on the matching state of the power generation and the power requirement in the current grid structure, to provide additional power generation for the power grid. If it suddenly increases, the target grid structure of incorporating a load-type grid into the current grid structure is determined based on the matching state of the power generation and the power requirement in the current grid structure, to provide additional load for the power grid, consuming the incremental power generation of the new energy unit.

In step S906, by using the pre-established deep learning model, the target grid structure with stability exceeding a preset limit is determined based on a security priority of the current grid structure.

As an example, security priorities are assigned in advance to nodes such as power consumption sites, power plants, substations, and dispatching control centers. For example, the grid structure for supplying power to a medical institution is assigned with a first priority, and the grid structure for supplying power to a civil facility is assigned with a second priority, and the first priority takes precedence over the second priority. The security priority of the current grid structure depends on the highest security priority among the nodes involved. For example, if the current grid structure supplies power to the medical institution with the first priority, the current grid structure is of the first priority, and the grid structure with stability higher than a preset limit is used as the target grid structure, or the grid structure with stability higher than the preset limit is incorporated into the current grid structure to form the target grid structure, thereby ensuring that changes in the grid structure do not affect the power supply to the medical institution.

Typical grid structures include radial structures, ring network structures, petal-shaped structures, and hybrid structures. The stability of grid structures is related to the connection mode and layout of the power grid, and the integration of different types of grid structures has varying impacts on the power grid.

For example, in a radial structure, a source point transmits power to a load point through a single path. Once a fault occurs on a certain section of the line, it may lead to a large-scale power outrage and low stability. Integrating the grid structure of the radial structure into the current grid structure may introduce great fluctuations. In a petal-shaped structure, a main source point is located in the center with multiple branch lines radiating outward surrounding it, and each branch line can be further branched out. This structure provides high redundancy and allows for flexible adjustment of power distribution as required, thus offering high stability. Integrating the petal-shaped grid structure into the current grid structure can enhance the stability of the power grid.

In step S907, based on operating parameters of all the candidate grid structures, respective frequency change rates corresponding to multiple schemes for adjusting the current grid structure to the candidate grid structures and a change amount of a difference between the power generation and the power requirement are calculated by using the pre-established deep learning model, to obtain respective types of the multiple schemes, where the types include a stable type and an radical type.

In an embodiment, one adjustment scheme includes adjusting the current grid structure to a candidate grid structure. For multiple adjustment schemes, the frequency change rate of the power grid and the change amount of the difference between the power generation and the power requirement during the adjustment process are calculated respectively. If any of the frequency change rate and the change amount of the difference between the power generation and the power requirement is greater than a preset change amount threshold, the adjustment scheme is considered to be a radical adjustment scheme. Otherwise, the adjustment scheme is considered to be a stable adjustment scheme.

As an example, the frequency change rate and the change amount of the difference between the power generation and the power requirement are calculated by using a mathematical method such as a data graph method, a vector graph method, or an Euclidean distance mean method. The change amount threshold may be a safety threshold obtained by performing deep learning on historical frequency change rates and the change amounts of the difference between historical power generation and historical power requirements in different scenarios through a deep learning model. The change amount threshold may be a piecewise function. For example, the piecewise function includes a segment A and a segment B. If the frequency change rate and the change amount of the difference between the power generation and the power requirement fall into the segment A of the piecewise function, the corresponding adjustment scheme is considered to be stable. If the frequency change rate and the change amount of the difference between the power generation and the power requirement fall into the B segment of the piecewise function, the corresponding adjustment scheme is considered to be radical.

In an embodiment, the adjustment schemes are not limited to stable and radical types, and the adjustment schemes can be classified in finer grain by setting multiple change amount thresholds based on actual requirements. For example, the types of the adjustment schemes may further include a balanced type with a radical degree between that of the stable and radical types.

If a stable adjustment scheme exists, the target grid structure is determined among the candidate grid structures corresponding to the stable adjustment scheme.

In an embodiment, the stable adjustment scheme is preferred to make the adjustment process of the grid structure stable and make the power grid remain stable during the adjustment process of the grid structure.

In step S908, respective performance influence degrees exerted on other grid elements of the power system by the multiple schemes for adjusting the current grid structure to the candidate grid structures are acquired based on the pre-established deep learning model and a grid transfer function, a target grid structure is determined based on the pre-established deep learning model and the performance influence degrees.

The grid transfer function includes a backpropagation algorithm which is a core algorithm used to train a model in deep learning. By using the backpropagation algorithm, gradients of a loss function with respect to network parameters are calculated, and weights and bias terms in the network are updated by using these gradients to minimize a difference between a predicted result and an actual value. In a multi-layer neural network, since the output of each layer is the input of the next layer, the error is propagated layer by layer from the output layer to the input layer. As an example, the performance influence degrees among the grid structures may be derived by using an error correction method such as one or more of weight initialization, activation functions, gradient clipping, batch normalization, residual connections, and adaptive learning rates, in combination with the back propagation algorithm.

In an embodiment, for a grid structure in which three sub-grids A, B, C, and D are connected sequentially, performances of the three sub-grids influence each other, and the performance influence degrees among the three sub-grids can be expressed by:

FA:

$$F(X)=F(Y)+K(F(Z)+F(S));$$

FB:

$$F(Y)=F(y)+PF(Z);$$

FC:

$$F(Z)=F(z)+HF(S);$$

FD:

$$F(S) = F(\theta, \eta, 0, N).$$

Where, FA represents the performance influence degree exerted on the sub-grid A, FB represents the performance influence degree exerted on the sub-grid B, FC represents the performance influence degree exerted on the sub-grid C, FD represents the performance influence degree exerted on a photovoltaic power station sub-grid D by production factors, $\theta$ represents illumination, $\eta$ represents a photoelectric conversion efficiency, N represents the number of photovoltaic panels, and K, P and H represent influence coefficients. Thus, the performance influence degrees among multiple grid structures are calculated by using the backpropagation algorithm. For non-directly related sub-grids, the performance influence degree is analyzed by transmitting the influence based on data characteristics, and the performance influence degree can be corrected by using quantitative tools.

In an embodiment of the present disclosure, if the sub-grid C is disconnected from the sub-grid B, the influence exerted on the sub-grid B is F(Y). In this case, the sub-grid D directly connected to the sub-grid C is also disconnected from the sub-grid A and the sub-grid B, and the performance influence degree exerted on the sub-grid A is superimposed by three coefficients of K, P, and H.

When the performance influence degrees are introduced, the target grid structure with frequency change rate less than or equal to the first threshold is determined by using a deep learning model, to accurately predict a grid structure adjustment result and facilitate obtaining a stable target grid structure.

In an embodiment, one of steps S905, S906, S907, and S908 is executed, and one of the obtained multiple target grid structures is randomly selected as an adjustment target. Alternatively, all steps are executed, and any one from the intersection of the target grid structures obtained from each step is taken as the adjustment target, and a priority is assigned for it. For example, the priority of step S906 is 1, the priority of step S905 is 2, the priority of step S907 is 3, and the priority of step S908 is 4. In this case, step S906 is executed first, and when only one target grid structure is obtained, the target grid structure is used as the adjustment target, and steps S905, S907, and S908 are skipped. When multiple target grid structures are obtained, step S905 is executed, an intersection of the target grid structures obtained in step S905 and step S906 is obtained. If the intersection is empty, one of the multiple target grid structures obtained in step S906 is determined as the target grid structure. If the intersection includes one target grid structure, the target grid structure in the intersection is used as the adjustment target, and steps S907 and S908 are skipped. If the intersection includes multiple target grid structures, step S907 is executed.

In step S909, the current setting value applied in the current grid structure is modified based on the target setting value, and the current grid structure is adjusted to the target grid structure.

As an example, data such as the target setting value is stored in a binary tree structure as shown in FIG. 8D, and then binary tree traversal is performed based on the data stored in the binary tree structure to obtain operation information such as a time node at which each relay is allowed to operate and an order in which multiple relays execute operations, thereby controlling the relays to perform operations such as opening or closing based on the operation information of respective relays, and achieving adjustment of the grid structure.

For example, a setting value may include data such as an electric current under which each relay is allowed to operate and an electric current duration, and data indicating conditions under which each relay is allowed to operate in the target setting value is stored in a node of the binary tree structure. The nodes are arranged based on their magnitudes. For example, if the nodes on the left branch of any given node are numerically smaller than the node, the nodes on the right branch of the node is numerically larger than the node, and the data stored in each node is an electric current value that the relay is allowed to operate, then in FIG. 8D, the electric current values stored in the nodes are arranged in descending order as C-F-A-E-B-D. By storing in a binary tree structure target setting value data such as the electric current allowing for operation of each relay, the time node allowing for operation of each relay and the execution order of operations of multiple relays can be quickly obtained by parallel calculation based on a goal of minimizing the total operation duration of the relays or minimizing the economic loss before controlling the relay to perform an operation such as opening or closing, to obtain a relay operation scheme and quickly adjust the grid structure.

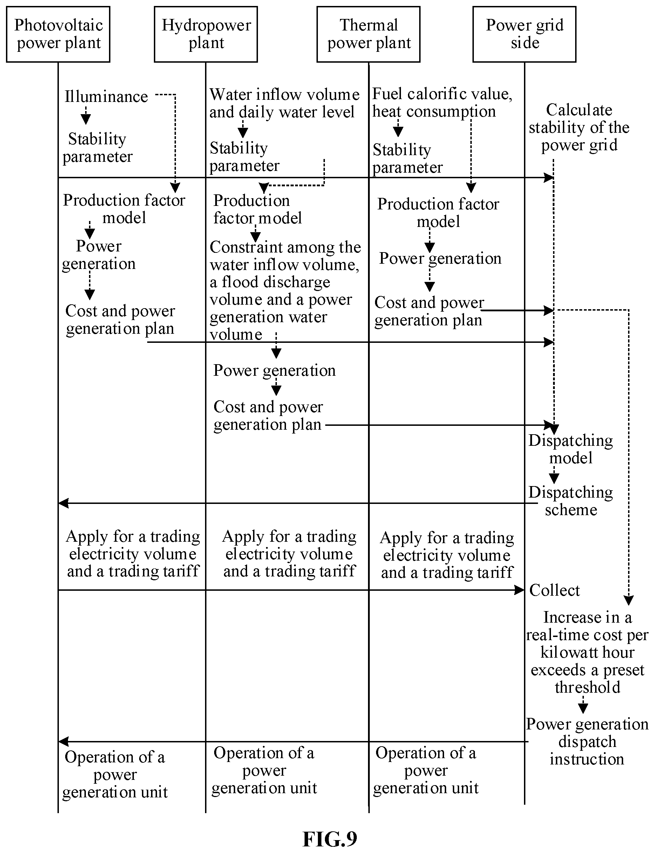

FIG. 9 is an interactive flowchart of a power generation dispatching process for a power system according to an embodiment of the present disclosure. The power system includes a photovoltaic power plant, a hydropower plant, a thermal power plant, and a power grid.

On a photovoltaic power plant side, stability parameters of the photovoltaic power plant are calculated based on the obtained production factor data such as illuminance, and the power generation of the photovoltaic power plant is calculated by using a production factor model, to determine an initial cost per kilowatt hour and an available power generation plan of the photovoltaic power plant. On a hydropower plant side, the stability parameters of the hydropower plant are calculated based on the obtained production factor data such as water inflow volume and daily water level, and constraints among the inflow water volume, flood discharge volume and water consumption for power generation are determined and the power generation of the hydropower plant is calculated by using the production factor model, to determine the initial cost per kilowatt hour and the available power generation plan of the hydropower plant. On a thermal power plant side, the stability parameters of the thermal power plant are calculated based on the obtained production factor data such as fuel calorific value and heat consumption, and the power generation of the thermal power plant is calculated by using the production factor model, to determine the initial cost per kilowatt hour and the available power generation plan of the thermal power plant. On a power grid side, the stability of the power grid can be calculated to determine stability requirements of the power grid. Based on a pre-trained dispatching model, a power generation dispatching scheme is obtained from a strategy library in the dispatching model based on the initial cost per kilowatt hours and the available power generation plans of the power plants on the premise of meeting the stability requirements of the power grid.

Each power plant can apply to the power grid for a trading electricity volume and a trading electricity price based on the power generation dispatching scheme issued by the power grid side. The power grid side collects application data of power plants, and determines a real-time cost per kilowatt hour of each power plant by using the production factor model based on real-time production factor data of the power plants. If a power plant in which the increase in the real-time cost per kilowatt hour compared to an initial cost per kilowatt hour exceeds a preset threshold exists, the power generation dispatching scheme is updated, and a power generation dispatching instruction is issued to each power plant based on a new power generation dispatching scheme, and each power plant performs generating unit operations in response to the power generation dispatching instruction.

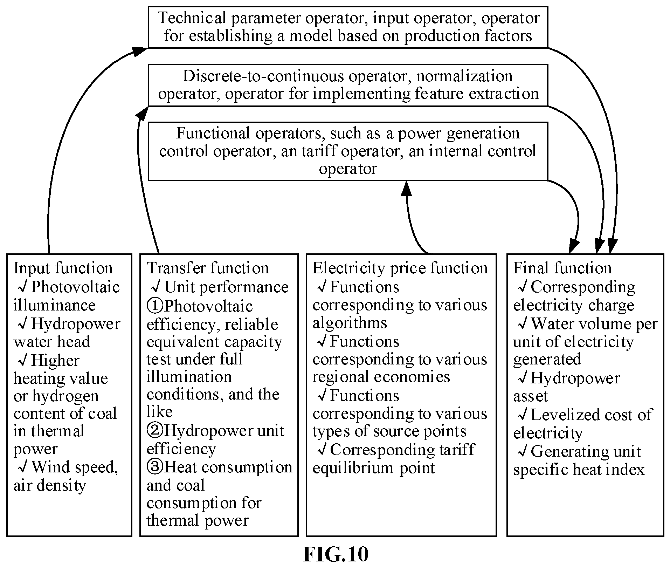

FIG. 10 is a schematic diagram illustrating a relationship between a function and an operator according to an embodiment of the present disclosure. The operator reflects production factors of a power grid and belongs to the power grid. For example, among functional operators, an electricity price operator includes an electricity price function, an electricity price equilibrium point of the power grid, an internal control operator, and an operator corresponding to an electricity price in a final function. Based on the digital composition (including electricity price equilibrium points of power plants) of different types of generating units in power plants, the electricity price operator of the power grid is constructed based on an actual clearing function of the power grid, and the electricity price equilibrium point of the power grid is also established. Hereinafter, some concepts referred to in FIG. 10 are described.

1. Input operators include technical parameter operators (corresponding to the technical solutions in various embodiments, various production factors such as photovoltaic illuminance, water inflow volume and water level for hydropower, coal type and coal quality for thermal power are used as input operators for quantification and digitization, such as coal parameters to participate in coal-power linkage in other patens of the inventor). These type of operators, i.e., parameter operators, are constructed to form an interface that directly connects from natural first-level production factor indicators to subsequent power generation and electricity price.

Analysis is performed starting from global tilt irradiance (GTI), daily power generation, and PR daily efficiency. Based on basic calculation of power generation and daily efficiency for photovoltaic power, power parameters in this input operator change due to illuminance, technical improvement efficiency η0, and the like.

2. Discrete-to-continuous operators include a normalization operator, a feature extraction operator (used to determine which mathematical tool is suitable for measuring a data feature vector, and to characterize time series by reflecting its 9-dimensional features of volatility, trend and variability).

The normalization operator employs multiple methods to extract data features. The features include extremum difference features, standard deviation features, discrete coefficient features, and geometric mean features targeting for volatility, centroid features, correlation coefficient features, and median difference features among trend features, and waveform entropy features, and second-order center distance features among variability features.

3. Functional operators are operators that reflect specific functions of a power system, including a power generation control operator, an electricity price operator, an internal control operator, a special operating condition operator, and a safety operator. An operator cluster is constructed to form a multi-functional intelligent agent, which constitutes the core of a digital power system. As a main object to be studied in an electric power major, these operators initially examine various production factors such as active and reactive power, frequency, voltage on both the generator and power grid sides. This research then extends to higher-order studies of material flows and physical mechanisms.

Related operators of functions

The functions include an input function, a transfer function, an electricity price function, and a final function. The final function includes: unit water consumption, hydropower assets, cost per kilowatt hour, specific heat index of generating unit, and the like.

Based on the above embodiments and related descriptions, the process of constructing the digital power system in the present disclosure is as follows. (1) Internal information is extracted from data and symbiotically mapped to production factors; (2) Then a specific function is achieved through a data-driven integration operator; (3) An operator cluster is compressed into an intelligent agent, enabling the intelligent agent to possess multiple specific functions; (4) Migration is achieved through mutual nesting and invocation of intelligent agents; (5) Emergence occurs when the amount of data, operators, and intelligent agents are of sufficient scale. Therefore, the digital power system with the multifunctional intelligent agent as the core is constructed.

These functional operators input data obtained after feature extraction and cleaning into the power generation operator to form an electricity price and power generation model involved in power generation. During this process, the data structure employed for spot trading is a stack, and grid synchronization and separation corresponding to the power grid side are represented by a binary tree. In addition, functional operators of various power generation types under the special mechanism of large unit capacity relative to small grid capacity are shown in the signaling diagram in the fifth embodiment. Based on various power sources, the internal control logic of them is analyzed to form characteristics of information flow, and a corresponding neural network is found based on the characteristics of data and information flow, such as recurrent neural network (in which data is input sequentially, and information flows in sequences).

Based on the method for constructing a digital power system based on a multi-functional intelligent agent introduced in the above embodiments, an apparatus for constructing a digital power system based on a multifunctional intelligent agent is further provided according to an embodiment of the present disclosure accordingly. In the present disclosure, the apparatus includes: a data extraction module, a vector construction module, a data determination module, an operator construction module, and an intelligent agent addition module.

The data extraction module is configured to extract feature production factor data corresponding to a feature production factor set from power data of a power plant side, and extract control production factor data corresponding to a control production factor set from the power data of a power grid side, where the feature production factor set includes feature production factors in multiple levels, and the control production factor set includes control production factors in multiple aspects.

The vector construction module is configured to construct a target data vector based on an electrical function requirement for the digital power system by using the extracted feature production factor data.

The data determination module is configured to determine key control production factor data associated with the electrical function requirement among the extracted control production factor data.

The operator construction module is configured to acquire a mapping function representing mapping between the target data vector and the key control production factor data based on the target data vector and the key control production factor data by using an artificial intelligence algorithm, construct a functional operator with the mapping function as a kernel, and construct an intelligent agent based on the functional operator.

The intelligent agent addition module is configured to configure the digital power system with respective intelligent agents corresponding to different electrical function requirements, and determine each of the intelligent agents as an electrical function executing unit in the digital power system.

In an embodiment, the electrical function requirements include:

an electrical function requirement for power trading between the power grid side and the power plant side, an electrical function requirement for enabling dispatching control of the power grid side over the power plant side, or an electrical function requirement for self-regulation of a power grid.

In an embodiment, the electrical function requirement for power trading between the power grid side and the power plant side is to calculate an electricity price, the functional operator is an electricity price operator, the electricity price operator is configured to calculate the electricity price, and a process of utilizing the intelligent agent constructed based on the electricity price operator in the digital power system includes:

utilizing the intelligent agent to obtain an electricity price calculation result for the power plant side by using the electricity price operator;

verifying the electricity price calculation result by using a financial verification model for the power grid side, where the financial verification model includes a first verification condition and a second verification condition, the first verification condition is: actual outputs of respective types of power plants $\geq$ an electricity volume of the power grid, and the second verification condition is: a sum of products of the actual outputs of respective types of power plants, electricity prices of the power grid at respective time instants for each type of power plant, and a power generation duration $\leq$ a product of an average electricity price and the electricity volume of the power grid;

in response to the electricity price calculation result meeting the first verification condition and the second verification condition, determining that the electricity price calculation result passes the verification; in response to the electricity price calculation result failing to meet the first verification condition or the second verification condition, determining that the electricity price calculation result fails to pass the verification;

in response to the electricity price calculation result passing the verification, further selecting a function for calculating the electricity price that is feasible and adaptive to the power grid side from a dispatching strategy library, and loading the function into the electricity price operator to update the electricity price operator; and

acquiring the electricity price calculation result for the power grid side by using the updated electricity price operator.

In an embodiment, the electrical function requirement for power trading between the power grid side and the power plant side is power clearing, the functional operator is a clearing operator, the clearing operator is configured for power clearing, and a process of utilizing the intelligent agent constructed based on the clearing operator in the digital power system includes:

performing low-order data abstraction based on power generation factor features of all associated power plants for the power grid, to obtain first data vectors derived from the power generation factor features;

predicting long-term trading electricity prices based on a preset long-term electricity price function library and the first data vectors to establish a long-term trading stack;

establishing a spot trading stack based on spot trading electricity prices of the associated power plants, and determining a first clearing function based on the long-term trading stack and the spot trading stack;

determining a power supply-demand balance state of the power grid based on the first clearing function in response to the first clearing function being used for power clearing; and

adjusting the first clearing function based on the power supply-demand balance state to obtain a second clearing function, and performing power clearing based on the second clearing function.

In an embodiment, the electrical function requirement for enabling dispatching control of the power grid side over the power plant side is peak-shaving under highly-frequent load variations in a thermal power scenario, the functional operator is a thermal power peak-shaving operator, the thermal power peak-shaving operator is configured to achieve peak-shaving under highly-frequent load variations in the thermal power scenario, and a process of utilizing the intelligent agent constructed based on the thermal power peak-shaving operator in the digital power system includes:

calculating a heat access margin of an energy storage device in a thermal power plant, where the heat access margin includes a heat storage margin characterization value and a heat release capacity characterization value;

transmitting correlation data among loads, performances, and costs of respective thermal power units and the heat access margins in respective thermal power plants to the power grid side, to enable the power grid side to determine a target generating unit expected to assist in peak-shaving based on a change in a thermal power load requirement, the correlation data of the thermal power plant, and the heat access margin, and to issue a peak-shaving instruction;

receiving the peak-shaving instruction issued by the power grid side, where the peak-shaving instruction carries a unit identification of the target generating unit and peak-shaving requirement information for the target generating unit, and the peak-shaving requirement information includes a peak-shaving load curve; and

performing a service of assisting in peak-shaving based on the peak-shaving requirement information.

In an embodiment, the electrical function requirement for enabling dispatching control of the power grid side over the power plant side is water resource dispatching of a cascade hydropower station system, the functional operator is a water resource dispatching operator, the water resource dispatching operator is configured to achieve water resource dispatching of the cascade hydropower station system, and a process of utilizing the intelligent agent constructed based on the water resource dispatching operator in the digital power system includes:

acquiring water resource data of respective hydropower stations in the cascade hydropower station system at a current time instant;

for each of the hydropower stations, determining whether the hydropower station is in a safe operation state based on the water resource data of the hydropower station;

in response to all hydropower stations being determined to be in a safe operation state, determining whether to perform water resource dispatching based on the water resource data of the hydropower stations, a preset electricity price scheme, and target historical data, where the target historical data includes: an average power generation water volume and an average power plant revenue of a month corresponding to the current time instant; and

in response to determining to perform the water resource dispatching, determining a water resource dispatching scheme based on the water resource data of the hydropower stations and a water resource dispatching model, where the water resource dispatching model is trained in advance and is configured to output the water resource dispatching scheme, and the water resource dispatching scheme includes day-ahead dispatching and seasonal dispatching.

In an embodiment, the electrical function requirement for enabling dispatching control of the power grid side over the power plant side is dispatching on the power plant by the power grid in a power system with large unit capacity relative to small grid capacity, the functional operator is a dispatching operator for large unit capacity relative to small grid capacity, the dispatching operator for large unit capacity relative to small grid capacity is configured to achieve dispatching on the power plant by the power grid in the power system with large unit capacity relative to small grid capacity, and a process of utilizing the intelligent agent constructed based on the dispatching operator for large unit capacity relative to small grid capacity in the digital power system includes:

determining emergency reserve capacities for multiple power generation types to be reserved in a power system and configuring the power system with the emergency reserve capacities through digital feature extraction of the power grid and source points of the multiple power generation types in the power system;

determining whether the power system currently exhibits characteristics of large unit capacity relative to small grid capacity based on current outputs of the source points of the multiple power generation types;

in response to determining that the power system currently exhibits the characteristics of large unit capacity relative to small grid capacity, dispatching, by the power grid, the source points in the power system for performing voltage adjustment based on a multi-round voltage adjustment scheme, and/or dispatching, by the power grid, the source points in the power system for frequency adjustment based on a multi-round frequency adjustment scheme by using the configured emergency reserve capacities of the multiple power generation types, where the multi-round voltage adjustment scheme includes: a multi-round voltage adjustment manner for the multiple power generation types, a multi-round voltage adjustment range and multi-round voltage adjustment priority information, and the multi-round frequency adjustment scheme includes: a multi-round frequency adjustment manner for the multiple power generation types, a multi-round frequency adjustment range and multi-round frequency adjustment priority information;

generating, by the power grid, output curves of generating units of the respective source points in a future period based on a stability control requirement for a frequency dynamic characteristic index of an entire grid, a predicted load of the entire grid, and characteristics of generating units in the source points, where the frequency dynamic characteristic index is used to numerically represent a power change amount of the entire grid required to trigger a unit frequency change in the power system; and

issuing, by the power grid, a power generation dispatching instruction to each source point for performing power adjustment, where the power generation dispatching instruction for each source point includes the output curves of generating units of the source point.

In an embodiment, the electrical function requirement for self-regulation of the power grid is to adjust a grid structure of the power grid, the functional operator is a grid structure adjusting operator, the grid structure adjusting operator is configured to adjust the grid structure of the power grid, and a process of utilizing the intelligent agent constructed based on the grid structure adjusting operator in the digital power system includes:

acquiring a current system inertia corresponding to a current grid structure;

calculating a frequency change rate based on the current system inertia and a difference between a power demand and an actual power supply;

in response to the frequency change rate being greater than a preset first threshold, determining a target grid structure and a target setting value corresponding to the target grid structure based on a pre-established deep learning model, where the frequency change rate of the target grid structure is less than or equal to the preset first threshold; and modifying a current setting value applied in the current grid structure based on the target setting value, and adjusting the current grid structure of the power grid to the target grid structure.

It should be understood that "multiple" in the present disclosure means two or more. The term "and/or" is used to describe an association relationship between objects, and indicates three possible relationships. For example, "A and/or B" may indicate a case in which only A exists, a case in which only B exists, or a case in which both A and B exist. In the above cases, each of A and B may be singular or plural. The symbol "/" generally indicates an "or" relationship between the objects it connects.

The foregoing embodiments are used for describing, instead of limiting the technical solutions of the present disclosure. Those skilled in the art shall understand that although the present disclosure is described in detail with reference to the foregoing embodiments, modifications can be made to the technical solutions described in the foregoing embodiments, or equivalent replacements can be made to some technical features in the technical solutions, provided that such modifications or replacements do not cause the essence of corresponding technical solutions to depart from the spirit and scope of the technical solutions of the embodiments of the present disclosure.

## Claims

1. A method for constructing a digital power system based on a multifunctional intelligent agent, comprising:

   extracting feature production factor data corresponding to a feature production factor set from power data of a power plant side, and extracting control production factor data corresponding to a control production factor set from power data of power grid side, wherein the feature production factor set comprises feature production factors in a plurality of levels, and the control production factor set comprises control production factors in a plurality of aspects;
   constructing a target data vector based on an electrical function requirement for the digital power system by using the extracted feature production factor data, and determining key control production factor data associated with the electrical function requirement among the extracted control production factor data;
   acquiring a mapping function representing mapping between the target data vector and the key control production factor data based on the target data vector and the key control production factor data by using an artificial intelligence algorithm, constructing a functional operator with the mapping function as a kernel, and constructing an intelligent agent based on the functional operator; and
   configuring the digital power system with respective intelligent agents corresponding to different electrical function requirements, and determining each of the intelligent agents as an electrical function executing unit in the digital power system.

2. The method according to claim 1, wherein the feature production factor set comprises a first-level feature production factor, a second-level feature production factor and a third-level feature production factor corresponding to each of a plurality of power generation types, wherein the first-level feature production factor is a natural feature production factor, the second-level feature production factor is a single-system feature production factor, the third-level feature production factor is a plant-system feature production factor, the natural feature production factor directly reflects a natural feature, the single-system feature production factor is a production factor related to a single system in the digital power system, and the plant-system feature production factor is a production factor related to an integrated system in the digital power system.

3. The method according to claim 1, wherein the control production factors in a plurality of aspects comprise: an electricity price, an inertia and a frequency, an active power and a reactive power, an electricity carbon emission, security and stability, and grid synchronization and separation, and wherein
   the extracting control production factor data corresponding to a control production factor set from the power data of the power grid side comprises:
   extracting electricity price data, inertia and frequency data, power data, electricity carbon emission data, security and stability index data, and grid synchronization and separation impact data from the power data of the power grid side.

4. The method according to claim 1, further comprising:

configuring the intelligent agent with a power plant side interface, a power grid side interface, and an intelligent agent interface, wherein
the intelligent agent communicates with a power plant via the power plant side interface,
the intelligent agent communicates with a power grid via the power grid side interface, and
the intelligent agent communicates with other intelligent agents via the intelligent agent interface.

5. The method according to any one of claims 1 to 4, wherein the electrical function requirement is one of:
an electrical function requirement for power trading between the power grid side and the power plant side, an electrical function requirement for enabling dispatching control of the power grid side over the power plant side, or an electrical function requirement for self-regulation of a power grid.

6. The method according to claim 5, wherein the electrical function requirement for power trading between the power grid side and the power plant side is to calculate a electricity price, the functional operator is the electricity price operator, the electricity price operator is configured to calculate the electricity price, and a process of utilizing the intelligent agent constructed based on the electricity price operator in the digital power system comprises:

utilizing the intelligent agent to obtain an electricity price calculation result for the power plant side by using the electricity price operator;
verifying the electricity price calculation result by using a financial verification model for the power grid side, wherein the financial verification model includes a first verification condition and a second verification condition, the first verification condition is: actual outputs of respective types of power plants $\geq$ an electricity volume of the power grid, and the second verification condition is: a sum of products of the actual outputs of respective types of power plants, electricity prices of the power grid at respective time instants for each type of power plant, and a power generation duration $\leq$ a product of an average electricity price and the electricity volume of the power grid;
in response to the electricity price calculation result meeting the first verification condition and the second verification condition, determining that the electricity price calculation result passes the verification; in response to the electricity price calculation result failing to meet the first verification condition or the second verification condition, determining that the electricity price calculation result fails to pass the verification;
in response to the electricity price calculation result passing the verification, further selecting, from a dispatching strategy library, a function for calculating the electricity price that is feasible and adaptive to the power grid side, and loading the function into the electricity price operator to update the electricity price operator; and
acquiring the electricity price calculation result for the power grid side by using the updated electricity price operator.

7. The method according to claim 6, wherein after the loading the function into the electricity price operator to update the electricity price operator, the process of utilizing the intelligent agent constructed based on the electricity price operator further comprises:

collecting, by the power grid side, an applied trading electricity volume and an applied trading electricity price which are submitted from the power plant side to the power grid side;
determining whether to maintain stable operation of the power grid based on the power grid side, to determine whether a virtual power plant function is to be activated;
in response to determining not to activate the virtual power plant function, transmitting, by the power grid side, a dispatching instruction about clearing electricity price and clearing electricity volume to respective types of power plants based on the electricity price calculation result for the power grid side;
in response to determining to activate the virtual power plant function, activating the virtual power plant function to utilize a storage power capacity of a virtual power plant;
receiving, by the power plant side, the clearing electricity price given by the power grid side;
performing verification by using a financial verification model of the power plant side based on a cost of the power plant and the clearing electricity price, wherein the financial verification model of the power plant side comprises a third verification condition, the third verification condition is: a sum of products of the actual output of the power plant, the electricity prices of the power grid at respective time instants, and the power generation duration > a product of the cost and the actual output of the power plant;
in response to a verification result indicating that the verification is passed, further determining whether different source points of the same type of power plant can be cleared based on the electricity volume and the electricity price; and

in response to determining that all source points can be cleared, applying a clearing electricity volume.

8. The method according to claim 5, wherein the electrical function requirement for power trading between the power grid side and the power plant side is power clearing, the functional operator is a clearing operator, the clearing operator is configured for power clearing, and a process of utilizing the intelligent agent constructed based on the clearing operator in the digital power system comprises:

performing low-order data abstraction based on power generation factor features of respective associated power plants for the power grid, to obtain first data vectors derived from the power generation factor features;

predicting long-term trading electricity prices based on a preset long-term electricity price function library and the first data vectors to establish a long-term trading stack;

establishing a spot trading stack based on spot trading electricity prices of the associated power plants, and determining a first clearing function based on the long-term trading stack and the spot trading stack;

determining a power supply-demand balance state of the power grid based on the first clearing function in response to the first clearing function being used for power clearing; and

adjusting the first clearing function based on the power supply-demand balance state to obtain a second clearing function, and performing power clearing based on the second clearing function.

9. The method according to claim 8, wherein the power supply-demand balance state comprises an over-generation state, the first clearing function comprises a first long-term trading volume, and

the adjusting the first clearing function based on the power supply-demand balance state to obtain a second clearing function comprises:

in response to the power supply-demand balance state being the over-generation state, performing high-order data abstraction on the power generation factor features by using a preset deep learning model to obtain respective second data vectors of the associated power plants;

determining an increment of the long-term trading volume based on the second data vectors and the preset long-term electricity price function library; and

adjusting the first long-term trading volume based on the increment of the long-term trading volume to obtain the second clearing function.

10. The method according to claim 9, wherein the power supply-demand balance state comprises an under-generation state, the first clearing function comprises a first spot trading volume, and

wherein the adjusting the first clearing function based on the power supply-demand balance state to obtain a second clearing function comprises:

in response to the power supply-demand balance state being the under-generation state, performing fitting on a first power generation curve by using a preset fitting function during clearing based on the first clearing function by the power grid, to obtain a fitted power generation curve;

determining whether the first spot trading volume meets a pre-planned power generation curve based on the fitted power generation curve and the pre-planned power generation curve;

in response to the first spot trading volume failing to meet the pre-planned power generation curve, adjusting functions in the preset long-term electricity price function library by using a preset reinforcement learning model to determine a reduction of the long-term trading volume;

adjusting a proportion of the spot trading volume in the first clearing function based on the reduction of the long-term trading volume to obtain an increment of the spot trading volume; and

adjusting the first spot trading volume based on the increment of the spot trading volume to obtain the second clearing function.

11. The method according to claim 10, wherein the in response to the first spot trading volume failing to meet the pre-planned power generation curve, adjusting functions in the preset long-term electricity price function library by using a preset reinforcement learning model to determine a reduction of the long-term trading volume comprises:

performing function selection in the preset long-term electricity price function library by using the preset reinforcement learning model to obtain a first long-term trading electricity price function; and

adjusting a function metric of the first long-term trading electricity price function to determine the reduction of the long-term trading volume.

12. The method according to claim 8, wherein the predicting long-term trading electricity prices based on a preset long-term electricity price function library and the first data vectors to establish a long-term trading stack comprises:

performing data-driven adjustment on a function metric of a preset electricity price function library by using the first data vectors to obtain a dynamic electricity price function library;
predicting respective long-term trading electricity prices of the associated power plants based on the dynamic electricity price function library and the power generation factor features; and
establishing the long-term trading stack based on the predicted long-term trading electricity prices of the associated power plants.

13. The method according to claim 8, wherein the establishing a spot trading stack based on spot trading electricity prices of the associated power plants comprises:

predicting respective electricity volumes of the associated power plants based on the first data vectors of the associated power plants;
establishing a preliminary spot trading stack based on the predicted electricity volumes of the associated power plants; and
adjusting the preliminary spot trading stack based on the spot trading electricity prices of the associated power plants to obtain the spot trading stack.

14. The method according to claim 8, wherein the performing low-order data abstraction based on power generation factor features of the associated power plants, to obtain first data vectors derived from the power generation factor features comprises:

establishing respective energy consumption data models for the associated power plants based on the power generation factor features, wherein the energy consumption data model for each of the associated power plants is used to evaluate a power generation performance of the associated power plant; and
performing low-order data abstraction on the power generation factor features by using the energy consumption data models, to obtain the first data vectors derived from the power generation factor features.

15. The method according to claim 5, wherein the electrical function requirement for enabling dispatching control of the power grid side over the power plant side is peak-shaving under highly-frequent load variations in a thermal power scenario, the functional operator is a thermal power peak-shaving operator, the thermal power peak-shaving operator is configured to achieve peak-shaving under highly-frequent load variations in the thermal power scenario, and a process of utilizing the intelligent agent constructed based on the thermal power peak-shaving operator in the digital power system comprises:

calculating a heat access margin of an energy storage device in a thermal power plant, wherein the heat access margin comprises a heat storage margin characterization value and a heat release capacity characterization value;
transmitting correlation data among loads, performances, and costs of respective thermal power units and the heat access margins in respective thermal power plants to the power grid side, to enable the power grid side to determine a target generating unit expected to assist in peak-shaving based on a change in a thermal power load requirement, the correlation data and the heat access margins provided by respective thermal power plants, and to issue a peak-shaving instruction;
receiving the peak-shaving instruction issued by the power grid side, wherein the peak-shaving instruction carries a unit identification of the target generating unit and peak-shaving requirement information for the target generating unit, and the peak-shaving requirement information comprises a peak-shaving load curve; and
performing a service of assisting in peak-shaving based on the peak-shaving requirement information.

16. The method according to claim 15, wherein the process of utilizing the intelligent agent constructed based on the thermal power peak-shaving operator further comprises:

before the determining a target generating unit expected to assist in peak-shaving, calculating quotation information for the thermal power unit that meets a requirement of a corresponding peak-shaving load curve to perform the service of assisting in peak-shaving based on the peak-shaving load curves of the respective thermal power units; and
transmitting the quotation information to the power grid side, and

wherein the determining, by the power grid side, a target generating unit expected to assist in peak-shaving based on a change in a thermal power load requirement, the correlation data and the heat access margins provided by respective thermal power plants comprises:

determining, by the power grid side, the target generating unit expected to assist in peak-shaving through data driving and weighing between cost and metrics based on the change in the thermal power load requirement, together with the correlation data, the heat access margins, and the quotation information provided by respective thermal power plants.

17. The method according to claim 16, wherein the determining, by the power grid side, the target generating unit expected to assist in peak-shaving through data driving and weighing between cost and metrics based on the change in the thermal power load requirement, together with the correlation data, the heat access margins, and the quotation information provided by respective thermal power plants comprises:

generating, by the power grid side, respective peak-shaving load curves of the thermal power units based on the change of the thermal power load requirement, together with the correlation data and the heat access margin provided by the respective thermal power plants, and calculating, by the power grid side, respective ramp coefficients of the thermal power units;
determining a plurality of thermal power units expected to assist in peak-shaving preliminarily based on the ramp coefficients of the thermal power units; and
determining the thermal power unit with the quotation information being less than or equal to K times a threshold quotation as the target generating unit expected to assist in peak-shaving in response that any of the plurality of thermal power units expected to assist in peak-shaving has the quotation information being less than or equal to K times the threshold quotation, wherein a value of the K ranges from 1.1 to 1.3,
wherein the threshold quotation is a quotation reference value obtained through deep learning of historical quotation information by the power grid side.

18. The method according to claim 17, wherein the process of utilizing the intelligent agent constructed based on the thermal power peak-shaving operator further comprises:

after the determining a plurality of thermal power units expected to assist in peak-shaving preliminarily, transmitting, by the power grid side, a heat pre-dispatching instruction to the plurality of thermal power units expected to assist in peak-shaving; and
cooperating in performing heat pre-dispatching based on the heat pre-dispatching instruction, by the target generating unit among the plurality of thermal power units expected to assist in peak-shaving, through a heat storage device in the thermal power plant to which the target generating unit belongs.

19. The method according to claim 17, wherein the peak-shaving requirement information further comprises ramp speed requirement information, and the performing a service of assisting in peak-shaving based on the peak-shaving requirement information comprises:

determining whether an equipment fault and a communication fault exists in the target generating unit, and determining whether the target generating unit meets the ramp speed requirement information;
in response to neither equipment fault nor communication fault existing in the target generating unit and the target generating unit meeting the ramp speed requirement information, performing the service of assisting in peak-shaving based on the peak-shaving load curves and the ramp speed requirement information in the peak-shaving requirement information;
in response to an equipment fault or a communication fault existing in the target generating unit, reporting a fault to the power grid side;
in response to the target generating unit failing to meet the ramp speed requirement information, reporting notification indicating that an operating condition is not met to the power grid side;
adjusting, by the power grid side, the peak-shaving requirement information in the peak-shaving instruction based on the notification indicating that the operating condition is not met; and
relearning, by the power grid side, to increase the threshold quotation based on the notification fed back from the thermal power plants indicating that the operating condition is not met, to determine an additional unit as the target generating unit expected to assist in peak-shaving.

20. The method according to claim 17, wherein calculating the ramp coefficient of each thermal power unit comprises:

extracting a ramp speed, a steam pressure and a rated power generation capacity from the correlation data among the load, the performance and the cost of the thermal power unit; and

calculating the ramp coefficient of the thermal power unit based on the ramp speed, the steam pressure and the rated power generation capacity of the thermal power unit, the heat access margin and a ramp time period required by the power plant side for the thermal power unit.

21. The method according to claim 20, wherein the heat access margin is represented by a percentage, and the calculating the ramp coefficient of the thermal power unit based on the ramp speed, the steam pressure and the rated power generation capacity of the thermal power unit, the heat access margin and a ramp time period required by the power plant side for the thermal power unit comprises:

calculating a product of the ramp speed, the ramp time period and the steam pressure of the thermal power unit and the heat access margin; and
calculating a ratio of the product to the rated power generation capacity of the thermal power unit, and determining the ratio as the ramp coefficient of the thermal power unit.

22. The method according to any one of claims 15 to 21, wherein the heat access margin and the correlation data are calculated based on a coal type parameter of a selected target coal type, and selecting the target coal type comprises:

acquiring a percentage difference between a higher heating value and a lower heating value of each coal type to be selected based on respective higher heating values and respective lower heating values corresponding to a plurality of coal types to be selected; and
determining the coal type with the smallest percentage difference between the higher heating value and the lower heating value among the plurality of coal types to be selected as the target coal type.

23. The method according to claim 22, wherein the percentage difference between the higher heating value and the lower heating value is a low-order feature obtained from feature extraction by the thermal power plant based on the coal type parameter of the coal type, and
the determining, by the power grid side, a target generating unit expected to assist in peak-shaving based on a change in a thermal power load requirement, the correlation data and the heat access margins provided by respective thermal power plants, and issuing, by the power grid, a peak-shaving instruction comprises:

extracting, by the power grid side, a mid-level feature based on the correlation data and the heat access margins provided by respective thermal power plants, wherein the mid-level feature comprises a feature reflecting an energy consumption level and a thermal energy reserve level of the power plant; integrating, by the power grid side, a coal price cost in the correlation data and the mid-level feature to obtain a high-level feature, wherein the high-level feature comprises a relationship among fuel, electricity volume and electricity price; and
determining, by the power grid side, the target generating unit expected to assist in peak-shaving based on the change of the thermal power load requirement, the mid-level feature, and the high-level feature, and issuing, by the power grid, the peak-shaving instruction.

24. The method according to claim 5, wherein the electrical function requirement for enabling dispatching control of the power grid side over the power plant side is to dispatch water resources of a cascade hydropower station system, the functional operator is a water resource dispatching operator, the water resource dispatching operator is configured to achieve dispatching of water resources of the cascade hydropower station system, and a process of utilizing the intelligent agent constructed based on the water resource dispatching operator in the digital power system comprises:

acquiring water resource data of respective hydropower stations in the cascade hydropower station system at a current time instant;
for each of the hydropower stations, determining whether the hydropower station is in a safe operation state based on the water resource data of the hydropower station;
in response to all hydropower stations being determined to be in a safe operation state, determining whether to perform water resource dispatching based on the water resource data of the hydropower stations, a preset electricity price scheme, and target historical data, wherein the target historical data comprises: an average water consumption for power generation and an average power plant revenue for a month corresponding to the current time instant; and
in response to determining to perform the water resource dispatching, determining a water resource dispatching scheme based on the water resource data of the hydropower stations and a water resource dispatching model, wherein the water resource dispatching model is trained in advance and is configured to output the water resource dispatching scheme, and the water resource dispatching scheme comprises day-ahead dispatching and seasonal dispatching.

25. The method according to claim 24, wherein the safe operation state comprises a water conservation safe state, and the for each of the hydropower stations, determining whether the hydropower station is in a safe operation state based on the water resource data of the hydropower station comprises:

for each of the hydropower stations, acquiring a measured velocity increase rate and a measured turbine hydrostatic pressure from the water resource data of the hydropower station;
determining that the hydropower station is in the water conservation safe state in response to the measured velocity increase rate being less than a theoretical velocity increase rate and the measured turbine hydrostatic pressure being less than a theoretical turbine hydrostatic pressure; and
determining that the hydropower station is not in the water conservation safe state in response to the measured velocity increase rate being greater than or equal to the theoretical velocity increase rate and the measured turbine hydrostatic pressure being greater than or equal to the theoretical turbine hydrostatic pressure.

26. The method according to claim 24, wherein the safe operation state comprises a vibration safe state, and the for each of the hydropower stations, determining whether the hydropower station is in a safe operation state based on the water resource data of the hydropower station comprises:

for each of the hydropower stations, acquiring a power of a hydropower generator from the water resource data of the hydropower station, and denoting the power as a first power;
determining whether the first power falls within a preset power range;
adjusting the first power to a second power in response to the first power falling within the preset power range, wherein the second power falls outside the preset power range; and
determining whether the hydropower station is in the vibration safe state in response to the first power falling outside the preset power range.

27. The method of claim 26, wherein the determining whether the hydropower station is in the vibration safe state comprises:

for each of the hydropower stations, acquiring a rotational speed of the hydropower generator and actual vibration values of components of the hydropower generator from the water resource data of the hydropower station; and
for each of the hydropower stations, in response to the actual vibration value of each of the components being less than a vibration allowable value corresponding to the rotational speed of the component, determining that the hydropower station is in the vibration safe state; otherwise, determining that the hydropower station is not in the vibration safe state.

28. The method according to claim 24, wherein before the acquiring water resource data of respective hydropower stations in the cascade hydropower station system at a current time instant, the process of utilizing the intelligent agent constructed based on the water resource dispatching operator in the digital power system further comprises:
performing a load rejection test on the cascade hydropower station system to determine whether operation parameters of respective hydropower stations in the cascade hydropower station system meet a requirement of a preset load rejection test index.

29. The method according to claim 24, wherein the determining whether to perform water resource dispatching based on the water resource data of the hydropower stations, a preset electricity price scheme, and target historical data comprises:

determining respective actual water consumptions for power generation and respective actual power plant revenues of all the hydropower stations as current actual data based on the water resource data of the hydropower stations and the preset electricity price scheme; and
determining whether to perform water resource dispatching based on a difference between the current actual data and the target historical data.

30. The method according to claim 29, wherein the determining respective actual water consumptions for power generation and respective actual power plant revenues of all the hydropower stations based on the water resource data of the hydropower stations and the preset electricity price scheme comprises:

> for each of the hydropower stations, acquiring an actual power generation volume and an actual water consumption for a target time period from the water resource data of the hydropower station, wherein the target time period is a past duration ending at the current time instant;
> for each of the hydropower stations, acquiring the actual water consumption for power generation for the target time period based on the actual power generation volume and the actual water consumption for the target time period; and
> for each of the hydropower stations, determining the actual power plant revenue for the target time period based on an electricity price scheme corresponding to the target time period and an actual water level of the hydropower station.

31. The method according to any one of claims 24 to 30, wherein acquiring the target historical data comprises:

> acquiring respective historical water consumptions for power generation and respective historical power plant revenues for all months over past N years, wherein N is an integer greater than or equal to 1;
> for each month, generating a historical power generation water consumption map corresponding to the month based on N historical water consumptions for power generation corresponding to the month, and generating a historical power plant revenue map corresponding to the month based on N historical power plant revenues corresponding to the month, wherein the historical power generation water consumption map represents a relationship between the historical water consumption for power generation and time, and the historical power plant revenue map represents a relationship between the historical power plant revenue and time; and
> determining an average water consumption for power generation derived from the historical power generation water consumption map for the month corresponding to the current time instant and an average power plant revenue derived from the historical power plant revenue map for the month corresponding to the current time instant as the target historical data.

32. The method according to any one of claims 24 to 30, wherein the water resource dispatching model is trained by:

> acquiring training data, wherein the training data comprises sample water resource data at a sample time instant, the electricity price scheme at the sample time instant, and a sample water resource dispatching scheme at the sample time instant of respective hydropower stations in the cascade hydropower station system, the sample time instant is one of a plurality of time instants when the hydropower stations operate in full operating conditions, the sample water resource data comprises historical water consumptions for power generation, historical power plant revenues, and historical average water assets, and the sample water resource dispatching scheme comprises day-ahead dispatching and seasonal dispatching;
> inputting the training data into a deep learning model, to obtain a predicted water resource dispatching scheme corresponding to the training data; and
> determining the sample water resource dispatching scheme as a ground truth, determining a back propagation error between a sample water resource deep dispatching scheme and the predicted water resource dispatching scheme by using a loss function, and updating network parameters of the deep learning model based on the back propagation error until the back propagation error reaches a set value, to obtain the water resource dispatching model.

33. The method according to claim 5, wherein the electrical function requirement for enabling dispatching control of the power grid side over the power plant side is dispatching on the power plant by the power grid in a power system with large unit capacity relative to small grid capacity, the functional operator is a dispatching operator for large unit capacity relative to small grid capacity, the dispatching operator for large unit capacity relative to small grid capacity is configured to achieve dispatching on the power plant by the power grid in the power system with large unit capacity relative to small grid capacity, and a process of utilizing the intelligent agent constructed based on the dispatching operator for large unit capacity relative to small grid capacity in the digital power system comprises:

> determining emergency reserve capacities for a plurality of power generation types to be reserved in a power system and configuring the power system with the emergency reserve capacities through digital feature extraction of the power grid and source points of the plurality of power generation types in the power system;
> determining whether the power system currently exhibits characteristics of large unit capacity relative to small grid capacity based on current outputs of the source points of the plurality of power generation types;
> in response to determining that the power system currently exhibits characteristics of large unit capacity relative to small grid capacity, dispatching, by the power grid, the source points in the power system for performing voltage adjustment based on a multi-round voltage adjustment scheme, and/or dispatching, by the power grid, the source points in the power system for frequency adjustment based on a multi-round frequency adjustment scheme by using the configured emergency reserve capacities of the plurality of power generation types, wherein the multi-round voltage adjustment scheme comprises: a multi-round voltage adjustment manner for the plurality of power generation types, a multi-round voltage adjustment range and multi-round voltage adjustment priority information, and the multi-round frequency adjustment scheme comprises: a multi-round frequency adjustment manner for the plurality of power generation types, a multi-round frequency adjustment range and multi-round frequency adjustment priority information;

generating, by the power grid, output curves of generating units of the respective source points in a future period based on a stability control requirement for a frequency dynamic characteristic index of an entire grid of the power system, a predicted load of the entire grid, and characteristics of generating units in the source points, wherein the frequency dynamic characteristic index is used to numerically represent a power change amount of the entire grid required to trigger a unit frequency change in the power system; and

issuing, by the power grid, a power generation dispatching instruction to each source point for performing power adjustment, wherein the power generation dispatching instruction for each source point comprises the output curves of generating units of the source point.

**34.** The method according to claim 33, wherein the multi-round voltage adjustment range comprises: photovoltaic power, hydropower, nuclear power, thermal power, and energy storage, the multi-round voltage adjustment priority information comprises: photovoltaic power> hydropower > nuclear power > thermal power > energy storage,

multiple rounds of voltage adjustment comprise: four basic rounds of voltage adjustment corresponding to photovoltaic power, hydropower, nuclear power, and thermal power, and one emergency round of voltage adjustment corresponding to a fault condition, and

the multi-round voltage adjustment manner comprises: operating voltage and delay for a first basic round, operating voltage step difference and delay for other basic rounds, and operating voltage and delay for the emergency round.

**35.** The method according to claim 34, wherein in the first basic round, the operating voltage is 0.84pu, and the delay is 15s to 20s,

in other basic rounds, the operating voltage step difference is 0.01pu, and the delay is 0.2s, and
in the emergency round, the operating voltage is 0.8pu, and the delay is 0.1s, and
wherein performing voltage adjustment by using the configured emergency reserve capacities of the plurality of power generation types based on the multi-round voltage adjustment scheme comprises:

in response to a voltage of the power system dropping to 0.84pu, initiating the first basic round of voltage adjustment corresponding to photovoltaic power and maintaining the first basic round of voltage adjustment for 15s to 20s, and inputting a portion of the emergency reserve capacity for photovoltaic power into the power grid during the first basic round of voltage adjustment;
in response to a voltage adjustment result of the first basic round failing to achieve an expected result, initiating a second basic round of voltage adjustment corresponding to hydropower when the voltage of the power system drops to 0.83pu, maintaining the second basic round of voltage adjustment for 0.2s, and inputting a portion of the emergency reserve capacity for hydropower into the power grid during the second basic round of voltage adjustment;
in response to the voltage adjustment result of the second basic round failing to achieve the expected result, initiating a third basic round of voltage adjustment corresponding to nuclear power when the voltage of the power system drops to 0.82pu, maintaining the third basic round of voltage adjustment lasts 0.2s, and inputting a portion of the emergency reserve capacity for nuclear power into the power grid during the third basic round of voltage adjustment;
in response to the voltage adjustment result of the third basic round failing to achieve the expected result, initiating a fourth basic round of voltage adjustment corresponding to thermal power when the voltage of the power system drops to 0.81pu, maintaining the fourth basic round of voltage adjustment for 0.2s, and inputting a portion of the emergency reserve capacity for thermal power into the power grid during the fourth basic round of voltage adjustment; and
in response to the voltage adjustment result of the fourth basic round failing to achieve the expected result, initiating the emergency round of voltage adjustment to cut off a load or activate an energy storage system when it is detected that the voltage of the power system drops to 0.8pu, and inputting all or part of the remaining emergency reserve capacities of the plurality of power generation types into the power grid during the emergency round of voltage adjustment.

36. The method according to claim 33, wherein the multi-round frequency adjustment range comprises: thermal power, hydropower, nuclear power, and energy storage, the multi-round frequency adjustment priority information comprises: thermal power > hydropower > nuclear power > energy storage,

multiple rounds of frequency adjustment comprise: three basic rounds of frequency adjustment corresponding to thermal power, hydropower, and nuclear power, and one emergency round of frequency adjustment corresponding to a fault condition, and
the multi-round frequency adjustment manner comprise: operating frequency and delay for the first basic round, operating frequency step difference and delay for other basic rounds, and operating frequency and delay for the emergency round.

37. The method according to claim 36, wherein in the first basic round, the operating frequency is 49.8Hz, and the delay is 0.2s,

in other basic rounds, the operating frequency step difference is 0.2Hz, and the delay is 0.2s, and
in the emergency round, the operating frequency is 49.2Hz, and the delay is 0.1s, and
wherein performing frequency adjustment by using the configured emergency reserve capacities of the plurality of power generation types based on the multi-round frequency adjustment scheme comprises:

in response to a frequency of the power system dropping to 49.8Hz, initiating the first basic round of frequency adjustment corresponding to thermal power, maintaining the first basic round of frequency adjustment for 0.2s, and inputting a portion of the emergency reserve capacity for thermal power into the power grid during the first basic round of frequency adjustment;
in response to a frequency adjustment result of the first basic round failing to achieve an expected result, initiating a second basic round of frequency adjustment corresponding to hydropower when the frequency of the power system drops to 49.6Hz, maintaining the second basic round of frequency adjustment for 0.2s, and inputting a portion of the emergency reserve capacity for hydropower into the power grid during the second basic round of frequency adjustment;
in response to the frequency adjustment result of the second basic round failing to achieve the expected result, initiating a third basic round of frequency adjustment corresponding to nuclear power when the frequency of the power system drops to 49.4Hz, maintaining the third basic round of frequency adjustment for 0.2s, and inputting a portion of the emergency reserve capacity for nuclear power into the power grid during the third basic round of frequency adjustment; and
in response to the frequency adjustment result of the third basic round failing to achieve the expected result, initiating the emergency round of frequency adjustment to cut off a load or activate an energy storage system when it is detected that the frequency of the power system drops to 49.2Hz, and inputting all or part of the remaining emergency reserve capacities of the plurality of power generation types into the power grid during the emergency round of frequency adjustment.

38. The method according to claim 33, wherein the generating, by the power grid, output curves of generating units of the respective source points in a future period based on a stability control requirement for a frequency dynamic characteristic index of an entire gird of the power system, a predicted load of the entire grid, and characteristics of generating units in the source points comprises:

determining a target value of the frequency dynamic characteristic index;
generating the output curves of generating units of the respective source points in the future period based on the target value, a detected frequency disturbance amount of the power system, the predicted load of the entire grid, and the characteristics of generating units in the source points, to control respective powers of the units through the output curves, and controlling a deviation between an actual value of the frequency dynamic characteristic index and the target value to be within a preset index fluctuation range, wherein the characteristics of generating units of each source point comprises a power change amount required from the units of the source point in response to a unit frequency change.

39. The method according to claim 38, wherein the generating the output curves of generating units of the respective source points in a future period based on the target value, a detected frequency disturbance amount of the power system, the predicted load of the entire grid, and the characteristics of generating units in the source points comprises:

determining, based on the target value, the detected frequency disturbance amount of the power system, and the characteristics of generating units in the source points, respective power change amounts required from the source points of the plurality of power generation types to control the deviation between the actual value of the frequency dynamic characteristic index and the target value to be within the preset index fluctuation range; and generating the output curves of generating units of the respective source points in the future period, based on the predicted load of the entire grid in the future period and the determined power change amounts required from the source points of the plurality of power generation types.

40. The method according to any one of claims 33 to 39, wherein the determining whether the power system currently exhibits characteristics of large unit capacity relative to small grid capacity based on outputs of the source points of the plurality of power generation types comprises:
determining that the power system exhibits characteristics of large unit capacity relative to small grid capacity in response to a sum of the outputs of two units in the source point of any one of the plurality of power generation types exceeds a total capacity of the power system by 15%.

41. The method according to claim 5, wherein the electrical function requirement for self-regulation of the power grid is to adjust a grid structure of the power grid, the functional operator is a grid structure adjusting operator, the grid structure adjusting operator is configured to adjust the grid structure of the power grid, and a process of utilizing the intelligent agent constructed based on the grid structure adjusting operator in the digital power system comprises:

acquiring a current system inertia corresponding to a current grid structure;
calculating a frequency change rate based on the current system inertia and a difference between a power demand and an actual power supply;
in response to the frequency change rate being greater than a preset first threshold, determining a target grid structure and a target setting value corresponding to the target grid structure based on a pre-established deep learning model, wherein the frequency change rate of the target grid structure is less than or equal to the preset first threshold; and
modifying a current setting value applied in the current grid structure based on the target setting value, and adjusting the current grid structure of the power grid to the target grid structure.

42. The method according to claim 41, wherein the determining a target grid structure based on a pre-established deep learning model comprises:
calculating simulated system inertia of all candidate grid structures in parallel based on the pre-established deep learning model, and determining the candidate grid structure with a maximum simulated system inertia as the target grid structure.

43. The method according to claim 41, wherein the determining a target grid structure based on a pre-established deep learning model comprises:

calculating, based on operating parameters of all candidate grid structures, respective frequency change rates corresponding to a plurality of schemes for adjusting the current grid structure to the candidate grid structures and a change amount of a difference between power generation and a power requirement by using the pre-established deep learning model, to obtain respective types of the plurality of schemes, wherein the types comprise a stable type and a radical type; and
in response to presence of a stable-type method, determining the target grid structure from the candidate grid structures corresponding to the stable-type method.

44. The method according to claim 41, wherein before the determining a target grid structure and a target setting value corresponding to the target grid structure based on a pre-established deep learning model, the method further comprises:
in response to a fault node detected, disconnecting the fault node from the current grid structure, wherein the node comprises at least one of a power plant, a substation, and a dispatching control center.

45. The method according to claim 41, wherein the determining a target grid structure based on a pre-established deep learning model comprises:

determining the target grid structure that meets a balance condition between power generation and a power requirement based on a matching state of the power generation and the power requirement in the current grid structure by using the pre-established deep learning model.

46. The method according to claim 45, wherein the determining the target grid structure that meets a balance condition between power generation and a power requirement based on a matching state of the power generation and the power requirement in the current grid structure by using the pre-established deep learning model comprises:

acquiring respective power generation change rates of all generator-type grid nodes in the current grid structure; in response to presence of a grid node which suffers a decrease in the power generation and has the power generation change rate greater than a preset change rate threshold, determining, based on the matching state of the power generation and the power requirement in the current grid structure by using the pre-established deep learning model, the target grid structure of incorporating a generator-type grid into the current grid structure; and in response to presence of a grid node which suffers an increase in the power generation and has the power generation change rate greater than the preset change rate threshold, determining, based on the matching state of the power generation and the power requirement in the current grid structure by using the pre-established deep learning model, the target grid structure of incorporating a load-type grid into the current grid structure.

47. The method according to claim 41, wherein the determining a target grid structure based on a pre-established deep learning model comprises:
determining the target grid structure with stability exceeding a preset limit based on a security priority of the current grid structure by using the pre-established deep learning model.

48. The method according to claim 41, wherein the determining a target grid structure based on a pre-established deep learning model comprises:

acquiring respective performance influence degrees exerted on other grid elements of the power system by a plurality of schemes for adjusting the current grid structure to candidate grid structures, based on the pre-established deep learning model and a grid transfer function; and determining the target grid structure based on the pre-established deep learning model and the performance influence degrees.

49. The method according to claim 41, wherein the determining a target setting value corresponding to the target grid structure based on a pre-established deep learning model comprises:
determining the target setting value corresponding to the target grid structure based on a typical value library and the target grid structure by using the pre-established deep learning model, wherein the typical value library at least comprises correspondences between historical setting value data and grid structures.

50. The method according to claim 41, wherein the adjusting the current grid structure of the power grid to the target grid structure comprises:

determining, based on the current grid structure and the target grid structure, a target operation to be performed by a plurality of relays, wherein the target operation is opening or closing; and controlling the plurality of relays to perform the target operation based on operation time information of the plurality of relays, to adjust the current grid structure to the target grid structure, wherein the operation time information comprises a transmission duration of the target setting value, a duration required for writing the target setting value, a duration of a protection operation, a duration required for closing the relay, a duration required for opening the relay, and a duration required for returning state information.

51. The method according to claim 41, wherein the adjusting the current grid structure of the power grid to the target grid structure comprises:

performing parallel calculation based on the target setting value stored in a binary tree structure to obtain respective operation information of a plurality of relays that each is required to perform a target operation during a process of adjusting the current grid structure to the target grid structure, wherein the target operation is opening or closing, and the operation information comprises a time point at which each relay is allowed to operate and a sequence in which the plurality of relays perform operations; and controlling each of the plurality of relays to perform the target operation based on the operation information of the plurality of relays to adjust the current grid structure to the target grid structure.

52. An apparatus for constructing a digital power system based on a multifunctional intelligent agent, comprising:

a data extraction module, configured to extract feature production factor data corresponding to a feature production factor set from power data of a power plant side, and extract control production factor data corresponding to a control production factor set from the power data of a power grid side, wherein the feature production factor set comprises feature production factors in a plurality of levels, and the control production factor set comprises control production factors in a plurality aspects;

a vector construction module, configured to construct a target data vector based on an electrical function requirement for the digital power system by using the extracted feature production factor data;

a data determination module, configured to determine key control production factor data associated with the electrical function requirement among the extracted control production factor data;

an operator construction module, configured to acquire a mapping function representing mapping between the target data vector and the key control production factor data based on the target data vector and the key control production factor data by using an artificial intelligence algorithm, construct a functional operator with the mapping function as a kernel, and construct an intelligent agent based on the functional operator; and

an intelligent agent addition module, configured to configure the digital power system with respective intelligent agents corresponding to different electrical function requirements, and determine each of the intelligent agents as an electrical function executing unit in the digital power system.

53. The apparatus according to claim 52, wherein the electrical function requirement is one of:
an electrical function requirement for power trading between the power grid side and the power plant side, an electrical function requirement for enabling dispatching control of the power grid side over the power plant side, or an electrical function requirement for self-regulation of a power grid.

54. The apparatus according to claim 53, wherein the electrical function requirement for power trading between the power grid side and the power plant side is to calculate an electricity price, the functional operator is an electricity price operator, the electricity price operator is configured to calculate the electricity price, and a process of utilizing the intelligent agent constructed based on the electricity price operator in the digital power system comprises:

utilizing the intelligent agent to obtain an electricity price calculation result for the power plant side by using the electricity price operator;

verifying the electricity price calculation result by using a financial verification model for the power grid side, wherein the financial verification model comprises a first verification condition and a second verification condition, the first verification condition is: actual outputs of respective types of power plants $\geq$ an electricity volume of the power grid, and the second verification condition is: a sum of products of the actual outputs of respective types of power plants, electricity prices of the power grid at respective time instants for each type of power plant, and a power generation duration $\leq$ a product of an average electricity price and the electricity volume of the power grid;

in response to the electricity price calculation result meeting the first verification condition and the second verification condition, determining that the electricity price calculation result passes the verification; in response to the electricity price calculation result failing to meet the first verification condition or the second verification condition, determining that the electricity price calculation result fails to pass the verification;

in response to the electricity price calculation result passing the verification, further selecting, from a dispatching strategy library, a function for calculating the electricity price that is feasible and adaptive to the power grid side, and loading the function into the electricity price operator to update the electricity price operator; and

acquiring the electricity price calculation result for the power grid side by using the updated electricity price operator.

55. The apparatus according to claim 53, wherein the electrical function requirement for power trading between the power grid side and the power plant side is power clearing, the functional operator is a clearing operator, the clearing operator is configured for power clearing, and a process of utilizing the intelligent agent constructed based on the clearing operator in the digital power system comprises:

performing low-order data abstraction based on power generation factor features of respective associated power plants for the power grid, to obtain first data vectors derived from the power generation factor features;

predicting long-term trading electricity prices based on a preset long-term electricity price function library and the first data vectors to establish a long-term trading stack;

establishing a spot trading stack based on spot trading electricity prices of the associated power plants, and determining a first clearing function based on the long-term trading stack and the spot trading stack;

determining a power supply-demand balance state of the power grid based on the first clearing function in response to the first clearing function being used for power clearing; and

adjusting the first clearing function based on the power supply-demand balance state to obtain a second clearing function, and performing power clearing based on the second clearing function.

56. The apparatus according to claim 53, wherein the electrical function requirement for enabling dispatching control of the power grid side over the power plant side is peak-shaving under highly-frequent load variations in a thermal power scenario, the functional operator is a thermal power peak-shaving operator, the thermal power peak-shaving operator is configured to achieve peak-shaving under highly-frequent load variations in the thermal power scenario, and a process of utilizing the intelligent agent constructed based on the thermal power peak-shaving operator in the digital power system comprises:

calculating a heat access margin of an energy storage device in a thermal power plant, wherein the heat access margin comprises a heat storage margin characterization value and a heat release capacity characterization value;

transmitting correlation data among loads, performances, and costs of respective thermal power units and the heat access margins in respective thermal power plants to the power grid side, to enable the power grid side to determine a target generating unit expected to assist in peak-shaving based on a change in a thermal power load requirement, the correlation data and the heat access margins provided by respective thermal power plants, and to issue a peak-shaving instruction;

receiving the peak-shaving instruction issued by the power grid side, wherein the peak-shaving instruction carries a unit identification of the target generating unit and peak-shaving requirement information for the target generating unit, and the peak-shaving requirement information comprises a peak-shaving load curve; and

performing a service of assisting in peak-shaving based on the peak-shaving requirement information.

57. The apparatus according to claim 53, wherein the electrical function requirement for enabling dispatching control of the power grid side over the power plant side is to dispatch water resources of a cascade hydropower station system, the functional operator is a water resource dispatching operator, the water resource dispatching operator is configured to achieve dispatching of water resources of the cascade hydropower station system, and a process of utilizing the intelligent agent constructed based on the water resource dispatching operator in the digital power system comprises:

acquiring water resource data of respective hydropower stations in the cascade hydropower station system at a current time instant;

for each of the hydropower stations, determining whether the hydropower station is in a safe operation state based on the water resource data of the hydropower station;

in response to all hydropower stations being determined to be in a safe operation state, determining whether to perform water resource dispatching based on the water resource data of the hydropower stations, a preset electricity price scheme, and target historical data, wherein the target historical data comprises: an average water consumption for power generation and an average power plant revenue for a month corresponding to the current time instant; and

in response to determining to perform the water resource dispatching, determining a water resource dispatching scheme based on the water resource data of the hydropower stations and a water resource dispatching model, wherein the water resource dispatching model is trained in advance and is configured to output the water resource dispatching scheme, and the water resource dispatching scheme comprises day-ahead dispatching and seasonal dispatching.

58. The apparatus according to claim 53, wherein the electrical function requirement for enabling dispatching control of the power grid side over the power plant side is dispatching on the power plant by the power grid in a power system with large unit capacity relative to small grid capacity, the functional operator is a dispatching operator for large unit capacity relative to small grid capacity, the dispatching operator for large unit capacity relative to small grid capacity is configured to achieve dispatching on the power plant by the power grid in the power system with large unit capacity relative to small grid capacity, and a process of utilizing the intelligent agent constructed based on the dispatching operator for large unit capacity relative to small grid capacity in the digital power system comprises:

determining emergency reserve capacities for a plurality of power generation types to be reserved in a power system and configuring the power system with the emergency reserve capacities through digital feature extraction of the power grid and source points of the plurality of power generation types in the power system; determining whether the power system currently exhibits characteristics of large unit capacity relative to small grid capacity based on current outputs of the source points of the plurality of power generation types;

in response to determining that the power system currently exhibits characteristics of large unit capacity relative to small grid capacity, dispatching, by the power grid, the source points in the power system for performing voltage adjustment based on a multi-round voltage adjustment scheme, and/or dispatching, by the power grid, the source points in the power system for frequency adjustment based on a multi-round frequency adjustment scheme by using the configured emergency reserve capacities of the plurality of power generation types, wherein the multi-round voltage adjustment scheme comprises: a multi-round voltage adjustment manner for the plurality of power generation types, a multi-round voltage adjustment range and multi-round voltage adjustment priority information, and the multi-round frequency adjustment scheme comprises: a multi-round frequency adjustment manner for the plurality of power generation types, a multi-round frequency adjustment range and multi-round frequency adjustment priority information;

generating, by the power grid, output curves of generating units of the respective source points in a future period based on a stability control requirement for a frequency dynamic characteristic index of an entire grid of the power system, a predicted load of the entire grid, and characteristics of generating units in the source points, wherein the frequency dynamic characteristic index is used to numerically represent a power change amount of the entire grid required to trigger a unit frequency change in the power system; and

issuing, by the power grid, a power generation dispatching instruction to each source point for performing power adjustment, wherein the power generation dispatching instruction for each source point comprises the output curves of generating units of the source point.

59. The apparatus according to claim 53, wherein the electrical function requirement for self-regulation of the power grid is to adjust a grid structure of the power grid, the functional operator is a grid structure adjusting operator, the grid structure adjusting operator is configured to adjust the grid structure of the power grid, and a process of utilizing the intelligent agent constructed based on the grid structure adjusting operator in the digital power system comprises:

acquiring a current system inertia corresponding to a current grid structure;

calculating a frequency change rate based on the current system inertia and a difference between a power demand and an actual power supply;

in response to the frequency change rate being greater than a preset first threshold, determining a target grid structure and a target setting value corresponding to the target grid structure based on a pre-established deep learning model, wherein the frequency change rate of the target grid structure is less than or equal to the preset first threshold; and

modifying a current setting value applied in the current grid structure based on the target setting value, and adjusting the current grid structure of the power grid to the target grid structure.

Collect data and input the collected data

Determine data amount to determine whether a small sample or a large sample

Small sample

Large sample

Fit data to regress the data to a convergence value by using a mathematical tool or a mathematical formula

Clean data to delete or process abnormal data based on the fitted data

Extract a feature from data to determine whether the feature is a production factor feature or a control production factor feature

Construct an intelligent agent, determine key processes or constraints by analyzing an inherent logic of the power industry, establish interfaces for deep learning and reinforcement learning for the constructed intelligent agent to receive data to be subjected to data feature extraction, and further perform deep learning or reinforcement learning based on features and classifications

Establish an output function of an output layer based on a result obtained by deep learning or reinforcement learning, and adjust the output function by using a back propagation algorithm to finely adjust and correct intermediate results of various layers

Generalize the output function into a control logic to integrate it with the intelligent agent, and nest the intelligent agent and its key internal data factors into the control logic of an execution subject to achieve a data-driven function

**FIG.1A**

**FIG.1B**

EP 4 779 836 A1

```
                                    ┌──────────────────────────────────┐
                                    │ (1)Vectorization of security     │
                                    │ data to protect a setting value  │
                                    └──────────────────────────────────┘

                                    ┌──────────────────────────────────┐
                                    │ (2)Vectorization of production   │
                                    │ factor data                      │
                                    └──────────────────────────────────┘

                                    ┌──────────────────────────────────┐
                                    │ (3)Vectorization of other data   │
                                    └──────────────────────────────────┘

         ┌────────────────────┐     ┌──────────────────────────────────┐
         │ Vectorization of   │     │ (4)Dispatching algorium          │
         │ power data         │     └──────────────────────────────────┘

                                    ┌──────────────────────────────────┐
         ┌────────────────────┐     │ (5)Perform more complex          │
         │ Vectorization of   │     │ dispatching by artificial        │
┌──────┐ │ dispatching        │     │ intelligence                     │
│Digit-│                            └──────────────────────────────────┘
│alized│
│power │ ┌────────────────────┐     ┌──────────────────────────────────┐
└──────┘ │ Digitalization of  │     │ (6)Continuous and normalized     │
         │ all production     │     │ processing of production factor  │
         │ factors            │     │ data                             │
                                    └──────────────────────────────────┘

         ┌────────────────────┐     ┌──────────────────────────────────┐
         │ Digitalization of  │     │ (7)Digital functionalization of  │
         │ an entire          │     │ production and settlement        │
         │ industrial chain   │     └──────────────────────────────────┘

                                    ┌──────────────────────────────────┐
                                    │ (8)Functionalization of          │
                                    │ electricity price and dispatching│
                                    │ (virtual power plant)            │
                                    └──────────────────────────────────┘

                                    ┌──────────────────────────────────┐
                                    │ (9)Digitalization of an entire   │
                                    │ industrial chain                 │
                                    └──────────────────────────────────┘

                                    ┌──────────────────────────────────┐
                                    │ (10)Digitalization from both     │
                                    │ demand and supply sides          │
                                    └──────────────────────────────────┘
```

**FIG.1C**

Focus on logical function
association

Focus on feature
extraction

Control production factor set

Reinforcement
learning

Deep
learning

Intelligent
agent

Apply an artificial
intelligence method

Feature production factor set

Electricity
price

Inertia and
frequency

Power
grid
side

Active power
and reactive
power

Digitalized
power
association

Electricity
carbon emission

Security and
stability

Grid synchronization
and separation of a
power grid

First-level feature
production factor

Power
plant
side

Second-level
feature production
factor

Third-level
feature production
factor

**FIG.1D**

S101 | Extract feature production factor data corresponding to a feature production factor set from power data of a power plant side, and extract control production factor data corresponding to a control production factor set from the power data of a power grid side

S102 | Construct a target data vector based on an electrical function of a digital power system by using the extracted feature production factor data, and determine key control production factor data associated with the electrical function requirement among the extracted control production factor data

S103 | Acquire a mapping function representing mapping between the target data vector and the key control production factor data based on the target data vector and the key control production factor data by using an artificial intelligence algorithm, construct a functional operator with the mapping function as a kernel, and construct an intelligent agent based on the functional operator

S104 | Configure the digital power system with respective intelligent agents corresponding to various electrical function requirements, and determine each of the intelligent agents as an electric function executing unit in the digital power system

**FIG.1E**

**FIG.1F**

Control production factor set | Feature production factor set

Electricity price

Inertia and frequency

Power grid side

Active power and reactive power

Electricity carbon emission

Security and stability

Grid synchronization and separation of a power grid

Digitalized power association

First-level feature production factor

Power plant side

Second-level feature production factor

Third-level feature production factor

**FIG.1G**

Robot

Intelligent agent 1

Operator 1

Function

Feature production factor data

Control production factor data

Operator 2

Function

Operator 3

Function

Intelligent agent 2

Operator ... Operator

...

Intelligent agent N

Operator ... Operator

**FIG.1H**

FIG.1I

**FIG.1J**

Extract key control
production factor data related
to electricity price calculation
from power data of a power
grid side

↓

Align these data vectors to
obtain a comprehensive
production factor data vector

↓

Obtain an electricity price
operator by using an artificial
intelligence algorithm

↓

Perform verification by using
a financial verification model
for the power grid side (first
verification condition, second
verification condition)

Select an
electricity price
calculation function feasible
and adaptive to the power grid
side from a dispatch
strategy library

Y

↓

Record, by the power grid side, the
applied trading electricity volume and
electricity price reported by the power
plant side to the power grid side

↓

Determine
whether to maintain
stable operation of the power
grid based on the power grid side,
to determine whether a virtual
power
plant function is to
be activated

N

↓

Issue, by the power grid side,
dispatching instructions for
clearing electricity prices and
clearing electricity volumes
to various types of power
plants based on an electricity
price calculation result of the
power grid side

N

Y

Perform deep learning
by using a grid energy
consumption efficiency
operator, an average
electricity price
operator, and other
critical production
factor operators, to
obtain a result serving
as a data sample

**FIG.2A**

Collect data of various feature
production factors from the power
plant side to form data vectors

Train an electricity price operator
based on key control production
factor data of the power grid side

Receive, by the power plant side,
a clearing electricity price given
by the power grid side

Perform verification by using a
financial verification model of the
power plant side based on a cost
of the power plant and the
clearing electricity price (third
verification condition)

Determine
whether different
source points of the same
power plant type can be cleared
based on electricity volumes
and electricity
prices

Y

Apply a clearing
electricity volume in
response to all source
points being cleared

Corresponding
operations for adjusting
a load of a unit

N

Calculate a production cost
of the power plant or adjust
the clearing electricity price
of the power plant

**FIG.2B**

| Power plant side | Power analysis intelligent agent | Power grid side |
|---|---|---|

Feature production factor data → Electricity price operator ← Control production factor data

Perform verification by using a financial verification model

←Update— Dispatch strategy library

Apply a trading electricity volume and a trading electricity price → Record

Instructions for electricity price clearing and dispatching an electricity volume

Determine whether stable operation of a power grid is maintained, to determine whether a virtual power plant function is to be activated

Perform verification by using a financial verification model

Determine clearing conditions of source points

Apply a clearing electricity volume, and perform an operation of a unit

**FIG.2C**

Perform low-order data abstraction based on power generation factor features of all associated power plants, to obtain first data vectors derived from the power generation factor features
/ S301

Predict long-term trading electricity prices based on a preset long-term electricity price function library and the first data vectors to establish a long-term trading stack
/ S302

Establish a spot trading stack based on spot trading electricity prices of all the associated power plants, and determine a first clearing function based on the long-term trading stack and the spot trading stack
/ S303

Determine a power supply-demand balance state of the target power grid based on the first clearing function in response to the first clearing function being used for power clearing
/ S304

Adjust the first clearing function based on the power supply-demand balance state to obtain a second clearing function, and perform power clearing based on the second clearing function
/ S305

**FIG.3A**

```
┌──────────────┐                          ┌──────────────┐
│  Associated  │                          │ Target power │
│ power plant  │                          │  grid side   │
│     side     │                          └──────────────┘
└──────────────┘                                 │
       │                                  Perform low-order data abstraction
Calculate respective spot trading         based on power generation factor
electricity prices corresponding          features of the associated power
to the associated power plants            plants to obtain first data vectors
based on respective formulas for                 │
calculating the spot trading              Predict long-term trading electricity
electricity prices for the                prices based on the first data
associated power plants                   vectors and a preset long-term
       │                                  electricity price function library to
       │                                  establish a long-term trading stack
       │        Spot trading electricity price      │
       │──────────────────────────────────────────▶│
       │                                  Establish a spot trading stack based
       │                                  on the spot trading electricity prices
       │                                  of the associated power plants, and
       │                                  determine a first clearing function
       │                                  based on the spot trading stack and
       │                                  the long-term trading stack
       │                                         │
       │                                  Determine a power supply-demand
       │                                  balance state of a target power grid
       │                                  during clearing under the first
       │                                  clearing function based on the first
       │                                  clearing function
       │                                         │
       │                                  Adjust the first clearing function based
       │                                  on an actual power supply-demand
       │                                  balance state of the target power grid
       │                                  to obtain a second clearing function,
       │                                  and perform power clearing based on
       │                                  the second clearing function
       │                                         │
```

**FIG.3B**

Establish respective energy consumption data models for the associated power plants based on the power generation factor features, where the energy consumption data model for each of the associated power plants is used to evaluate a power generation performance of the associated power plant

S1101

Perform low-order data abstraction on the power generation factor features by using the energy consumption data models, to obtain the first data vectors derived from the power generation factor features

S1102

**FIG.3C**

Long-term trading electricity price which is gradually rising

| |
| --- |
| Long-term trading electricity price for a photovoltaic power plant |
| Long-term trading electricity price for a hydropower plant |
| Long-term trading electricity price for a thermal power plant |
| Long-term trading electricity price for a nuclear power plant |

Stack decreases progressively from bottom to top

**FIG.3D**

Perform data-driven adjustment on a function metric of a preset electricity price function library by using the first data vectors to obtain a dynamic electricity price function library ⟋ S2201

Predict respective long-term trading electricity prices of the associated power plants based on the dynamic electricity price function library and the power generation factor features ⟋ S2202

Establish the long-term trading stack based on the predicted long-term trading electricity prices of the associated power plants ⟋ S2203

**FIG.3E**

| Calculation | Heat consumption rate of a unit (kJ/kWh) (LHV) | Heat consumption of a steam turbine (kJ/kWh) | Boiler efficiency (LHV) | Boiler efficiency (HHV) | Power consumption rate of a plant | Heat consumption after 2.5% loss in an initial year of the unit (kcal/kWh) | Reported coal consumption for power supply (g/kWh)) |
|---|---|---|---|---|---|---|---|
| 100% | 8505.20 | 7650 | 94.00% | 87.76% | 5.71% | 2138.40 | 302.61 |
| 95% | 8558.87 | 7693 | 94.03% | 87.79% | 5.80% | 2152.69 | 304.93 |
| 90% | 8612.62 | 7736 | 94.05% | 87.81% | 5.89% | 2167.01 | 307.25 |
| 85% | 8666.45 | 7779 | 94.08% | 87.84% | 5.98% | 2181.36 | 309.58 |
| 80% | 8720.35 | 7822 | 94.10% | 87.86% | 6.07% | 2195.74 | 311.92 |
| 75% | 8774.33 | 7865 | 94.13% | 87.88% | 6.16% | 2210.14 | 314.26 |
| 70% | 8917.53 | 7973 | 94.09% | 87.84% | 6.35% | 2245.71 | 319.98 |
| 65% | 9061.43 | 8082 | 94.05% | 87.80% | 6.54% | 2281.43 | 325.73 |
| 60% | 9206.04 | 8190 | 94.00% | 87.75% | 6.74% | 2317.30 | 331.54 |
| 55% | 9351.36 | 8299 | 93.96% | 87.71% | 6.93% | 2353.32 | 337.38 |
| 50% | 9497.39 | 8407 | 93.92% | 87.68% | 7.12% | 2389.48 | 343.28 |
| 45% | 9725.09 | 8567 | 93.72% | 87.48% | 7.37% | 2442.13 | 351.79 |
| 40% | 9961.29 | 8726 | 93.45% | 87.24% | 7.62% | 2495.06 | 360.38 |

**FIG.3F**

| Calculation | Specific heat index SHR¥ (kcal/KWh) | Gross calorific value of coal GCVs (kcal/kg) | ECM$_R$ is SHRW * (1/GCVs) * Pm (USD/KWh) | P$_M$(USD/TON) | Electricity volume Ea=NEOm, (KWh) | Power grid compensation coefficient for 1 kilowatt-hour electricity payment CERm=Pm*SHRW/GCVs(1-AUX) (USD/KWh) | Electricity charge EP=NEOm* CERx (USD) | Power consumption rate of a plant AUX(%) | Actual coal consumption of 1 kilowatt-hour electricity COAL RATE(g/KWh) |
|---|---|---|---|---|---|---|---|---|---|
| 100% | 2138.4 | 5038.7 | 0.0292832 | 69 | 9.267E+09 | 0.0310532 | 287772057 | 0.0571 | 302.61 |
| 100% | 2210.14 | 5038.7 | 0.030266 | 69 | 9.27E+09 | 0.032095 | 2.97E+08 | 0.0571 | 312.76 |
| 95% | 2152.69 | 5038.7 | 0.0294789 | 69 | 8.804E+09 | 0.0310532 | 273383454 | 0.058 | 304.93 |
| 90% | 2167.01 | 5038.7 | 0.0296751 | 69 | 8.34E+09 | 0.0314688 | 262460622 | 0.0589 | 307.25 |
| 85% | 2181.36 | 5038.7 | 0.0298716 | 69 | 7.877E+09 | 0.0316805 | 249547253 | 0.0598 | 309.58 |
| 80% | 2195.74 | 5038.7 | 0.0300684 | 69 | 7.414E+09 | 0.0319198 | 236641769 | 0.0607 | 311.92 |
| 75% | 2210.14 | 5038.7 | 0.0302657 | 69 | 6.95E+09 | 0.0321599 | 223520533 | 0.0616 | 314.26 |
| 70% | 2245.71 | 5038.7 | 0.0307528 | 69 | 6.487E+09 | 0.0327088 | 212179949 | 0.06352 | 319.98 |
| 65% | 2281.43 | 5038.7 | 0.031242 | 69 | 6.024E+09 | 0.0332609 | 200349854 | 0.06544 | 325.73 |
| 60% | 2317.3 | 5038.7 | 0.0317331 | 69 | 5.56E+09 | 0.0338162 | 188025947 | 0.06736 | 331.54 |
| 55% | 2353.32 | 5038.7 | 0.0322263 | 69 | 5.097E+09 | 0.0344122 | 175394718 | 0.06928 | 337.38 |
| 50% | 2389.48 | 5038.7 | 0.0327215 | 69 | 4.634E+09 | 0.0350128 | 162232654 | 0.0712 | 343.28 |
| 45% | 2442.13 | 5038.7 | 0.0334425 | 69 | 4.17E+09 | 0.0358579 | 149533740 | 0.0737 | 351.79 |
| 40% | 2495.06 | 5038.7 | 0.0341674 | 69 | 3.707E+09 | 0.0367107 | 136080104 | 0.0762 | 360.38 |

**FIG.3G**

Electricity volume to be placed in
a buffer area

Electricity price of 0.4 cents per kWh

Market-oriented spot trading volume at a top
portion of a stack 2

Electricity price of 0.45 cents per kWh

Decrease the
long-term
trading volume
and increase it
to the spot
trading volume

Market-oriented spot trading volume at a top
portion of a stack 1

Long-term trading volume 2 for wind power
in a middle portion 2 of the stack

Long-term trading volume 2 for photovoltaic
in a middle portion 1 of the stack

Long-term trading volume 1 for wind power
in the middle portion 2 of the stack

Decrease the
spot trading
volume and
increase it to the
long-term
trading volume

Long-term trading volume 1 for photovoltaic
in the middle portion 1 of the stack

**FIG.3H**

| | | S3031 |
|---|---|---|
| Predict respective electricity volumes of the associated power plants based on the data vectors | | |

↓

| | | S3032 |
|---|---|---|
| Establish a preliminary spot trading stack based on the predicted electricity volumes of the associated power plants | | |

↓

| | | S3033 |
|---|---|---|
| Adjust the preliminary spot trading stack based on spot trading electricity prices of the associated power plants to obtain the spot trading stack | | |

**FIG.3I**

| Pilot station | Wind power plant |
|---|---|
| Installed capacity | 100MW |
| Input training data | Historical data : <br> 1 Global forecast data (wind, temperature, humidity, and pressure information at 30km) <br> 2 Regional actual observation data (near-surface wind speed information at 3km) <br> 3 Observation data of the station (wind speed and direction information from an anemometer tower, etc.) |
| Output data | **Meteorological forecast result:** <br> Forecast data for an average wind speed across the entire station over the next 10 days; <br> **Power prediction result:** <br> Ultra-short-term (within 4 hours) power prediction data and short- to medium-term (within 10 days) power prediction data; |

**FIG.4A**

| |
|---|
| Spot trading electricity price for a photovoltaic power plant |
| Spot trading electricity price for a hydropower plant |
| Spot trading electricity price for a thermal power plant |
| Spot trading electricity price for a nuclear power plant |

Spot trading electricity price which is gradually rising

Stack decreases progressively from bottom to top

**FIG.4B**

**FIG.4C**

Construct energy consumption data models based on power generation factor features of all associated power plants

Perform data abstraction on the energy consumption data models of the associated power plants to obtain respective data vectors of the associated power plants

Dynamically adjust a preset long-term electricity price function library by using the data vectors to establish a long-term trading stack

Establish a spot trading stack based on the spot trading electricity prices of the associated power plants, and establish the first clearing function based on the long-term trading stack and the spot trading stack

Over-generation state

Adjust the first clearing function based on the power supply-demand balance state of the target power grid

Under-generation state

Perform secondary abstraction on the power generation factor features of the associated power plants by using a preset deep learning model to obtain actual power generation parameters, to facilitate determining an increment of a long-term trading volume subsequently

Fit a first power generation curve by using a preset fitting function to determine whether a first spot trading volume meets a pre-planned power generation curve

N

Y

Correct functions in the preset long-term electricity price function library by using a preset reinforcement learning model to adjust a proportion of the spot trading volume in the first clearing function, to obtain the increment of the spot trading volume

Derive the second clearing function and perform power clearing based on the second clearing function

**FIG.4D**

In response to the power supply-demand balance state being the over-generation state, perform high-order abstraction on the power generation factor features by using a preset deep learning model to obtain respective second data vectors of the associated power plants

S3051

Determine an increment of the long-term trading volume based on the actual power generation parameters and the preset long-term electricity price function library

S3052

S3053

Adjust the first long-term trading volume based on the increment of the long-term trading volume to obtain the second clearing function

**FIG.4E**

EP 4 779 836 A1

| Month | Monthly average reservoir water level of an upper dam | Water inflow volume of the upper dam | Flood discharge volume of the upper dam | Water consumption for power generation by an upper powerhouse | Monthly average reservoir water level of a lower dam | Water inflow volume of the lower dam | Flood discharge volume of the lower dam | Water consumption for power generation by a lower powerhouse | $PR_{average}$ | $PR_{actual}$ | Power generation $Pm$ | Water consumption for power generation | $PR_{actual} xPm$ | $G_{rated}$ | $H$ m | $Fj$ m | $Hz$ m | Down-time | Tope | $Q$ m' | Power generation | power plant average revenue |
|---|---|---|---|---|---|---|---|---|---|---|---|---|---|---|---|---|---|---|---|---|---|---|
| 2024-01 | 260.94 | 1274 | 0 | 1547 | 107.27 | 6.31 | 0 | 1583 | 0.073 | 0.073 | 605.53 | 1547 | 44 | 176 | 2 | 10 | 1 | 3 | 256.5 | 326 | 606 | 300.7 |
| 2024-02 | 259.69 | 3128 | 0 | 3446 | 107.70 | 14.19 | 0 | 3570 | 0.073 | 0.0683 | 1334.73 | 3446 | 91 | 176 | 2 | 10 | 1 | 3 | 256.5 | 373 | 1335 | 347.67 |
| 2024-03 | 256.78 | 798 | 0 | 2293 | 107.67 | 9.00 | 0 | 2404 | 0.073 | 0.0712 | 874.78 | 2293 | 62 | 176 | 2 | 10 | 1 | 3 | 256.5 | 344 | 875 | 318.8 |
| 2024-04 | 253.38 | 1784 | 0 | 3788 | 107.75 | 15.05 | 0 | 3880 | 0.073 | 0.073 | 1399.23 | 3788 | 102 | 176 | 2 | 10 | 1 | 3 | 256.5 | 384 | 1399 | 358.64 |
| 2024-05 | 242.98 | 2478 | 0 | 6392 | 107.03 | 24.74 | 0 | 6812 | 0.073 | 0.06 | 2204.88 | 6392 | 132 | 176 | 2 | 10 | 1 | 3 | 256.5 | 414 | 2205 | 388.83 |
| 2024-06 | 241.83 | 10618 | 0 | 8010 | 106.54 | 41.98 | 18 | 10871 | 0.073 | 0.0612 | 2824.39 | 8010 | 173 | 176 | 2 | 10 | 1 | 3 | 256.5 | 454 | 2824 | 429.28 |
| 2024-07 | 252.02 | 83502 | 50448 | 26405 | 107.24 | 321.21 | 54589 | 31266 | 0.073 | 0.076 | 9782.4 | 26405 | 743 | 176 | 2 | 10 | 1 | 3 | 256.5 | 1025 | 9782 | 999.8 |
| 2024-08 | 254.85 | 25684 | 116 | 32530 | 106.29 | 122.73 | 114 | 32898 | 0.073 | 0.0732 | 12174.7 | 32530 | 891 | 176 | 2 | 10 | 1 | 3 | 256.5 | 1172 | 12175 | 1147.1 |
| 2024-09 | 253.80 | 34185 | 0 | 28395 | 106.78 | 125.80 | 352 | 32192 | 0.073 | 0.0742 | 10519.5 | 28395 | 781 | 176 | 2 | 10 | 1 | 3 | 256.5 | 1062 | 10520 | 1037 |
| 2024-10 | 261.07 | 26915 | 3019 | 23478 | 106.50 | 114.23 | 2602 | 25051 | 0.073 | 0.0719 | 9000 | 23478 | 647 | 176 | 2 | 10 | 1 | 3 | 256.5 | 929 | 9000 | 903.89 |
| 2024-11 | 260.00 | | | 23000 | 106.10 | | | 20000 | 0.073 | 0.073 | 7200 | 23000 | 526 | 176 | 2 | 10 | 1 | 3 | 256.5 | 807 | 7200 | 782.1 |
| 2024-12 | 261.00 | | | 5800 | 106.20 | | | 10000 | 0.073 | 0.072 | 2010 | 5800 | 145 | 176 | 2 | 10 | 1 | 3 | 256.5 | 426 | 2010 | 401.22 |

**FIG.4F**

In response to the power supply-demand balance state being the under-generation state, fit a first power generation curve during clearing the power grid based on the first clearing function by using a preset fitting function to obtain a fitted power generation curve — S3054

Determine whether the first spot trading volume meets a pre-planned power generation curve based on the fitted power generation curve and the pre-planned power generation curve — S3055

In response to the first spot trading volume failing to meet the pre-planned power generation curve, adjust functions in the preset long-term electricity price function library by using a preset reinforcement learning model to determine a reduction of the long-term trading volume — S3056

Adjust a proportion of the spot trading volume in the first clearing function based on the reduction of the long-term trading volume to obtain an increment of the spot trading volume — S3057

Adjust the first spot trading volume based on the increment of the spot trading volume to obtain the second clearing function — S3058

**FIG.4G**

**FIG.4H**

**FIG.5A**

S501 | Calculate a heat access margin of an energy storage device in a thermal power plant

S502 | Transmit correlation data among loads, performances, and costs of thermal power units in the thermal power plant and the heat access margin to the power grid side, determine, by the power grid side, a target generating unit expected to assist peak-shaving and issue, by the power grid side, a peak-shaving instruction based on a change in a thermal power load requirement, the correlation data of the thermal power plant, and the heat access margin

S503 | Receive a peak-shaving instruction issued by the power grid side

S504 | Perform a service of assisting in peak-shaving based on peak-shaving requirement information

**FIG.5B**

```
┌─────────────────┐                              ┌─────────────────┐
│ Thermal power   │                              │ Power grid side │
│     plant       │                              │                 │
└─────────────────┘                              └─────────────────┘
         │                                                │
  Select a coal type, and                                 │
calculate a heat access margin    Transmit the heat access│
         │                         margin and correlation data
         ├───────────────────────────────────────────────►│
         │                                                │
         │                            Digitize the received
         │                            data from respective
         │                            thermal power plants
         │                                                │
         │                               Generate a peak-
         │                              shaving load curve for
     Issue the peak-shaving load curve and  each thermal power unit
         │      a heat pre-dispatching instruction       │
         │◄───────────────────────────────────────────────┤
         │                                                │
 Calculate a quotation                                    │
         │                                                │
         │        Transmit quotation information          │
         ├───────────────────────────────────────────────►│
         │                                                │
         │                             Select a target generating unit
         │                              based on a ramp coefficient
         │                              and the quotation information
         │                              through a data-driven method
         │                               to balance a cost and a
         │           Issue a peak-        performance indicator
         │          shaving instruction                   │
         │◄───────────────────────────────────────────────┤
         │                                                │
 Cooperate in performing heat                             │
 pre-dispatching and perform a                            │
 service of assisting in peak-                            │
 shaving based on peak-shaving                            │
   requirement information                                │
         │                                                │
```

**FIG.5C**

S5021 — Generate, by the power grid side, respective peak-shaving load curves for respective thermal power units based on a change of a thermal power load requirement, correlation data provided by the thermal power plants, and the heat access margin, and calculate respective ramping coefficients for the thermal power units

S5022 — Determine multiple thermal power units expected to assist in peak-shaving preliminarily based on the ramp coefficients of the thermal power units

S5023 — Determine whether a thermal power unit with quotation information being less than or equal to K times a threshold quotation exists among the multiple thermal power units expected to assist in peak-shaving

Y

S5024 — Determine the thermal power unit as a target generating unit expected to assist in peak-shaving

N

S5025 — The thermal power unit is not selected as the target generating unit expected to assist in peak-shaving

**FIG.5D**

Identify peak-shaving requirement information from a
peak-shaving instruction

Determine,
by a target generating unit
in a thermal power plant, whether an
equipment failure or a communication failure
exists in the target generating
unit

Y → Report failure
information to the
power grid side

N

Determine whether
the target generating unit meets ramp speed
requirement information

N → Report notification
indicating that an
operating condition
is not met to the
power grid side

Y

Perform a service of assisting in peak-shaving based on a
peak-shaving load curve and the ramp speed requirement
information in the peak-shaving requirement information

**FIG.5E**

**FIG.5F**

S601

Acquire water resource data of respective hydropower
stations in a cascade hydropower station system at a current
time instant

For each hydropower
station, determine whether the
No hydropower station is in a safe operation state
based on the water resource data of the
hydropower station

S602

Yes

In response to all
hydropower stations being
determined to be in a safe operation
state, determine whether to perform water
resource dispatching based on the water
resource data of the hydropower stations,
a preset electricity price scheme,
and target historical
data

S603

Yes

In response to determining to perform the water resource
dispatching, determine a water resource dispatching scheme
based on the water resource data of the hydropower stations
and a water resource dispatching model

S604

**FIG.6A**

**FIG.6B**

**FIG.6C**

**FIG.6D**

**FIG.6E**

**FIG.6F**

**FIG.6G**

Start

S401
Determine a cost-based electricity price J1, a measured water level S1 of an upstream hydropower station and a measured water level S2 of a downstream hydropower station

S406
Wait for a shutdown instruction of the power grid in the event of a fault or water shortage at a power plant

S402
S2 < R — No →

Yes

S403
(S1 > Q) and (the cost-based electricity price < an on-grid electricity price) — No →

S407
When the on-grid electricity price changes J = J ± 0.001, the cost-based electricity price J1 < J — No →

S408
Adjust and modify the water level frequently

Yes

Yes

S404
Perform quarterly regulation on the upstream hydropower station

S405
Perform day-ahead regulation on the downstream hydropower station

J1:Cost-based electricity price
S1:Measured water level of an upstream hydropower station
S2:Measured water level of a downstream hydropower station
R:Lowest water level allowed to generate power at the downstream hydropower station
Q:Lowest water level allowed to generate power at the upstream hydropower station
J:On-grid trading electricity price at a current time instant

Yes

End

**FIG.6H**

**FIG.6I**

Acquire hydrological data of upstream and downstream reservoirs to serve as basic data — S1601

Perform digital calculation on storage capacities and flow rates of the upstream and downstream reservoirs — S1602

Perform digital calculation for water conservation safety — S1603

Perform calculation for hydropower generation safety — S1604

Determine whether water resource dispatching is required based on upstream and downstream hydrological data — S1605

No

Yes

Provide a dispatching scheme based on the upstream and downstream hydrological data and a deep learning model — S1606

The downstream hydropower station implements day-ahead dispatching; the upstream hydropower station implements quarterly dispatching; and whether to perform dispatching frequently

**FIG.6J**

**FIG.7A**

S701 — Determine and configure emergency reserve capacities for multiple power generation types to be reserved in a power system through digital feature extraction of a power grid and source points of the multiple power generation types in the power system

S702 — Determine whether the power system currently exhibits characteristics of large unit capacity relative to small grid capacity based on a current output of the source points of the multiple power generation types

Y

S703 — The power grid utilizes the configured emergency reserve capacities of the multiple power generation types to dispatch the source points in the power system for voltage adjustment based on a multi-round voltage adjustment scheme, and/or to dispatch the source points in the power system for frequency adjustment based on a multi-round frequency adjustment scheme

S704 — Generate, by the power grid, output curves of generating units of the respective source points in a future period based on a stability control requirement for a frequency dynamic characteristic index of an entire grid in the power system, a predicted load of the entire grid, and characteristics of generating units in the source points

S705 — Transmit, by the power grid, a power generation dispatching instruction to each source point for power adjustment

**FIG.7B**

Voltage

Operating region
for all stages

Recovery region
for all stages

Time

**FIG.7C**

Frequency

Operating region
for all stages

Recovery region
for all stages

Time

**FIG.7D**

Determine and configure emergency reserve capacities for multiple power generation types to be reserved in a power system through digital feature extraction of a power grid and source points of the multiple power generation types in the power system

↓

Monitor stability of the power grid in real time to identify any potential risks of frequency or voltage drops in the power grid

↓

Upload, by source points, a voltage adjustment scheme and a frequency adjustment scheme to the power grid

Perform deep learning on power receiving features of the power grid and power generation features of the source points of multiple power generation types before and after adjustment to assist in monitoring the stability of the power grid

Determine whether the power system currently exhibits characteristics of large unit capacity relative to small grid capacity based on outputs of the source points of the multiple power generation types

N

Y ↓

Initiate a multi-round voltage adjustment scheme (including basic stages and an emergency stage)

↓

Control, by the power grid, reactive powers of certain source points to make compensatory adjustment for voltage

↓

Monitor whether a frequency of the power system drops to 49.8Hz?

N

Y ↓

Initiate a multi-round voltage adjustment scheme (including basic stages and an emergency stage)

↓

Generate, by the power grid, output curves of generating units of the source points in a future period based on a stability control requirement for a frequency dynamic characteristic index of an entire grid in the power system, a predicted load of the entire grid, and characteristics of generating units in the source points

↓

Transmit, by the power grid, a power generation dispatching instruction to each source point for power adjustment

**FIG.7E**

| Nuclear power dispatching | New energy dispatching | Pumped hydro storage dispatching | Thermal power station dispatching | Power grid side |
|---|---|---|---|---|

The power grid must maintain sufficient reserves

Prevent frequent tripping of a unit caused by frequency fluctuations

Primary frequency regulation

Primary frequency regulation optimization

K value is directly proportional to a load level

Joint optimization of day-ahead and intra-day operational dispatching

Extend load increase and decrease durations for startup and shutdown processes of the unit in a pumping condition

Frequency disturbance

Optimization of OPC Setpoints

Select of a method for tripping a unit

Reactive power regulation

Rapidly pass through a vibration area

Reactive power disturbance

Under-frequency load shedding and under-voltage load separation

Low power without frequent power adjustment

Reactive power regulation, dispatching, and energy storage regulation

Recovery system frequency

Suppress frequency decline

Frequency, power (power angle), and voltage stability

Energy storage solution for the power grid

Dispatching strategy library

Deep learning and updating

| Apply for a trading electricity volume and a trading electricity price | Apply for a trading electricity volume and a trading electricity price | Apply for a trading electricity volume and a trading electricity price | Apply for a trading electricity volume and a trading electricity price | Collect |

Comprehensive frequency regulation deviation coefficient K values for different load ramp-up and ramp-down periods

Determine a 24-hour output curve of a power plant based on a K value and a predicted load of an entire grid

Operation of a power generation unit

Power generation dispatch instruction

**FIG.7F**

| | |
|---|---|
| Acquire a current system inertia corresponding to a current grid structure | S801 |

| | |
|---|---|
| Calculate a frequency change rate based on the current system inertia and a difference between a power demand and an actual power supply | S802 |

No ← Whether the frequency change rate is greater than a preset first threshold — S803

Yes ↓

| | |
|---|---|
| Determine a target grid structure and a target setting value corresponding to the target grid structure based on a pre-established deep learning model | S804 |

| | |
|---|---|
| Modify a current setting value applied in the current grid structure based on the target setting value, and adjust the current grid structure of the power grid to the target grid structure | S805 |

**FIG.8A**

Acquire a current system inertia corresponding to a current grid structure — S901

Calculate a frequency change rate based on the current system inertia and a difference between a power demand and an actual power supply — S902

Whether the frequency change rate is greater than a preset first threshold — S903

No

Yes

In response to a fault node detected, disconnect the fault node from the current grid structure — S904

Matching condition of power generation and a power requirement in the current grid structure — S905

Respective types of multiple adjustment schemes — S907

Security priority of the current grid structure — S906

Performance influence degree — S908

Determine a target grid structure based on a pre-established deep learning model

Modify a current setting value applied in the current grid structure based on the target setting value, and adjust the current grid structure of the power grid to the target grid structure — S909

**FIG.8B**

Acquire respective power generation change rates of generator-type grid nodes in a current grid structure

No

Whether the power generation change rate is greater than a preset change rate threshold

Yes

Whether the power generation decreases

Yes

No

Determine a target grid structure by adding a generator-type grid based on the current grid structure

Determine the target grid structure by adding a load-type grid based on the current grid structure

**FIG.8C**

A

B

C

D

E

F

**FIG.8D**

| Photovoltaic power plant | Hydropower plant | Thermal power plant | Power grid side |
|---|---|---|---|
| Illuminance | Water inflow volume and daily water level | Fuel calorific value, heat consumption | Calculate stability of the power grid |
| Stability parameter | Stability parameter | Stability parameter | |
| Production factor model | Production factor model | Production factor model | |
| Power generation | Constraint among the water inflow volume, a flood discharge volume and a power generation water volume | Power generation | |
| Cost and power generation plan | | Cost and power generation plan | |
| | Power generation | | |
| | Cost and power generation plan | | Dispatching model |
| | | | Dispatching scheme |
| Apply for a trading electricity volume and a trading tariff | Apply for a trading electricity volume and a trading tariff | Apply for a trading electricity volume and a trading tariff | |
| | | | Collect |
| | | | Increase in a real-time cost per kilowatt hour exceeds a preset threshold |
| | | | Power generation dispatch instruction |
| Operation of a power generation unit | Operation of a power generation unit | Operation of a power generation unit | |

**FIG.9**

Technical parameter operator, input operator, operator
for establishing a model based on production factors

Discrete-to-continuous operator, normalization
operator, operator for implementing feature extraction

Functional operators, such as a power generation
control operator, an tariff operator, an internal control
operator

| Input function | Transfer function | Electricity price function | Final function |
|---|---|---|---|
| √ Photovoltaic illuminance<br>√ Hydropower water head<br>√ Higher heating value or hydrogen content of coal in thermal power<br>√ Wind speed, air density | √ Unit performance<br>①Photovoltaic efficiency, reliable equivalent capacity test under full illumination conditions, and the like<br>②Hydropower unit efficiency<br>③Heat consumption and coal consumption for thermal power | √ Functions corresponding to various algorithms<br>√ Functions corresponding to various regional economies<br>√ Functions corresponding to various types of source points<br>√ Corresponding tariff equilibrium point | √ Corresponding electricity charge<br>√ Water volume per unit of electricity generated<br>√ Hydropower asset<br>√ Levelized cost of electricity<br>√ Generating unit specific heat index |

**FIG.10**

**TRANSLATION**

## INTERNATIONAL SEARCH REPORT

| International application No. |
|---|
| **PCT/CN2024/135146** |

| A. | CLASSIFICATION OF SUBJECT MATTER |
|---|---|

H02J3/38(2006.01)i; G06F30/18(2020.01)i; G06N3/045(2023.01)i; G06F18/213(2023.01)i; G06Q10/0631(2023.01)i

According to International Patent Classification (IPC) or to both national classification and IPC

| B. | FIELDS SEARCHED |
|---|---|

Minimum documentation searched (classification system followed by classification symbols)

IPC: H02J; G06F; G06N; G06Q

Documentation searched other than minimum documentation to the extent that such documents are included in the fields searched

Electronic data base consulted during the international search (name of data base and, where practicable, search terms used)

CNKI, IEEE, CNTXT, DWPI, ENTXT, ENTXTC: 智能体, 电厂, 电网, 数据向量, 映射函数, 算子, intelligent, agent, power, plant, grid, data, vector, mapping, function, operator

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 119027174 A (CHINA ELECTRIC POWER RESEARCH INSTITUTE et al.) 26 November 2024 (2024-11-26)<br>    description, paragraphs [0066]-[0118], and figures 1-4 | 1-7, 52-54 |
| Y | CN 118838935 A (POSTAL SAVINGS BANK OF CHINA CO., LTD.) 25 October 2024 (2024-10-25)<br>    description, paragraphs [0040]-[0061], and figures 2-3 | 1-7, 52-54 |
| A | CN 118336833 A (HUANENG LUOYUAN POWER GENERATION CO., LTD. et al.) 12 July 2024 (2024-07-12)<br>    entire document | 1-59 |
| A | CN 119026666 A (SHANDONG UNIVERSITY) 26 November 2024 (2024-11-26)<br>    entire document | 1-59 |
| A | US 2020082422 A1 (MITSUBISHI ELECTRIC RESEARCH LABORATORIES, INC.) 12 March 2020 (2020-03-12)<br>    entire document | 1-59 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 August 2025** | **25 August 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/135146**

| Patent document cited in search report | | | Publication date (day/month/year) | Patent family member(s) | | | Publication date (day/month/year) |
|---|---|---|---|---|---|---|---|
| CN | 119027174 | A | 26 November 2024 | None | | | |
| CN | 118838935 | A | 25 October 2024 | None | | | |
| CN | 118336833 | A | 12 July 2024 | None | | | |
| CN | 119026666 | A | 26 November 2024 | None | | | |
| US | 2020082422 | A1 | 12 March 2020 | US | 11055732 | B2 | 06 July 2021 |
| | | | | WO | 2020054123 | A1 | 19 March 2020 |
| | | | | JP | 2021532481 | A | 25 November 2021 |
| | | | | JP | 7161818 | B2 | 27 October 2022 |

Form PCT/ISA/210 (patent family annex) (July 2022)